(19) Europäisches Patentamt
European Patent Office
Office européen des brevets

(11) **EP 2 758 823 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(21) Anmeldenummer: **12756091.0**

(22) Anmeldetag: **16.08.2012**

(51) Int Cl.:
*G02B 21/08* (2006.01)       *G02B 21/06* (2006.01)
*G02B 21/36* (2006.01)

(86) Internationale Anmeldenummer:
**PCT/EP2012/003498**

(87) Internationale Veröffentlichungsnummer:
**WO 2013/041173 (28.03.2013 Gazette 2013/13)**

(54) **VORRICHTUNG UND VERFAHREN ZUR DURCHLICHTBELEUCHTUNG FÜR LICHTMIKROSKOPE UND MIKROSKOPSYSTEM**

TRANSILLUMINATION DEVICE AND METHOD FOR LIGHT MICROSCOPES, AND A MICROSCOPE SYSTEM

DISPOSITIF ET PROCÉDÉ D'ÉCLAIRAGE PAR TRANSMISSION POUR DES MICROSCOPES OPTIQUES ET SYSTÈME DE MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2011 DE 102011114336**

(43) Veröffentlichungstag der Anmeldung:
**30.07.2014 Patentblatt 2014/31**

(73) Patentinhaber: **Carl Zeiss Microscopy GmbH 07745 Jena (DE)**

(72) Erfinder: **HEIN, Detlef 37083 Göttingen (DE)**

(74) Vertreter: **Schiffer, Axel Martin et al Rundfunkplatz 2 80335 München (DE)**

(56) Entgegenhaltungen:
**JP-A- 2002 189 174       US-A1- 2001 005 280
US-A1- 2005 259 320**

**Beschreibung**

Die vorliegende Erfindung bezieht sich in einem ersten Aspekt auf eine Vorrichtung zur Durchlichtbeleuchtung für Lichtmikroskope, insbesondere Stereomikroskope oder Makroskope, mit veränderlicher wirksamer Eintrittspupille eines Objektivs nach dem Oberbegriff des Anspruchs 1.

Außerdem betrifft die Erfindung gemäß dem ersten Aspekt ein Verfahren zur Durchlichtbeleuchtung für ein Lichtmikroskop mit veränderlicher Eintrittspupille eines Objektivs nach dem Oberbegriff des Anspruchs 13. Außerdem bezieht sich die Erfindung auf ein Mikroskopsystem.

Eine gattungsgemäße Vorrichtung zur Durchlichtbeleuchtung für Lichtmikroskope ist beispielsweise in DE 10 2004 056 685 A1 beschrieben und weist eine Lichtquelle zum Aussenden eines Beleuchtungslichtbündels und eine Halteeinrichtung zum Halten einer zu untersuchenden Probe auf. Außerdem ist mindestens eine Blendenkante zum Beschneiden des Beleuchtungslichtbündels vorhanden, die zwischen der Halteeinrichtung und der Lichtquelle angeordnet ist und die sich quer zu einer optischen Achse eines Lichtmikroskops erstreckt, welches in einem Betriebszustand an der Vorrichtung zur Durchlichtbeleuchtung positionierbar ist. Ein Strahlengang des Beleuchtungslichts zwischen der Blendenkante und einer von der Halteeinrichtung gehaltenen Probe ist dabei frei von verstellbaren strahlfokussierenden Komponenten.

Bei einem gattungsgemäßen Verfahren zur Durchlichtbeleuchtung für ein Lichtmikroskop mit veränderlicher wirksamer Eintrittspupille eines Objektivs wird eine von einer Halteeinrichtung gehaltene Probe mit Beleuchtungslicht von einer Lichtquelle beaufschlagt.

In DE 10 2004 056 685 A1 ist eine Beleuchtungseinrichtung mit zwei schwenkbaren Blenden beschrieben. Der Drehpunkt der Blenden ist dabei fixiert und lässt sich nicht verschieben. Außerdem gibt es keine Mittel zur Erfassung, Speicherung und/oder Reproduzierung von den Beleuchtungseinstellungen der schwenkbaren Blenden oder automatisch an das Objekt angepasste Voreinstellung. Die in DE 10 2004 056 685 A1 beschriebene Beleuchtungseinrichtung ist deshalb wenig komfortabel in der Bedienung.

Gegenstand von DE 10 2004 017 694 B3 ist eine Beleuchtungseinrichtung, die ein segmentiertes Lichtfeld dergestalt erzeugt, dass das zu durchleuchtende Objekt im Hellfeld im Wesentlichen unter Lichteinfall aus einem schrägen Einfallswinkel durchleuchtet wird. DE 10 2004 017 694 B3 beschreibt hierzu ein segmentierbares Lichtfeld, wobei zusätzliche Maßnahmen zur Homogenisierung vorausgesetzt werden. Praktisch ergibt sich hierdurch ein nur relativ kontrastschwaches Bild. Als weitere Einstellelemente sind in DE 10 2004 017 694 B3 parallel zur optischen Achse wirksame einschiebbare Blenden mit einer linearen Blendenkante vorgesehen, wie sie von vielen Herstellern verwendet werden. Auch in DE 10 2004 017 694 B3 sind keine Mittel zur Erfassung, Speicherung und/oder Reproduzierung der Beleuchtungseinstellungen der einschiebbaren Blenden sowie keine automatisch an das Objekt angepasste Voreinstellungen vorhanden. Auch die in DE 10 2004 017 694 B3 beschriebene Vorrichtung ist aus diesem Grund wenig komfortabel in der Bedienung.

In US 20020191281 A1, EP 1 008 884 B1 und JP 2008026924 A1 sind Durchlichteinrichtungen mit einer Kondensorlinse beschrieben. Die Kondensorlinse enthält zur Kontrastierung mindestens zwei Blendenteile konjugiert zur Objektivpupille. Der Quotient aus der numerischen Apertur des Objektivs und des Kondensors ist dabei kleiner als 0,6. Hierdurch soll eine Durchlichtbeleuchtung vom Hellfeld bis in das Dunkelfeld hinein realisierbar sein. US 20020191281 A1, EP 1 008 884 B1 und JP 2008026924 A1 beziehen sich somit Ausführungen mit Kondensorlinse und einer konjugiert zur Objektivpupille angeordnete Pupillenebene. Solche Systeme erfordern feststehende Pupillen, die gerade bei kostenoptimierten Objektiv-Zoomkörper-Kombinationen nicht vorhanden sind. Zur Ausleuchtung solcher kostenoptimierten Objektiv-Zoomkörper-Kombinationen mit wandernden Pupillenlagen sind die in US 20020191281 A1, EP 1 008 884 B1 und JP 2008026924 A1 beschriebenen Durchlichteinrichtungen deshalb nicht geeignet.

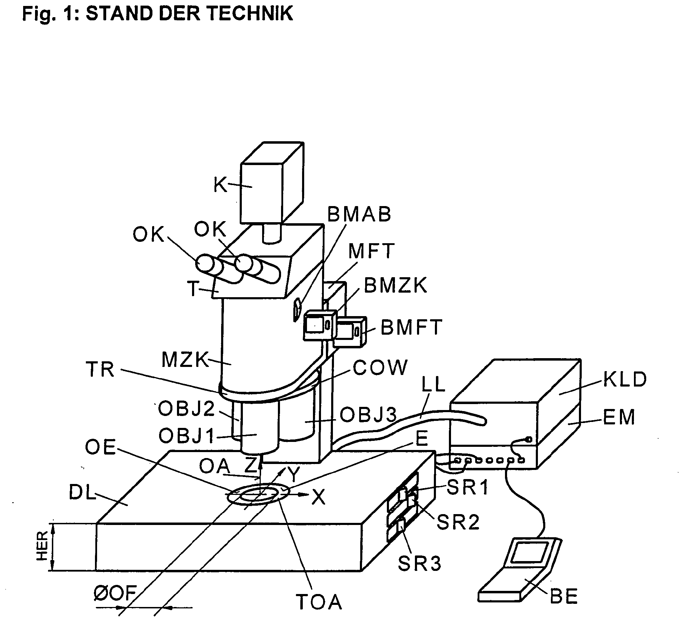

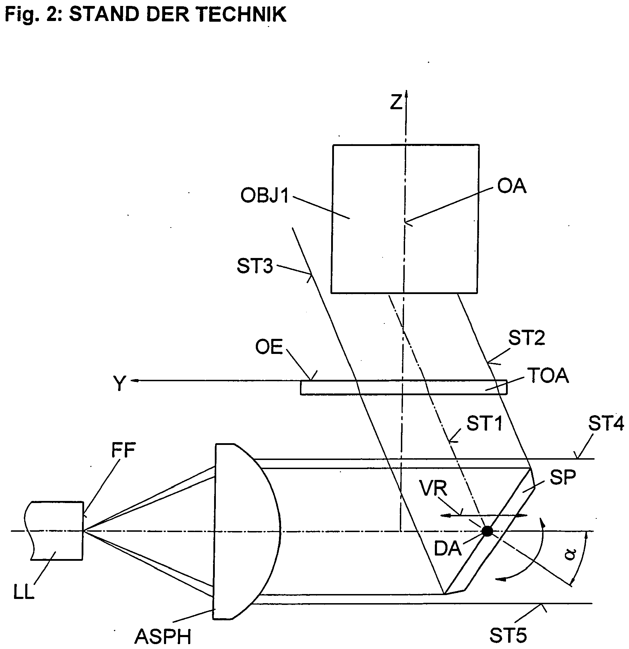

Der Stand der Technik wird anhand der Figuren 1 und 2 näher erläutert.

Figur 1 zeigt eine typische Stereomikroskop-Anordnung nach dem Stand der Technik. Eine Durchlichteinrichtung DL leuchtet das Objektfeld mit einem Durchmesser OF aus, das sich in der Ebene OE befindet, die durch die am höchsten liegende Fläche der Durchlichteinrichtung DL gekennzeichnet ist. Auf der Durchlichteinrichtung DL befindet sich eine motorisierte Fokussiereinrichtung MFT, die sich über eine Bedieneinheit BMFT bedienen lässt und an der ein Träger TR mit einem codierten Objektivwechsler COW angebracht ist. Über den Objektivwechsler COW lassen sich drei Objektive OBJ1, OBJ2, OBJ3 mit unterschiedlichen Eigenschaften benutzen. Beispielsweise hat das Objektiv OBJ2 neben einer anderen Objektivvergrößerung bei dem kleinsten Zoomfaktor $\beta$ auch eine deutlich weiter von der Objektebene OE entfernt liegende Eintrittspupille, als die beiden anderen Objektive.

Mit dem Bezugszeichen BMAB ist in Figur 1 ein Bedienelement für eine motorisierte Aperturblende MAP gekennzeichnet. Eine Ebene in Höhe der Objektauflage auf der Durchlichteinrichtung ist mit E bezeichnet. MFT kennzeichnet eine motorisierte Fokussiereinrichtung.

Auf dem Träger TR ist ein motorisierter Zoomkörper MZK angeordnet, der sich über eine Bedieneinheit BMZK bedienen lässt. Auf dem motorisierten Zoomkörper MZK befindet sich ein Tubus T, mit dem sich das Stereomikroskopbild direkt über die beiden Okulare OK beobachten lässt. Außerdem ermöglicht der Tubus T über eine angeschlossene Kamera K auch die Dokumentation der betrachteten Bilder.

Die im Stand der Technik nicht motorisierte Durchlichteinrichtung DL wird durch eine Kaltlichtquelle KLD über einen faseroptischen Lichtleiter LL mit Licht versorgt; sie hat drei manuell einstellbare Bedienelemente SR1, SR2, SR3 zur Variation der Beleuchtungseinstellungen.

Die Steuerung des Gesamtsystems erfolgt durch das Elektronikmodul EM und die daran angeschlossene Bedieneinheit BE. Die Kommunikation innerhalb des Gesamtsystems wird beispielsweise über einen CAN-Bus realisiert.

Zur weiteren Betrachtung wird ein Koordinatensystem mit den Koordinatenachsen X, Y und Z eingeführt. Der Koordinatenursprung liegt im Zentrum der Objektebene OE. Aus Vereinfachungsgründen wird in dieser Darstellung die Oberseite der transparenten Objektauflage TOA anfokussiert, das heißt OE ist identisch mit der Oberseite der transparenten Objektauflage TOA und liegt in der Ebene, die aus den Koordinatenachsen X und Y aufgespannt wird. Die positiven Halbachsen zeigen vom Benutzer aus gesehen in folgende Richtungen: X nach rechts, Y nach hinten, Z nach oben. Die Z-Achse ist identisch mit der optischen Achse OA des gerade eingeschalteten Objektivs.

Für Stereomikroskope und Makroskope gibt es zahlreiche Durchlicht-Beleuchtungsverfahren, die hauptsächlich aufgrund der Zoomfunktion des Zoomkörpers MZK nicht für alle möglichen Abbildungsbedingungen eine geeignete Ausleuchtung liefern können. Dies gilt besonders für den Übersichtsbereich, das heißt für die kleineren Zoomfaktoren des Zoomkörpers. Häufig wird die Beleuchtung von Stereomikroskopen und Makroskopen mit geeigneten Mitteln, zum Beispiel mit Milchüberfanggläsern, homogenisiert. Dadurch verbessert sich zwar die Homogenität der Ausleuchtung, allerdings nehmen der Kontrast und die Helligkeit aufgrund der Lichtverteilung in größere Raumwinkelbereiche entsprechend ab, das störende Streulicht nimmt zu. Somit liefern die entsprechend ausgeleuchteten Übersichtsabbildungen nur sehr schlechte Kontraste, viele Details lassen sich erst mit größeren Zoomfaktoren β erkennen. Das hierdurch erforderliche Hoch- und Herunterzoomen erfordert viel Zeit und die Übersicht geht während des Zoomvorgangs bei größeren Zoomfaktoren β verloren.

Figur 2 zeigt das Funktionsprinzip einer bekannten Durchlichteinrichtung DL aus Figur 1. Die Frontfläche FF des Lichtleiters LL wird über eine Asphäre ASPH näherungsweise nach Unendlich abgebildet, das heißt die von einem gemeinsamen Punkt der Frontfläche FF des Lichtleiters LL ausgehenden Lichtstrahlen verlaufen nach der Asphäre ASPH parallel. Als Beispiel sind in Figur 2 die Lichtstrahlen ST1, ST2, ST3, ST4 und ST5 ausgehend von einem gemeinsamen Punkt auf dem Lichtleiter LL dargestellt. Hinter der Asphäre ASPH befindet sich ein Umlenkspiegel SP, der sich über die drei in Figur 1 dargestellten Bedienelemente SR1, SR2, SR3 in verschiedene Richtungen bewegen oder drehen lässt.

Über das Bedienelement SR1 wird der Spiegel SP um die Drehachse DA bis zum gewünschten Einstellwinkel α gedreht, wodurch die auf den Umlenkspiegel SP treffenden Lichtstrahlen in die entsprechenden Richtungen umgelenkt werden können. Mit dem Bedienelement SR2 lässt sich der Umlenkspiegel SP zusammen mit der Drehachse DA in der Verschieberichtung VR bewegen. Dadurch treten die vom Umlenkspiegel SP reflektierten Lichtstrahlen abhängig von der Spiegelposition an verschiedenen Punkten durch die transparente Objektauflage TOA und die Objektebene OE hindurch.

Über das Bedienelement SR3 wird der Umlenkspiegel SP in der X-Richtung, also senkrecht zur Darstellungsebene, bewegt. Dadurch wird ohne Änderung der Spiegelgeometrie eine andere Spiegeloberfläche mit abweichenden Reflexionseigenschaften wirksam. Beide benutzbaren Spiegeloberflächen reflektieren nicht zu 100% gerichtet, das heißt sie reflektieren diffus streuend, wobei der Streuanteil beider Spiegeloberflächen unterschiedlich groß ist. Um eine möglichst homogene Beleuchtung zu erzielen, ist die stärker streuende Spiegeloberfläche zu benutzen, wodurch sich der Kontrast verschlechtert und die Bildhelligkeit abnimmt. Eine rotationssymmetrische Durchlicht-Hellfeld-Beleuchtung lässt sich realisieren, wenn der Umlenkspiegel SP so eingestellt wird, dass der Hauptstrahl, also der Lichtstrahl ST1 deckungsgleich mit der optischen Achse OA des Objektivs in das Objektiv OBJ1 eintritt. Dies ist dann der Fall, wenn der Einstellwinkel α = 45° beträgt und der Auftreffpunkt des Lichtstrahls ST1 auf dem Umlenkspiegel SP auf der optischen Achse OA des Objektivs OBJ1 liegt. Der Umlenkspiegel SP lenkt dann das von hinten aus der positiven Y-Richtung kommende Licht nach oben in Richtung der positiven Z-Achse um.

Auf Kosten der Homogenität lässt sich der Kontrast steigern, wenn die schwächer streuende Spiegeloberfläche benutzt wird, was einer eher gerichteten Beleuchtung entspricht. Bei höheren Vergrößerungen lässt sich eine deutliche Kontrastverstärkung bei noch brauchbarer Homogenität erzielen, wenn eine Schräglichtbeleuchtung eingesetzt wird. Hierzu wird der Umlenkspiegel SP gedreht und in der Verschieberichtung VR so weit verschoben, bis das Objektiv OBJ1 in der gewünschten Weise ausgeleuchtet wird. Hierbei kann eine weitere Kontraststeigerung beobachtet werden, wenn die Spiegelkanten wirksam werden, das heißt wenn sprunghafte Helligkeitsunterschiede in der Beleuchtung für eine Kontraststeigerung genutzt werden können. Dieser Effekt wirkt aber nur in relativ kleinen Bereichen des Objektfelds, das heißt homogene Beleuchtungen für größere Übersichts-Objektfelder lassen sich damit nicht realisieren.

Das Einstellen der beschriebenen Beleuchtungsparameter erfordert vom Benutzer eine gewisse Erfahrung, das heißt ungeübte Benutzer sind mit der Beleuchtungseinstellung über die drei Bedienelemente SR1, SR2, SR3 ohne weitere Hilfestellung gegebenenfalls überfordert.

Durchlichteinrichteinrichtungen DL, die einen neigbaren Umlenkspiegel SP gemäß Figur 2 enthalten, erfordern zur Ausleuchtung von größeren Objektfeldern aus konstruktiven Gründen außerdem eine relativ große Bauhöhe. Trotzdem ist die erreichbare Homogenität und Kontrastierung auch bei einer großen Bauhöhe mit dieser Anordnung noch nicht optimal.

Bei normalen Lichtmikroskopen und einigen Makroskopen sind Durchlicht-Beleuchtungsverfahren bekannt, die eine feste Pupillenebene voraussetzen. Dann werden meistens kontraststeigernde Elemente in den Beleuchtungsstrahlengang und/oder den Abbildungsstrahlengang gebracht, insbesondere in die Objektivpupille oder eine hierzu konjugierte Ebene. Dies ist extrem aufwändig und lässt sich an Zoomsystemen, also auch an Stereomikroskopen und Makroskopen, wenn überhaupt, nur mit starken Einschränkungen realisieren. Diese klassischen Verfahren funktionieren nur mit speziellen Objektiven mit teurem Zubehör, zum Beispiel DIC-Schieber, und nur in bestimmten Zoombereichen. Das Optik-Design erfordert ungünstig große Bauräume sowie gegebenenfalls spannungsfreie Optiken für Polarisationsverfahren. Außerdem muss in der Beleuchtungseinrichtung eine Möglichkeit zur Manipulation der kontraststeigernden Elemente sowie in der Regel auch eine Möglichkeit zur Anpassung an verschieden große Objektfelder durch wechselbare Kondensorlinsen vorhanden sein. Diese Lösungen sind somit nur für spezielle Anwendungen geeignet und zudem sehr teuer.

Sämtliche Lösungen im Stand der Technik sind aufwändig in der Realisierung und/oder lassen im Hinblick auf die Bedienbarkeit und Benutzerfreundlichkeit zu wünschen übrig.

US 2001 005280 A beschreibt mit Bezug auf Figur 10 eine Vorrichtung zur Durchlichtbeleuchtung aus dem Stand der Technik bei der eine Schräglichtbeleuchtung erreicht wird, indem eine Blendenkante quer zu optischen Achse im Strahlengang positioniert wird.

JP 2002 189174 A offenbart im Zusammenhang mit Figur 2 eine Situation, wo eine Blendenkante im Prinzip zwischen einem beugenden optischen Element und einer Probe positioniert werden kann.

Gegenstand von US 2005 259320 A1 ist ein Mikroskop bei dem, beispielsweise beschrieben mit Bezug auf Figur 15, einstellbare optische Komponenten im Strahlengang vorhanden sind. Insbesondere kann eine Blende vorhanden sein, die in Richtung der optischen Achse verstellt werden kann.

Als eine **Aufgabe** der Erfindung kann angesehen werden, eine Vorrichtung und ein Verfahren zur Durchlichtbeleuchtung für Lichtmikroskope und ein hierauf basierendes Mikroskopsystem zu schaffen, welches prinzipiell mit einfachen technischen Mitteln zu verwirklichen ist. Außerdem soll im Vergleich zum Stand der Technik die Bedienbarkeit verbessert werden.

Diese Aufgabe wird in einem ersten Aspekt der Erfindung durch die Vorrichtung mit den Merkmalen des Anspruchs 1 gelöst.

In verfahrensmäßiger Hinsicht wird die Aufgabe gemäß dem ersten Aspekt der Erfindung durch das Verfahren mit den Merkmalen des Anspruchs 13 gelöst. Außerdem wird gemäß dem ersten Aspekt der Erfindung ein Mikroskopsystem mit den Merkmalen des Anspruchs 25 bereitgestellt.

Eine Vorrichtung der oben genannten Art ist erfindungsgemäß dadurch weitergebildet, dass zum Anpassen des Strahlengangs des Beleuchtungslichts an die wirksame Eintrittspupille des Objektivs Mittel zum variablen Positionieren der Blendenkante in Richtung der optischen Achse vorhanden sind, wobei eine Position der Blendenkante in Richtung der optischen Achse unabhängig von einer Position der Blendenkante quer zur optischen Achse variierbar ist.

Das Verfahren der oben genannten Art ist erfindungsgemäß dadurch weitergebildet, dass ein von der Lichtquelle ausgehendes Beleuchtungslichtbündel von einer zwischen der Halteeinrichtung und der Lichtquelle angeordneten Blendenkante beschnitten wird, wobei insbesondere ein Strahlengang des Beleuchtungslichts zwischen der Blendenkante und der von der Halteeinrichtung gehaltenen Probe frei ist von verstellbaren strahlfokussierenden Komponenten und dass die Blendenkante sich quer zu einer optischen Achse erstreckt und abhängig von der Lage der wirksamen Eintrittspupille des Objektivs in Richtung der optischen Achse positioniert wird.

Als ein Kerngedanke des ersten Aspekts der Erfindung kann erachtet werden, das von der Lichtquelle ausgesandte Beleuchtungslicht mit einer Blendenkante zu beschneiden, wobei die Blendenkante in Richtung der optischen Achse je nach Lage der wirksamen Eintrittspupille des optischen Systems einstellbar ist.

In einem zweiten erfinderischen Aspekt wird die Aufgabe gelöst durch eine Vorrichtung zur Durchlichtbeleuchtung für Lichtmikroskope, insbesondere Stereomikroskope oder Makroskope, mit einer Lichtquelle zum Aussenden eines Beleuchtungslichtbündels und mit einer Halteeinrichtung zum Halten einer zu untersuchenden Probe, wobei zum Einstellen des Kontrasts zwischen der Lichtquelle und der Halteeinrichtung eine Ablenkeinrichtung vorhanden ist, mit welcher eine Winkelverteilung des Beleuchtungslichtbündels relativ zu einer optischen Achse variierbar ist. Die Vorrichtung gemäß dem zweiten Aspekt der Erfindung ist weiterhin dadurch gekennzeichnet, dass die Ablenkeinrichtung eine Prismenfolie aufweist.

In verfahrensmäßiger Hinsicht wird die Aufgabe in dem zweiten erfinderischen Aspekt gelöst durch ein Verfahren zur Durchlichtbeleuchtung für Lichtmikroskope, bei dem eine von einer Halteeinrichtung gehaltene Probe mit Beleuchtungslicht von einer Lichtquelle beaufschlagt wird, und bei dem eine Winkelverteilung eines Beleuchtungslichtbündels zum Einstellen des Kontrasts mit einer Ablenkeinrichtung variiert wird. Das Verfahren gemäß dem zweiten Aspekt der Erfindung ist weiterhin dadurch gekennzeichnet, dass die Ablenkeinrichtung eine Prismenfolie aufweist.

Als ein Kerngedanke des zweiten Aspekts der Erfindung kann erachtet werden, das von der Lichtquelle ausgesandte Beleuchtungslicht mit einer Ablenkeinrichtung, welche eine Mikroprismenstruktur mit einer Vielzahl von gleich wirkenden Elementen aufweist, umzulenken. Dadurch kann die Winkelverteilung des Beleuchtungslichts gezielt beeinflusst werden.

In einem dritten erfinderischen Aspekt wird die Aufgabe gelöst durch eine Vorrichtung zur Durchlichtbeleuchtung für Lichtmikroskope, insbesondere Stereomikroskope oder Makroskope, mit veränderlicher wirksamer Eintrittspupille eines Objektivs, mit einer Lichtquelle zum Aussenden eines Beleuchtungslichtbündels, mit einer Halteeinrichtung zum Halten einer zu untersuchenden Probe und mit mindestens einer Blendenkante zum Beschneiden des Beleuchtungslichtbündels, wobei die Blendenkante zwischen der Halteeinrichtung und der Lichtquelle angeordnet ist, wobei die Blendenkante sich quer zu einer optischen Achse, insbesondere eines Objektivs, eines Lichtmikroskops erstreckt, welches in einem Betriebszustand an der Vorrichtung zur Durchlichtbeleuchtung positionierbar ist, und wobei ein Strahlengang des Beleuchtungslichts zwischen der Blendenkante und einer von der Halteeinrichtung gehaltenen Probe frei ist von verstellbaren strahlfokussierenden Komponenten. Die Vorrichtung gemäß dem dritten Aspekt der Erfindung ist weiterhin dadurch gekennzeichnet, dass Mittel zum Abfragen einer Mikroskopeinstellung und/oder einer Mikroskopkonfiguration eines Lichtmikroskops, welches an der Vorrichtung zur Durchlichtbeleuchtung positionierbar ist, vorhanden sind, dass Mittel zum variablen Positionieren der Blendenkante in Richtung quer zu der optischen Achse vorhanden sind und dass eine Steuereinrichtung vorhanden ist, welche dazu eingerichtet ist, abhängig von der Mikroskopeinstellung und/oder der Mikroskopkonfiguration die Blendenkante mit den Mitteln zum variablen Positionieren der Blendenkante in Richtung quer zu der optischen Achse zu positionieren.

In verfahrensmäßiger Hinsicht wird die Aufgabe in dem dritten erfinderischen Aspekt gelöst durch ein Verfahren zur Durchlichtbeleuchtung für ein Lichtmikroskop mit veränderlicher wirksamer Eintrittspupille eines Objektivs, bei dem eine von einer Halteeinrichtung gehaltene Probe mit Beleuchtungslicht von einer Lichtquelle beaufschlagt wird und bei dem ein von der Lichtquelle ausgehendes Beleuchtungslichtbündel von einer zwischen der Halteeinrichtung und der Lichtquelle angeordneten Blendenkante beschnitten wird, wobei insbesondere ein Strahlengang des Beleuchtungslichts zwischen der Blendenkante und der von der Halteeinrichtung gehaltenen Probe frei ist von verstellbaren strahlfokussierenden Komponenten. Das Verfahren gemäß dem dritten Aspekt der Erfindung ist weiterhin dadurch gekennzeichnet, dass eine Mikroskopeinstellung und/oder eine Mikroskopkonfiguration abgefragt wird und dass die Blendenkante sich quer zu einer optischen Achse, insbesondere des Objektivs, erstreckt und abhängig von der Mikroskopeinstellung und/oder der Mikroskopkonfiguration in Richtung quer zu der optischen Achse positioniert wird.

Als ein Kerngedanke des dritten Aspekts der Erfindung kann erachtet werden, das von der Lichtquelle ausgesandte Beleuchtungslicht mit einer Blendenkante zu beschneiden, wobei die Blendenkante in Richtung quer zur optischen Achse je nach der Mikroskopeinstellung und/oder der Mikroskopkonfiguration des angeschlossenen Lichtmikroskops einstellbar ist.

In einem vierten erfinderischen Aspekt wird die Aufgabe gelöst durch eine Vorrichtung zur Durchlichtbeleuchtung für Lichtmikroskope, insbesondere Stereomikroskope oder Makroskope, mit veränderlicher wirksamer Eintrittspupille eines Objektivs, mit einer Lichtquelle zum Aussenden eines Beleuchtungslichtbündels, mit einem Gehäuse, in dem die Lichtquelle angeordnet ist, mit einer Halteeinrichtung zum Halten einer zu untersuchenden Probe und mit mindestens einer Blendenkante zum Beschneiden des Beleuchtungslichtbündels, wobei die Blendenkante sich quer zu einer optischen Achse, insbesondere eines Objektivs, eines Lichtmikroskops erstreckt, welches in einem Betriebszustand an der Vorrichtung zur Durchlichtbeleuchtung positionierbar ist, und wobei ein Strahlengang des Beleuchtungslichts zwischen der Blendenkante, der von der Halteeinrichtung gehaltenen Probe frei ist von verstellbaren strahlfokussierenden Komponenten. Die Vorrichtung gemäß dem vierten Aspekt der Erfindung ist weiterhin dadurch gekennzeichnet, dass zum Anpassen des Strahlengangs des Beleuchtungslichts an die wirksame Eintrittspupille des Objektivs Mittel zum variablen Positionieren der Blendenkante in Richtung der optischen Achse vorhanden sind, wobei eine Position der Blendenkante in Richtung der optischen Achse unabhängig von einer Position der Blendenkante quer zur optischen Achse variierbar ist, dass an dem Gehäuse Montagemittel zum Montieren eines separaten Probenauflagetischs vorhanden sind, dass Mittel zum Feststellen der Anwesenheit eines Probenauflagetischs vorhanden sind, dass das Gehäuse eine Durchgriffsöffnung aufweist, durch welche die Blendenkante in Richtung der optischen Achse hindurchbewegbar ist, dass die Halteeinrichtung im Bereich der Durchgriffsöffnung des Gehäuses oder an einem separaten Probenauflagetisch gebildet ist und dass eine Steuerungseinrichtung vorhanden ist, die zum Positionieren der Blendenkante abhängig mindestens von einer festgestellten Anwesenheit eines Probenauflagetischs eingerichtet ist.

In verfahrensmäßiger Hinsicht wird die Aufgabe in dem vierten erfinderischen Aspekt gelöst durch ein Verfahren zur Durchlichtbeleuchtung für ein Lichtmikroskop mit veränderlicher wirksamer Eintrittspupille eines Objektivs, bei dem eine von einer Halteeinrichtung gehaltene Probe mit Beleuchtungslicht von einer Lichtquelle beaufschlagt wird und bei dem ein von der Lichtquelle ausgehendes Beleuchtungslichtbündel von einer zwischen der Halteeinrichtung und der Lichtquelle angeordneten Blendenkante beschnitten wird, wobei insbesondere ein Strahlengang des Beleuchtungslichts zwischen der Blendenkante und der von der Halteeinrichtung gehaltenen Probe frei ist von verstellbaren strahlfokussierenden Komponenten, wobei die Lichtquelle in einem Gehäuse angeordnet ist, an welchem mit Montagemitteln ein separater Probenauflagetisch montierbar ist, wobei die Halteeinrichtung im Bereich der Durchgriffsöffnung des Gehäuses oder an einem separaten Probenauflagetisch gebildet ist und wobei das Gehäuse eine Durchgriffsöffnung aufweist, durch welche die Blendenkante in Richtung einer optischen Achse hindurchbewegbar ist. Das Verfahren gemäß dem vierten Aspekt der Erfindung ist weiterhin dadurch gekennzeichnet, dass eine Anwesenheit eines Probenauflagetischs festgestellt wird und dass die Blendenkante sich quer zu einer optischen Achse, insbesondere des Objektivs, erstreckt und abhängig von der Lage der wirksamen Eintrittspupille des Objektivs und abhängig mindestens von einer festgestellten Anwesenheit eines Probenauflagetischs in Richtung der optischen Achse positioniert wird.

Als eine wesentliche Idee des vierten Aspekts der Erfindung kann angesehen werden, dass automatisch erkannt wird, ob auf das Gehäuse der Durchlichtbeleuchtung ein Probenauflagetisch aufgesetzt ist. Ohne Probenauflagetisch kann eine zu untersuchende Probe an einer Halteeinrichtung, die an der Durchgriffsöffnung des Gehäuses gebildet ist, gehalten werden. Diese Halteeinrichtung am Gehäuse kann beispielsweise durch eine Vertiefung für einen Objektträger oder eine transparente Objektauflage ausgeführt sein. Mit Probenauflagetisch wird zum Halten der Probe die Halteeinrichtung des Probenauflagetischs genutzt. Dadurch wird die Probe an einer Position gehalten, die gegenüber dem Fall ohne Probenauflagetisch in Richtung der optischen Achse versetzt ist.

Schutz wird außerdem beansprucht für ein Mikroskopsystem, welches ein Lichtmikroskop und eine Vorrichtung zur Durchlichtbeleuchtung gemäß einem oder mehreren der vorstehend erläuterten Aspekte der Erfindung aufweist.

Schutz wird weiterhin auch beansprucht für Vorrichtungen und Verfahren zur Durchlichtbeleuchtung sowie Mikroskopsysteme, bei denen zwei oder mehrere der vorstehend erläuterten Aspekte der Erfindung kombiniert sind.

Vorteilhafte Ausführungsbeispiele der erfindungsgemäßen Vorrichtung und bevorzugte Varianten des erfindungsgemäßen Verfahrens werden im Folgenden mit Bezug auf die abhängigen Ansprüche und insbesondere im Zusammenhang mit den beigefügten Figuren erläutert.

Die Richtungsangabe "in Richtung der optischen Achse" wird im Rahmen der vorliegenden Beschreibung synonym verwendet wie "entlang der optischen Achse".

Das erfindungsgemäße Verfahren kann insbesondere mit der erfindungsgemäßen Vorrichtung zur Durchlichtbeleuchtung verwirklicht werden. Hierzu ist bei dem erfindungsgemäßen Mikroskopsystem in einer vorteilhaften Variante eine Steuereinrichtung vorhanden, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines erfindungsgemäßen Verfahrens eingerichtet ist.

Bei einer besonders einfach aufgebauten Variante sind zwischen der Blendenkante und der Probe gar keine strahlfokussierenden Komponenten, insbesondere gar keine strahlformenden Komponenten vorhanden.

Mit dem Begriff der optischen Achse ist für die vorliegende Beschreibung im Wesentlichen und in der Regel die optische Achse eines Objektivs eines Lichtmikroskops gemeint, welches in einem Betriebszustand an der erfindungsgemäßen Vorrichtung zur Durchlichtbeleuchtung angeordnet oder positioniert ist.

Wenn es sich bei dem angeschlossenen Lichtmikroskop um ein Stereomikroskop mit zueinander geneigten Mittenlichtstrahlen LM und RM handelt, kann mit dem Begriff der optischen Achse sowohl

i) die optische Achse des Objektives, in dem Falle, dass das Objektiv nur einen Beobachtungskanal symmetrisch erfasst,

ii) die Winkelhalbierende zwischen den beiden Mittenlichtstrahlen, wenn durch das Objektiv beide Beobachtungskanäle erfasst werden, oder aber

iii) der Mittenlichtstrahl nur eines Kanals, wenn nur ein Beobachtungskanal nicht symmetrisch erfasst wird,

bezeichnet werden.

Sodann kann der Begriff der optischen Achse auch im Hinblick auf die erfindungsgemäße Vorrichtung zur Durchlichtbeleuchtung selbst in dem Sinn definiert werden, dass damit im Wesentlichen die Richtung gemeint ist, in welcher das Beleuchtungslicht abgestrahlt wird. In einem gewöhnlichen Fall ist die erfindungsgemäße Vorrichtung zur Durchlichtbeleuchtung als im Wesentlichen flacher Kasten gebildet, der beispielsweise auf einem Labortisch liegt. In diesem Fall weist die optische Achse in Richtung der vertikalen Richtung, also in Richtung der Z-Richtung.

Der Begriff der Halteeinrichtung ist für die Zwecke der vorliegenden Beschreibung funktional auszulegen, das heißt dass damit jedes Mittel gemeint ist, mit welchem eine zu untersuchende Probe in irgendeiner Weise relativ zu dem Beleuchtungslichtbündel und der Optik eines anzuschließenden Lichtmikroskops positioniert werden kann.

Sodann ist der Begriff der wirksamen Eintrittspupille phänomenologisch auszulegen. Es handelt sich dabei demgemäß nicht um eine errechnete oder theoretische Eintrittspupille des optischen Systems, sondern faktisch um denjenigen Bereich, in welchem eine Taille des Beleuchtungslichtstrahles, womit nur Strahlungsanteile gemeint sind, welche tatsächlich zur Abbildung beitragen, einen minimalen Querschnitt aufweisen. Dieser, vorliegend als wirksame Eintrittspupille bezeichnete Flächenbereich, wird durch Messen, also durch Ausprobieren ermittelt. In der Praxis hängt die Lage dieser wirksamen Eintrittspupille neben den verwendeten Optiken auch von der untersuchten Probe und von Probenhalterungen, wie Objektträgern oder sonstigen transparenten Probenauflagen, ab und ist bei gewöhnlichen Zoommikroskopen keine wohldefinierte ebene Fläche.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in Richtung quer zur optischen Achse so positioniert werden, dass sie die Eintrittspupille in Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Sodann eröffnet die Positionierung der Blendenkante in der Ebene der Eintrittspupille die Möglichkeit, eine Schräglichtbeleuchtung dadurch zu erreichen, dass die Blendenkante einen Teil der Eintrittspupille abdeckt. Besonders bevorzugt beschneidet die Blendenkante bei diesen Ausführungsvarianten das Beleuchtungslichtbündel asymmetrisch. Das bedeutet, dass bestimmte Strahlen des Beleuchtungslichts herausselektiert werden und im Ergebnis eine Schräglichtbeleuchtung erzielt wird. Hierdurch können in der Praxis vorteilhafte Verbesserungen der Kontrastierung erzielt werden.

Gemäß einer weiteren vorteilhaften Variante des erfindungsgemäßen Verfahrens kann demgemäß die Blendenkante zum Einstellen des Kontrasts in einer Richtung quer zur optischen Achse positioniert werden. Hierzu sind bei der erfindungsgemäßen Vorrichtung zur Durchlichtbeleuchtung besonders bevorzugt geeignete Mittel zum variablen Positionieren der Blendenkante in einer Richtung quer zur optischen Achse vorhanden.

Für die Blende oder die Blenden kommt es im Prinzip nur auf die technische Wirkung an, dass bestimmte Lichtstrahlen unbeeinträchtigt durch die Blendenkante bleiben, andere Lichtstrahlen dagegen aus dem Lichtstrahl herausgenommen oder ausgeblendet werden. Diese Funktion kann durch eine mechanische Blende, prinzipiell aber auch durch elektronisch ansteuerbare Flüssigkristall-Arrays oder LCD-Arrays verwirklicht werden.

Im Hinblick auf die einzusetzende Lichtquelle kommt es von der grundsätzlichen Funktion zwar nur darauf an, dass Licht mit einer gewünschten spektralen Zusammensetzung in einer gewünschten Intensität bereitgestellt wird. Im Hinblick auf eine möglichst kompakte Anordnung in baulicher Hinsicht werden bei besonders bevorzugten Varianten der erfindungsgemäßen Vorrichtungen flächige Lichtquellen, insbesondere eine Mehrzahl von Leuchtdioden eingesetzt. Besonders vorteilhaft im Hinblick auf Baugröße und Lichtleistung sind Weißlicht-LEDs. Besonders bevorzugt können sogenannte PHLOX-Lichtquellen eingesetzt werden.

Der erfindungsgemäße Vorteil des Ausblendens von Strahlanteilen, die nicht zur Abbildung, wohl aber zum Streuuntergrund beitragen, wird prinzipiell unabhängig von der Form der Blendenkante erzielt. Voraussetzung hierfür ist nur, dass die Blendenkante mindestens in der Nähe der Eintrittspupille des optischen Systems positioniert ist. Beispielsweise können diese erfindungsgemäßen Vorteile auch mit gebogenen oder kreisförmigen Blenden erzielt werden.

Ein weiterer wesentlicher Gesichtspunkt der Erfindung besteht darin, eine ursprünglich symmetrische Beleuchtung in eine asymmetrische Beleuchtung, nämlich eine Schräglichtbeleuchtung zu überführen. Hierzu ist bei einer besonders vorteilhaften Ausführungsform der erfindungsgemäßen Vorrichtung die Blendenkante eine lineare Blendenkante. Prinzipiell kommt es aber auf die Ausbildung als lineare Kante nicht exakt an. Wesentlich ist, dass das Beleuchtungslichtbündel asymmetrisch beschnitten wird.

Beleuchtungslicht, das von Orten außerhalb der Eintrittspupille in das optische System, also das Mikroskopobjektiv, eintritt, kann dort in der Durchlichthellfeldabbildung nicht zur Abbildung selbst, sondern nur zum Streuuntergrund beitragen. Das ist nicht erwünscht und hieraus ergibt sich eine weitere vorteilhafte Verfahrensvariante, bei der eine Leuchtfläche der Lichtquelle einer tatsächlich wirksamen Rückprojektion des Beleuchtungslichts angepasst wird. Das bedeutet, dass Teile der Leuchtfläche, die kein zur Abbildung beitragendes Beleuchtungslicht liefern können, von vornherein ausgeblendet werden. Hierzu ist bei der erfindungsgemäßen Vorrichtung vorteilhafterweise zum Variieren einer wirksamen Leuchtfläche der Lichtquelle mindestens eine weitere Blende vorhanden, die unmittelbar vor der Lichtquelle positioniert ist.

Ob und in welchem Maß durch eine Schräglichtbeleuchtung Verbesserungen des Kontrasts erzielt werden können, hängt von der jeweils untersuchten Probe ab. In diesem Zusammenhang ist ein weiteres Ausführungsbeispiel der erfindungsgemäßen Vorrichtung von Vorteil, bei welcher Mittel zum Drehen der Blendenkante um die optische Achse vorhanden sind. Das bedeutet, dass die Richtung, in welche die mittlere Strahlrichtung gegenüber der optischen Achse bei einer Schräglichtbeleuchtung verkippt ist, variiert werden kann. Dadurch wird, wenn die erfindungsgemäße Vorrichtung mit einem Makroskop verwendet wird, im Prinzip dasselbe erreicht wie beim Drehen der Probe um die optische Achse. Wesentlicher Vorteil ist hierbei, dass die Probe als solche in der Halteeinrichtung unverändert bleiben kann und demgemäß nicht in ihrer Position verändert werden muss.

Die erzielten Resultate hängen im Hinblick auf Darstellungsqualität, Kontrastierung und Helligkeit der Probe stark insbesondere von der Ortsposition der Blendenkante ab, da durch die Blendenkante die Beleuchtung empfindlich variiert und eingestellt werden kann.

Bei einer besonders bevorzugten Variante des erfindungsgemäßen Verfahrens wird deshalb vor dem Start einer Blendenpositionierung eine Absolutposition der Blendenkante optisch und/oder mechanisch bestimmt.

**EP 2 758 823 B1**

Beispielsweise kann bei einer besonders bevorzugten Ausführungsform der erfindungsgemäßen Vorrichtung zum Verschieben der Blendenkante in Richtung der optischen Achse und in Richtung quer zur optischen Achse eine Schlittenmechanik mit einem ersten Schlitten und einem zweiten Schlitten vorhanden sein. Zum Antrieb dieser Schlitten können Schrittmotoren verwendet werden, mit welchen eine präzise Positionierung möglich ist.

Bei einer weiteren vorteilhaften Ausführungsvariante der erfindungsgemäßen Vorrichtung ist zum Beschneiden des Beleuchtungslichtbündels zwischen der Halteeinrichtung und der Lichtquelle mindestens eine weitere variabel positionierbare Blende vorhanden. Mit einer solchen weiteren Blende, welche insbesondere eine lineare Blendenkante aufweisen kann, können im Hinblick auf das Reduzieren von Streulicht weitere Verbesserungen erzielt werden. Außerdem kann es zweckmäßig sein, für bestimmte Lagen der Eintrittspupille eine weitere variabel positionierbare Blende zur Verfügung zu haben.

Eine weitere vorteilhafte Ausgestaltung der erfindungsgemäßen Vorrichtung besteht in diesem Zusammenhang darin, dass eine erste mechanische Blende und eine zweite mechanische Blende vorhanden ist, dass die Blendenkante durch eine Kante der ersten mechanischen Blende oder durch eine Kante der zweiten mechanischen Blende gebildet ist und dass zum Verschieben der Blendenkante in Richtung der optischen Achse und in Richtung quer zur optischen Achse eine erste Schlittenmechanik mit einem ersten Schlitten und einem zweiten Schlitten für die erste mechanische Blende und eine zweite Schlittenmechanik mit einem dritten Schlitten und einem vierten Schlitten für die zweite mechanische Blende vorhanden ist. Mit dieser Anordnung kann die effektiv wirksame. Blendenkante variabel an unterschiedlichste Lagen der Eintrittspupille angepasst werden.

Die erfindungsgemäßen Vorteile werden in besonderer Weise erreicht, wenn die Blendenkante in einer Ebene der wirksamen Eintrittspupille des Objektivs positioniert ist. Die Erfindung stellt insbesondere ein Verfahren bereit, mit dem diese Position, die auch als optimale Position oder ideale Z-Blendenlage bezeichnet werden kann, gefunden und eingestellt werden kann. Dabei wird eine Position der Blendenkante bestimmt, indem zunächst die Position der Blendenkante in Richtung der optischen Achse des Objektivs variiert wird und für jede Position der Blendenkante in Richtung der optischen Achse ein Mikroskopbild mindestens teilweise aufgenommen wird. Sodann wird für jedes Mikroskopbild ein Beleuchtungsparameter bestimmt und als eine optimale Position der Blendenkante oder als Position der Blendenkante in der Ebene der wirksamen Eintrittspupille wird diejenige Position der Blendenkante in Richtung der optischen Achse festgelegt, bei der ein Verlauf des Beleuchtungsparameters aufgetragen gegen die Position der Blendenkante in Richtung der optischen Achse eine vorbestimmte Charakteristik aufweist. Die so festgelegte Position kann abgespeichert werden und die Blendenkante kann in die so gefundene Position bewegt werden.

Diese Charakteristik kann dann für jede relevante Zoomstellung des Mikroskops aufgenommen werden. Zwischenbereiche können später interpoliert werden.

Als Beleuchtungsparameter wird bevorzugt eine Größe gewählt, welche ein Maß ist für einen Intensitäts- oder Helligkeitsgradienten in einer Richtung quer zur Blendenkante, einen lokalen Bildkontrast, einen lokalen Kontrastumfang des Bilds, eine lokale Bildhomogenität und/oder einen lokalen Schattenwurf im Mikroskopbild.

Grundlage dieser Bestimmung der optimalen Position der Blendenkante ist, dass bei Positionierung der Blendenkante in der Eintrittspupille alle zur Abbildung beitragenden Beleuchtungslichtbündel prinzipiell gleich von der Blendenkante beeinflusst werden, indem diese beispielsweise einseitig bestimmte Strahlen jedes Beleuchtungslichtbündels herausnimmt. Im Unterschied dazu werden bei einer Position der Blendenkante außerhalb der Ebene der Eintrittspupille unterschiedliche Lichtbündel auch unterschiedlich beeinflusst. Beispielsweise werden bestimmte Lichtbündel ganz ausgeblendet, was im Bild konsequenterweise als dunkle Stelle sichtbar ist. Die ideale Position der Blendenkante zeichnet sich deshalb dadurch aus, dass das Bild im Hinblick auf Helligkeit und Kontrast sehr homogen ist.

Bei einer besonders bevorzugten Ausführungsvariante wird demgemäß für jedes Mikroskopbild als Beleuchtungsparameter ein Intensitätsgradient bestimmt und die Blendenkante wird auf diejenige Position in Richtung der optischen Achse eingestellt, bei der ein Verlauf des Intensitätsgradienten aufgetragen gegen die Position der Blendenkante in Richtung der optischen Achse einen Nulldurchgang aufweist.

Um eine sinnvolle Abbruchbedingung für das Verfahren zu schaffen, kann für die Entscheidung, ob der Intensitätsgradient einen Nulldurchgang erfährt, abgefragt werden, ob der Intensitätsgradient kleiner ist als ein sinnvoll festzulegender Schwellwert. Der Schwellwert kann dabei von der konkreten optischen Konfiguration abhängen.

Die Mikroskopbilder werden dabei vorteilhafterweise mit einer Digitalkamera aufgenommen und der Beleuchtungsparameter, beispielsweise also der Intensitätsgradient, wird bestimmt durch Auswertung der von der Digitalkamera gelieferten Daten. Das kann mit einem in der Steuereinrichtung vorhandenen oder mit der Steuereinrichtung verbundenen Rechner durchgeführt werden.

Um das Verfahren zum Ermitteln der optimalen Position effektiv durchführen zu können, kann auf Grundlage eines Beleuchtungsparameters, der für eine zurückliegende Position der Blendenkante in Richtung der optischen Achse bestimmt wurde, eine nächstfolgende Position der Blendenkante in Richtung der optischen Achse festgelegt werden, wobei die nächstfolgende Position von der zurückliegenden Position umso weiter beabstandet ist, je größer der Betrag eines für die zurückliegende Position bestimmten Beleuchtungsparameters ist. Eine Richtung, in welcher die nächstfolgende Position von der zurückliegenden Position beabstandet ist, wird aus einem Vorzeichen des für die zurückliegende Position bestimmten Beleuchtungsparameters ermittelt.

Grundidee dieser Verfahrensvariante ist, dass man sich noch weit von der optimalen Position entfernt befindet, wenn der für eine zurückliegende Position festgestellte Beleuchtungsparameter betragsmäßig noch vergleichsweise groß ist. Um rasch zur optimalen Position zu gelangen, ist es dann zweckmäßig, die nächste Bestimmung des Beleuchtungsparameters für eine vergleichsweise weit beabstandete Position durchzuführen. Auf der anderen Seite befindet man sich schon sehr nahe an der optimalen Position, wenn der für eine zurückliegende Position festgestellte Beleuchtungsparameter betragsmäßig klein ist. In diesem Fall wird die nächstfolgende Position sehr dicht an den zurückliegenden Positionen liegen.

Deutliche Vorteile für die Bedienbarkeit werden erzielt, wenn Einstellungen der mindestens einen Blendenkante und/oder weiterer Blenden, insbesondere nach Benutzerangabe, automatisiert vorgenommen werden.

Zwar steht für das erfindungsgemäße Verfahren im Vordergrund, für die Blendenkante eine optimale Position in Z-Richtung zu finden, diese abzuspeichern und gegebenenfalls automatisiert wieder aufzurufen. Prinzipiell ist aber auch möglich, für bestimmte Positionen der Blendenkante in Richtung der optischen Achse auch bestimmte, als günstig erachtete Positionen der Blendenkante in Richtung quer zur optischen Achse zu bestimmen, abzuspeichern und gegebenenfalls automatisiert wieder aufzurufen.

Bei einer besonders einfachen Variante wird dabei die Blendenkante auf der optischen Achse, also bei Y oder X = 0 positioniert. Hierdurch können wegen der dadurch bewirkten Schräglichtbeleuchtung bereits gute Kontrastverstärkungen erreicht werden. Weitere Kriterien sind gute Bildhomogenitäten und vignettierungsfreie Abbildungen. Diese Daten können in entsprechenden Kurven oder Tabellen abgespeichert und bedarfsweise wieder aufgerufen werden.

Erfindungsgemäß werden dabei Einstellungen der mindestens einen Blendenkante, weiterer Blenden und/oder weiterer optischer Komponenten abhängig von einer festgestellten Konfiguration von vorhandenen, insbesondere optischen, Komponenten, automatisiert vorgenommen. Erfindungsgemäß kann automatisch erkannt werden, welches Objektiv aktiv und welche Zoomstellung eingestellt ist und prinzipiell auch um welchen Mikroskoptyp es sich handelt.

Bei einem erfindungsgemäßen Mikroskopsystem ist hierzu zweckmäßig eine Speichereinrichtung vorhanden, in welcher Einstellungen der Durchlichteinrichtung und des Lichtmikroskops, insbesondere der mindestens einen Blendenkante, abgespeichert werden.

Durch den Einsatz eines Prismenfilms können die Einsatzmöglichkeiten einer Vorrichtung zur Durchlichtbeleuchtung mit einer flächigen Lichtquelle erheblich gesteigert werden. Insbesondere kann der Kontrast variabel eingestellt werden. Insbesondere für kontrastarme Proben sind dabei deutliche Verbesserungen der Darstellungsqualität möglich.

Das Verfahren gemäß dem zweiten Aspekt der Erfindung kann insbesondere mit der erfindungsgemäßen Vorrichtung zur Durchlichtbeleuchtung verwirklicht werden. Hierzu ist bei dem erfindungsgemäßen Mikroskopsystem in einer vorteilhaften Variante eine Steuereinrichtung vorhanden, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines erfindungsgemäßen Verfahrens eingerichtet ist.

Die erfindungsgemäßen Vorteile, also insbesondere deutliche Verbesserungen des Kontrasts, werden in besonderer Weise erreicht, wenn die Prismen der Prismenfolie in Richtung der Lichtquelle weisen.

Bei einer besonders bevorzugten Ausgestaltung der erfindungsgemäßen Vorrichtung ist eine Hauptablenkrichtung der Ablenkeinrichtung, also im Wesentlichen der Prismenfolie, von der optischen Achse verschieden. So wird eine Schräglichtbeleuchtung bewerkstelligt, mit der gute Kontraststeigerungen möglich sind.

Im Detail hängen die erzielbaren Kontrastsverbesserungen von den optischen Parametern des Prismenfilms, also der einzelnen Prismen, ab. Eingehende Versuch haben hier gezeigt, dass besonders gute Ergebnisse möglich sind, wenn die Prismen des Prismenfilms einen Prismenwinkel von 20° bis 30°, bevorzugt von 24° bis 28° und besonders bevorzugt von 26°, aufweisen.

Die erzielbaren Kontraststeigerungen hängen im Einzelnen stark von der jeweiligen Probe ab. Bei weiteren vorteilhaften Varianten der erfindungsgemäßen Vorrichtung ist deshalb die Ablenkeinrichtung um eine quer zur optischen Achse orientierte Drehachse drehbar. Das bedeutet, dass die Schräglichtbeleuchtung aus unterschiedlichen Winkeln relativ zu der zu untersuchenden Probe erfolgen kann. Zweckmäßig wird die Drehachse dabei so gewählt, dass sie parallel zur Richtung der Prismenkanten orientiert ist.

Die Variabilität der Durchlichtbeleuchtung kann weiter gesteigert werden, wenn Mittel zum variablen Positionieren der Ablenkeinrichtung in einer Richtung quer zur optischen Achse und/oder in Richtung der optischen Achse vorhanden sind. Insbesondere kann mit solchen Mitteln der Winkel einer Schräglichtbeleuchtung variiert werden.

Sodann können für Fälle, in welchen eine Beleuchtung der zu untersuchenden Probe über den Prismenfilm nicht zweckmäßig und/oder nicht gewünscht ist, Mittel vorhanden sein zum Herausbewegen der Ablenkeinrichtung aus einem Strahlengang des Beleuchtungslichts und Hereinbewegen der Ablenkeinrichtung in den Strahlengang des Beleuchtungslichts.

In diesem Zusammenhang kann die Funktionalität der erfindungsgemäßen Vorrichtung weiter gesteigert werden, wenn mindestens eine Blendenkante zum Beschneiden des Beleuchtungslichtbündels vorhanden ist, wobei die Blendenkante zwischen der Halteeinrichtung und der Lichtquelle angeordnet ist und sich quer zu einer optischen Achse, insbesondere eines Objektivs, eines Lichtmikroskops erstreckt, welches in einem Betriebszustand an der Vorrichtung zur Durchlichtbeleuchtung positioniert werden kann. Der Strahlengang des Beleuchtungslichts zwischen der Blendenkante und einer von der Halteeinrichtung gehaltenen Probe kann dabei insbesondere frei von verstellbaren strahlfokussierenden Komponenten sein. Außerdem sind zum Anpassen des Strahlengangs des Beleuchtungslichts an eine wirksame Eintrittspupille des Objektivs Mittel zum variablen Positionieren der Blendenkante in Richtung der optischen Achse vorhanden und eine Position der Blendenkante ist in Richtung der optischen Achse, insbesondere unabhängig von einer Position der Blendenkante quer zur optischen Achse, variierbar.

Dieser Weiterbildung liegt als Kerngedanke zugrunde, das von der Lichtquelle ausgesandte Beleuchtungslicht mit einer Blendenkante zu beschneiden, wobei die Blendenkante in Richtung der optischen Achse je nach Lage der wirksamen Eintrittspupille des optischen Systems einstellbar ist.

Beleuchtungslicht, das von Orten außerhalb der Eintrittspupillen in das optische System, also das Mikroskopobjektiv, eintritt, kann dort in der Durchlichthellfeldabbildung nicht zur Abbildung selbst, sondern nur zum Streuuntergrund beitragen. Das ist nicht erwünscht und hieraus ergibt sich eine weitere vorteilhafte Verfahrensvariante, bei der eine Leuchtfläche der Lichtquelle einer tatsächlich wirksamen Rückprojektion des Beleuchtungslichts angepasst wird. Das bedeutet, dass Teile der Leuchtfläche, die kein zur Abbildung beitragendes Beleuchtungslicht liefern können, von vornherein ausgeblendet werden. Hierzu ist bei der erfindungsgemäßen Vorrichtung vorteilhafterweise zum Variieren einer wirksamen Leuchtfläche der Lichtquelle mindestens eine weitere Blende vorhanden. Diese kann zweckmäßig unmittelbar vor der Lichtquelle positioniert werden.

Bei einer besonders vorteilhaften Ausführungsvariante der erfindungsgemäßen Vorrichtung ist die Blendenkante eine Kante einer mechanischen Blende und die Ablenkeinrichtung mit der Prismenfolie ist an der mechanischen Blende gebildet. Zum Bereitstellen der Blendenfunktionalität weist die mechanische Blende mindestens einen lichtundurchlässigen Teilbereich auf. So kann ein hochfunktionales System bereitgestellt werden, bei welchem für verschiedene optische Situationen entweder die Blendenkante und/oder die Prismenfolie zum Einsatz kommen kann.

Hieraus ergeben sich weitere vorteilhafte Varianten des erfindungsgemäßen Verfahrens, bei denen die Blendenkante aus dem Strahlengang des Beleuchtungslichts herausbewegt und die Ablenkeinrichtung in den Strahlengang des Beleuchtungslichts hineinbewegt wird, wenn eine wirksame Eintrittspupille des Objektivs außerhalb eines für die Blendenkante zugänglichen Bereichs liegt. Der Bedienkomfort für einen Benutzer kann hierbei gesteigert werden, wenn die Einstellungen der Ablenkeinrichtung, der mindestens eine Blendenkante und/oder weiterer Blenden, insbesondere nach Benutzereingabe, automatisiert vorgenommen werden.

Die erzielten Resultate hängen im Hinblick auf Darstellungsqualität und Kontrastierung der Probe stark insbesondere von der Ortsposition der Blendenkante ab, da durch die Blendenkante die Beleuchtung empfindlich variiert und eingestellt werden kann.

Beispielsweise kann bei einer besonders bevorzugten Ausführungsform der erfindungsgemäßen Vorrichtung zum Verschieben der Blendenkante in Richtung der optischen Achse und in Richtung quer zur optischen Achse eine Schlittenmechanik mit einem ersten Schlitten und einem zweiten Schlitten vorhanden sein. Zum Antrieb dieser Schlitten können Schrittmotoren verwendet werden, mit welchen eine präzise Positionierung möglich ist.

Bei einer weiteren vorteilhaften Ausführungsvariante der erfindungsgemäßen Vorrichtung ist zum Beschneiden des Beleuchtungslichtbündels zwischen der Halteeinrichtung und der Lichtquelle mindestens eine weitere variabel positionierbare Blende vorhanden. Mit einer solchen weiteren Blende, welche insbesondere eine lineare Blendenkante aufweisen kann, können im Hinblick auf das Reduzieren von Streulicht weitere Verbesserungen erzielt werden. Außerdem kann es zweckmäßig sein, für bestimmte Lagen der Eintrittspupille eine weitere variabel positionierbare Blende zur Verfügung zu haben.

Eine weitere vorteilhafte Ausgestaltung der erfindungsgemäßen Vorrichtung besteht in diesem Zusammenhang darin, dass eine erste mechanische Blende und eine zweite mechanische Blende vorhanden ist, dass die Blendenkante durch eine Kante der ersten mechanischen Blende oder durch eine Kante der zweiten mechanischen Blende gebildet ist und dass zum Verschieben der Blendenkante in Richtung der optischen Achse und in Richtung quer zur optischen Achse eine erste Schlittenmechanik mit einem ersten Schlitten und einem zweiten Schlitten für die erste mechanische Blende und eine zweite Schlittenmechanik mit einem dritten Schlitten und einem vierten Schlitten für die zweite mechanische Blende vorhanden ist. Mit dieser Anordnung kann die effektiv wirksame Blendenkante variabel an unterschiedlichste Lagen der Eintrittspupille angepasst werden.

Im Hinblick auf die einzusetzende Lichtquelle kommt es von der grundsätzlichen Funktion zwar nur darauf an, dass Licht mit einer gewünschten spektralen Zusammensetzung in einer gewünschten Intensität bereitgestellt wird. Im Hinblick auf eine möglichst kompakte Anordnung in baulicher Hinsicht werden bei besonders bevorzugten Varianten der erfindungsgemäßen Vorrichtungen flächige Lichtquellen, insbesondere eine Mehrzahl von Leuchtdioden eingesetzt. Besonders vorteilhaft im Hinblick auf Baugröße und Lichtleistung sind Weißlicht-LEDs. Besonders bevorzugt können sogenannte PHLOX-Lichtquellen eingesetzt werden.

In verfahrensmäßiger Hinsicht ist hierzu bevorzugt, dass ein von der Lichtquelle ausgehendes Beleuchtungslichtbündel von einer zwischen der Halteeinrichtung und der Lichtquelle angeordneten Blendenkante beschnitten wird, wobei insbesondere ein Strahlengang des Beleuchtungslichts zwischen der Blendenkante und der von der Halteeinrichtung gehaltenen Probe frei ist von verstellbaren strahlfokussierenden Komponenten und wobei die Blendenkante sich quer zu einer optischen Achse des Objektivs erstreckt und abhängig von der Lage der wirksamen Eintrittspupille des Objektivs in Richtung der optischen Achse des Objektivs positioniert wird.

Gemäß einer weiteren vorteilhaften Variante des erfindungsgemäßen Verfahrens kann demgemäß die Blendenkante zum Einstellen des Kontrasts in einer Richtung quer zur optischen Achse positioniert werden. Hierzu sind bei der erfindungsgemäßen Vorrichtung zur Durchlichtbeleuchtung besonders bevorzugt geeignete Mittel zum variablen Positionieren der Blendenkante in einer Richtung quer zur optischen Achse vorhanden.

Die erfindungsgemäßen Vorteile werden in besonderer Weise erreicht, wenn die Blendenkante in einer Ebene der wirksamen Eintrittspupille des Objektivs positioniert ist.

Besonders bevorzugt werden Einstellungen der Ablenkeinrichtung, der mindestens einen Blendenkante, weiterer Blenden und/oder weiterer optischer Komponenten abhängig von einer festgestellten Konfiguration von vorhandenen, insbesondere optischen, Komponenten, automatisiert vorgenommen. Beispielsweise kann automatisch erkannt werden, welches Objektiv aktiv und welche Zoomstellung eingestellt ist und prinzipiell auch um welchen Mikroskoptyp es sich handelt.

Bei einem erfindungsgemäßen Mikroskopsystem ist hierzu zweckmäßig eine Speichereinrichtung vorhanden, in welcher Einstellungen der Durchlichteinrichtung und des Lichtmikroskops, insbesondere der Ablenkeinrichtung und/oder der mindestens einen Blendenkante, abgespeichert werden.

Der Neigungswinkel der Ablenkeinrichtung, im Wesentlichen also der Neigungswinkel der Prismenfolie gegen die optische Achse, ist ein wesentlicher Parameter zum Einstellen des Kontrasts und damit der Darstellungsqualität. Hierbei haben eingehende Versuche gezeigt, dass dieser Neigungswinkel besonders vorteilhaft an eine jeweils eingestellte Kombination aus Objektiv, Zoomkörper und Zoomfaktor angepasst wird. So kann die Beleuchtung sehr variabel an unterschiedliche optische Situationen und zu untersuchende Proben angepasst werden.

Aus ergonomischen Gründen ist bevorzugt, dass die Ablenkeinrichtung im Betrieb so geneigt ist, dass das Beleuchtungslichtbündel von einem Benutzer weg verkippt wird. Blendungen können so vermieden werden.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in Richtung quer zur optischen Achse so positioniert werden, dass sie die Eintrittspupille in Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Sodann eröffnet die Positionierung der Blendenkante in der Ebene der Eintrittspupille die Möglichkeit, eine Schräglichtbeleuchtung dadurch zu erreichen, dass die Blendenkante einen Teil der Eintrittspupille abdeckt. Besonders bevorzugt beschneidet die Blendenkante bei diesen Ausführungsvarianten das Beleuchtungslichtbündel asymmetrisch. Das bedeutet, dass bestimmte Strahlen des Beleuchtungslichts herausselektiert werden und im Ergebnis eine Schräglichtbeleuchtung erzielt wird. Hierdurch können in der Praxis vorteilhafte Verbesserungen der Kontrastierung erzielt werden.

Gemäß einer weiteren vorteilhaften Variante des erfindungsgemäßen Verfahrens kann demgemäß die Blendenkante zum Einstellen des Kontrasts in einer Richtung quer zur optischen Achse positioniert werden. Hierzu sind bei der erfindungsgemäßen Vorrichtung zur Durchlichtbeleuchtung besonders bevorzugt geeignete Mittel zum variablen Positionieren der Blendenkante in einer Richtung quer zur optischen Achse vorhanden.

Das Positionieren der Blendenkante kann vorzugsweise automatisch nach Aufforderung durch einen Benutzer abhängig von der Mikroskopeinstellung erfolgen. Eigenschaften des abbildenden Systems können somit automatisch berücksichtigt werden.

Bei einer besonders einfach aufgebauten Variante sind zwischen der Blendenkante und der Probe gar keine strahlfokussierenden Komponenten, insbesondere gar keine strahlformenden Komponenten vorhanden.

Bevorzugt umfasst die Mikroskopeinstellung mindestens das verwendete Objektiv, einen verwendeten Zoomkörper und eine mit dem Zoomkörper eingestellte Vergrößerung. Bei Kenntnis dieser Komponenten kann die Blendenkante an eine optimale Position bewegt werden, welche für die verwendete Objektiv-Zoomkörper-Kombination vorab bestimmt und gespeichert worden sein kann. Die optimale Position kann insbesondere entlang der Richtung der optischen Achse der Lage der Eintrittspupille entsprechen. An dieser weist der Beleuchtungsstrahlengang des Lichtmikroskops eine Taille auf.

Eine Mikroskopkonfiguration umfasst zweckmäßig mindestens einen Typ eines Zoomsystems und/oder eines ausgewählten Objektivs. Die Begriffe Mikroskoptyp und Typ des Zoomsystems können synonym verwendet werden.

Eine Mikroskopeinstellung beinhaltet zweckmäßig mindestens eine Zoomvergrößerung und/oder eine Position eines ausgewählten Objektivs.

Bei einer besonders bevorzugten Variante der erfindungsgemäßen Vorrichtung sind zum Anpassen des Strahlengangs des Beleuchtungslichts an die wirksame Eintrittspupille des Objektivs Mittel zum variablen Positionieren der Blendenkante entlang der Richtung der optischen Achse vorhanden, wobei eine Position der Blendenkante entlang der Richtung der optischen Achse unabhängig von einer Position der Blendenkante quer zur optischen Achse variierbar ist. Wesentliche Idee dieser Weiterbildung ist, dass die Blendenkante entlang der Richtung der optischen Achse je nach Lage der wirksamen Eintrittspupille des optischen Systems eingestellt wird.

Bei einer bevorzugten Ausführung der erfindungsgemäßen Vorrichtung sind außerdem Mittel zum Abfragen eines Mikroskoptyps eines Lichtmikroskops, welches an der Vorrichtung zur Durchlichtbeleuchtung positionierbar ist, vorhanden und die Steuereinrichtung ist dazu eingerichtet, abhängig von dem Mikroskoptyp die Blendenkante mit den Mitteln zum variablen Positionieren der Blendenkante in Richtung quer zur optischen Achse zu positionieren.

Hierbei kann die Steuereinrichtung dazu eingerichtet sein, mindestens für die folgenden Mikroskoptypen unterschiedliche Positionseinstellungen der Blendenkante vorzunehmen: Stereomikroskop mit einem auszuleuchtenden Kanal, Stereomikroskop mit zwei auszuleuchtenden Kanälen, Stereomikroskop mit einem auszuleuchtenden Kanal und einem Anregungskanal zur Fluoreszenzanregung, Stereomikroskop mit zwei auszuleuchtenden Kanälen und einem Anregungskanal zur Fluoreszenzanregung sowie Makroskop mit einem auszuleuchtenden Kanal. Die Kanäle stellen getrennte Strahlenverläufe durch mindestens teilweise dieselben optischen Komponenten dar, insbesondere durch das Objektiv und einen Zoomkörper. Für eine optimale Beleuchtung soll jeweils allein der auszuleuchtende Kanal mit dem Beleuchtungslichtbündel ausgeleuchtet werden. Sonstiges Licht trägt hingegen nicht zur Abbildung bei und führt zu Streulicht.

Zur Ausleuchtung eines bestimmten Kanals ist in der Regel eine Einstellung der Blendenkante in einer Richtung quer zur optischen Achse notwendig. Hierzu ist eine Ausführungsvariante der erfindungsgemäßen Vorrichtung zweckmäßig, bei der Mittel zum variablen Positionieren der Blendenkante in einer Richtung quer zur optischen Achse vorhanden sind und die Steuereinrichtung dazu eingerichtet ist, abhängig von Mikroskopeinstellung und/oder Mikroskopkonfiguration die Blendenkante mit den Mitteln zum variablen Positionieren der Blendenkante in einer Richtung quer zur optischen Achse zu positionieren. Die Blendenkante kann demgemäß auch zum Einstellen des Kontrasts in einer Richtung quer zur optischen Achse positioniert werden.

Bei einer bevorzugten Ausführungsvariante der erfindungsgemäßen Vorrichtung weisen die Mittel zum Abfragen eines Mikroskoptyps und/oder die Mittel zum Abfragen einer Mikroskopeinstellung und/oder einer Mikroskopkonfiguration eine elektrische Schnittstelle, insbesondere einen Controller Area Network-Bus (CAN-Bus), auf. Alternativ kann auch eine optische Schnittstelle oder eine Ethernet-Verbindung eingesetzt werden. Es kann entweder dieselbe Schnittstelle sowohl für die Mittel zum Abfragen eines Mikroskoptyps als auch für die Mittel zum Abfragen einer Mikroskopeinstellung und/oder einer Mikroskopkonfiguration verwendet werden oder es können separate Schnittstellen vorgesehen sein.

Für die Blende oder die Blenden kommt es im Prinzip nur auf die technische Wirkung an, dass bestimmte Lichtstrahlen unbeeinträchtigt durch die Blendenkante bleiben, andere Lichtstrahlen dagegen aus dem Lichtstrahl herausgenommen oder ausgeblendet werden. Diese Funktion kann durch eine mechanische Blende, prinzipiell aber auch durch elektronisch ansteuerbare Flüssigkristall-Arrays oder LCD-Arrays verwirklicht werden.

Besonders bevorzugt sind zum Beschneiden des Beleuchtungslichtbündels zwischen der Halteeinrichtung und der Lichtquelle mindestens zwei Blendenkanten vorhanden, welche relativ zueinander bewegbar sind. Die Steuereinrichtung ist dazu eingerichtet, die mindestens zwei Blendenkanten abhängig von Mikroskopeinstellung und/oder Mikroskopkonfiguration zu positionieren. Im Hinblick auf das Reduzieren von Streulicht können hiermit weitere Verbesserungen erzielt werden. Außerdem kann es zweckmäßig sein, für bestimmte Lagen der wirksamen Eintrittspupille eine weitere variabel positionierbare Blende zur Verfügung zu haben.

Eine einfache Herstellung und eine besonders gute Streulichtreduzierung werden erreicht, wenn die Blenden entlang der Richtung der optischen Achse zueinander versetzt sind und die Bewegungsbereiche einander überlappen.

Die Blenden umschließen vorzugsweise eine mittige Öffnungsfläche vollständig. Durch Bewegen der Blenden kann dabei ein Flächenschwerpunkt der Öffnungsfläche quer zur optischen Achse verschoben werden. Dies wird in einfacher Weise bei einer Ausführung der erfindungsgemäßen Vorrichtung mit vier Blenden, welche jeweils eine lineare Blendenkante aufweisen, erreicht. Bei Verwendung von zwei Blenden sind gebogene oder L-förmige Blendenkanten bevorzugt, so dass bereits mit zwei Blenden die Öffnungsfläche zwischen den Blenden vollständig umschlossen werden kann.

Bei einer weiteren bevorzugten Ausgestaltung der erfindungsgemäßen Vorrichtung ist eine der mindestens zwei Blendenkanten durch eine Irisblende gebildet. Weil für viele Mikroskoptypen zumindest ein Teil der auszuleuchtenden Kanäle eine runde Form aufweist, kann durch eine Irisblende in leichter Weise eine gute Anpassung des von der Lichtquelle beleuchteten Bereichs an die auszuleuchtenden Kanäle des Mikroskoptyps erreicht werden.

Für einen Mikroskoptyp mit zwei auszuleuchtenden Kanälen kann eine gute Annäherung durch eine Irisblende und zwei weitere Blenden mit jeweils linearer Blendenkante erfolgen. Die beiden linearen Kanten beschneiden den durch die Irisblende gebildeten Kreis auf gegenüberliegenden Seiten, so dass lediglich der Bereich zwischen den beiden auszuleuchtenden Kanälen unnötig beleuchtet wird.

Bei einer weiteren bevorzugten Ausführungsvariante der erfindungsgemäßen Vorrichtung weist die Steuereinrichtung eine Speichereinrichtung auf, in der Positionseinstellungen der mindestens einen Blendenkante zum Positionieren der mindestens einen Blendenkante abhängig von Mikroskopeinstellung und/oder einer Mikroskopkonfiguration gespeichert sind. Hierfür können in Referenzmessungen mit verschiedenen Mikroskopeinstellungen und/oder Mikroskopkonfigurationen vorteilhafte Positionen bestimmt und abgespeichert worden sein. Die gespeicherte Position wird dann eingenommen, sobald mit den Mitteln zum Abfragen einer Mikroskopkonfiguration und den Mitteln zum Abfragen einer Mikroskopeinstellung eine aktuell verwendete Systemumgebung erkannt worden ist. Die Mikroskopkonfiguration kann dabei den Typ des Zoomkörpers und des im Strahlengang befindlichen Objektivs umfassen. Die Mikroskopeinstellung kann die Zoomstellung des Zoomkörpers sowie die Objektivposition (2D, 3D-Stellung) umfassen.

Bei einer bevorzugten Variante der erfindungsgemäßen Vorrichtung ist ein Bedienelement vorhanden, über das durch einen Benutzer Positionsdaten zu einer eingestellten Position der mindestens einen Blendenkante in der Speichereinrichtung speicherbar und abrufbar sind. Individuell von dem Benutzer eingestellte Positionen können somit vorteilhafterweise gespeichert und später wieder abgerufen werden.

Beleuchtungslicht, das von Orten außerhalb der wirksamen Eintrittspupille in das optische System, also das Mikroskopobjektiv, eintritt, kann dort in der Durchlichthellfeldabbildung nicht zur Abbildung selbst, sondern nur zum Streuuntergrund beitragen. Das ist nicht erwünscht und hieraus ergibt sich eine weitere vorteilhafte Verfahrensvariante, bei der eine Leuchtquelle der Lichtquelle einer tatsächlich wirksamen Rückprojektion des Beleuchtungslichts angepasst wird. Das bedeutet, dass Teile der Leuchtfläche, die kein zur Abbildung beitragendes Beleuchtungslicht liefern können, von vornherein ausgeblendet werden. Hierzu ist bei der erfindungsgemäßen Vorrichtung vorteilhafterweise zum Variieren einer wirksamen Leuchtfläche der Lichtquelle mindestens eine weitere Blende vorhanden, die unmittelbar vor der Lichtquelle positioniert ist.

Ob und in welchem Maß durch eine Schräglichtbeleuchtung Verbesserungen des Kontrasts erzielt werden können, hängt von der jeweils untersuchten Probe ab. In diesem Zusammenhang ist ein weiteres Ausführungsbeispiel der erfindungsgemäßen Vorrichtung von Vorteil, bei welcher Mittel zum Drehen der Blendenkante um die optische Achse vorhanden sind. Das bedeutet, dass die Richtung, in welche die mittlere Strahlrichtung gegenüber der optischen Achse bei einer Schräglichtbeleuchtung verkippt ist, variiert werden kann. Dadurch wird, wenn die erfindungsgemäße Vorrichtung mit einem Makroskop verwendet wird, im Prinzip dasselbe erreicht wie beim Drehen der Probe um die optische Achse. Wesentlicher Vorteil ist hierbei, dass die Probe als solche in der Halteeinrichtung unverändert bleiben kann und demgemäß nicht in ihrer Position verändert werden muss.

Die erzielten Resultate hängen im Hinblick auf Darstellungsqualität, Kontrastierung und Helligkeit der Probe stark insbesondere von der Ortsposition der Blendenkante ab, da durch die Blendenkante die Beleuchtung empfindlich variiert und eingestellt werden kann.

Beispielsweise kann bei einer besonders bevorzugten Ausführungsform der erfindungsgemäßen Vorrichtung zum Verschieben der Blendenkante entlang der Richtung der optischen Achse und in Richtung quer zur optischen Achse eine Schlittenmechanik mit einem ersten Schlitten und einem zweiten Schlitten vorhanden sein. Zum Antrieb dieser Schlitten können Schrittmotoren verwendet werden, mit welchen eine präzise Positionierung möglich ist.

Das erfindungsgemäße Verfahren kann insbesondere mit der erfindungsgemäßen Vorrichtung zur Durchlichtbeleuchtung verwirklicht werden. Hierzu ist bei dem erfindungsgemäßen Mikroskopsystem in einer vorteilhaften Variante eine Steuereinrichtung vorhanden, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines erfindungsgemäßen Verfahrens eingerichtet ist.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in der Richtung quer zur optischen Achse so positioniert werden, dass sie die wirksame Eintrittspupille in der Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Sodann eröffnet die Positionierung der Blendenkante in der Ebene der Eintrittspupille die Möglichkeit, eine Schräglichtbeleuchtung dadurch zu erreichen, dass die Blendenkante einen Teil der Eintrittspupille abdeckt. Besonders bevorzugt beschneidet die Blendenkante bei diesen Ausführungsvarianten das Beleuchtungslichtbündel asymmetrisch. Das bedeutet, dass bestimmte Strahlen des Beleuchtungslichts herausselektiert werden und im Ergebnis eine Schräglichtbeleuchtung erzielt wird. Hierdurch können in der Praxis vorteilhafte Verbesserungen der Kontrastierung erzielt werden.

Bei einer weiteren bevorzugten Variante des erfindungsgemäßen Verfahrens werden für eine verwendete Mikroskopeinstellung und/oder für eine verwendete Mikroskopkonfiguration einem Benutzer verschiedene Positionseinstellungen der Blendenkante angeboten. Die verschiedenen Positionseinstellungen sind in Hinblick auf je einen Beleuchtungsparameter optimiert, wobei die Beleuchtungsparameter ein Maß sind für einen Intensitätsgradienten eines Mikroskopbilds in einer Richtung quer zur Blendenkante, einen Bildkontrast des Mikroskopbilds, einen Kontrastumfang, eine Bildhomogenität und/oder einen Schattenwurf im Mikroskopbild. Ein Benutzer kann demnach auswählen, ob die Blendenkanten beispielsweise für einen optimalen Bildkontrast des Mikroskopbilds oder für einen minimalen Intensitätsgradienten des Mikroskopbilds positioniert werden sollen.

Die verschiedenen Positionseinstellungen können vorab bestimmt werden, indem zunächst die Position der Blendenkante entlang der Richtung der optischen Achse des Objektivs variiert wird und für jede Position der Blendenkante entlang der Richtung der optischen Achse ein Mikroskopbild mindestens teilweise aufgenommen wird. Sodann wird für jedes Mikroskopbild ein Beleuchtungsparameter bestimmt und als eine optimale Position der Blendenkante wird diejenige Position der Blendenkante entlang der Richtung der optischen Achse festgelegt und gespeichert, bei der ein Verlauf des Beleuchtungsparameters aufgetragen gegen die Position der Blendenkante entlang der Richtung der optischen Achse eine vorbestimmte Charakteristik aufweist. Diese Charakteristik kann dann für jede relevante Zoomstellung des Mikroskops aufgenommen werden. Zwischenbereiche können später interpoliert werden.

Als eine in Hinblick auf einen Intensitätsgradienten optimierte Position kann diejenige Position der Blendenkante festgelegt werden, wo im Mikroskopbild ein Verlauf des Intensitätsgradienten aufgetragen gegen die Position Blendenkante entlang der Richtung der optischen Achse einen Nulldurchgang aufweist.

Bei einem bevorzugten Ausführungsbeispiel des erfindungsgemäßen Mikroskopsystems ist in einem Abbildungsstrahlengang des Lichtmikroskops eine motorisierte Aperturblende zum Einstellen einer Beobachtungsapertur vorhanden und die Steuereinrichtung ist dazu eingerichtet, die Aperturblende abhängig von einer Position der mindestens einen Blendenkante zu positionieren. Die Blendenstellung der motorisierten Aperturblende kann beispielsweise über eine Codierung bestimmbar sein. Für eine Kontrastverbesserung kann die Beobachtungsapertur des Abbildungssystems an die Beleuchtungseinstellungen angepasst und bei Bedarf zusammen mit den Beleuchtungseinstellungen abgespeichert und reproduziert werden.

Bei einer weiteren bevorzugten Variante des erfindungsgemäßen Mikroskopsystems weist das Lichtmikroskop einen kodierten Objektivwechsler auf. Mit diesem wird ausgegeben, welches Objektiv in den Strahlengang des Lichtmikroskops eingeschwenkt ist. In einem Speicher des Mikroskops oder eines externen Computers sind Vergrößerungswerte und Objektivtypen der Objektive des Objektivwechslers gespeichert und können mit den Mitteln zum Abfragen einer Mikroskopeinstellung abgefragt werden.

Vorteilhafterweise können mit dem erfindungsgemäßen Verfahren und der erfindungsgemäßen Vorrichtung die Durchlichtbeleuchtung bei einem Lichtmikroskop mit veränderlicher Eintrittspupille automatisch an verschiedene Objektlagen, die sich bei Verwendung von unterschiedlichem Zubehör ergeben, anpasst werden.

Zum Anbringen des Probenauflagetischs sind erfindungsgemäß Montagemittel am Gehäuse der Vorrichtung zur Durchlichtbeleuchtung vorhanden. Diese können in grundsätzlich beliebiger Weise gebildet sein, solange der Probenauflagetisch mit den Montagemitteln in einer definierten Position gehalten wird. Beispielsweise können das Gehäuse und eine Unterseite des Probenauflagetischs passend für einen mechanischen Eingriff miteinander geformt sein. Für einen besonders stabilen Halt sind auch Schraub-, Klemm-, Schnapp- oder Magnetverbindungen möglich.

Mit dem Probenauflagetisch kann eine kostengünstige Erweiterung des Nutzungsbereichs der Vorrichtung zur Durchlichtbeleuchtung bereitgestellt werden. Innerhalb des Probenauflagetischs ist Raum für Zubehör, beispielsweise für weitere Lichtquellen wie eine Ringleuchte zur Dunkelfeld-Mikroskopie.

Bei einer bevorzugten Ausgestaltung der erfindungsgemäßen Vorrichtung sind Mittel zum Feststellen einer Identität eines Probenauflagetischs vorhanden und die Steuerungseinrichtung ist zum Positionieren der Blendenkante abhängig von einer festgestellten Identität eines Probenauflagetischs eingerichtet. Gemäß einer Ausführung der erfindungsgemäßen Vorrichtung sind Probenauflagetische verschiedener Bauhöhe vorhanden, von denen einer zum Montieren am Gehäuse ausgewählt werden kann. Indem die Steuerungseinrichtung zum Feststellen einer Identität eines separaten Probenauflagetischs eingerichtet ist, kann auch zwischen Probenauflagetischen verschiedener Bauhöhe unterschieden werden.

Weil sich durch einen separaten Probenauflagetisch die Objektebene, an welcher sich eine zu untersuchende Probe befindet, ändert, sollte eine Ausleuchtung des verwendeten Objektivs möglichst entsprechend angepasst werden. Deshalb ist die Steuerungseinrichtung erfindungsgemäß dazu eingerichtet, abhängig von einer festgestellten Anwesenheit eines separaten Probenauflagetischs die Blende zu positionieren.

Für eine ideale Ausleuchtung des verwendeten Objektivs kann eine Positionierung der Blende innerhalb des Probenauflagetischs zweckmäßig sein. Bei einer bevorzugten Ausgestaltung der erfindungsgemäßen Vorrichtung ist die Steuerungseinrichtung deshalb dazu eingerichtet, die Blendenkante aus dem Gehäuse durch die Durchgriffsöffnung in den Innenraum des Probenauflagetischs zu bewegen. Hierbei kann ein Zusammenstoß zwischen der Blendenkante und der Halteeinrichtung des Probenauflagetischs vermieden werden, weil durch die Erkennung der Identität des Probenauflagetischs auch die Position der Halteeinrichtung bekannt ist.

Bei einer bevorzugten Ausführungsvariante der erfindungsgemäßen Vorrichtung ist die Steuerungseinrichtung dazu eingerichtet, die Blendenkante genau dann durch die Durchgriffsöffnung des Gehäuses hindurchzubewegen, wenn die Mittel zum Feststellen der Anwesenheit eines Probenauflagetischs die Anwesenheit eines Probenauflagetischs feststellen. Für den Fall, dass Zubehör in den Probenauflagetisch eingesetzt ist, welches einen Bewegungsraum der Blendenkante belegt, kann vorgesehen sein, dass die Steuerungseinrichtung zur Vermeidung von Zusammenstößen auch weiteres Zubehör bei der Positionierung der Blendenkante berücksichtigt.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in Richtung quer zur optischen Achse so positioniert werden, dass sie die Eintrittspupille in Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Bevorzugt kann ein IDFII-Film (Image Directing Film) mit einer asymmetrischen Prismenstruktur verwendet werden, der in Kombination mit einer homogen abstrahlenden Leuchtfläche genutzt wird. Diese kann vorzugsweise über eine Flächenleuchte mit einer gerichteten Abstrahlcharakteristik realisiert werden, beispielsweise eine PHLOX-Flächenleuchte. Der IDFII-Film ist bevorzugt neigbar und/oder azimutal drehbar gelagert.

Bei einer besonders bevorzugten Ausführung der erfindungsgemäßen Vorrichtung ist in den Probenauflagetisch Zubehör, insbesondere eine Ringleuchte zur Dunkelfeld-Mikroskopie, einsetzbar. Zudem sind Mittel zum Feststellen der Anwesenheit von in den Probenauflagetisch eingesetztem Zubehör vorhanden und die Steuerungseinrichtung ist dazu eingerichtet, die Blendenkante abhängig von einer festgestellten Anwesenheit von in den Probenauflagetisch eingesetztem Zubehör zu positionieren. Vorteilhafterweise kann somit die Blendenkante auch außerhalb des Gehäuses positioniert werden, soweit dort kein Zubehör vorhanden ist. Ein Zusammenstoß der Blendenkante mit dem Zubehör kann hiermit vermieden werden.

Bei einer weiteren bevorzugten Variante der erfindungsgemäßen Vorrichtung ist vorgesehen, dass Montagemittel für mindestens eine Adapterplatte zum Beeinflussen des Beleuchtungslichtbündels, insbesondere für einen Polarisationsfilter, einen Farbfilter, einen Diffusor und/oder eine Blende, vorhanden sind, dass Mittel zum Feststellen der Anwesenheit einer Adapterplatte vorhanden sind und dass die Steuerungseinrichtung dazu eingerichtet ist, die Blendenkante abhängig von einer festgestellten Anwesenheit einer Adapterplatte zu positionieren. Die Montagemittel für die Adapterplatte können beispielsweise als Ausnehmung oder Einschuböffnung an der Durchgriffsöffnung des Gehäuses gebildet sein. Eine eingesetzte Adapterplatte ist hierdurch unterhalb der Halteeinrichtung des Gehäuses angeordnet. In diesem Fall steht auch bei aufgesetztem Probenauflagetisch der Tischinnenraum nicht der Blende zur Verfügung. Die Steuerungseinrichtung begrenzt somit einen erlaubten Bewegungsraum der Blendenkante auf einen Bereich innerhalb des Gehäuses und bis unmittelbar vor der Adapterplatte. Die Steuerungseinrichtung kann auch dazu eingerichtet sein, eine Richtungsbeeinflussung des Beleuchtungslichtbündels durch die Adapterplatte zu berücksichtigen und die Blendenkante zu einer anderen Position als ohne Adapterplatte zu bewegen. Geeignete Positionen der Blendenkante können vorab durch Messungen bestimmt und in einem Speicher der Steuereinrichtung gespeichert worden sein.

Bevorzugt sind auch Mittel zum Feststellen einer Identität von in den Probenauflagetisch eingesetztem Zubehör vorhanden und die Steuerungseinrichtung ist zum Positionieren der Blendenkante abhängig von einer festgestellten Identität von in den Probenauflagetisch eingesetztem Zubehör eingerichtet.

Außerdem ist bevorzugt, dass auch Mittel zum Feststellen einer Identität einer Adapterplatte vorhanden sind und dass die Steuerungseinrichtung zum Positionieren der Blendenkante abhängig von einer festgestellten Identität einer Adapterplatte eingerichtet ist. Vorteilhafterweise kann somit zwischen verschiedenem Zubehör und/oder verschiedenen Adapterplatten unterschieden werden und ein erlaubter Bewegungsraum für die Blendenkante abhängig von den Abmessungen der identifizierten Adapterplatte und/oder dem identifizierten Zubehör festgelegt werden.

Bei einem besonders bevorzugten Ausführungsbeispiel der erfindungsgemäßen Vorrichtung weisen die Mittel zum Feststellen der Anwesenheit und insbesondere Identität eines Probenauflagetischs, die Mittel zum Feststellen der Anwesenheit und insbesondere Identität von in den Probenauflagetisch eingesetztem Zubehör und die Mittel zum Feststellen der Anwesenheit und insbesondere Identität einer Adapterplatte jeweils einen Magnetfeldsensor, insbesondere einen Hallsensor, auf. Grundsätzlich können aber auch andere Sensoren, beispielsweise Drucksensoren, optische Sensoren oder kapazitive Näherungsschalter, verwendet werden. Die Mittel zum Feststellen der Anwesenheit eines Probenauflagetischs und die Mittel zum Feststellen der Identität eines Probenauflagetischs können somit durch dieselbe Einrichtung, etwa einen Magnetfeldsensor, ausgeführt sein. Gleiches gilt bezüglich der Feststellung der Anwesenheit und Identität von Zubehör und der Adapterplatte.

Bei einer erfindungsgemäßen Ausführungsvariante kann zwischen verschiedenen Probenauflagetischen unterschieden werden, indem diese mit verschieden starken Magneten ausgestattet sind. Die Steuerungseinrichtung ist dann dazu eingerichtet, die Probenauflagetische an Hand der Magnetfeldstärke, die vom Hallsensor bestimmt wird, zu unterscheiden. Statt verschieden starken Magneten können die Magnete auch so an den Probeauflagetischen angebracht sein, dass sie in einem aufgesetzten Zustand des Probenauflagetischs unterschiedlich nah an den Hallsensor gelangen. In analoger Weise kann zwischen verschiedenem Zubehör und zwischen verschiedenen Adapterplatten unterschieden werden.

Bei einer weiteren bevorzugten Ausführungsvariante der erfindungsgemäßen Vorrichtung ist mit den Mitteln zum variablen Positionieren der Blendenkante in Richtung der optischen Achse und mit den Mitteln zum variablen Positionieren der Blendenkante in einer Richtung quer zur optischen Achse die Blendenkante um eine Drehachse, welche quer zur optischen Achse steht, drehbar. Im Vergleich zu einem Verschieben in Richtung der optischen Achse ist durch ein Drehen vorteilhafterweise der Raumbedarf der Blende in einer Ebene quer zur optischen Achse geringer. Dadurch kann die Blendenkante auch durch eine verhältnismäßig kleine Durchgriffsöffnung bewegt werden. Die Größe der Durchgriffsöffnung ist in der Regel auf die Größe üblicher transparenter Objektauflagen, beispielsweise Glasscheiben mit einem Außendurchmesser von 120 mm, abgestimmt und kann nicht beliebig groß gewählt werden.

Demgemäß ist bei einer bevorzugten Variante des erfindungsgemäßen Verfahrens vorgesehen, dass zum Bewegen der Blendenkante durch die Durchgriffsöffnung die Blendenkante zumindest um eine Drehachse, welche quer zur optischen Achse steht, gedreht wird. Die Blendenkante wird somit vollständig durch die Durchgriffsöffnung bewegt, während die Blende als Ganzes nur teilweise durch die Durchgriffsöffnung geführt wird.

Bei einem weiteren bevorzugten Ausführungsbeispiel des erfindungsgemäßen Verfahrens wird zum Bestimmen einer Position der Blendenkante diese, insbesondere nach einem Einschalten der Vorrichtung zur Durchlichtbeleuchtung, in eine Referenzposition bewegt. Die Ausgangsposition ist hier unbekannt. Zum Vermeiden eines Zusammenstoßes zwischen der Blendenkante und der Halteeinrichtung wird die Blendenkante dabei um eine Drehachse, welche quer zur optischen Achse steht, in eine Richtung weg von der zu untersuchenden Probe bewegt. Anschließend kann die Blendenkante aus dem Beleuchtungslichtbündel heraus in die Referenzposition bewegt werden. Durch das Drehen wird die Blendenkante etwa parallel zur optischen Achse in Richtung zur Lichtquelle hin bewegt. Für den Fall, dass sich die Blendenkante in der unbekannten Ausgangsposition außerhalb des Gehäuses befindet, wird somit die Blendenkante zunächst entlang der optischen Achse durch die Durchgriffs-öffnung in das Gehäuse hinein bewegt, ohne mit dem Gehäuse oder der Halteeinrichtung zusammenzustoßen.

Bei einer weiteren bevorzugten Variante des erfindungsgemäßen Verfahrens wird, wenn die Blendenkante durch die Durchgriffsöffnung in den Probenauflagetisch bewegt worden ist und mit den Mitteln zum Feststellen der Anwesenheit eines Probenauflagetischs festgestellt wird, dass der Probenauflagetisch entfernt wird, die Blendenkante in das Gehäuse zurückbewegt. In einer Situation, wo die Blendenkante aus dem Gehäuse ausgefahren ist, aber kein Probenauflagetisch aufgesetzt ist, besteht das Risiko, dass ein Benutzer sich an der Blendenkante verletzt. Diese Gefahr wird gebannt, indem die Blendenkante automatisch in das Gehäuse hinein zurückbewegt wird.

Alternativ ist bei einer ebenfalls bevorzugten Variante des erfindungsgemäßen Verfahrens vorgesehen, dass, wenn die Blendenkante durch die Durchgriffsöffnung in den Probenauflagetisch bewegt worden ist und mit den Mitteln zum Feststellen der Anwesenheit eines Probenauflagetischs festgestellt wird, dass der Probenauflagetisch entfernt wird, ein Bewegen der Blendenkante blockiert wird. Auch hierdurch wird das Risiko von Verletzungen durch die Blendenkante verringert.

Besonders bevorzugt sind Mittel zum Abfragen einer Mikroskopeinstellung und/oder einer Mikroskopkonfiguration vorhanden. Einstellungen der mindestens einen Blendenkante, weiterer Blenden und/oder weiterer optischer Komponenten werden dann abhängig von einer festgestellten Konfiguration von vorhandenen, insbesondere optischen, Komponenten, automatisiert vorgenommen. Beispielsweise kann automatisch erkannt werden, welches Objektiv aktiv und welche Zoomstellung eingestellt ist.

Bei einem erfindungsgemäßen Mikroskopsystem ist hierzu zweckmäßig eine Speichereinrichtung vorhanden, in welcher Einstellungen der Durchlichteinrichtung und des Lichtmikroskops, insbesondere der mindestens einen Blendenkante, abgespeichert werden.

Bei einem bevorzugten Ausführungsbeispiel des erfindungsgemäßen Verfahrens ist vorgesehen, dass eine Mikroskopeinstellung und/oder eine Mikroskopkonfiguration abgefragt werden, dass an Hand der Mikroskopeinstellung und/oder der Mikroskopkonfiguration eine optimale Blendenposition bestimmt wird, dass eine Anwesenheit eines Probenauflagetischs, eine Anwesenheit von in den Probenauflagetisch eingesetztem Zubehör und/oder eine Anwesenheit einer Adapterplatte festgestellt werden und daraus ein verfügbarer Bewegungsraum der Blendenkante in Richtung der optischen Achse ermittelt wird und dass die Blendenkante im verfügbaren Bewegungsraum möglichst nah an der optimalen Blendenposition positioniert wird. Unter möglichst nah ist zu verstehen, dass die Blendenkante an der optimalen Blendenposition positioniert wird, wenn die optimale Blendenposition im verfügbaren Bewegungsraum liegt, und dass, wenn die optimale Blendenposition außerhalb des verfügbaren Bewegungsraums liegt, die Blendenkante an einem zur optimalen Blendenposition benachbarten Ende des verfügbaren Bewegungsraums positioniert wird.

Eine Mikroskopkonfiguration umfasst zweckmäßig mindestens einen Typ eines Zoomsystems und/oder eines ausgewählten Objektivs.

Eine Mikroskopeinstellung beinhaltet zweckmäßig mindestens eine Zoomvergrößerung und/oder eine Position eines ausgewählten Objektivs.

Bei Kenntnis des verwendeten Objektivs, eines verwendeten Zoomkörpers und einer mit dem Zoomkörper eingestellten Vergrößerung kann die Blendenkante an eine optimale Position bewegt werden, welche für die verwendete Objektiv-Zoomkörper-Kombination vorab bestimmt und gespeichert worden sein kann. Die optimale Position kann insbesondere in Richtung der optischen Achse der Lage der wirksamen Eintrittspupille entsprechen. An dieser weist der Beleuchtungsstrahlengang des Lichtmikroskops eine Taille auf.

Die optimale Blendenposition kann für die jeweilige Mikroskopeinstellung und/oder Mikroskopkonfiguration abgespeichert sein und beispielsweise durch Ausprobieren ermittelt worden sein. Als Bewertungskriterium einer optimalen Blendenposition können unterschiedliche Beleuchtungsparametern dienen, insbesondere eine Beleuchtungshomogenität, ein Bildkontrast und/oder ein Schattenwurf im Mikroskopbild.

In einer erfindungsgemäßen abgewandelten Variante dieses Ausführungsbeispiels kann zusätzlich ein Prismenfilm in den Strahlengang eingebracht werden. Dieser umfasst eine Vielzahl an Prismen, mit denen das Beleuchtungslichtbündel in einer bekannten Weise abgelenkt wird. Der Prismenfilm kann genau dann in den Strahlengang des Beleuchtungslichtbündels eingefahren werden, wenn die optimale Position außerhalb des verfügbaren Bewegungsraums liegt.

Bei dieser Variante des erfindungsgemäßen Verfahrens ist somit vorgesehen, dass eine Mikroskopeinstellung und/oder eine Mikroskopkonfiguration abgefragt werden, dass an Hand der Mikroskopeinstellung und/oder der Mikroskopkonfiguration eine optimale Blendenposition bestimmt wird, dass die Anwesenheit eines Probenauflagetischs, die Anwesenheit von in den Probenauflagetisch eingesetztem Zubehör und/oder die Anwesenheit einer Adapterplatte festgestellt werden und daraus ein verfügbarer Bewegungsraum der Blendenkante in Richtung der optischen Achse ermittelt wird, dass überprüft wird, ob die optimale Blendenposition innerhalb des verfügbaren Bewegungsraums liegt, dass, wenn die optimale Blendenposition außerhalb des verfügbaren Bewegungsraums liegt, ein Prismenfilm in das Beleuchtungslichtbündel bewegt wird, und dass, wenn die optimale Blendenposition im verfügbaren Bewegungsraum liegt, die Blendenkante an der optimalen Blendenposition positioniert wird.

Weitere Vorteile und Merkmale der erfindungsgemäßen Vorrichtung, des erfindungsgemäßen Verfahrens und des erfindungsgemäßen Mikroskopsystems werden im Folgenden mit Bezug auf die Figuren erläutert: Hierin zeigen:

Fig. 1:            ein Mikroskopsystem nach dem Stand der Technik;

Fig. 2:            eine Skizze zur Erläuterung einer Durchlichteinrichtung nach dem Stand der Technik;

Fig. 3:            eine Übersicht über wesentliche Bestandteile des Strahlengangs bei einer erfindungsgemäßen Vorrichtung mit einem ersten Objektiv in einer Seitenansicht;

Fig. 4:            eine Übersicht über wesentliche Bestandteile des Strahlengangs bei einer erfindungsgemäßen Vorrichtung mit einem zweiten Objektiv in einer Seitenansicht;

Fig. 5:            eine Skizze zur Erläuterung der Wirkungen eines Objekts auf den Strahlengang in einer Seitenansicht;

Fig. 6:            wesentliche Bestandteile des Strahlengangs bei einer erfindungsgemäßen Vorrichtung in einer Vorderansicht;

Fig. 7:            wesentliche Bestandteile des Strahlengangs bei einer an einem Stereomikroskop eingesetzten erfindungsgemäßen Vorrichtung in einer Seitenansicht mit einer Blendenkante;

Fig. 8:            eine Draufsicht auf eine Lichtquelle und eine Blende;

Fig. 9:            in einer Seitenansicht eine Situation, wo die Blendenkante in der Ebene der wirksamen Eintrittspupille angeordnet ist und diese tangiert;

Fig. 10:           in einer Draufsicht die Situation aus Fig. 9;

Fig. 11:           in einer Seitenansicht eine Situation, wo die Blendenkante in der Ebene der Eintrittspupille angeordnet ist und der Strahlquerschnitt beschnitten wird;

Fig. 12:           in einer Draufsicht die Situation aus Fig. 11;

Fig. 13:           in einer weiteren Draufsicht eine Situation, in welcher die Blendenkante weiter in Richtung der optischen Achse verschoben ist und immer noch in der Ebene der Eintrittspupille angeordnet ist;

Fig. 14:           in einer Draufsicht eine Situation, in welcher die Blendenkante im Vergleich zu Fig. 13 über die optische Achse hinaus verschoben ist und immer hoch in der Ebene der Eintrittspupille positioniert ist;

Fig. 15:           in einer Draufsicht eine Situation, in welcher die Blendenkante den Strahlquerschnitt völlig abdeckt;

Fig. 16:           in einer Seitenansicht eine Situation, in welcher die Blendenkante näher als die wirksame Eintrittspupille an der Objektebene positioniert ist;

Fig. 17: in einer Draufsicht die Situation aus Fig. 16;

Fig. 18: in schematischer Darstellung ein Bild, welches erhalten wird, wenn die Blendenkante sich zu nah an der Objektebene befindet;

Fig. 19: in einer Seitenansicht eine Situation, in welcher sich die Blendenkante von der Objektebene weiter entfernt befindet als die Eintrittspupille;

Fig. 20: in einer Draufsicht die Situation aus Fig. 19;

Fig. 21: in schematischer Darstellung ein Bild, welches erhalten wird, wenn sich die Blendenkante zu weit weg von der Objektebene befindet;

Fig. 22: ein Diagramm, in welchem die optimalen Positionen für die Blendenkante in Abhängigkeit des Zoomfaktors aufgetragen sind;

Fig. 23: in einer Draufsicht eine Veranschaulichung des Einflusses des Azimutwinkels;

Fig. 24: in einer Draufsicht eine Situation in welcher eine um 180° gedrehte Blende verwendet wurde;

Fig. 25: ein Ausführungsbeispiel einer erfindungsgemäßen Vorrichtung mit einer Blende und Schlittenmechanik;

Fig. 26: in schematischer Darstellung das Ausführungsbeispiel aus Fig. 25;

Fig. 27: ein weiteres Ausführungsbeispiel einer erfindungsgemäßen Vorrichtung mit zwei Blenden und jeweils zugeordneter Schlittenmechanik;

Fig. 28: das Ausführungsbeispiel aus Fig. 27 in schematischer Darstellung;

Fig. 29: in einer Seitenansicht wesentliche Bestandteile des Strahlengangs mit einem ersten Objektiv bei der in den Fig. 27 und 28 gezeigten Vorrichtung;

Fig. 30: in einer Seitenansicht wesentliche Bestandteile des Strahlengangs mit einem weiteren Objektiv für die Vorrichtung aus den Fig. 27 und 28;

Fig. 31 bis 35: Zustände einer Ausführungsvariante, bei welcher ein Flüssigkristall-Array als Blende fungiert;

Fig. 36: ein Flussdiagramm eines erfindungsgemäßen Verfahrens zum Einstellen einer bestgeeigneten Beleuchtung für ein Lichtmikroskop;

Fig. P7: in einer Vorderansicht eine schematische Darstellung von Randstrahlen einer Objektivs in einer Situation, für welche der erfindungsgemäße Einsatz eines Prismenfilms geeignet ist;

Fig. P8: in einer Seitenansicht eine schematische Darstellung von Randstrahlen für ein Objektiv in einer Situation, für welche der erfindungsgemäße Einsatz eines Prismenfilms geeignet einsetzbar ist;

Fig. P10: eine schematische Skizze zur Erläuterung der Wirkungsweise des Prismenfilms;

Fig. P11: ein Detail aus Fig. P10;

Fig. P12: ein Diagramm zur Erläuterung von mit und ohne Prismenfilm gemessenen Lichtverteilungen;

Fig. P13: ein Ausführungsbeispiel einer erfindungsgemäßen Vorrichtung mit einem Prismenfilm sowie zwei zusätzlichen Blenden;

Fig. P14: ein weiteres Ausführungsbeispiel einer erfindungsgemäßen Vorrichtung mit einem Prismenfilm und einer zusätzlichen Blende;

Fig. P15: eine Variante der in Fig. P14 gezeigten Vorrichtung;

Fig. P16: ein Ausführungsbeispiel einer erfindungsgemäßen Vorrichtung, bei der der Prismenfilm optisch nicht wirksam ist;

Fig. P17: ein weiteres Ausführungsbeispiel einer erfindungsgemäßen Vorrichtung, bei der der Prismenfilm optisch nicht wirksam ist;

Fig. P18: ein Ausführungsbeispiel einer erfindungsgemäßen Vorrichtung mit zwei Blendenkanten und einem Prismenfilm;

Fig. P19: eine schematisierte Darstellung des Ausführungsbeispiels aus Fig. P18;

Fig. A6: eine Tabelle zu idealen Beleuchtungen verschiedener Mikroskoptypen;

Fig. A7: eine Tabelle mit Blendenformen für die verschiedenen Mikroskoptypen;

Fig. A8: eine schematische Ansicht von vier Blenden einer erfindungsgemäßen Vorrichtung, die für einen bestimmten Mikroskoptyp eingestellt sind;

Fig. A9: eine schematische Perspektivansicht von vier Blenden einer erfindungsgemäßen Vorrichtung;

Fig. E9: ein Diagramm, in welchem die optimalen Positionen für die Blendenkante in Abhängigkeit des Zoomfaktors aufgetragen sind;

Fig. E10: eine Perspektivansicht eines erfindungsgemäßen Mikroskopsystems mit einem Lichtmikroskop und einer erfindungsgemäßen Vorrichtung zur Durchlichtbeleuchtung;

Fig. E11: ein Ausführungsbeispiel einer erfindungsgemäßen Vorrichtung mit einer Blende und aufgesetztem Probenauflagetisch;

Fig. E12: ein vergrößerter Ausschnitt aus Fig. E11;

Fig. E13: ein Ausschnitt einer erfindungsgemäßen Vorrichtung mit Mitteln zum Erkennen verschiedener Aufsätze, wobei eine zusätzliche Adapterplatte vorhanden ist;

Fig. E14: ein Ausschnitt einer erfindungsgemäßen Vorrichtung mit Mitteln zum Erkennen verschiedener Aufsätze, wobei keine zusätzlichen Aufsätze vorhanden sind;

Fig. E15: ein Ausschnitt einer erfindungsgemäßen Vorrichtung mit Mitteln zum Erkennen verschiedener Aufsätze, wobei eine Adapterplatte, ein Probenauflagetisch und eine Ringleuchte vorhanden sind;

Fig. E16: ein Flussdiagramm eines erfindungsgemäßen Verfahrens zum Einstellen einer bestgeeigneten Beleuchtung für ein Lichtmikroskop und

Fig. E18 bis E22: Schritte eines erfindungsgemäßen Verfahrens zur Bestimmung der Absolutposition einer Blendenkante einer erfindungsgemäßen Vorrichtung.

Gleiche und gleichwirkende Komponenten sind in den Figuren in der Regel mit denselben Bezugszeichen versehen. Hingewiesen wird außerdem auf die Bezugszeichenliste am Ende der Beschreibung.

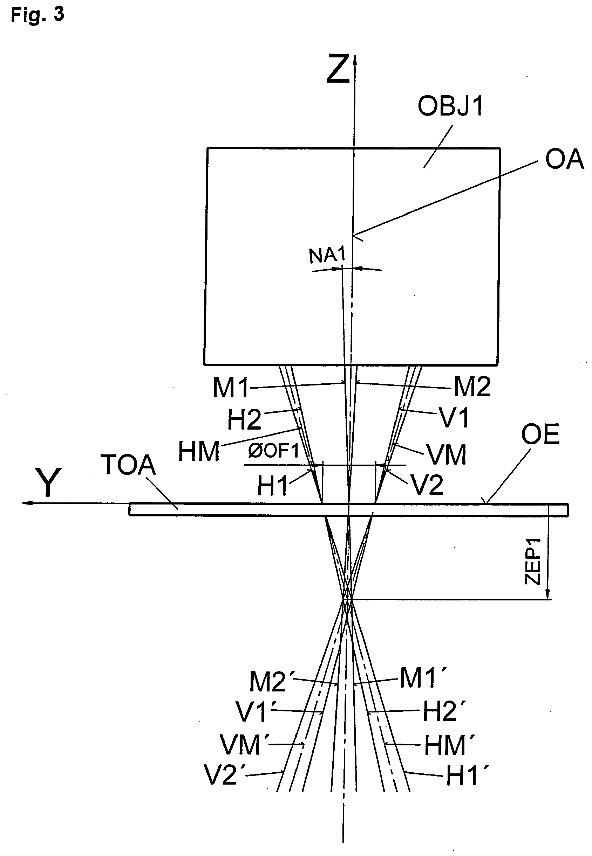

Die Figuren 3 bis 5 beschreiben den Verlauf von ausgewählten Strahlen und die Lage der Eintrittspupille sowie den Einfluss der Objektauflage TOA und/oder der Zoomstellung hierauf.

Aus den bekannten Daten von verschiedenen Objektiven OBJ1, OBJ2, OBJ3 lassen sich die abbildungsseitigen Randstrahlen jeweils in Kombination mit einem motorisierten Zoomkörper MZK zusammen mit der Rückprojektion dieser abbildungsseitigen Randstrahlen in den Beleuchtungsraum ermitteln und darstellen.

Figur 3 zeigt die Seitenansicht des Strahlengangs mit dem Objektiv OBJ1 aus Figur 1, das zusammen mit dem in Figur 3 nicht dargestellten motorisierten Zoomkörper MZK und dem aktuell wirksamen Zoomfaktor β eine numerische Apertur NA1, einen Objektfelddurchmesser OF1 in der Objektebene OE und eine Z-Koordinate der Eintrittspupille ZEP1 aufweist. Das Koordinatensystem mit den Achsen X, Y, und Z dient der Orientierung.

Ausgehend von der Objektebene OE sind die Grenzlichtstrahlen eingezeichnet, die für die Beschreibung der Abbildung durch das dargestellte Objektiv OBJ1 besonders relevant sind.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor β repräsentieren. Entsprechend gehen die Lichtstrahlen V1, V2 und VM vom vorderen Objektfeldrand aus und kennzeichnen die theoretischen Aperturbegrenzungen des dargestellten Objektivs OBJ1 bei dem gerade wirksamen Zoomfaktor β und den mittleren Lichtstrahl VM.

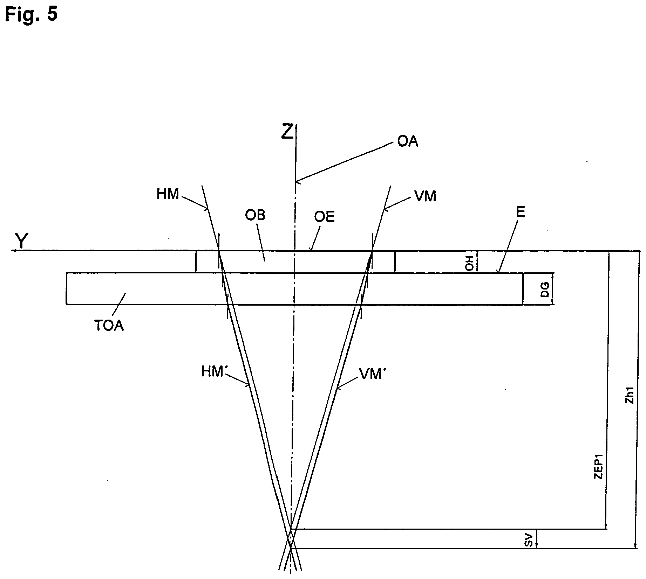

In der praktischen Anwendung gibt es in der Regel eine transparente Objektauflage TOA, die aufgrund der Brechzahlunterschiede und Dicke einen Strahlversatz, also eine Verlängerung der tatsächlich wirksamen optischen Abstände erzeugt. Daher müssen sowohl die optische Wirksamkeit der transparenten Objektauflage TOA mit einer Dicke DG und einer Brechzahl nG, als auch die entsprechenden optischen Eigenschaften des Objektes OB mit einer Objekthöhe OH und einer Brechzahl nO berücksichtigt werden, siehe Fig. 5. Lokale Krümmungen des Objekts OB und/oder Brechzahlschwankungen, zum Beispiel durch Luftblaseneinschlüsse usw., führen ebenfalls zu einer Änderung des optischen Wegs und sind im Prinzip zu berücksichtigen. Die notwendige Form der Berücksichtigung eines idealisierten homogenen planparallelen Objekts OB, das auf einer ebenfalls idealisierten homogenen planparallelen transparenten Objektauflage TOA angeordnet aufliegt, ist anhand der mittleren Lichtstrahlen VM und HM in Figur 5 dargestellt.

Alle in den Beleuchtungsraum zurückprojizierten Lichtstrahlen behalten ihren Namen, als Merkmal zur Berücksichtigung des Strahlversatzes SV durch die transparenten Objektauflage TOA und das Objekt OB wird jeweils nur ein Hochkomma ergänzt. Aus den mittleren Lichtstrahlen im Abbildungsraum VM und HM resultieren bei Berücksichtigung des Strahlversatzes SV gemäß Figur 5 somit die in den Beleuchtungsraum zurückprojizierten Lichtstrahlen VM' und HM'.

Wegen des Durchgangs durch die idealisierte transparente Objektauflage TOA und das idealisierte planparallele Objekt schneiden sich die in den Beleuchtungsraum zurückprojizierten mittleren Lichtstrahlen VM' und HM' nicht im Abstand ZEP1 von der Objektebene OE oder von der Oberseite der transparenten Objektauflage TOA, sondern im Abstand Zh1. Somit existiert ein Strahlversatz SV in Z-Richtung, der aufgrund der bekannten Eigenschaften von TOA, nämlich Dicke und Brechzahlübergänge und bei Vernachlässigung der Eigenschaften des Objektes OB leicht berechnet werden kann.

In Luft gilt die Formel

$$SV = DG * (nG-1) / nG$$

.

Bei einer typischen Dicke von zum Beispiel DG=4mm und nG=1.5 ergibt sich hieraus ein Strahlversatz SV = 1,3mm.

Diese Berechnung gilt allerdings nur für eine idealisierte transparente Objektauflage TOA ohne Objekt OB und setzt die bekannten optischen Daten voraus. In der praktischen Anwendung ist das Objekt OB häufig durch weitere Medien umgeben, zum Beispiel Petrischalen mit Nährlösungen usw., und es ist gegebenenfalls selbst optisch inhomogen und/oder mit lokal gekrümmten Oberflächen oder Einschlüssen versehen, so dass die Zusammenhänge noch komplizierter werden. Die oben angegebene Vereinfachung führt zu Fehlern, die in vielen Fällen nicht vernachlässigbar sind. Deshalb lässt sich der Strahlversatz SV meistens nicht korrekt berechnen. Das bedeutet, dass auch Zh1 in der Regel nicht genau bekannt ist und empirisch ermittelt werden muss. Berücksichtigt man dass die Objektauflage TOA eine nicht zu vernachlässigende Dicke DG, das Objekt OB eine optisch wirksame Dicke hat und bei gewöhnlichen Zoommikroskopen die Pupille keine wohldefinierte ebene Fläche ist, ergibt sich eine wirksame Eintrittspupille, deren Abstand von der Objektebene OE Zh1 gegenüber der Z-Koordinate der idealisierten Eintrittspupille ZEP1 verschoben ist.

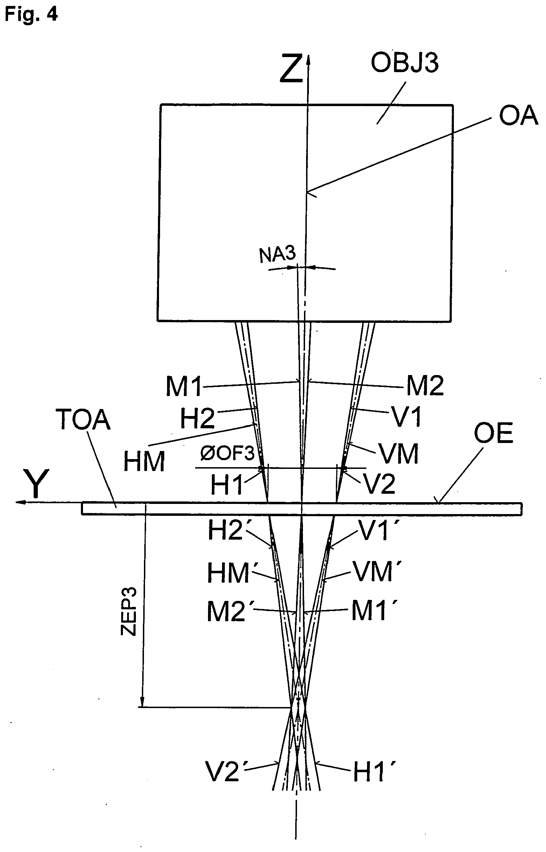

Analog zu Figur 3 zeigt Figur 4 die Vorderansicht des Strahlengangs mit dem Objektiv OBJ3 aus Figur 1, das zusammen mit dem in Figur 4 nicht dargestellten motorisierten Zoomkörper MZK und dem aktuell wirksamen Zoomfaktor β eine numerische Apertur NA3, einen Objektfelddurchmesser OF3 in der Objektebene OE und eine Z-Koordinate der Eintrittspupille ZEP3 aufweist. Bedingt durch die in der Stereomikroskopie und Makroskopie typischen kostenoptimierten Objektiv-Zoomkörper-Kombinationen OBJ1 mit MZK und OBJ3 mit MZK gibt es keine auskorrigierten und über den Zoombereich feststehenden Pupillenebenen und keine garantierte Eignung für polarisationsoptische Verfahren. Die Werte von ZEP1 und ZEP3 liegen entsprechend weit auseinander und wandern mit dem Zoomfaktor β in der Regel unterschiedlich stark. Bei Nutzung eines codierten Objektivwechslers COW gemäß Figur 1 kann für verschiedene Objektive OBJ1 und OBJ3 in einem Stereomikroskop-System ein identisches Objekt OB auf einer identischen transparenten Objektauflage TOA vorausgesetzt werden, so dass auch Zh1 und Zh3 (in Figur 3 nicht dargestellt) der zweiten und dritten Objektiv-Zoomkörper-Kombination OBJ2 mit MZK und OBJ3 mit MZK entsprechende Unterschiede aufweisen. Aufgrund der nicht eindeutig definierten Pupillenlagen Zh1 sind die Unterschiede nicht zwingend identisch.

Außerdem gibt es an den beschriebenen typischen kostengünstigen Objektiv-Zoomkörper-Kombinationen OBJ1 mit MZK und OBJ3 mit MZK keine definierten und beim Zoomen feststehenden Eintrittspupillen. Die Realisierung einer solchen Forderung hätten das Optikdesign und die Objektivkonstruktion deutlich erschwert, was mindestens zu einer Verteuerung der Objektive und einer gegebenenfalls nicht akzeptablen Baugröße geführt hätte, sofern sich überhaupt eine Lösung hierfür finden lässt. Somit gibt es praktisch keine ebenen ortsfesten Eintrittspupillen mit den üblichen minimierten Abbildungsfehlern. Die Eintrittspupillen sind somit stark deformiert und wandern bei Variation des Zoomfaktors $\beta$ und die Lage der Eintrittspupillen hängt stark von der Lichtwellenlänge ab. Die vorgenannten Einflüsse sind durch die Position der wirksamen Eintrittspupille Zh1 in Figur 5 bereits berücksichtigt.

Bei einem durch den rechten Kanal R des Objektivs OBJ1 mit der Anordnung gemäß den Figuren 3 und 5 aufgenommenes Bild ist der Kontrast ohne weitere Mittel sehr schwach, Strukturen und/oder Phasenunterschiede sind so gut wie nicht erkennbar. Das Bild weist dafür eine sehr gute Homogenität hinsichtlich der Helligkeit auf.

In einer ersten Ausführungsform wird das Problem durch die Bereitstellung einer in Richtung der optischen Achse des Beobachtungssystems verschiebbaren Blende im Körper der Durchlichthaube gelöst. Diese Blende lässt sich bei verschiedenen Zoomstellungen auf die Position der wirksamen Eintrittspupille des optischen Systems einstellen. Durch eine Verschiebung senkrecht zur optischen Achse lassen sich verschiedene Kontrasteffekte erreichen.

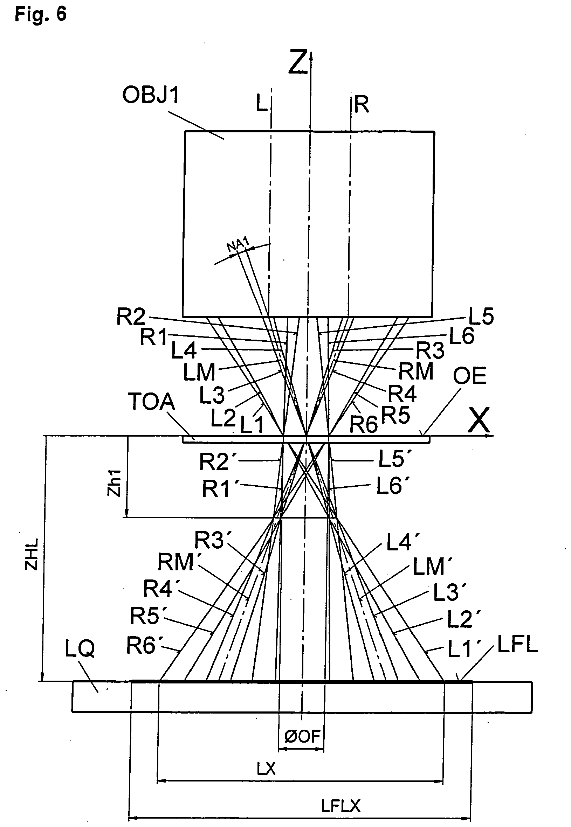

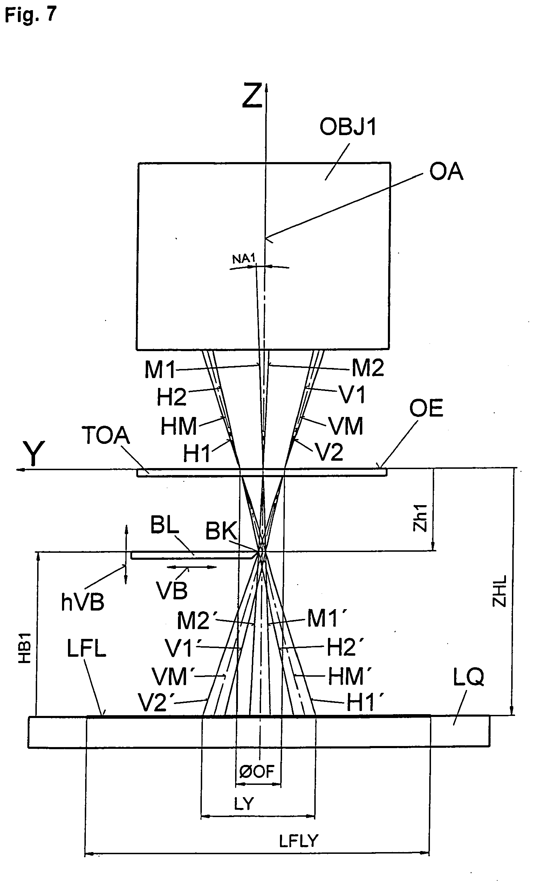

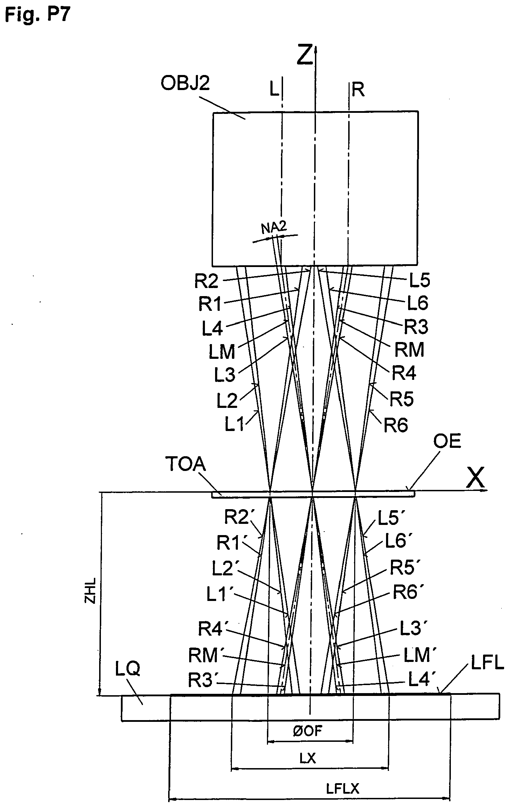

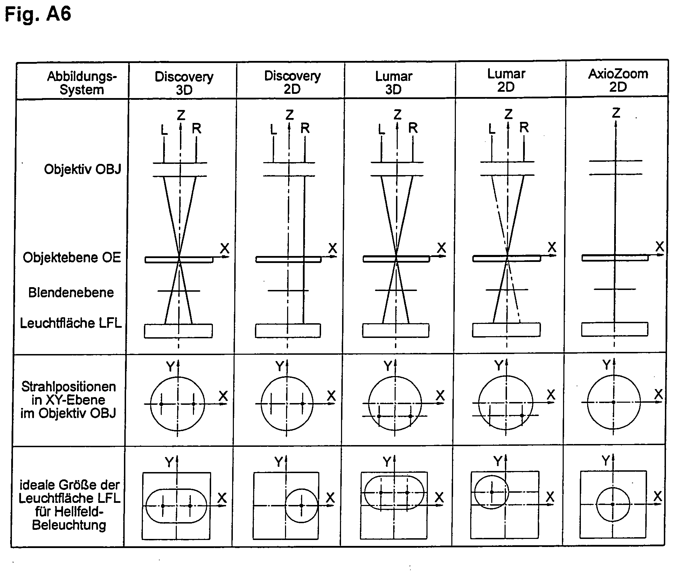

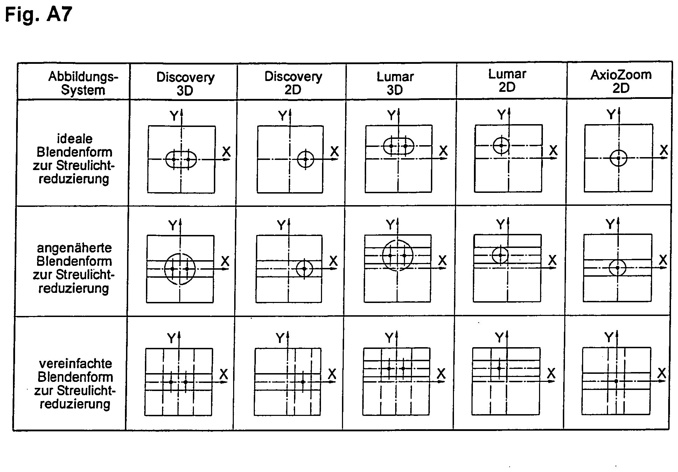

Figur 6 zeigt die Vorderansicht, Figur 7 die Seitenansicht von links einer erfindungsgemäßen Anordnung. Das Koordinatensystem mit den Achsen X, Y, und Z dient der Orientierung. Mit R1 bis R6 sind in Figur 6 rechte Lichtstrahlen und mit L1 bis L6 linke Lichtstrahlen gekennzeichnet.

In Figur 7 sind ausgehend von der Objektebene OE oder von der Oberseite der transparenten Objektauflage TOA die Grenz-Lichtstrahlen eingezeichnet, die für die Beschreibung der Abbildung durch das dargestellte Objektiv OBJ1 besonders relevant sind. Mit HB1 ist in Figur 7 ein Höhenabstand von der Leuchtfläche LFL zur Blende BL in der idealen Z-Blendenlage für das Objektiv OBJ1 am Zoomkörper MZK mit dem aktuellen Zoomfaktor $\beta$ bezeichnet.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor $\beta$ repräsentieren. Mit NA1 ist die Objektivapertur des Objektivs OBJ1 in den Figuren 6 und 7 bezeichnet.

Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor V1 und V2 kennzeichnen. VM ist ein mittlerer Lichtstrahl.

Alle in den Beleuchtungsraum zurückprojizierten Lichtstrahlen behalten wieder ihren Namen. Als Merkmal zur Berücksichtigung des Strahlversatzes SV wird jeweils nur ein Hochkomma ergänzt. Aus den mittleren Lichtstrahlen im Abbildungsraum VM und HM resultieren bei Berücksichtigung des Strahlversatzes durch die transparenten Objektauflage TOA gemäß Figur 7 somit die in den Beleuchtungsraum zurückprojizierten Lichtstrahlen VM' und HM'. Mit M1 und M2 sind in Figur 5 mittlere Lichtstrahlen bezeichnet.

Erfindungsgemäß ist eine verstellbare Blende BL mit einer Blendenkante BK im Bauraum zwischen der Objektebene OE oder der Oberseite der transparenten Objektauflage TOA und der Leuchtfläche LFL einer Lichtquelle LQ angeordnet, siehe Figur 7. Diese Blende BL lässt sich in der Höhe, das heißt entlang der Verschieberichtung hVB, so einstellen, dass die Blendenkante BK in einer idealen Z-Blendenlage Zh1 für das aktuell aktive Objektiv OBJ1 in Kombination mit einem Zoomkörper MZK, an dem ein aktueller Zoomfaktor $\beta$ eingestellt ist, liegt. In Figur 7 ist erkennbar, dass diese Einstellung bereits erfolgt ist, wobei dies nur eine idealisierte Darstellung zur Verdeutlichung des Prinzips ist.

Wie bereits ausgeführt, sind die Eintrittspupillen der meisten Objektive an Zoomsystemen hauptsächlich aus Kostengründen nicht ortsfest und unterliegen keinen speziellen Qualitätsvorgaben. Dies führt dazu, dass die Lage und Form der Eintrittspupille dann nicht klar definiert ist, sie ist zum Teil auch stark abhängig von der Lichtwellenlänge. Der reale Strahlengang ist also deutlich komplexer und entsprechend kompliziert darzustellen. Zur Beschreibung der prinzipiellen Wirkungsweise wird daher nur der idealisierte Strahlengang verwendet.

Wegen der oben erläuterten komplexen Verhältnisse und weiterer unbekannten Einflüssen des Objektes OB und seiner Umgebung, wie zum Bespiel die transparente Objektauflage TOA, Petrischale mit Nährlösung, siehe Beschreibung zu Fig. 5, sind praktische Versuche zur Ermittlung und/oder Einstellung der idealen Z-Blendenlage Zh1 unerlässlich. Hauptsächlich wegen der unbekannten Einflüsse des Objektes OB und seiner Umgebung wird vorzugsweise ein geeignetes Bedienelement, zum Beispiel ein Adjust-Scrollrad SADJ, zur kundenseitigen Variation der Blendenlage senkrecht zur Objektebene OE vorgesehen.

Die ideale Blendenlage ist dadurch gekennzeichnet, dass mindestens eine Blende BL mit mindestens einer linear verlaufenden Blendenkante BK zwischen der Lichtquelle LQ und der Objektebene OE parallel zur Flächennormalen der Objektebene OE in der Richtung hVB und in mindestens einer hierzu senkrecht angeordneten Richtung VB frei positionierbar ist, so dass die Blende BL mit Blendenkante BK durch die Bewegung in Richtung hVB der Flächennormalen der Objektebene OE zur Homogenisierung der Beleuchtung in eine ideale Blendenposition Zh1 gebracht werden kann, in der sie optimal an das aktuell wirksame Abbildungssystem angepasst werden kann. Das Abbildungssystem umfasst einen Zoomkörper MZK mit dem aktuellen Zoomfaktor β, ein Objektiv OBJ1, ein Objekt OB und gegebenenfalls eine transparente Objektauflage TOA. Die Kontraststärke lässt sich durch das Verschieben der Blende BL mit Blendenkante BK senkrecht zur Flächennormalen der Objektebene OE in Richtung VB einstellen, wobei die Blendenkante BK parallel zur Objektebene OE und senkrecht zur Verschieberichtung VB für die Kontraststärkevariation orientiert ist. Prinzipiell sind keine weiteren Mittel zur Homogenisierung der Beleuchtung vorgesehen oder erforderlich.

Bei eingestellter idealer Z-Blendenlage Zh1 ist der Abstand zwischen der Leuchtfläche LFL und der Blende BL dann HB1, der Abstand ZHL ergibt sich gemäß Figur 7 aus ZHL = Zh1 - HB1.

In den Figuren 6 und 7 ist erkennbar, dass die Leuchtfläche LFL der Lichtquelle LQ eine Ausdehnung LFLX in X-Richtung und LFLY in Y-Richtung hat. Für eine vignettierungsfreie homogene Abbildung über das dargestellte Objektiv OBJ1 bei dem gerade wirksamen Zoomfaktor β werden aber nur die Leuchtflächenausdehnungen LX in X-Richtung und LY in Y-Richtung benötigt.

Idealerweise werden die Leuchtfeldabmaße LFLX und LFLY mindestens so groß gewählt, dass für jedes vorhandene Objektiv unter allen vorkommenden Abbildungsbedingungen eine vignettierungsfreie homogene Ausleuchtung möglich ist. Die Form der Leuchtfläche kann hierbei auch an die tatsächlich wirksame Rückprojektion der Lichtstrahlen angepasst werden, dann ergibt sich näherungsweise eine Ellipse mit großer Halbachse in der X-Richtung bei 3D-Beobachtung oder ein Kreis bei 2D-Beobachtung. Mit 2D-Beobachtung ist hierbei die einkanalige Beobachtung der Probe gemeint, mit 3D-Beobachtung entsprechend die Beobachtung mit zwei Kanälen.

Durch die Bewegung der im Abstand Zh1 von der Objektebene OE oder von der Oberseite der transparenten Objektauflage TOA positionierten Blende BL in der Verschieberichtung VB lässt sich die Blende BL mit der Blendenkante BK so in den Beleuchtungsstrahlengang bringen, dass bestimmte Lichtstrahlen ausgeblendet werden können. Die Blende wird vorzugsweise entlang der Y-Achse bewegt, da sie dann für den linken Kanal L und den rechten Kanal R gleichmäßig wirkt. In Figur 6 ist erkennbar, dass eine Bewegung der (nicht dargestellten) Blende im Abstand Zh1 in der X-Richtung nicht die Lichtstrahlen beider Kanäle gleichmäßig ausblenden würde, die Folge wäre eine für 3D-Abbildungen ungeeignete Ausleuchtung. Wird die Blende BL mit der Blendenkante BK gemäß Figur 7, das heißt durch Bewegung im Abstand Zh1 von der Objektebene OE oder von der Oberseite der transparenten Objektauflage TOA in der Verschieberichtung VB, in den Beleuchtungsstrahlengang gebracht, wirkt sie nicht nur auf beide Kanäle gleichmäßig, sondern auch auf alle Punkte des Objektfelds.

Gemäß der Anordnung der Blende BL in Figur 7 berührt die Blendenkante BK die rückprojizierten Lichtstrahlen V2' und H2', die von gegenüberliegenden Objektfeldrändern ausgehen. Somit werden auch alle rückprojizierten Lichtstrahlen zwischen den gegenüberliegenden Objektfeldrändern von der Blendenkante BK berührt. Wird die Blende BL weiter in den Beleuchtungsstrahlengang eingeschoben, resultiert daraus eine gleichmäßige Abdeckung von beleuchtenden Lichtstrahlen über das Objektfeld, das heißt die Beleuchtung bleibt bei abnehmender Helligkeit homogen, wobei der Kontrast deutlich zunimmt. Dies wurde durch praktische Versuche bestätigt. Die weitere Wirkungsweise wird durch die folgenden Figuren mit idealisierter Darstellung des Strahlengangs detaillierter beschrieben.

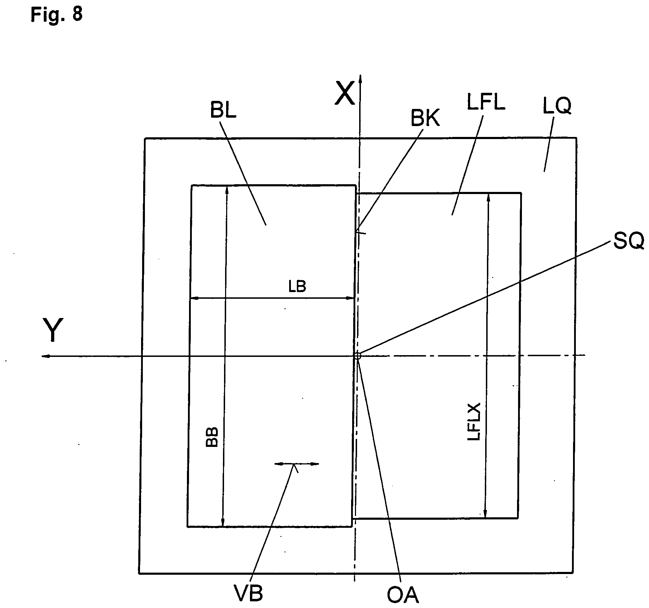

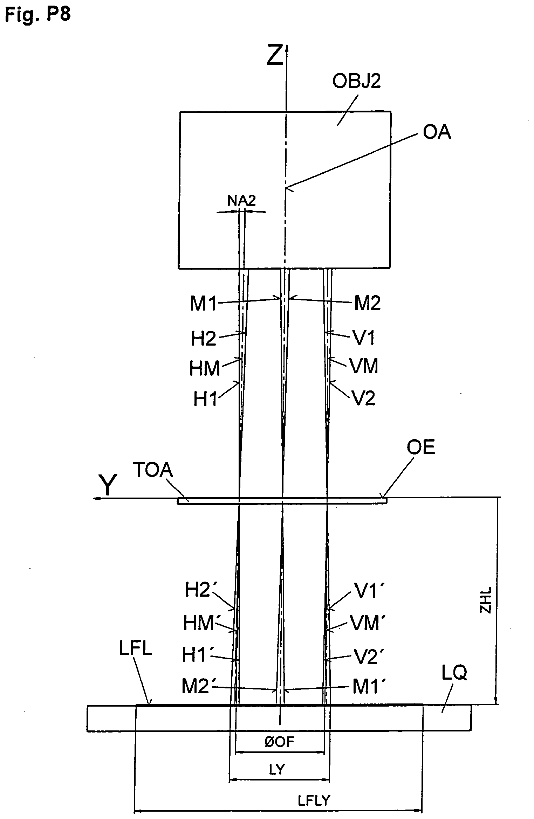

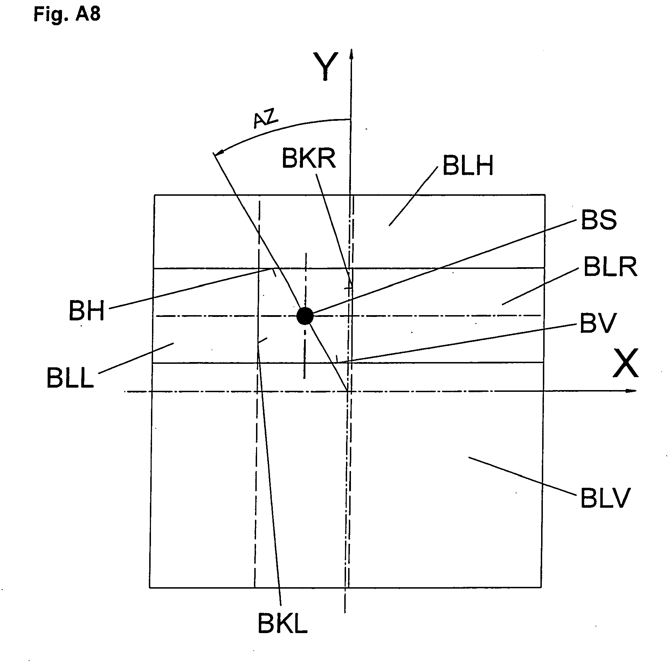

In Figur 8 ist als Draufsicht die Lage der Blende BL mit einer Blendenkante BK, der wirksamen Blendenlänge LB und der wirksamen Blendenbreite BB in Relation zur Lichtquelle LQ mit einer Leuchtfläche LFL und dem XYZ-Koordinatensystem dargestellt.

Die Blende BL mit der Blendenkante BK wurde durch das Verschieben entlang der Einstellrichtungen hVB und VB so eingestellt, dass sich die Blendenkante BK in der idealen Z-Blendenlage Zh1 befindet, wobei sie an den Strahlquerschnitt aus den in den Beleuchtungsraum zurückprojizierten Abbildungs-Randstrahlen angelegt ist. In Figur 8 ist der Strahlquerschnitt in der idealen Blendenlage Zh1 durch einen Kreis SQ eingezeichnet, der durch die Blendenkante BK tangiert wird, das heißt die Blendenkante BK beschneidet den Strahlquerschnitt noch nicht.

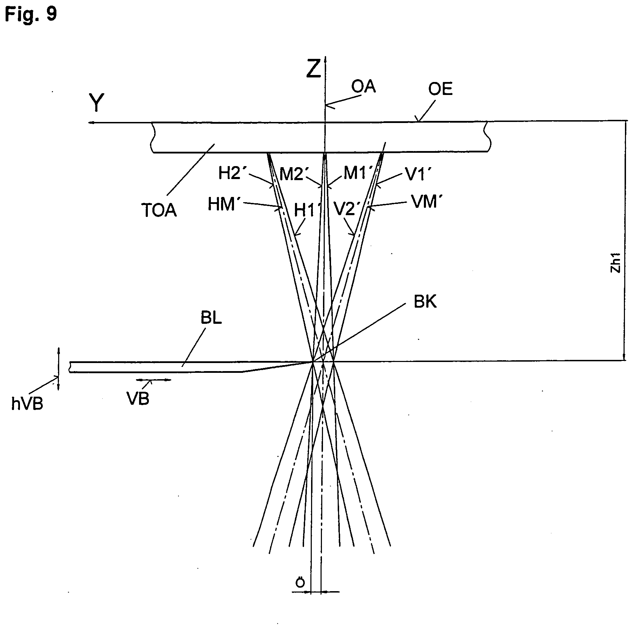

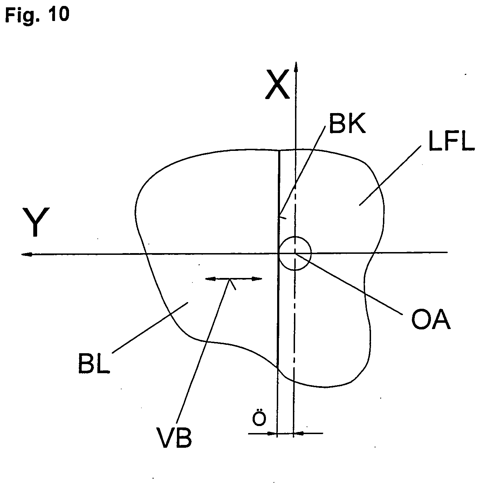

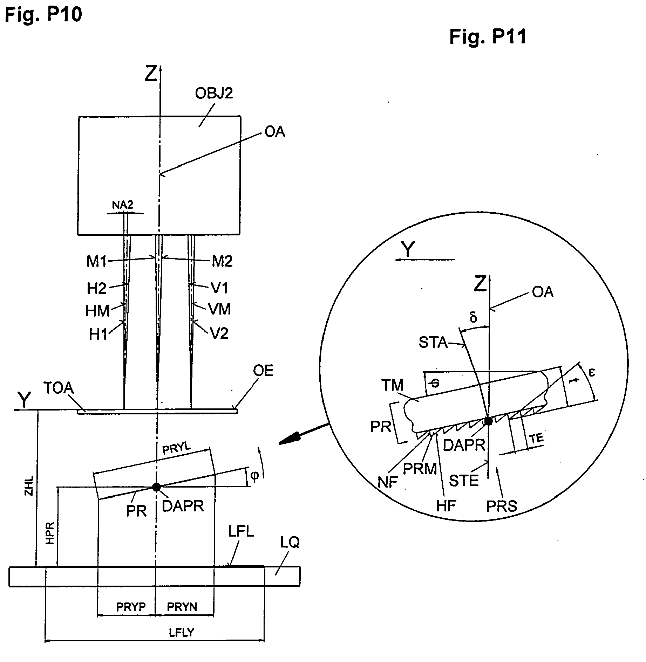

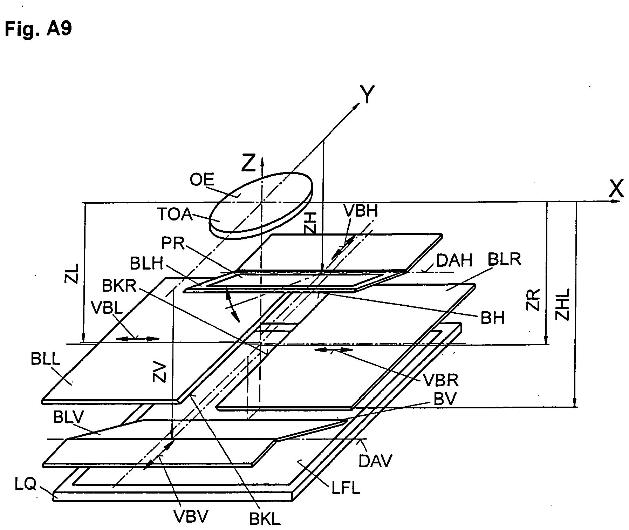

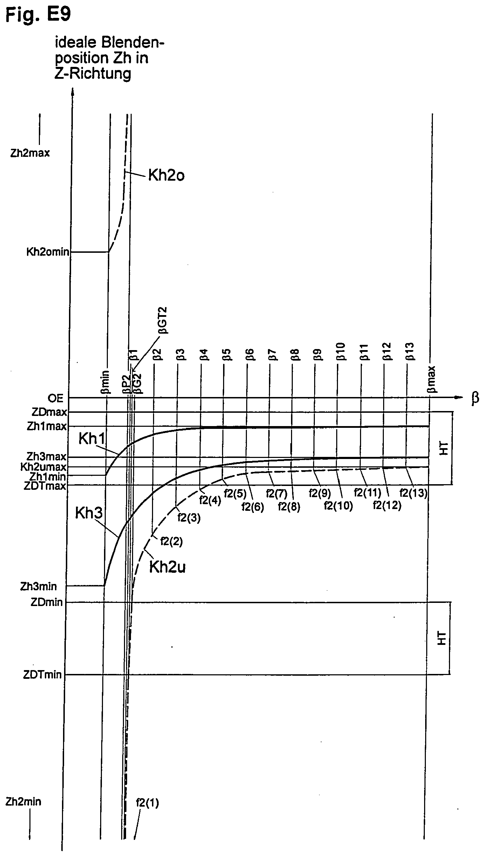

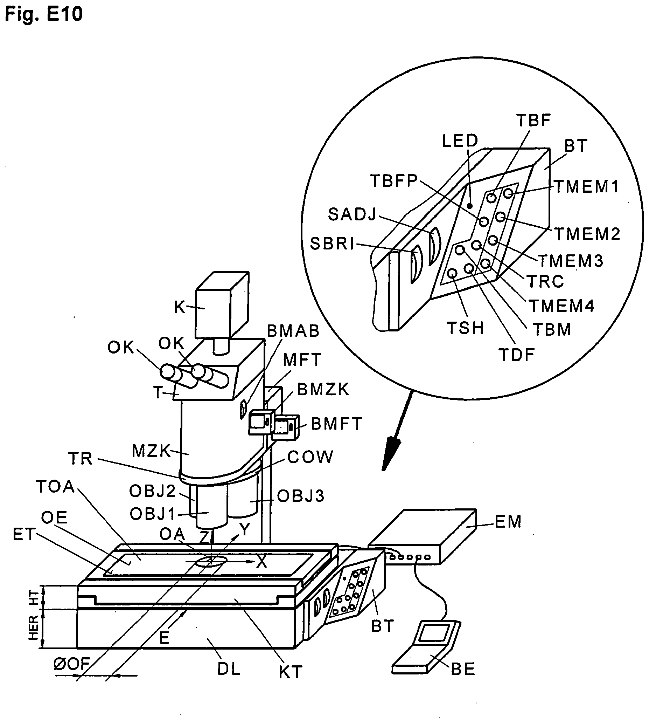

In den Figuren 9 und 10, die vergrößerte Detaildarstellungen der Figuren 7 und 8 sind, ist zusätzlich der Öffnungsabstand Ö zwischen dem Radius des Strahlquerschnitts in Höhe der idealen Z-Blendenlage Zh1 und der optischen Achse OA dargestellt, der in diesem Fall durch die Blendenkante BK noch nicht beschnitten wird.

Bei einem durch das Objektiv OBJ1 mit der Anordnung gemäß den Figuren 7 bis 10 aufgenommenen Bild ist der Kontrast mit der angelegten Blendenkante BK noch immer relativ schwach. Allerdings lassen sich andeutungsweise schon weitere Blasen, die Phasenobjekte sind und eigentlich nicht zur Probe gehören, erkennen. Das Bild weist noch immer eine sehr gute Homogenität hinsichtlich der Helligkeit auf.

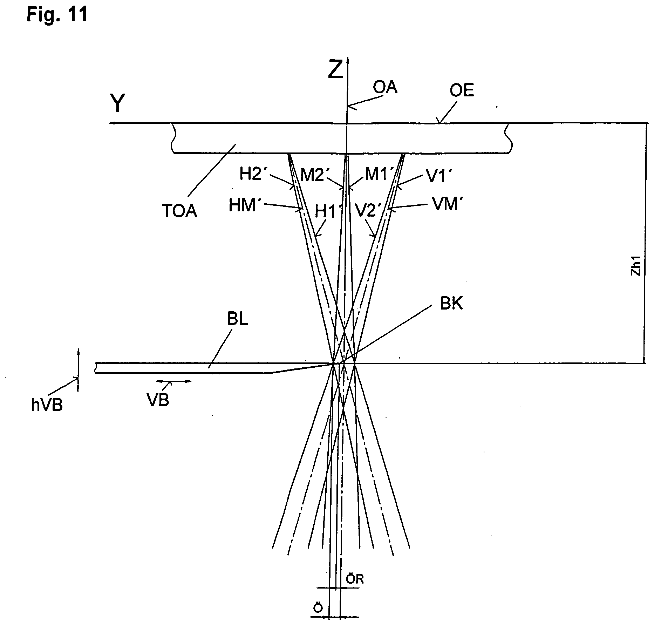

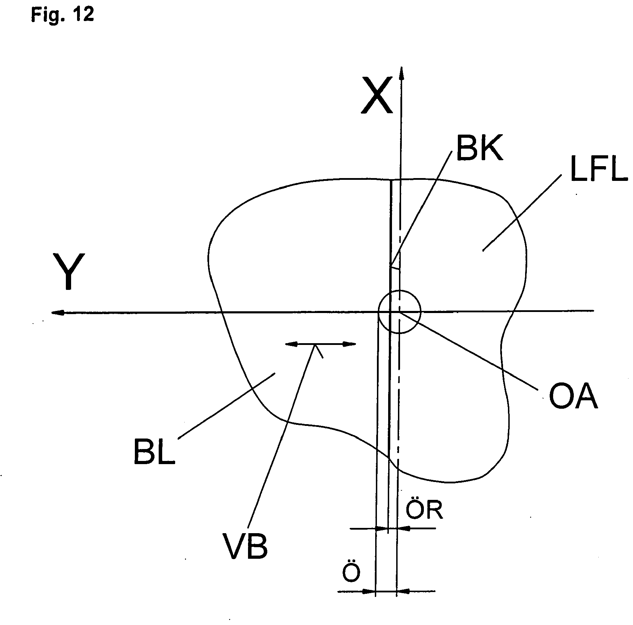

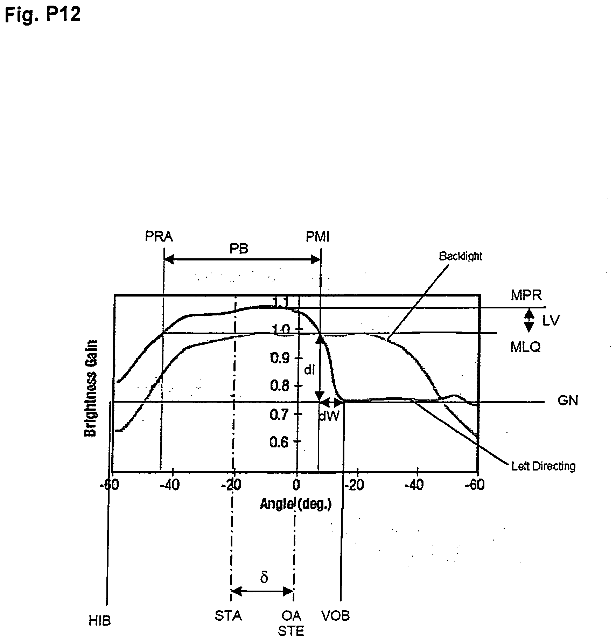

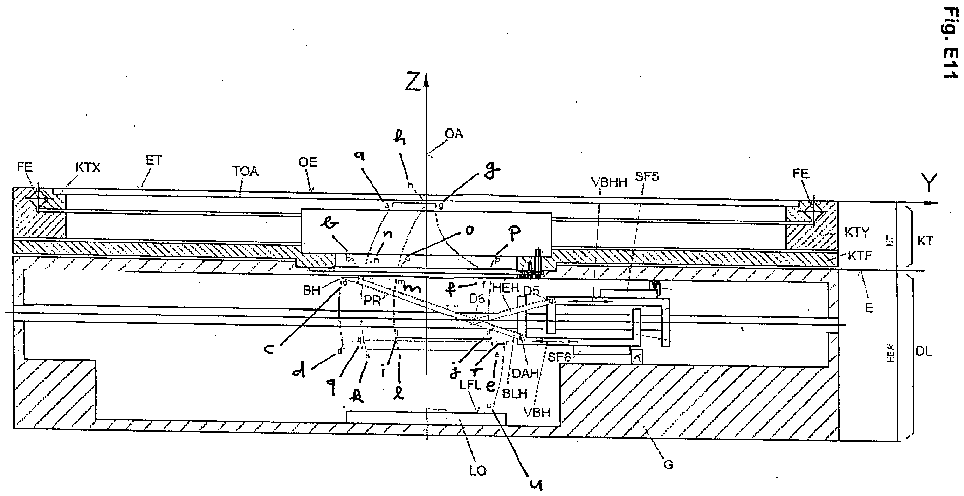

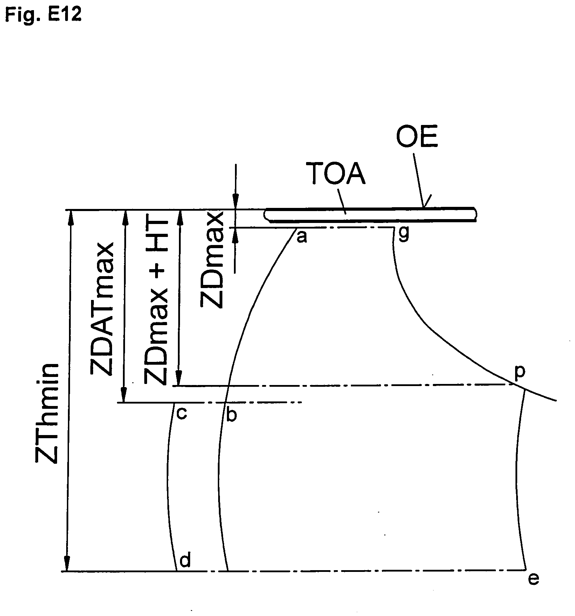

Analog zu den Figuren 9 und 10 zeigen die Figuren 11 und 12 Detailansichten der erfindungsgemäßen Anordnung mit einer durch die Verschiebung in der Einstellrichtung VB veränderten Blendeneinstellung. Gemäß den Figuren 11 und 12 befindet sich die Blendenkante BK noch immer in der idealen Z-Blendenlage Zh1. Allerdings ist sie nun näher zur optischen Achse OA positioniert, so dass sich ein reduzierter Öffnungsabstand ÖR zwischen der Blendenkante BK und der Optischen Achse OA ergibt, das heißt der Öffnungsabstand Ö wird beschnitten. Gemäß Figur 11 werden dadurch die Strahlen H2', M2'und V2'ausgeblendet, das heißt es ist das gesamte Objektfeld gleichmäßig betroffen, das Bild bleibt homogen, es wird aber kontrastreicher.

Bei einem durch das Objektiv OBJ1 mit Anordnung gemäß den Figuren 11 und 12 aufgenommenen Bild ist der Kontrast schon deutlich verbessert. Einige Bilddetails, die aus Phasenobjekten bestehen, sind schon sehr gut erkennbar, außerdem sind innere Strukturen der Probe bereits sichtbar. Das Bild weist trotzdem noch immer eine sehr gute Homogenität hinsichtlich der Helligkeit auf.

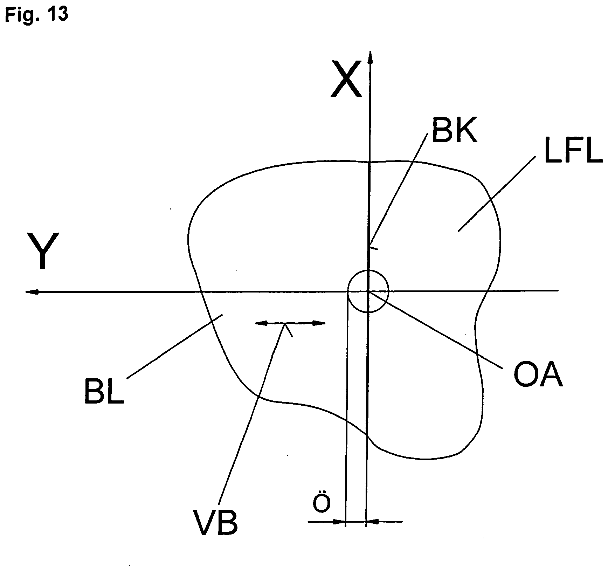

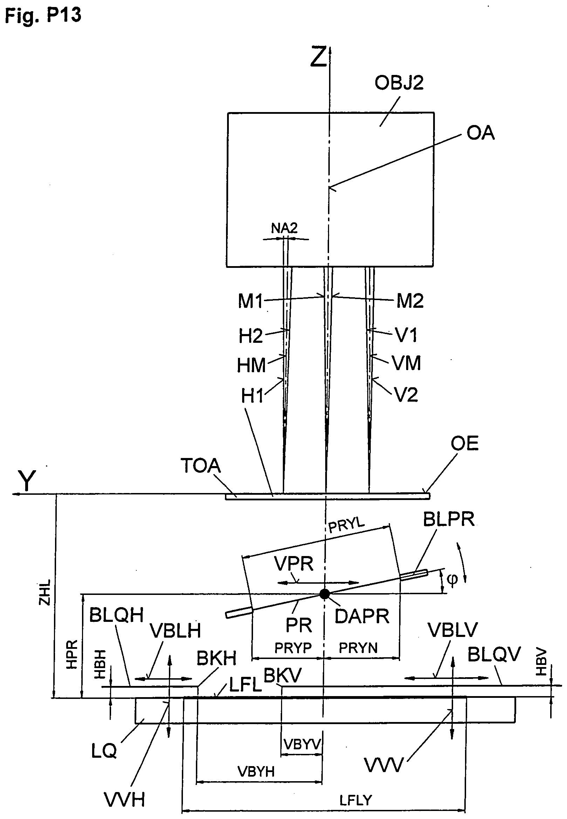

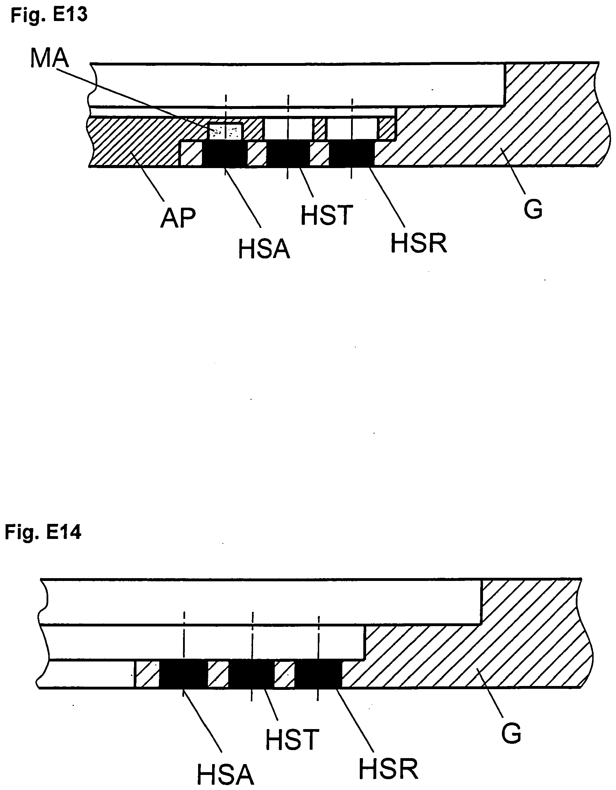

Analog zur Figur 12 zeigt Figur 13 eine Detailansicht der erfindungsgemäßen Anordnung mit einer durch die Verschiebung in der Einstellrichtung VB veränderten Blendeneinstellung. Gemäß Figur 13 befindet sich die Blendenkante BK noch immer in der idealen Z-Blendenlage Zh1. Allerdings berührt sie nun die optischen Achse OA, so dass es praktisch keinen reduzierten Öffnungsabstand ÖR zwischen der Blendenkante BK und der optischen Achse OA gibt, das heißt der Öffnungsabstand Ö wird vollständig abgedeckt. Es gelten noch immer die Zusammenhänge, die bereits anhand von Figur 11 beschrieben wurden, das heißt von der Abdeckung durch die Blende BL ist das gesamte Objektfeld gleichmäßig betroffen. Das Bild bleibt homogen, es wird aber noch etwas kontrastreicher.

Bei einem durch das Objektiv OBJ1 mit der Anordnung gemäß Figur 13 aufgenommenen Bild hat sich der Kontrast gegenüber dem Bild, das mit den in den Figuren 11 und 12 gezeigten Einstellungen aufgenommen wurde, geringfügig verbessert. Das Bild weist trotzdem noch immer eine sehr gute Homogenität hinsichtlich der Helligkeit auf.

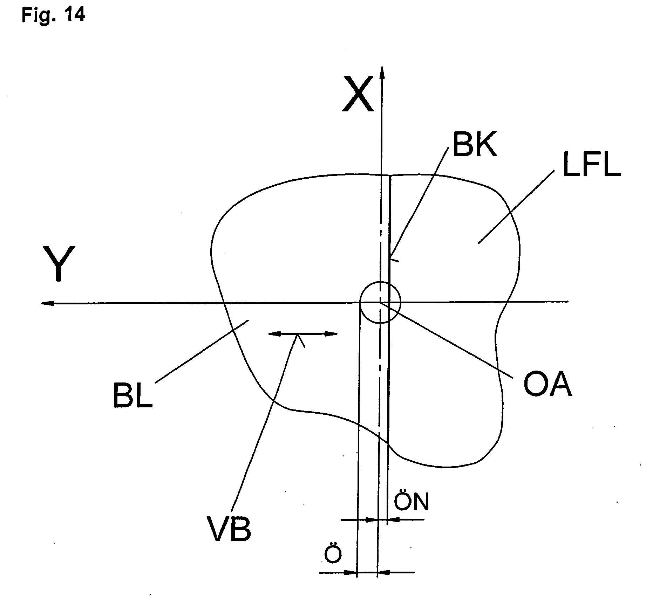

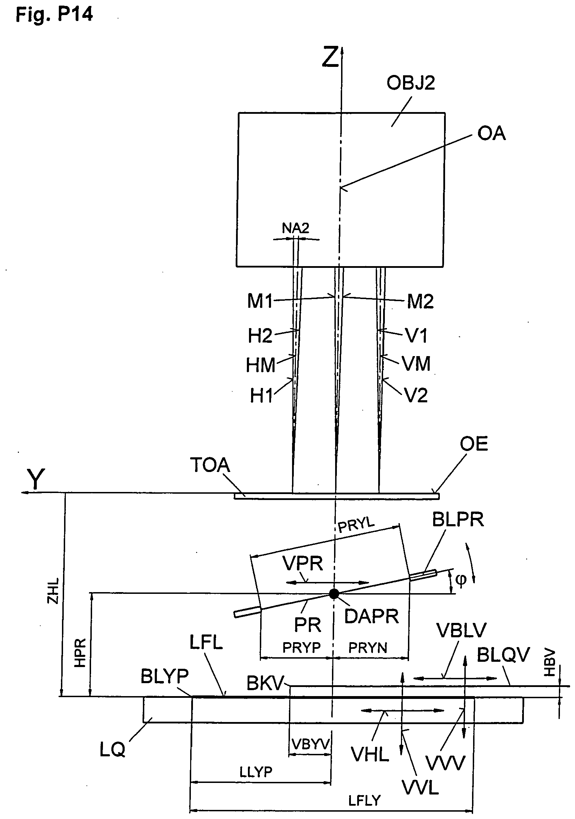

Analog zur Figur 12 zeigt Figur 14 eine Detailansicht der erfindungsgemäßen Anordnung mit einer durch die Verschiebung in der Einstellrichtung VB veränderten Blendeneinstellung. Gemäß Figur 14 befindet sich die Blendenkante BK noch immer in der idealen Z-Blendenlage Zh1. Allerdings deckt sie nun die optische Achse OA vollständig ab, so dass sich ein negativer Öffnungsabstand ÖN zwischen der Blendenkante BK und der optischen Achse OA ergibt, das heißt die Blendenkante BK liegt auf der gegenüberliegenden Seite des Strahlquerschnitts, wobei der negative Öffnungsabstand ÖN noch innerhalb des Strahlquerschnitts liegt, der durch einen Radius mit dem Wert Ö gekennzeichnet ist. Es gelten noch immer die Zusammenhänge, die bereits anhand von Bild 14 beschrieben worden sind, das heißt von der Abdeckung durch die Blende BL ist das gesamte Objektfeld gleichmäßig betroffen. Das Bild bleibt homogen, es wird aber noch etwas kontrastreicher.

Bei einem durch das Objektiv OBJ1 mit der Anordnung gemäß Figur 14 aufgenommenen Bild hat sich der Kontrast mit der auf die bis zur optischen Achse OA in den Strahlengang eingeschobenen Blende BL gegenüber dem Bild, das mit den in Figur 13 gezeigten Einstellungen aufgenommen wurde, geringfügig verbessert. Das Bild weist trotzdem noch immer eine sehr gute Homogenität hinsichtlich der Helligkeit auf.

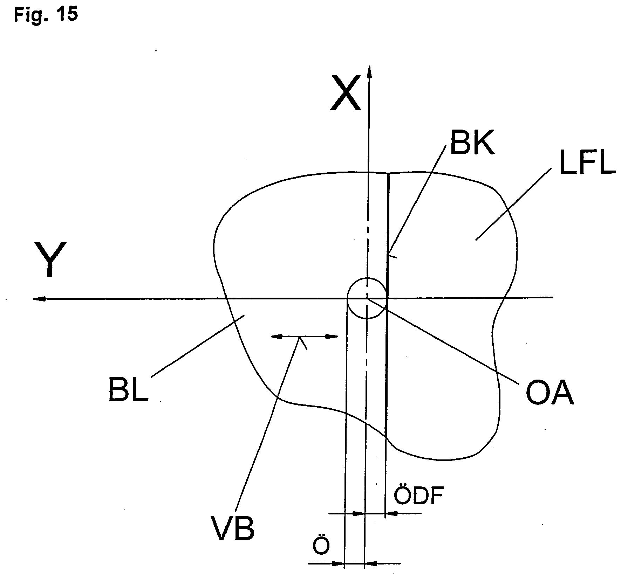

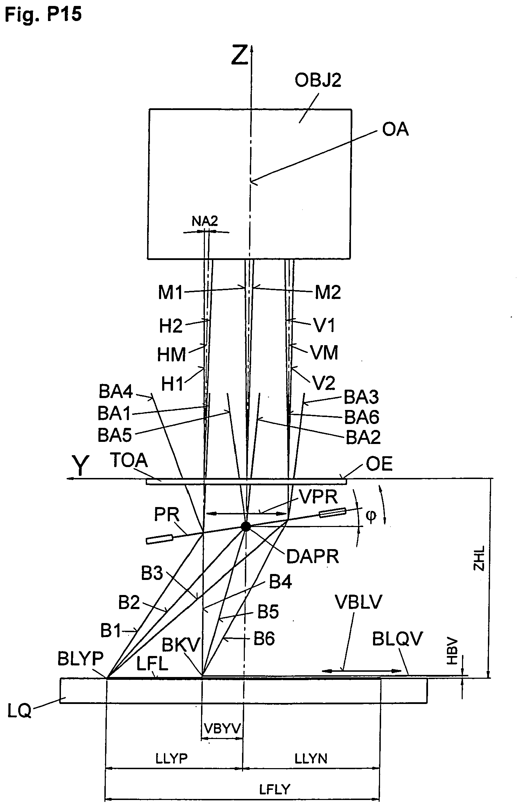

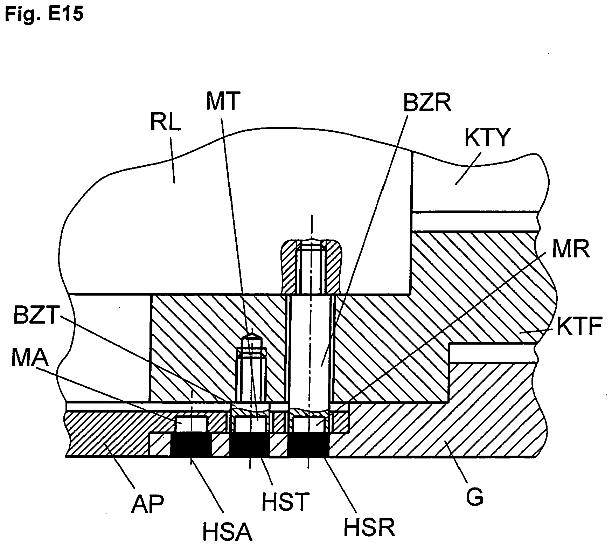

Analog zu Figur 14 zeigt Figur 15 eine Detailansicht der erfindungsgemäßen Anordnung mit einer durch die Verschiebung in der Einstellrichtung VB veränderten Blendeneinstellung. Gemäß Figur 15 befindet sich die Blendenkante BK noch immer in der idealen Z-Blendenlage Zh1. Allerdings deckt sie nun nicht nur die optische Achse OA, sondern auch den kompletten Strahlquerschnitt mit dem Radiuswert Ö vollständig ab, so dass sich ein negativer Öffnungsabstand ÖDF zwischen der Blendenkante BK und der optischen Achse OA ergibt, der bereits die Grenze für eine Dunkelfeldbeleuchtung erreicht hat. Es gelangt deshalb kein direktes Beleuchtungslicht in das Objektiv OBJ1. Nur die hauptsächlich durch das Objekt OB gestreuten, gebeugten, gebrochenen und/oder reflektierten Lichtanteile können in das Objekt eintreten, das heißt der Hintergrund ohne Objekteinfluss erscheint dunkel. Das Bild bleibt auch hier homogen, der Dunkelfeld-Kontrast ist relativ gut.

Bei einem durch das Objektiv OBJ1 mit der Anordnung gemäß Figur 15 aufgenommenen Bild hat sich der Bildcharakter mit der den Strahlquerschnitt vollständig abdeckenden Blende BL gegenüber dem Bild, welches mit den Einstellungen wie in Figur 14 gezeigt aufgenommen wurde, vollständig verändert. Der Hintergrund ist nun sehr viel dunkler als die optisch wirksamen Anteile des Objekts OB. Das Bild weist trotzdem noch immer eine sehr gute Homogenität hinsichtlich der Helligkeit auf, der Kontrast ist relativ gut.

Bei Beobachtung über die Okulare OK mit einer maximalen Sehfeldgröße gemäß Figur 1 werden ebenfalls sehr gute Ergebnisse erzielt. Zum Nachweis der Funktion über ein vergleichbar großes Sehfeld wurden die vorstehend beschriebenen Bilder mit einer Kameraanordnung K aufgenommen, die ein untypisch großes Bildfeld liefert. Üblicherweise werden in der Stereomikroskopie und Makroskopie Kameraanordnungen K mit kleineren Bildfeldern verwendet.

Die Eintrittspupillen der meisten Objektive an Zoomsystemen sind hauptsächlich aus Kostengründen in ihrer z-Position nicht ortsfest und unterliegen keinen speziellen Qualitätsvorgaben. Dies führt dazu, dass Lage und Form der Eintrittspupille nicht klar definiert ist. Sie ist zum Teil auch stark abhängig von der Lichtwellenlänge. Wegen dieser komplexen Verhältnisse und weiterer unbekannten Einflüssen des Objekts OB und seiner Umgebung, zum Beispiel eine transparente Objektauflage TOA, Petrischale mit Nährlösung usw., lässt sich die reale Kontrastierung des Bilds durch die Bewegung der Blende BL zusammen mit der Blendenkante BK in der Richtung VB parallel zur Objektebene OE nicht vollständig durch die vorstehend beschriebenen idealisierten Strahlengänge beschreiben. Je schlechter die Qualität der Eintrittspupille ist, das heißt je weiter die realen Verhältnisse von den idealen Verhältnissen abweichen, umso mehr kann die Blende am Bildrand einseitig als leichte Vignettierung sichtbar werden.

Durch die Bewegung der Blende BL zusammen mit der Blendenkante BK in der Richtung VB parallel zur Objektebene OE lässt sich in der idealen Blendenlage Zh1, die durch Bewegung der Blende BL zusammen mit der Blendenkante BK in Richtung hVB senkrecht zur Objektebene OE einstellbar ist, auf jeden Fall eine Kontrastvariation des Bilds erzeugen. Dabei steigert eine zunehmende Abdeckung des Strahlquerschnitts in der Richtung VB den Kontrast, bis das Bild bei vollständiger Abdeckung des Strahlquerschnitts eine Dunkelfeld-Charakteristik annimmt. Kurz vor dem Übergangsbereich zwischen der Hellfeld-Charakteristik und der Dunkelfeld-Charakteristik sind die Kontraste besonders stark. Die maximal nutzbare Kontraststeigerung durch eine Verschiebung der Blende BL mit Blendenkante BK in Richtung VB ist hinsichtlich der vignettierungsfreien Homogenität der Bildhelligkeit praktisch durch die optischen Zusammenhänge aus der Kombination von Zoomkörper MZK und Objektiv OBJ1 zusammen mit der Qualität der realen Eintrittspupille gegeben. Für eine Kombination aus Zoomkörper MZK und Objektiv OBJ1 mit typischen wandernden, deformierten und mit sonstigen Abbildungsfehlern versehenen Eintrittspupillen ist das Verfahren aber auch bei größtmöglichen Sehfeldern optimal geeignet.

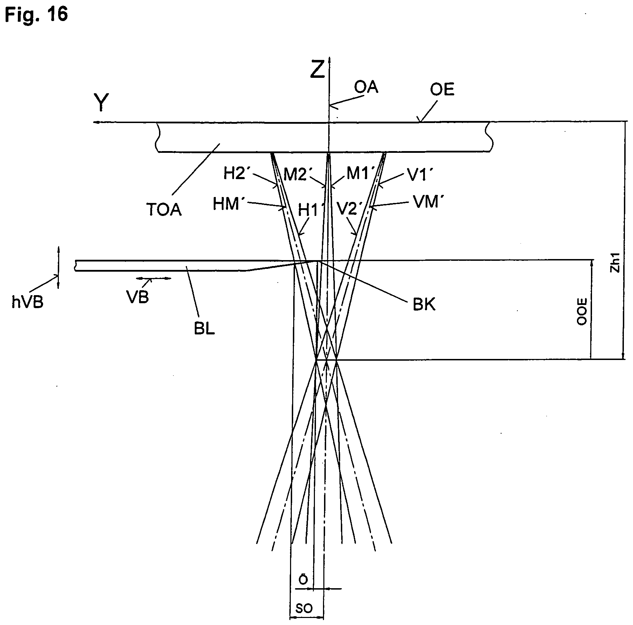

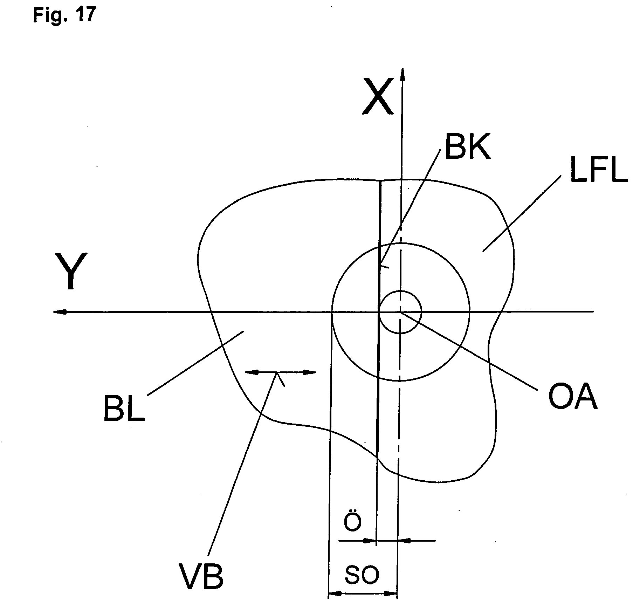

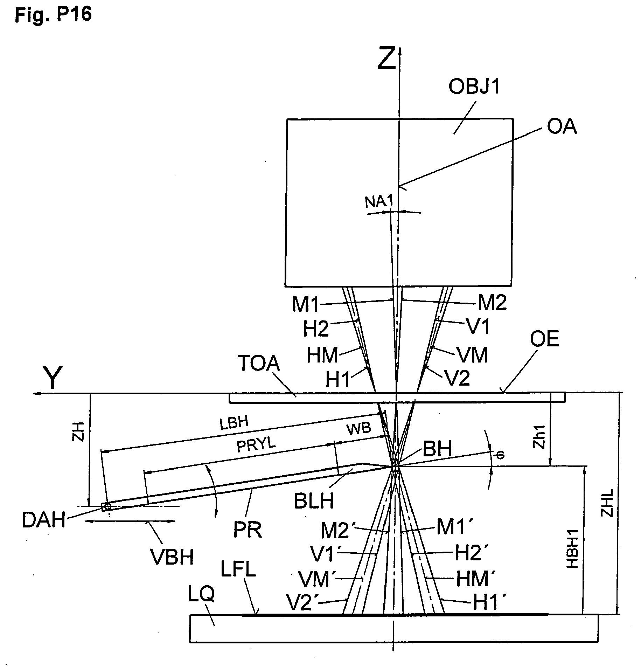

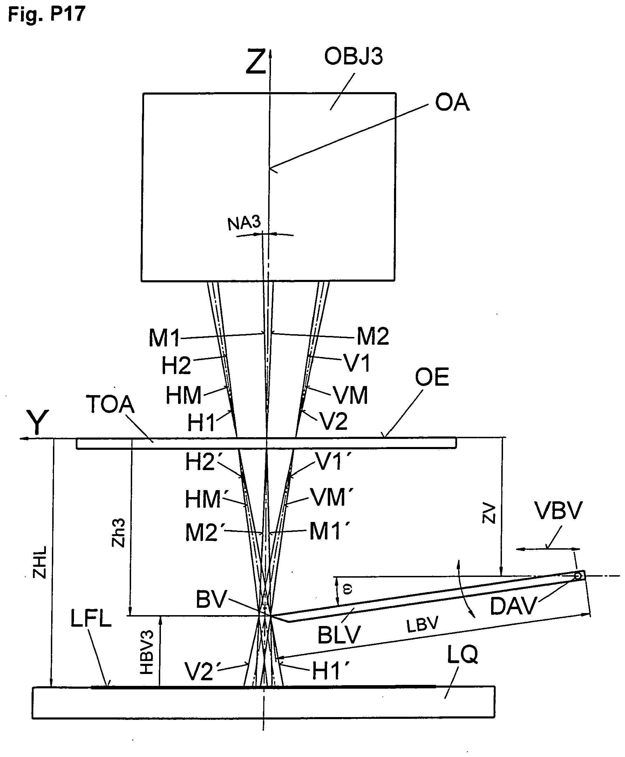

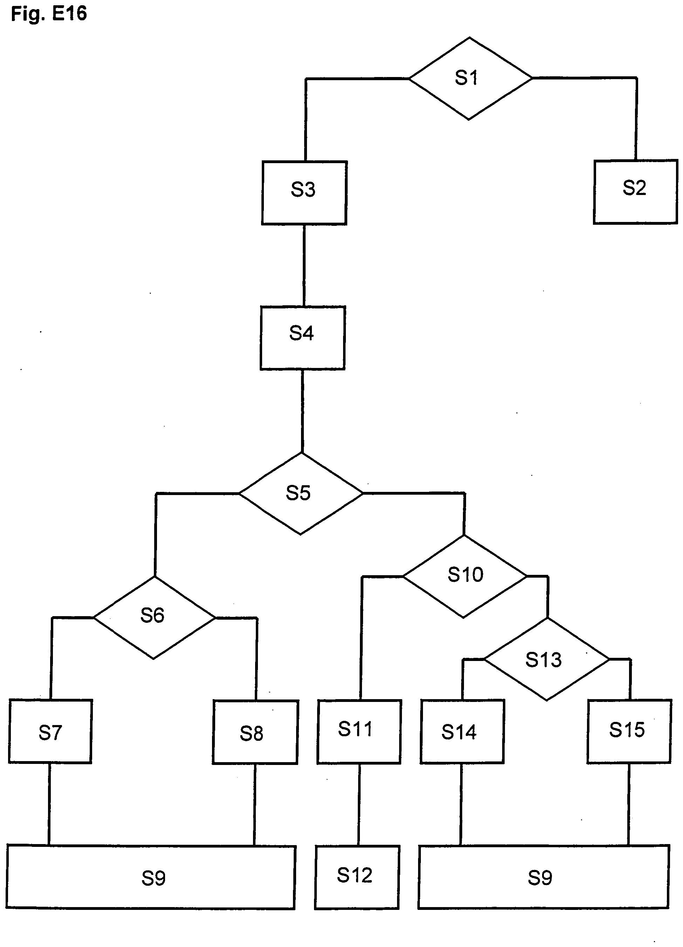

Analog zu den Figuren 9 und 10 zeigen die Figuren 16 und 17 Detailansichten der erfindungsgemäßen Anordnung, allerdings mit einer durch die Verschiebung in der Einstellrichtung hVB veränderten Blendeneinstellung. Gemäß den Figuren 16 und 17 befindet sich die Blendenkante BK in Richtung VB parallel zur Objektebene OE noch immer am Rand des Strahlquerschnitts, der durch den Öffnungsabstand Ö als Radius des Strahlquerschnitts in Höhe der idealen Z-Blendenlage Zh1 um die optische Achse OA gekennzeichnet ist. Allerdings ist nicht mehr die ideale Z-Blendenlage Zh1 eingestellt, da die Blende BL mit der Blendenkante BK in der Einstellrichtung hVB um den Verschiebeweg OOE zu nah an die Objektebene OE verschoben wurde. Dadurch werden die Lichtstrahlen H1', HM' und H2' vollständig ausgeblendet. Da alle diese Lichtstrahlen den hinteren Objektfeldrand ausleuchten sollen und keine weiteren Lichtstrahlen zur Ausleuchtung der anderen Objektfeldregionen ausgeblendet werden, erscheint nur der hintere Objektfeldrand dunkel, das heißt das Bild wird hinsichtlich der Helligkeit inhomogen.

Um die Blendenkante BK nur an den äußeren Rand des Strahlquerschnitts in der von der idealen Z-Blendenlage Zh1 abweichenden eingestellten Blendenlage Zh1 + OOE anzulegen, müsste sie weiter auf den Öffnungsabstand SO geöffnet werden. Da sich die Blende BL mit der Blendenkante BK dann aber nicht mehr in der idealen Z-Blendenlage Zh1 befinden würde, wäre die erfindungsgemäße Funktion des Kontrastverfahrens hierdurch nicht mehr gegeben.

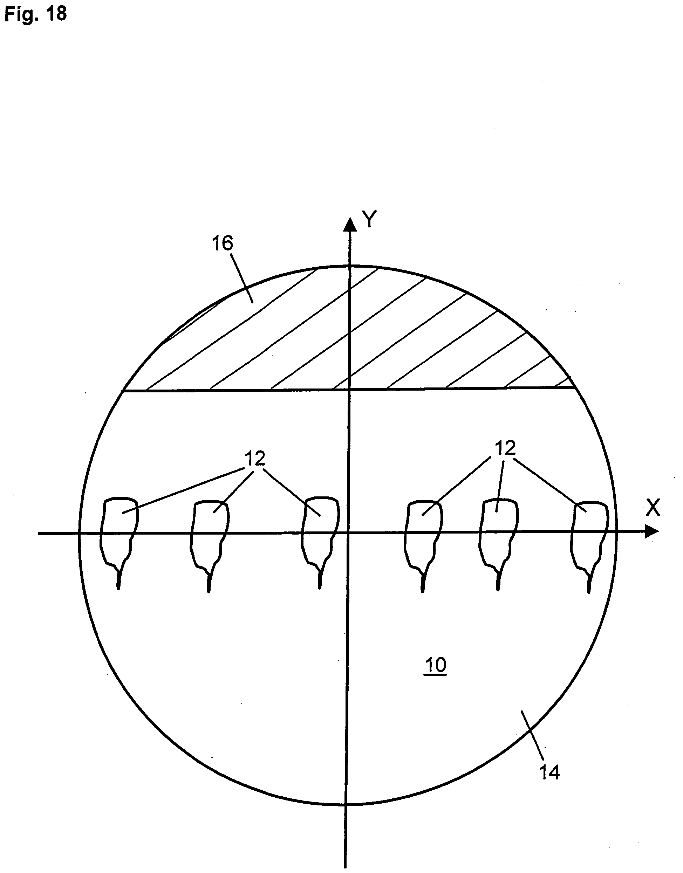

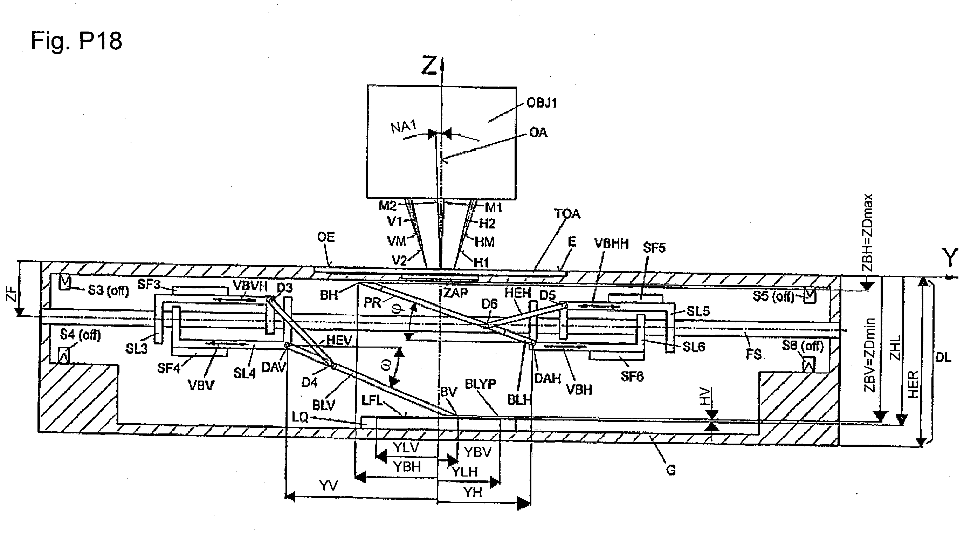

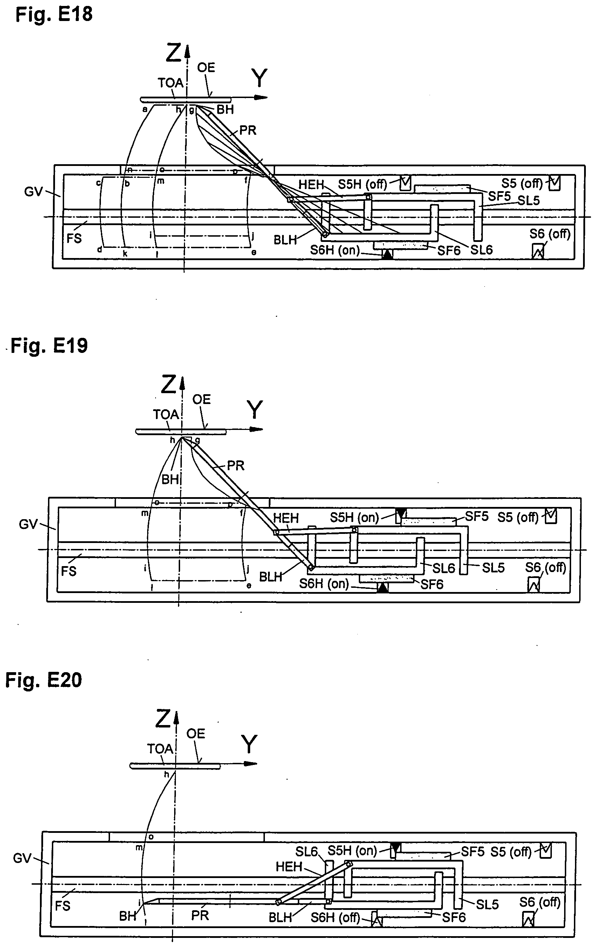

Figur 18 zeigt schematisch das Bild einer Kamera K, das durch das Objektiv OBJ1 mit der Anordnung gemäß den Figuren 16 und 17 aufgenommen wurde. Zur Orientierung sind die XY-Koordinatenachsen aus der Objektebene OE mit eingezeichnet.

Die Helligkeitsunterschiede sind im Bild der Kamera K in Fig. 18 schematisch dargestellt. Der obere Bildrand, das heißt der hintere Bereich des Objektfeldes im positiven Halbraum der Y-Achse, erscheint dunkel. Mit kleiner werdender Y-Koordinate wird das Bild heller.

Das von der Kamera gesehene Bild ist in Figur 18 mit dem Bezugszeichen 10 gekennzeichnet. Schematisch ist außerdem eine zu untersuchende Probe gezeigt, wobei es sich im gezeigten Beispiel um Präparate 12 von Zebrafischchen handelt. Wenn sich die Blendenkante (BK) näher als die Eintrittspupille an der Objektebene befindet, dunkelt sich das Bild von der positiven y-Richtung her ein. Das ist in Figur 18 schematisch durch den Bereich 16 dargestellt.

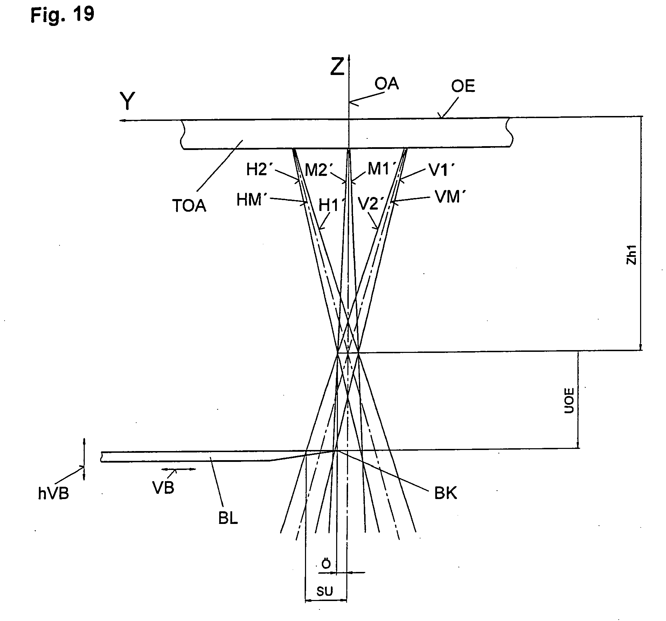

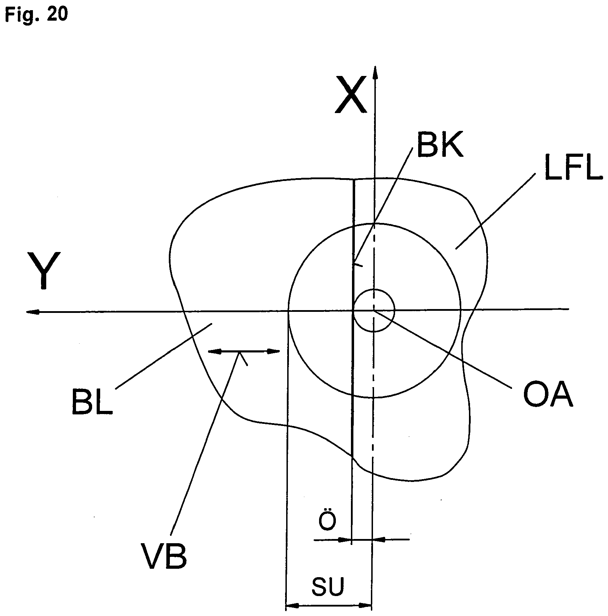

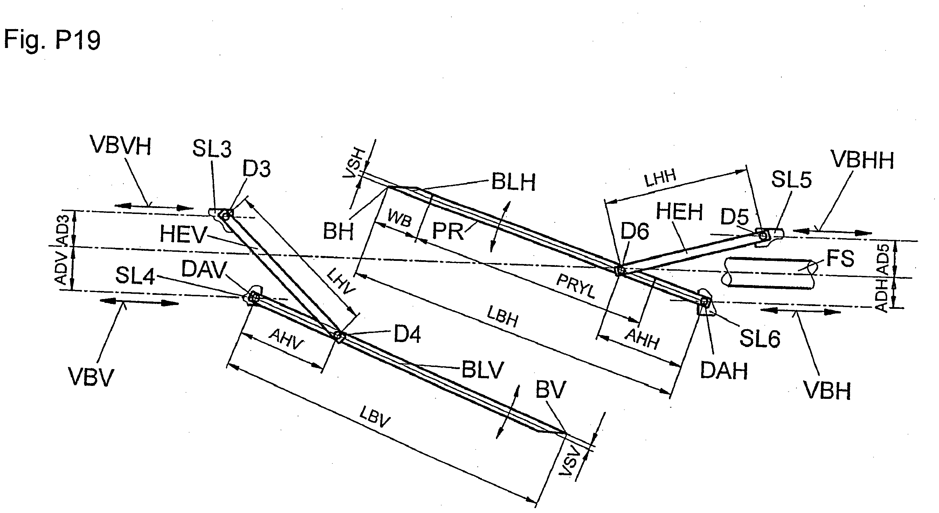

Analog zu den Figuren 9 und 10 zeigen die Figuren 19 und 20 Detailansichten der erfindungsgemäßen Anordnung, allerdings mit einer durch die Verschiebung in der Einstellrichtung hVB veränderten Blendeneinstellung. Gemäß den Figuren 19 und 20 befindet sich die Blendenkante BK in Richtung VB parallel zur Objektebene OE noch immer am Rand des Strahlquerschnitts, der durch den Öffnungsabstand Ö als Radius des Strahlquerschnitts in Höhe der idealen Z-Blendenlage Zh1 um die optische Achse OA gekennzeichnet ist. Allerdings ist nicht mehr die ideale Z-Blendenlage Zh1 eingestellt, da die Blende BL mit der Blendenkante BK in der Einstellrichtung hVB um den Verschiebeweg UOE zu weit weg von der Objektebene OE verschoben wurde. Dadurch werden die Lichtstrahlen V1', VM'und V2' vollständig ausgeblendet. Da alle diese Lichtstrahlen den vorderen Objektfeldrand ausleuchten sollen und nahezu keine weiteren Lichtstrahlen zur Ausleuchtung der anderen Objektfeldregionen ausgeblendet werden, erscheint nur der vordere Objektfeldrand dunkel, das heißt das Bild wird hinsichtlich der Helligkeit inhomogen.

Um die Blendenkante BK nur an den äußeren Rand des Strahlquerschnitts in der von der idealen Z-Blendenlage Zh1 abweichenden eingestellten Blendenlage Zh1 + UOE anzulegen, müsste sie weiter auf den Öffnungsabstand SU geöffnet werden. Da sich die Blende BL mit der Blendenkante BK dann aber nicht mehr in der idealen Z-Blendenlage Zh1 befinden würde, wäre die erfindungsgemäße Funktion des Kontrastverfahrens hierdurch nicht mehr gegeben.

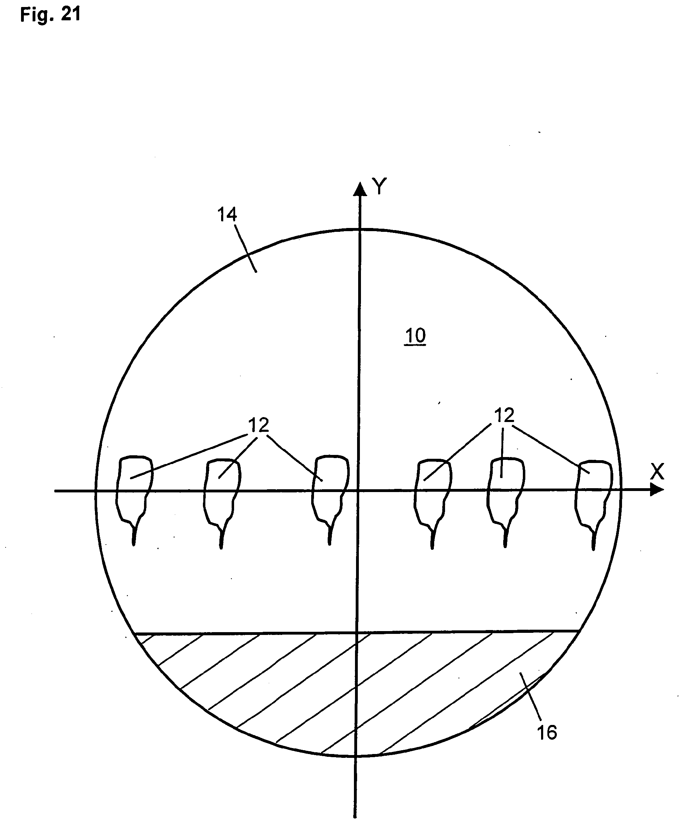

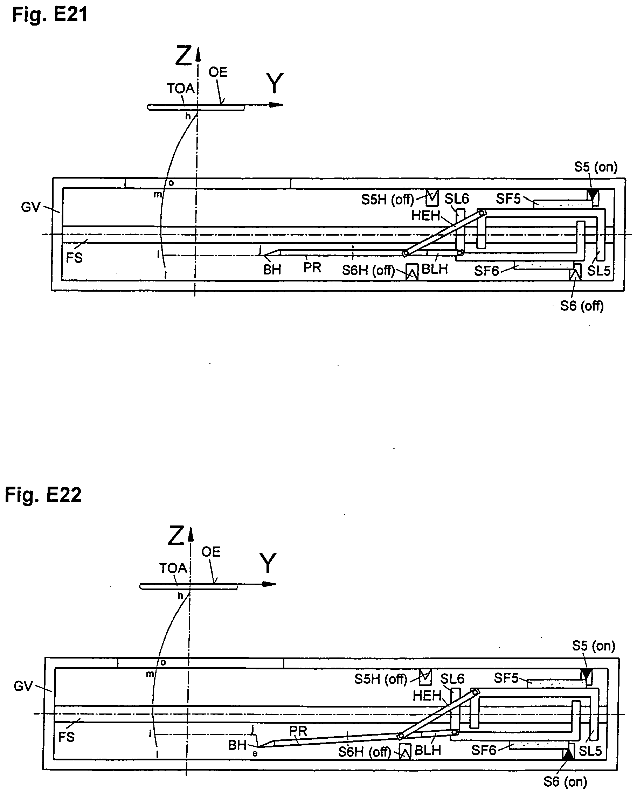

Figur 21 zeigt schematisch das Bild einer Kamera K, das durch das Objektiv OBJ1 mit der Anordnung gemäß den Figuren 19 und 20 aufgenommen wurde. Zur Orientierung sind die XY-Koordinatenachsen aus der Objektebene OE mit eingezeichnet.

Wie in Figur 18 ist das von der Kamera gesehene Bild in Figur 21 mit dem Bezugszeichen 10 und die Probe mit dem Bezugszeichen 12 gekennzeichnet. Wenn die Blendenkante (BK) weiter als die wirksame Eintrittspupille von der Objektebene entfernt ist, dunkelt sich das Bild von der negativen y-Richtung her ein. In Figur 21 ist das schematisch durch den Bereich 16 dargestellt. Die Helligkeitsunterschiede sind im Bild der Kamera K in Fig. 21 schematisch dargestellt. Der untere Bildrand, das heißt der vordere Bereich des Objektfeldes im negativen Halbraum der Y-Achse, erscheint dunkel. Mit größer werdender Y-Koordinate wird das Bild heller.

Die durch die Abweichungen gegenüber der idealen Blendenposition Zh1 verursachten Helligkeitsinhomogenitäten, die im Bild der Objektebene OE parallel zur Einstellrichtung VB der Blende BL sichtbar sind, lassen sich durch einen Helligkeitsgradienten beschreiben, der eine Richtungsangabe, beschreibbar über ein Vorzeichen, und einen Zahlenbetrag umfasst. Beispielsweise erhält der Helligkeitsgradient ein negatives Vorzeichen, wenn sich die Blende BL zu nah an der Objektebene OE befindet und ein positives Vorzeichen, wenn die Blende BL zu weit von der Objektebene OE entfernt liegt. Der Zahlenbetrag kennzeichnet den Grad der Abweichung, das heißt ein zunehmender Zahlenbetrag beschreibt eine zunehmende Abweichung von der idealen Z-Blendenlage Zh1. Somit lässt sich das Ziel der Einstellung der idealen Z-Blendenlage Zh1 dadurch erreichen, dass der Zahlenbetrag minimiert wird, wobei das Vorzeichen des Helligkeitsgradienten die Information für die erforderliche Bewegungsrichtung zur Reduzierung des Zahlenbetrags liefert.

Aus dem oben beschriebenen Verhalten lässt sich nun erfindungsgemäß ein Verfahren zur automatisierten Bestimmung der optimalen z-Position der Blende BL formulieren.

Dabei umfasst das Verfahren das sukzessive Durchfahren der Blende BL von einer Startposition z1 zu einer Endposition z2, wobei die Blende ungefähr die Mitte des Beleuchtungsstrahlengangs abdeckt. Mit einer Kamera wird dann bei jeder Zwischenposition ein Bild aufgenommen und hinsichtlich seines entlang der Y-Achse verlaufenden Intensitätsverlaufs ausgewertet. Ein Optimum ist zum Beispiel dann gefunden, wenn die Gradientenfunktion einen Vorzeichenwechsel vollzieht.

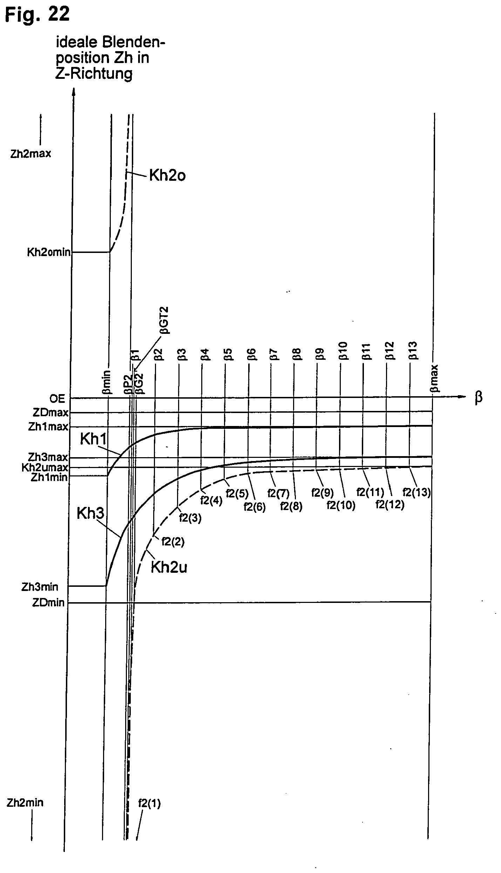

Figur 22 zeigt beispielhaft die ermittelten Kurven für die idealen Z-Blendenlagen zu den drei Objektiven OBJ1, OBJ2 und OBJ3 aus Figur 1 abhängig vom Zoomfaktor β des verwendeten motorisierten Zoomkörpers MZK bezogen auf das XYZ-Koordinatensystem, dessen Ursprung in der Objektebene OE liegt. Die Kurven beginnen jeweils beim kleinsten Zoomfaktor βmin und enden beim größten Zoomfaktor βmax des verwendeten Zoomkörpers MZK aus Figur 1.

Die idealen Z-Blendenlagen der beiden Kurven Kh1 und Kh3 der entsprechenden Objektive OBJ1 und OBJ3 liegen bei typischer Kurvenform im XYZ-Koordinatensystem zwischen ZDmin und ZDmax, der dem Bereich entspricht, in dem eine höhenverstellbare Blende konstruktiv realisierbar ist. Diese Grenzen kennzeichnen also den innerhalb der erfindungsgemäßen Kontrasteinrichtung DL nutzbaren Bauraum für das erfindungsgemäße Kontrastverfahren. Die oberste Blendenposition ZDmax ergibt sich bei normaler Anwendung durch die transparente Objektauflage TOA in der Durchlichteinrichtung DL. Die Blende darf die transparente Objektauflage TOA von unten auf keinen Fall berühren. Die unterste Blendenposition ZDmin resultiert aus der begrenzten Bauhöhe HER der Durchlichteinrichtung DL in Figur 1, die aus Ergonomiegründen unterhalb einer bestimmten Höhe bleiben muss. Das Gehäuse der Durchlichteinrichtung DL aus Figur 1 hat eine Höhe HER von ca. 100mm. Höher sollte eine Durchlichteinrichtung DL ohne weiteres Zubehör nicht sein.

Die minimalen idealen Z-Blendenlagen der Kurven Kh1 und Kh3 heißen Zh1min und Zh3min. Entsprechend heißen die maximalen idealen Z-Blendenlagen dieser Kurven Zh1max und Zh3max.

Die Bezugszeichen f2(1) bis f2(13) kennzeichnen in Figur 22 die ideale Blendenpositionen in Z-Richtung für das Objektiv OBJ2 am motorisierten Zoomkörper MZK jeweils an den Stützstellen Nr. 1, entsprechend β1, bis Nr. 13, entsprechend β13. Kh2omin bezeichnet in Figur 22 einen kleinsten Wert des oberen Kurvenabschnitts Kh2o. Entsprechend bezeichnet Kh2umax in Figur 22 einen größten Wert des unteren Kurvenabschnitts Kh2u. In Figur 22 weiterhin folgende Bezugszeichen von Bedeutung: Zh: Z-Koordinate der Blendenkante BK in der idealen Z-Blendenposition für das aktuelle Objektiv in der aktuellen Zoomvergrößerung; Zh2max: maximaler Wert von Zh für das Objektiv Nr. 2; Zh3max: maximaler Wert von Zh für das Objektiv Nr. 3 und Zh3min: minimaler Wert von Zh für das Objektiv Nr. 3.

Das Objektiv OBJ2 aus Figur 1 hat einen grundsätzlich anderen Kurvenverlauf, der typisch ist für bestimmte Objektive OBJ. In Figur 22 ist erkennbar, dass die Kurve für das Objektiv OBJ2 aus zwei Kurvenabschnitten Kh2o und Kh2u besteht. Zwischen diesen Kurvenabschnitten gibt es beim Zoomfaktor βP2 eine Polstelle, das heißt hier springt der Kurvenverlauf vom oberen Kurvenabschnitt Kh2o von plus Unendlich zum unteren Kurvenabschnitt Kh2u nach minus Unendlich.

Die minimalen und maximalen idealen Z-Blendenlagen der Kurvenabschnitte Kh2u und Kh2o, Zh2min und Zh2max, befinden sich somit im Unendlichen oder liegen praktisch so weit weg, dass die entsprechende ideale Z-Blendenlage konstruktiv nicht mehr eingestellt werden kann. Im oberen Kurvenabschnitt Kh2o ist die ideale Z-Blendenlage sowieso nicht erreichbar, da die Blende BL mit der Blendenkante BK oberhalb der Objektebene OE angeordnet werden müsste. Im unteren Kurvenabschnitt Kh2u lässt sich die ideale Z-Blendenlage erst ab dem Zoomfaktor βG2 sicherstellen, dann befindet sie sich gerade in der Grenzstellung ZDmin. Somit lässt sich das beschriebene Kontrastierungsverfahren zwischen den Zoomfaktoren βmin und βG2 nicht mit allen Vorteilen anwenden, hierfür ist vorzugsweise ein anderes geeignetes Kontrastierungsverfahren zu ermitteln.

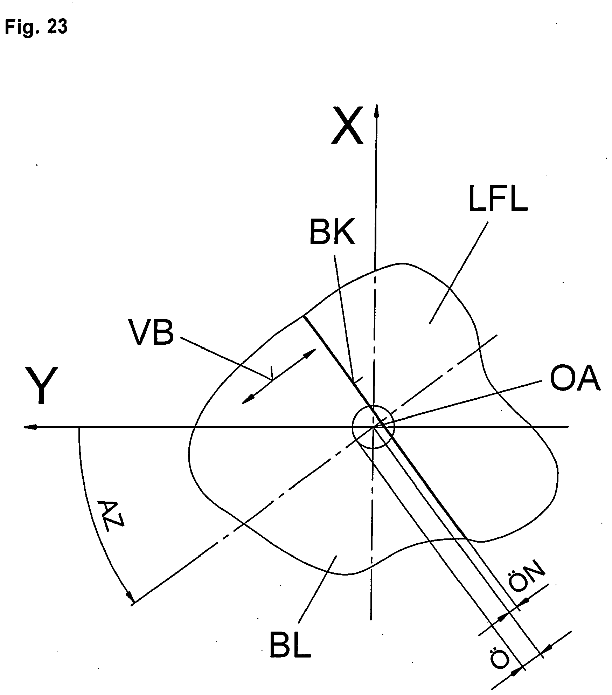

Analog zur Figur 14 zeigt die Figur 23 eine Detailansicht der erfindungsgemäßen Anordnung mit einer durch die Drehung um einen Azimutwinkel AZ veränderten Blendeneinstellung. Gemäß Figur 23 befindet sich die Blendenkante BK noch immer in der idealen Z-Blendenlage Zh1 und deckt die optische Achse OA vollständig ab, so dass sich ein negativer Öffnungsabstand ÖN zwischen der Blendenkante BK und der optischen Achse OA ergibt. Die Blendenkante BK liegt also auf der gegenüberliegenden Seite des Strahlquerschnitts, wobei der negative Öffnungsabstand ÖN noch innerhalb des Strahlquerschnitts liegt, der durch einen Radius mit dem Wert Ö gekennzeichnet ist. Allerdings wurde die Blende gegenüber der ursprünglichen Anordnung in Figur 14 um die Flächennormale zur Objektebene OE gedreht, so dass die Richtung VB zur Einstellung der Blende BL mit der Blendenkante BK parallel zur Objektebene OE um einen Azimutwinkel AZ von der ursprünglichen azimutalen Ausrichtung abweicht. Die Flächennormale zur Objektebene OE entspricht der optischen Achse OA.

Es gelten noch immer die anhand von Figur 11 beschriebenen Zusammenhänge. Das heißt von der Abdeckung durch die Blende BL ist das gesamte Objektfeld gleichmäßig betroffen. Das Bild bleibt homogen.

Das erfindungsgemäße Kontrastierungsverfahren ist prinzipiell richtungsabhängig, das heißt Strukturen des Objektes OB, die parallel zur Blendenkante BK in der Objektebene OE orientiert sind, werden stärker betont oder besonders kontrastreich dargestellt. Nach der Drehung der Blende BL mit der Blendenkante BK um den Azimutwinkel AZ relativ zum Objekt OB gemäß Figur 23 werden somit andere Objektdetails betont beziehungsweise besonders kontrastreich dargestellt, als vor der Drehung gemäß Figur 14.

Bei einem durch das Objektiv OBJ1 mit Anordnung gemäß Figur 23 aufgenommenen Bild hat sich das Bild der Kamera K mit der um den Azimutwinkel AZ gegenüber dem Objekt OB gedrehten Blendenkante BK gegenüber dem Bild aus Figur 14 dadurch verändert, dass durch die Änderung des Beleuchtungsazimuts andere Objektdetails betont oder kontrastreicher dargestellt werden. Das Bild weist noch immer eine sehr gute Homogenität hinsichtlich der Helligkeit auf.

In Makroskopen erfolgt die Abbildung in der Regel rotationssymmetrisch, das heißt hier lässt sich der Azimutwinkel AZ der Beleuchtung bei feststehender Blendenorientierung der erfindungsgemäßen Einrichtung auch durch die Drehung des Objektes OB um die Flächennormale zur Objektebene OE relativ zur Blendenkante BK realisieren. Wie vorab anhand der Figuren 6 und 7 beschrieben, gilt das für Stereomikroskope in der typischen 3D-Anwendung nicht, da die Blendenabschattung dann nicht mehr für den linken Kanal L und den rechten Kanal R gleichmäßig erfolgen würde. Bei Beschränkung auf einen einzelnen Kanal, zum Beispiel auf den rechten Kanal R für die Dokumentation über eine Kamera, funktioniert das Verfahren prinzipiell aber auch an Stereomikroskopen. Sofern das Objektiv OBJ dabei mit dem aktiven Kanal, zum Beispiel dem rechten Kanal R, fluchtet entsprechend der 2D-Stellung des Objektivs OBJ, liegen auch hier rotationssymmetrische Abbildungsverhältnisse vor. Falls sich das Objektiv OBJ aber noch in der 3D-Stellung, das heißt mittig zwischen dem linken Kanal L und dem rechten Kanal R, befindet, tritt das Licht vom Objektfeld einseitig schräg in das Objektiv OBJ ein und die Abbildung ist nicht mehr exakt rotationssymmetrisch. Dennoch können auch hier durch die Drehung des Objektes OB um die Flächennormale zur Objektebene OE relativ zur Blendenkante BK Azimuteffekte beobachtet werden.

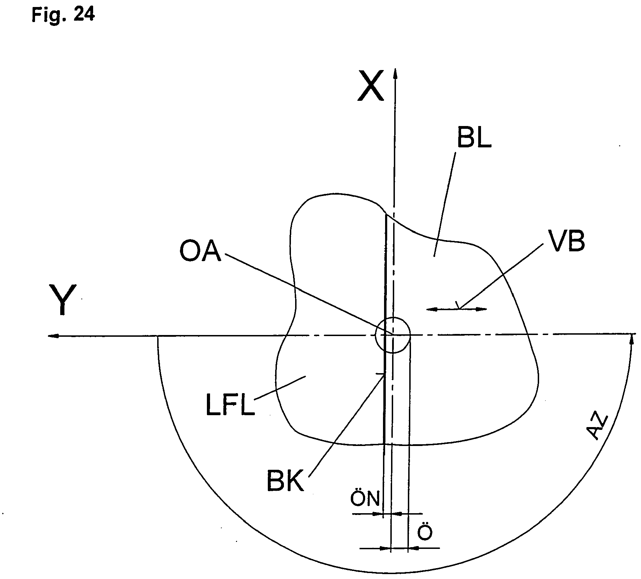

Analog zu Figur 23 zeigt Figur 24 eine Detailansicht der erfindungsgemäßen Anordnung mit einer durch die Drehung um einen bestimmten Azimutwinkel AZ veränderten Blendeneinstellung. Gemäß Figur 24 befindet sich die Blendenkante BK noch immer in der idealen Z-Blendenlage Zh1 und deckt die optische Achse OA vollständig ab, so dass sich ein negativer Öffnungsabstand ÖN zwischen der Blendenkante BK und der optischen Achse OA ergibt. Die Blendenkante BK liegt also auf der gegenüberliegenden Seite des Strahlquerschnitts, wobei der negative Öffnungsabstand ÖN noch innerhalb des Strahlquerschnitts liegt, der durch einen Radius mit dem Wert Ö gekennzeichnet ist. Allerdings wurde die Blende gegenüber der ursprünglichen Anordnung in Figur 14 um die Flächennormale zur Objektebene OE gedreht, so dass die Richtung VB zur Einstellung der Blende BL mit der Blendenkante BK parallel zur Objektebene OE um einen Azimutwinkel AZ = 180° von der ursprünglichen azimutalen Ausrichtung abweicht. Die Flächennormale zur Objektebene OE entspricht der optischen Achse OA.

Die Drehung um einen Azimutwinkel AZ von 180° entspricht einem Sonderfall mit physiologischer Bedeutung, denn hier wird die räumliche Darstellung invertiert. Beispielsweise werden Luftblasen-Einschlüsse im Objekt OB bei vorab natürlicher erhabener Darstellung mit einer um einen Azimutwinkel von 180° gedrehten Blendenlage invertiert, also vertieft dargestellt.

Es gelten noch immer die Zusammenhänge, die bereits anhand von Bild 11 beschrieben worden sind, das heißt von der Abdeckung durch die Blende BL ist das gesamte Objektfeld gleichmäßig betroffen, das Bild bleibt homogen.

Bei einem durch das Objektiv OBJ1 mit der Anordnung gemäß Figur 24 aufgenommenen Bild hat sich das Bild der Kamera K mit der um den Azimutwinkel AZ = 180° gegenüber dem Objekt OB gedrehten Blendenkante BK gegenüber dem Bild, das mit der in Figur 14 dargestellten Anordnung aufgenommen wurde, dadurch verändert, dass durch die Änderung des Beleuchtungsazimuts um 180° eine invertierte Darstellung des Objektes OB erfolgt. Dabei ist der räumliche Eindruck aber nur über eine 3D-Beobachtung ausreichend erkennbar. Das Bild weist noch immer eine sehr gute Homogenität hinsichtlich der Helligkeit auf.

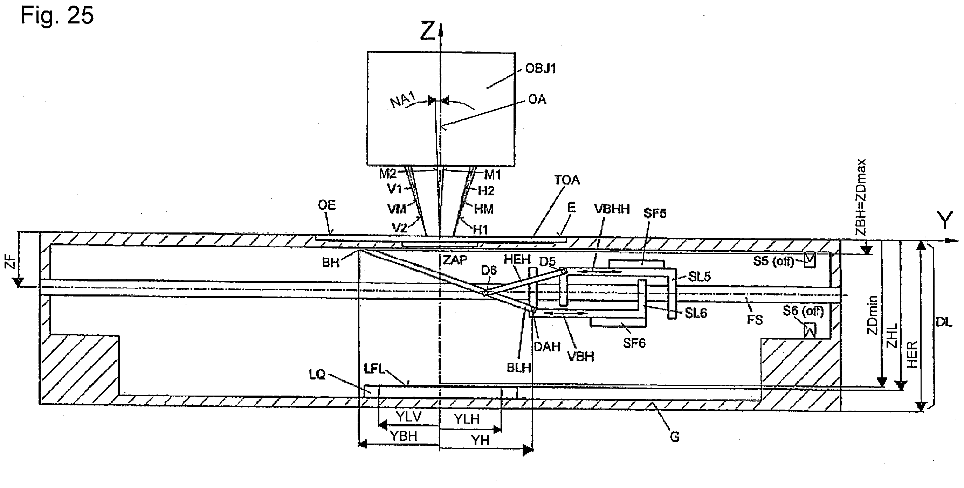

Figur 25 zeigt als Ausführungsbeispiel eine erfindungsgemäße Durchlicht-Beleuchtungseinrichtung DL in dem gemäß Figur 1 vom Benutzer aus gesehenen Rechtssystem, also X-Achse nach rechts, Y-Achse nach hinten, Z-Achse nach oben, mit einer Blende BLH mit einer linear in der X-Richtung verlaufenden Blendenkante BH zwischen einer Lichtquelle LQ, deren Leuchtfläche LFL parallel zur XY-Ebene im negativen Z-Halbraum angeordnet ist, und der Objektebene OE, die den Koordinatenursprung umfasst und in der XY-Ebene angeordnet ist.

Die Blende BLH ist um eine Drehachse DAH, die parallel zur Blendenkante BH orientiert ist, an einem ersten Schlitten SL6 drehbar angeordnet, so dass die Blende BLH mit Blendenkante BH mitsamt der Drehachse DAH entlang der Führungsbahn FS des ersten Schlittens SL6 in der Y-Richtung verschoben werden kann. Das verwendete Objektiv OBJ1 weist prinzipiell den Strahlengang aus Figur 3 auf, es gelten weiterhin die Zusammenhänge, die vorab zur Figur 5 beschrieben worden sind. Allerdings ist die entlang der Führungsbahn FS bewegliche Blende BLH für eine übersichtlichere Darstellung der erfindungsgemäßen Anordnung so weit in die negative Y-Richtung verschoben, dass sie den Strahlquerschnitt aller zurückprojizierten Randstrahlen vollständig abdeckt. Selbstverständlich lässt sich mit dieser erfindungsgemäßen Anordnung die Blendenkante BH in Y-Richtung auch an jeden Strahlquerschnitt anpassen, so dass die Blendenkante BH erfindungsgemäß wirken kann. Auf die Darstellung der zurückprojizierten Randstrahlen in Figur 25 wurde wegen der Darstellung der Blende BLH in einer untypischen Einstellposition verzichtet.

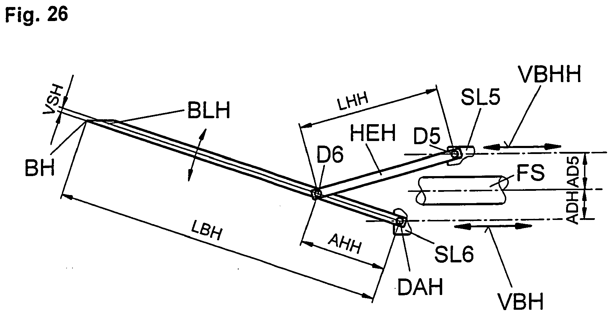

Figur 26 zeigt eine Detailansicht mit ergänzenden Angaben zur erfindungsgemäßen Hebeleinstellung der Blende BLH.

An der Blende BLH befindet sich im Abstand AHH von der Drehachse DAH des ersten Schlittens SL6 eine zweite Drehachse D6, die parallel zur Blendenkante BH orientiert ist, wobei die Drehachse D6 die Lagerung für einen Hebel HEH ist, der mit dem anderen Ende über eine weitere parallel zur Blendenkante BH orientierte Drehachse D5 im Abstand LHH von der Drehachse D6 an einem zweiten Schlitten SL5 drehbar gelagert ist.

Der zweite Schlitten SL5 kann ebenfalls mitsamt seiner Drehachse D5 entlang der Führungsbahn FS des Schlittens SL5 in der Y-Richtung verschoben werden.

Erfindungsgemäß kann die Blendenkante BH zur Homogenisierung der Beleuchtung über eine Bewegung der beiden Schlitten SL6 und SL5 in der Y-Richtung mit überlagerter Relativbewegung der beiden Schlitten auch ohne Änderung der X- und Y-Blendenkoordinaten in eine Z-Blendenkoordinate gebracht werden, in der sie optimal an das aktuell wirksame Abbildungssystem, das einen Zoomkörper MZK mit dem aktuellen Zoomfaktor $\beta$ und ein Objektiv OBJ1 umfasst, angepasst ist. Das ist durch eine hinreichend homogene Ausleuchtung erkennbar. Die Blendenkante lässt sich dabei durch die synchrone Bewegung der beiden Schlitten SL6 und SL5 entlang der Y-Richtung, das heißt parallel zur Objektebene OE, ebenfalls in der Y-Richtung und ohne Änderung der X- und Z-Blendenkoordinaten bewegen. Dadurch kann die Kontraststärke der Beleuchtung einstellbar werden.

Für die Berechnung des Zusammenhangs zwischen den Einstellungen der Positionen der Schlitten SL5 und SL6 und der YZ-Koordinate der Blendenkante BH sind zusätzlich noch die in Fig. 26 dargestellten bekannten Größen LBH, VSH, AD5 und ADH und die in Figur 25 dargestellte Größe ZF erforderlich.

Außerdem müssen die absoluten Schlittenpositionen bekannt sein. Vorzugsweise werden als Antrieb kostengünstige Schrittmotoren, die über eine Ritzel-Zahnstangen-Verzahnung eine Linearbewegung ermöglichen, eingesetzt. Allerdings muss die Absolutposition eines Linearantriebs mit einfachen Schrittmotoren in einer bekannten Position gesetzt werden. Das erfolgt vorzugsweise beim Einschalten durch einen festgelegten Initialisierungsablauf.

Hierzu werden beide Schlitten SL5 und SL6 synchron in Richtung der positiven Y-Achse gefahren, bis die an den Schlitten SL5 und SL6 angebrachten Schaltfahnen SF5 und SF6 in den über entsprechende Positionssensoren S5 und S6 detektierten Referenzpositionen angekommen sind, was durch den Übergang der Schaltzustände S5 (off) und S6 (off) in die Schaltzustände S5 (on) und S6 (on) gekennzeichnet ist. Nach diesem Initialisierungsvorgang ist die Absolutposition der Schlitten bekannt. Über die bekannte Hebelgeometrie lassen sich auch die entsprechenden YZ-Koordinaten der Blendenkante BH ermitteln, sofern die Lage der Blendenkante BH relativ zur Schaltposition bekannt ist. Dies lässt sich über feststehende Maße nur sehr ungenau ermitteln, deshalb wird ein geeigneter Justierprozess über eine elektronische Offsetkorrektur vorgesehen. Hierzu wird die Blendenkante in eine bekannte optisch sichtbare Lage gebracht, mit der Offsetkorrektur werden die Abweichungen zur realen beziehungsweise toleranzbehafteten Schaltpunktlage der Schaltfahnen SF5 und SF6 ausgeglichen.

Durch die Bewegung der Schlitten SL5 und/oder SL6 in den Richtungen VBHH beziehungsweise VBH entlang der Führungsbahn FS um eine bestimmte Schrittanzahl des antreibenden Schrittmotors relativ zur durch den Initialisierungsprozess bekannten Absolutposition lässt sich die entsprechende YZ-Koordinate der Blendenkante BH berechnen. Die Berechnung lässt sich auch invers durchführen, das heißt aus einem vorgegebenen Verfahrweg der Blendenkante BH in der Y- und/oder der Z-Richtung lassen sich auch die hierfür erforderlichen Schlittenwege beziehungsweise die Anzahl der Schrittmotor-Schritte berechnen.

Die Blendenkante BH lässt sich innerhalb der Durchlicht-Beleuchtungseinrichtung DL in Z-Richtung im freien Bauraum zwischen der Objektebene OE und der Lichtquelle LQ frei positionieren. Aufgrund eines toleranzbedingten Sicherheitsabstands liegt die unterste tatsächlich realisierbare Blendenposition ZDmin knapp oberhalb der Leuchtfläche LFL mit der Z-Koordinate ZHL. Nach oben wird die oberste tatsächlich realisierbare Blendenposition ZDmax nicht nur durch die Dicke der transparenten Objektauflage TOA bestimmt, sondern auch durch die Höhe des optional einlegbaren Zubehörs ZAP, zum Beispiel Polarisationsfilter, inklusive der Auflage hierfür. Da die Blendenkante BH beim Initialisierungsprozess aufgrund der synchronen Bewegungen der Schlitten S5 und S6 in derselben Z-Koordinate bleibt, wird die oberste tatsächlich realisierbare Blendenposition ZDmax mit einem entsprechenden toleranzbedingten Sicherheitsabstand nach unten verlegt. Die Blendenkante BH befindet sich in der aktuellen Z-Koordinate ZBH, die gemäß Figur 25 mit der Z-Koordinate ZDmax identisch ist.

Erfindungsgemäß sind keine weiteren Mittel zur Homogenisierung der Beleuchtung vorgesehen oder erforderlich.

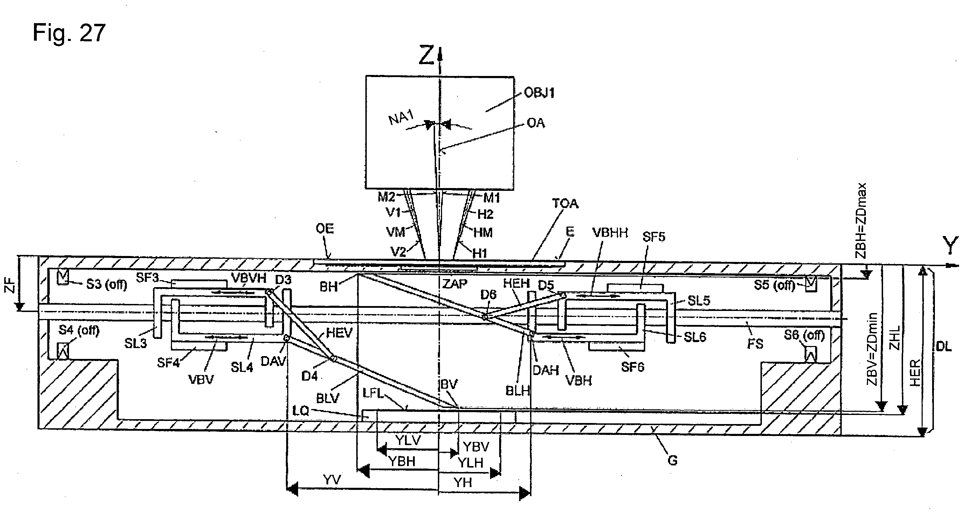

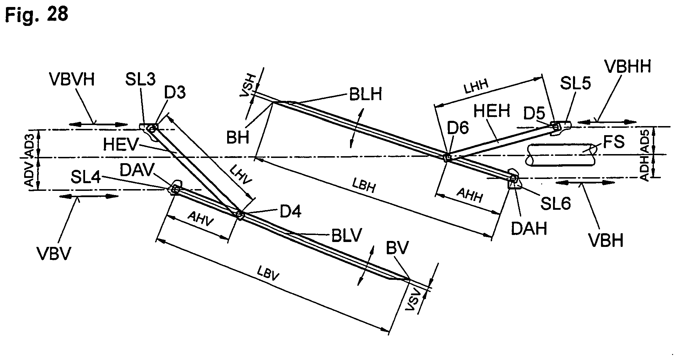

Die Figuren 27 und 28 zeigen analog zu den Figuren 25 und 26 ein Ausführungsbeispiel für eine erfindungsgemäße Durchlicht-Beleuchtungseinrichtung DL in dem gemäß Figur 1 vom Benutzer aus gesehenen Rechtssystem, also X-Achse nach rechts, Y-Achse nach hinten, Z-Achse nach oben, mit einer detaillierten Darstellung der Hebelmechanik.

Dieses Ausführungsbeispiel ist dadurch gekennzeichnet, dass das in den Figuren 25 und 26 beschriebene Blenden/Schlitten-System aus einem ersten Schlitten SL6 mit einer Drehachse DAH, einem zweiten Schlitten SL5 mit einer Drehachse D5, einem Hebel HEH, einer Blende BLH mit einer zusätzlichen Drehachse D6 und einer Blendenkante BH, sowie den Führungsbahnen FS für die Schlitten SL6 und SL5 durch ein weiteres Blenden/Schlitten-System aus einem ersten Schlitten SL4 mit einer Drehachse DAV, einem zweiten Schlitten SL3 mit einer Drehachse D3, einem Hebel HEV, einer Blende BLV mit einer zusätzlichen Drehachse D4 und einer Blendenkante BV, sowie den Führungsbahnen FS für die Schlitten SL4 und SL3, auf der in der Y-Richtung gegenüber liegenden Seite mit identischen Funktionen angeordnet wird. Die Blendenkante kann damit wahlweise aus Richtung der negativen oder aus Richtung der positiven Y-Achse in den Strahlengang gebracht werden. Alle anderen Ausführungen zu den Figuren 25 und 26 gelten entsprechend. Mit G ist in den Figuren 25 und 27 ein Gehäuse bezeichnet. Mit HEV ist in den Figuren 27 und 28 ein vorderer Hebel bezeichnet.

Von Bedeutung sind in den Figuren 26 und 28 außerdem folgende Bezugszeichen: AD3: Abstand zwischen der Führungsbahn FS und der Drehachse D3; ADV: Abstand zwischen der Führungsbahn FS und der Drehachse DAV und AHV: Hebellänge zwischen den Drehachsen DAV und D4.

In den Figuren 27, 28 und 30 sind außerdem folgende Bezugszeichen bedeutsam: D3: Drehachse für Hebel HEV am Schlitten SL3; DAV: Drehachse vordere Blende.

Die einstellbaren Z-Blendenkoordinaten der beiden Blenden/Schlitten-Systeme können auch unterschiedliche Bereiche der gesamten Einstellmöglichkeiten der Z-Blendenkantenkoordinaten abdecken, so dass der Bauraum zwischen ZDmin und ZDmax in zwei Bereiche aufgeteilt ist.

In den Figuren 26, 28 und 29 kennzeichnet das Bezugszeichen LBH einen Abstand zwischen der hinteren Blendenkante BH und dem Drehpunkt DAH der hinteren Blende BLH. Entsprechend ist mit LBV ein Abstand zwischen der vorderen Blendenkante BV und dem Drehpunkt DAV der vorderen Blende BLV gekennzeichnet. Eine Länge des vorderen Hebels HEV zwischen den Drehachsen D3 und D4 ist in Figur 28 mit dem Bezugszeichen LHV versehen.

Mit dem Bezugszeichen SF3 ist in Figur 27 eine Schaltfahne 3 zur Aktivierung von Positions-Sensor S3 gekennzeichnet. Entsprechend ist mit SF4 eine Schaltfahne 4 zur Aktivierung von Positions-Sensor S4 bezeichnet.

In den Figuren 25 und 27 sind weiterhin folgende Bezugszeichen von Bedeutung: YH: Y-Koordinate der hinteren Drehachse DAH; YBH: Y-Koordinate der hinteren Blendenkante BH; YBV: Y-Koordinate der vorderen Blendenkante BV; YLH Y-Koordinate der hinteren Leuchtflächenbegrenzung; YLV: Y-Koordinate der vorderen Leuchtflächenbegrenzung; ZBH: Z-Koordinate der hinteren Blendenkante BH und ZBV: Z-Koordinate der vorderen Blendenkante BV. Das Bezugszeichen ZAP kennzeichnet in den Figuren 25 und 27 optional einlegbares Zubehör in Adapterplatte AP bzw. die Schnittstelle hierfür (z.B. Polarisationsfilter, Einlegeblenden, Farbfilter, etc.).

Mit dem Bezugszeichen VBVH ist in den Figuren 27 und 28 eine Verschieberichtung der Hebelverstellung für die vordere Blende bezeichnet. Mit dem Bezugszeichen VSH ist in Figuren 26 und 28 ein Versatz zwischen der Ebene, die durch die Drehpunktachsen DAH, D6 aufgespannt wird und der hinteren Blendenkante BH bezeichnet. VSV kennzeichnet in Figur 28 einen Versatz zwischen der Ebene, die durch die Drehpunktachsen DAV, D4 aufgespannt wird, und der vorderen Blendenkante BV.

In einer anderen Variante können zumindest größere Teilbereiche oder der komplette Bauraum zwischen ZDmin und ZDmax von beiden Blenden benutzt werden, so dass in den gemeinsamen Bereichen wahlweise eine normale Blendenorientierung ohne Azimutwinkel oder eine gegenüber der normalen Azimutausrichtung invertierte, das heißt um 180° gedrehte, Blendenorientierung einstellbar ist.

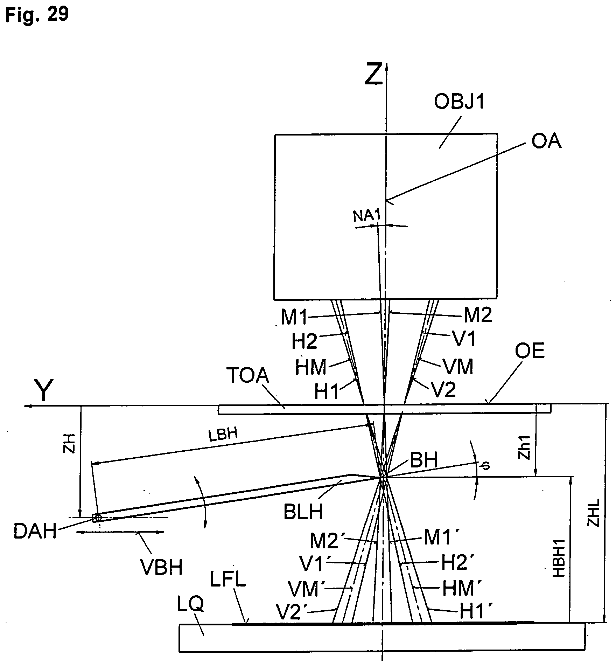

Figur 29 zeigt die relevanten Teile der Blendengeometrie aus den Figuren 27 und 28 mit dem Strahlengang analog Figur 3, wobei sich die Blende BLH in der Z-Richtung in der idealen Blendenposition Zh1 befindet. Analog zu den Figuren 3 und 8 bis 10 ist sie in der Y-Richtung nur an den Strahlquerschnitt, der aus den zurückprojizierten Randstrahlen gebildet wird, angelegt. HBH1 kennzeichnet in Figur 29 einen Höhenabstand von der Leuchtfläche LFL zur hinteren Blende BLQH in der idealen Z-Blendenlage für das Objektiv OBJ1 am Zoomkörper MZK mit dem aktuellen Zoomfaktor β. ZH kennzeichnet in Figur 29 eine Z-Koordinate der hinteren Drehachse DAH.

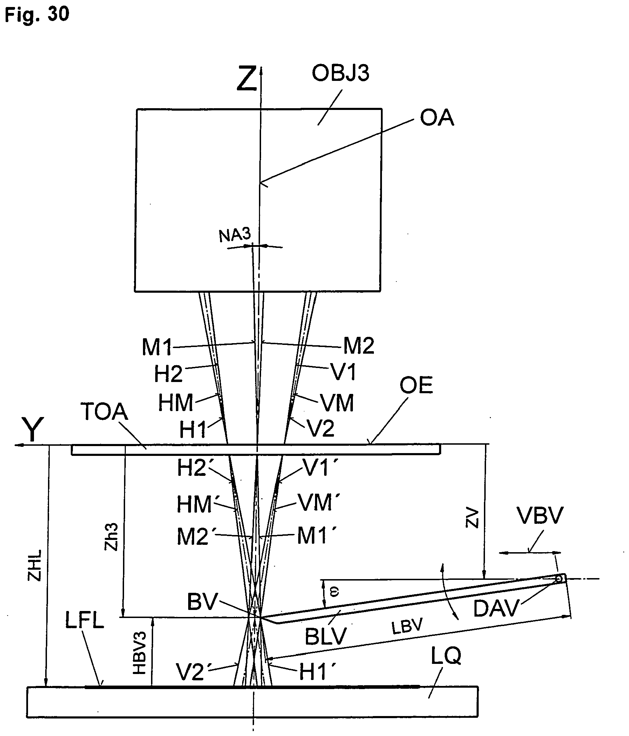

Figur 30 zeigt die relevanten Teile der Blendengeometrie aus den Figuren 27 und 28 mit dem Strahlengang analog Figur 4, wobei sich die Blende BLV in der Z-Richtung in der idealen Blendenposition Zh3 befindet, sie aber in der Y-Richtung analog zu den Figuren 7 bis 10 nur an den Strahlquerschnitt, der aus den zurückprojizierten Randstrahlen gebildet wird, angelegt ist. ZV kennzeichnet in Figur 30 eine Z-Koordinate der vorderen Drehachse DAV.

Durch Variation der Y-Koordinate der Blendenkante BV und/oder Verschiebung in Richtung VBV lässt sich in den Figuren 29 und 30 die Kontraststärke ändern. Weitere gegebenenfalls erforderliche Anpassungen an die Eigenschaften des hier nicht dargestellten Objekts OB gemäß Figur 5 lassen sich bei Bedarf durch eine Korrektur der Z-Koordinate der Blendenkante BV vornehmen, so dass wieder die zum Objekt OB passende ideale Z-Blendenlage Zh3 wirksam wird.

Ein mit der Anordnung gemäß den Figuren 3 und 4, also ohne erfindungsgemäßes Mittel zur Kontrastverstärkung zwischen der Lichtquelle LQ und der Objektebene OE aufgenommenes Bild durch das Objekt OBJ3 ist relativ kontrastarm. Es sind kaum Strukturen und/oder Phasenobjekte erkennbar.

Wenn man mit demselben Objekt OB und derselben optisch wirksamen Objektiv-Zoomkörper-Kombination aus Objektiv OBJ3, Zoomkörper MZK mit Zoomfaktor β weitere Bilder aufnimmt, lassen sich diese direkt miteinander vergleichen.

Ein unter Verwendung einer Vorrichtung der in DE 10 2004 017 694 B3 beschriebenen Art, die mit einer nur in der Y-Richtung verschiebbaren Blende in einer festen Z-Koordinate arbeitet, zur Beleuchtung aufgenommenes Bild ist stark inhomogen. Nur in der Übergangszone zwischen einem unteren dunklen und einem oberen hellen Bildbereich hat sich der Kontrast gegenüber dem mit der Anordnung gemäß den Figuren 3 und 4 aufgenommenen Bild verbessert.

Ein mit der erfindungsgemäßen Einrichtung mit einem Strahlengang gemäß Figur 30 zur Beleuchtung aufgenommenes Bild, bei dem die Blendenkante in Richtung der optischen Achse verschoben wurde, ist noch immer homogen. Gegenüber dem mit der Anordnung gemäß den Figuren 3 und 4 aufgenommenen Bild hat sich der Kontrast aber extrem verbessert. Das kann durch das folgende Einstellverfahren erreicht werden:

Analog zu Figur 13 wird zunächst die Blendenkante BH an die optische Achse OA angelegt, so dass auch in der idealen Blendenlage Zh3 noch ein ausreichender Kontrast zu erwarten ist. Danach wird über eine Optimierung der Homogenität analog zu den anhand der Figuren 16, 17, 19, 20 beschriebenen Zusammenhänge die ideale Z-Blendenlage Zh3 eingestellt. Anschließend wird der Kontrast durch das weitere Abdecken des Strahlengangs analog zu Figur 14 so weit erhöht, dass gerade noch eine Durchlicht-Hellfeld-Charakteristik erkennbar ist und keine Inhomogenitäten im Kamerabild erkennbar sind. Bei kleineren Sehfeldern sind prinzipiell stärkere Kontraste möglich.

Besondere Vorteile ergeben sich in Kombination der erfindungsgemäßen Einrichtung mit einem vernetzten System analog zu Figur 1, denn dann sind alle aktuellen Systemeinstellungen bekannt. Das gerade aktive Objektiv OBJ wird über den codierten Objektivwechsler COW ausgewählt. Hiermit sind auch die Lagen der idealen Z-Blendenlagen Zh1, bekannt, sofern sie vorab versuchsweise ermittelt wurden. Die idealen Z-Blendenlagen Zh1 hängen auch vom bekannten Zoomfaktor β des motorisierten Zoomkörpers MZK ab. Für jede Kombination aus Objektiv OBJ und motorisiertem Zoomkörper MZK gibt es demgemäß eine Kurve mit einer idealen Z-Blendenlage abhängig vom Zoomfaktor β, die vorzugsweise in der Firmware der motorisierten Durchlichteinrichtung elektronisch gespeichert wird. Im Betrieb kann der aktuelle Systemzustand erkannt werden und über die hierzu passende Kurve wird zum entsprechenden Zoomfaktor β die ideale Z-Blendenlage reproduziert werden.

Anhand der bekannten Zusammenhänge lassen sich sämtliche idealen Z-Blendenlagen für Standardobjekte mit allen Objektiv-Zoomkörper-Kombinationen aus Objektiv OBJ und Zoomkörper MZK mit Zoomfaktor β als Kurven, zum Beispiel Kh1, Kh2 gemäß Figur 22, vorab ermitteln. Vorteilhafterweise werden diese versuchsweise ermittelten Kurven allgemein durch Näherungsfunktionen fRZi(β) angenähert, die mit einer relativ geringen Anzahl an Parametern beschrieben werden können, so dass sich ein geringerer elektronischer Verarbeitungsaufwand mit kürzerer Berechnungszeit ergibt.

Analog hierzu können auch die für die Standardobjekte ermittelten bestmöglichen Kontrasteinstellungen und/oder Y-Werte als Näherungsfunktionen fRYi(β) mit einer relativ geringen Anzahl an Parametern beschrieben werden, so dass sich auch hier ein geringerer Verarbeitungsaufwand mit kürzerer Berechnungszeit ergibt.

Sofern die Einstellungen der Blenden motorisiert erfolgen und eine Einrichtung zum Anzeigen und Speichern der eingestellten Blendenpositionen vorhanden ist, lassen sich die gespeicherten Beleuchtungseinstellungen wieder reproduzieren. Durch die zusätzliche Kombination der erfindungsgemäßen motorisierten Einrichtung mit einer weiteren Einrichtung, die über eine Kamera K, eine spezielle Software zur Bildverarbeitung und eine Einrichtung zur Durchführung einer Regelung EM verfügt, lässt sich die ideale Z-Blendenlage Zh1 auch automatisch ermitteln und/oder einstellen. Hierzu wertet die Bildverarbeitungs-Software das Kamerabild hinsichtlich des Helligkeitsgradienten parallel zur Koordinatenrichtung VB, in der die aktive Blende BL zur Kontrastvariation bewegt wird, aus, und übermittelt den Helligkeitsgradienten an die Einrichtung zur Durchführung einer Regelung EM und/oder dem Regler EM. Hierbei dient das Vorzeichen des Helligkeitsgradienten als Richtungsinformation und der Zahlenbetrag als Maß für die Abweichung von der idealen Z-Blendenlage, wobei der Regler EM zur Minimierung der Regelabweichung Fahrbefehle an die erfindungsgemäße Durchlichteinrichtung DL sendet, die über die entsprechende Bewegung der Antriebsmotoren als Stellglieder zu einer Reduzierung der Regelabweichung führen. Im Sinn einer Regelung liegt deshalb eine Gegenkopplung vor. Die ideale Z-Blendenlage ist dann erreicht, wenn sich der Zahlenbetrag des Helligkeitsgradienten nicht weiter minimieren lässt.

Die automatische Einstellung der idealen Z-Blendenlage Zh1 setzt eine während des Vorgangs fixe Einstellung der Lage der Blende BL mit Blendenkante BK in der Richtung VB parallel zur Objektebene OE voraus. Hierfür werden vorzugsweise die Angaben zum aktuellen Objektiv OBJ1, zum verwendeten Zoomkörper MZK und zum aktuellen Zoomfaktor β elektronisch abgefragt und daraus über vorab ermittelte Blendeneinstellungen die entsprechende Kontrasteinstellung vorgegeben. Das Verfahren funktioniert aber auch mit einer Festeinstellung der Blendenkante BK in Richtung VB auf die optische Achse OA, siehe Figur 13.

Wie bereits ausgeführt wurde, wird hauptsächlich wegen der unbekannten Einflüsse des Objekts OB und seiner Umgebung, zum Beispiel transparente Objektauflage TOA, Petrischale mit Nährlösung etc., vorzugsweise ein geeignetes Bedienelement, zum Beispiel ein Adjust-Scrollrad SADJ, zur kundenseitigen Variation der Blendenlage senkrecht zur Objektebene OE vorgesehen. Bei Aktivierung des erfindungsgemäßen Kontrastverfahrens und/oder Änderung des Zoomfaktors β wird zunächst die aktuelle Systemumgebung aus Objektiv OBJ und Zoomkörper MZK mit dem aktuell wirksamen Zoomfaktor β ermittelt und dann die hierfür vorab ermittelte Default-Einstellung für diese Systemumgebung voreingestellt. Diese kann dann über das Adjust-Scrollrad SADJ manipuliert werden. Beispielsweise lässt sich über das Drehen des Adjust-Scrollrads SADJ zunächst die Homogenisierung durch die Bewegung der Blende BL mit der Blendenkante BK in der Richtung hVB vornehmen. Nach Drücken des Adjust-Scrollrads SADJ bewirkt das Drehen des Adjust-Scrollrads SADJ eine Kontrastvariation über die Bewegung der Blende BL mit der Blendenkante BK in der Richtung VB. Bei flachen ebenen Objekten bleibt dabei der Einstellaufwand relativ klein. In den meisten Fällen wird schon durch die Default-Einstellungen der Blende BL mit Blendenkante BK ein brauchbares Bild vorliegen.

Eine große Objekthöhe OH erfordert bei diesem Bedienkonzept aber bei jeder Änderung des Zoomfaktors β einen erheblichen Einstellaufwand zur Homogenisierung durch Bewegung der Blende BL mit Blendenkante BK in Richtung hVB. Dieser Einstellaufwand lässt sich durch eine Offseteinstellung um einen einmal ermittelten Korrekturweg in Richtung hVB minimieren. Hierzu kann über die Bedieneinheit BE mit integriertem Touchscreen für das Gesamtsystem ein Wizard aktiviert werden, der den Benutzer zunächst auffordert, das interessierende Objektdetail mit der motorisierten Fokussiereinrichtung MFT bei vorab automatisch über den Zoomkörper MZK eingestellten größten Zoomfaktor β anzufokussieren. Anschließend kann der gegebenenfalls vorhandene individuelle Augenfehler des Benutzers über den Dioptrienausgleich an den Okularen OK bei vorab automatisch über den Zoomkörper MZK eingestellten kleinsten Zoomfaktor β ausgeglichen werden.

Sodann kann der Benutzer aufgefordert werden, mit dem bereits eingestellten kleinsten Zoomfaktor β eine Einstellung der Homogenisierung über die Drehung des Adjust-Scrollrads SADJ an der erfindungsgemäßen Durchlichteinrichtung DL vorzunehmen. Die Einstellung wird vorzugsweise mit dem kleinsten Zoomfaktor durchgeführt, da die Einstellung der Homogenisierung hiermit am empfindlichsten funktioniert. Die erfolgte Homogenisierung kann durch den Benutzer über eine Schaltfläche bestätigt werden, wobei der eingestellte Verstellweg in Richtung hVB als Offsetwert gespeichert wird. Danach kann bei Aktivierung des erfindungsgemäßen Kontrastverfahrens und/oder Änderung des Zoomfaktors β weiterhin zunächst die aktuelle Systemumgebung aus Objektiv OBJ und Zoomkörper MZK mit dem aktuell wirksamen Zoomfaktor β ermittelt werden. Insbesondere kann zu einer hierfür vorab ermittelten Default-Einstellung für diese Systemumgebung der Offsetwert addiert werden, bevor diese Einstellung voreingestellt wird. Diese voreingestellte Einstellung kann dann weiterhin über das Adjust-Scrollrad SADJ manipuliert werden.

Lebende und/oder sich bewegende Objektdetails von Objekten OB, die sich zum Beispiel in einer Nährlösung in einer Petrischale bewegen, können während der Beobachtung auch ihre Position senkrecht zur Objektebene OE verändern. Zur weiteren Beobachtung kann deshalb eine Nachfokussierung über die motorisierte Fokussiereinrichtung MFT erforderlich sein. Dadurch würde ohne weitere Maßnahmen die Einstellung der Homogenisierung nicht mehr stimmen, denn der Abstand zwischen den interessierenden Objektdetails und der Blendenkante wäre durch das Nachfokussieren nicht mehr identisch. Dieser Nachteil lässt sich vermeiden, wenn der vorab über den Wizard ermittelte Offsetwert auch fest mit der Bewegung der motorisierten Fokussiereinrichtung verknüpft wird, wobei die Blende BL mit der Blendenkante BK synchron mit der motorisierten Fokussiereinrichtung MFT in der Richtung hVB und/oder in Z-Richtung bewegt werden müsste. Diese Funktion kann beispielsweise durch eine zusätzlich optional aktivierbare Schaltfläche im Wizard aktiviert werden. Nach der Aktivierung dieser Schaltfläche wird die Blende BL mit der Blendenkante BK bei einer Nachfokussierung über die motorisierte Fokussiereinrichtung automatisch nachgeführt, so dass der Abstand zwischen dem anfokussierten Objektdetail und der Blendenkante ohne weitere Änderung der Systemeinstellungen stets konstant bleibt.

Die Bewegungen der Blende BL mit Blendenkante BK in Richtung VB zur Kontrasteinstellung und in Richtung hVB zur Homogenisierung müssen nicht zwangsläufig unabhängig voneinander einstellbar sein, was zum Beispiel über von den direkt wirkenden Richtungen, beispielsweise parallel zur Objektebene OE senkrecht zur Blendenkante BK für die Kontrastierung; senkrecht zur Objektebene OE für die Homogenisierung, abweichende Einstellrichtungen bewirkt werden kann. Grundsätzlich müssen aber trotzdem die Bewegungskomponenten in den direkt wirkenden Richtungen vorhanden sein und alle relevanten YZ-Koordinaten der Blendenkante BK müssen sich gezielt anfahren lassen.

Mit nur einem Freiheitsgrad zur Einstellung der Homogenisierung lässt sich ebenfalls eine erfindungsgemäße Beleuchtungsoptimierung vornehmen, wenn der Kontrast also die Y-Koordinate fest voreingestellt wird. Zum Beispiel könnte die Blendenkante BK analog zu Figur 13 an die optische Achse OA angelegt werden. Bei Abweichungen der Einstellrichtung von der Richtung hVB der Flächennormalen der Objektebene OE kann sich auch die Kontraststärke entsprechend ändern. Eine erfindungsgemäße Optimierung der Beleuchtung liegt hier dennoch auch mit nur einem Freiheitsgrad zur Einstellung der Blendenlage vor, wenn jede ideale Blendenlage Zh1 anfahrbar ist und der Kontrast immer im nutzbaren Bereich im Sinne des erfindungsgemäßen Verfahrens bleibt.

Die linear verlaufende Blendenkante BK kann auch entlang von gekrümmten Bahnkurven bewegt werden, sofern sich durch die Anordnung jede ideale Blendenlage Zh1 anfahren lässt und der Kontrast immer im nutzbaren Bereich im Sinne des erfindungsgemäßen Verfahrens bleibt.

Die kostengünstigste Idealform ist eine lineare Blendenkante BK, da sie sich ohne größeren Aufwand leicht herstellen lässt. Leicht gekrümmte Blendenkanten BK lassen sich prinzipiell auch einsetzen, allerdings verändern sich dann mit der Kippung der Blende BL bei feststehender XYZ-Koordinate eines einzelnen Punktes auf der Blendenkante BK mit zunehmender Entfernung von diesem Punkt entlang der Blendenkante BK auch die Y- und die Z-Werte, was praktisch schlecht beherrschbar ist. Krümmungen der Blendenkante BK, die im Bereich der üblichen Fertigungstoleranzen liegen und/oder die noch nicht zu sichtbaren Inhomogenitäten führen, spielen hierbei keine Rolle.

Weiterhin ist es möglich, ein pixelweise schaltbares Array wie zum Beispiel ein LCD-Array als höhenverstellbare Blende zu verwenden. Diese Ausführung hat den Vorteil, dass sich das Transmissionsmuster der Blende an die Pupillenform anpassen lässt. Darüber hinaus sind auch andere Muster vorteilhaft. Die Umkehr der Blendenkante wäre beispielsweise durch elektronische Ansteuerung zu realisieren. Auch eine Rotation der Blende wäre denkbar. Nicht zuletzt wäre auch ein schneller Wechsel des Transmissionsmusters zu verschiedenen Formen hin denkbar, die oberhalb der Flimmerfrequenz des Auges, ca. 50 Hz, einen gemischten Kontrasteffekt hervorruft.

Durch eine Anpassung der Beobachtungsapertur des abbildendem Systems, das heißt durch das leichte Verkleinern der abbildungsseitigen Apertur über die Einstellung der abbildungsseitigen vorzugsweise motorisierten Aperturblende über das entsprechende Bedienelement BMAB lässt sich in bestimmten Abbildungssituationen eine weitere Verbesserung des Kontrastes erzielen. Sofern die Aperturblende motorisiert und/oder mit dem Gesamtsystem vernetzt ist, lassen sich diese Einstellungen auch abspeichern und bei Bedarf wieder reproduzieren.

Ohne Beschränkung kann die Erfindung dadurch verallgemeinert werden, dass beispielsweise der Strahlengang in der Durchlichthaube durch Umlenkoptiken wie Spiegel gefaltet ist und Linsen als Relay-Optiken verwendet werden.

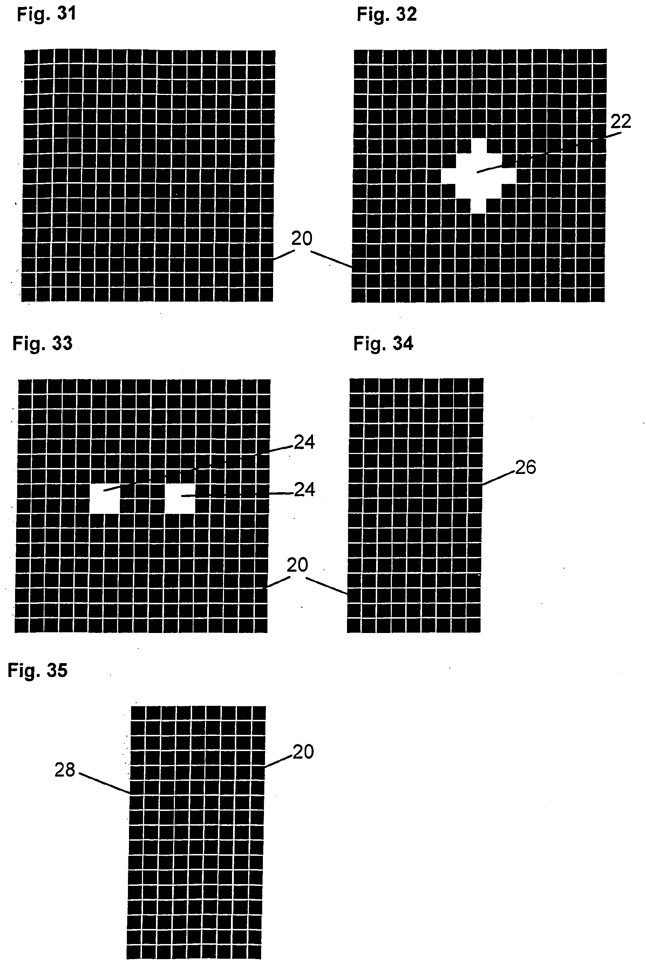

In den Figuren ist schematisch eine Reihe von Zuständen eines als Blende einzusetzenden Flüssigkristall-Arrays 20 dargestellt. Figur 31 zeigt eine Situation in welcher alle Pixel des Flüssigkristall-Arrays 20 auf undurchlässig gestellt sind.

In Figur 32 ist ein zentraler Bereich 22 des Flüssigkristall-Arrays 20 transparent. In Figur 32 ist eine Situation mit zwei transparenten Bereichen 24 dargestellt. Die Figuren 34 und 35 schließlich zeigen Fälle, in welchen jeweils eine Hälfte des Flüssigkristall-Arrays 20 auf undurchlässig und die andere Hälfte auf transparent gestellt ist. Dadurch werden Blendenkanten 26, 28 gebildet, die für die erfindungsgemäße Vorrichtung und das erfindungsgemäße Verfahren nutzbar sind.

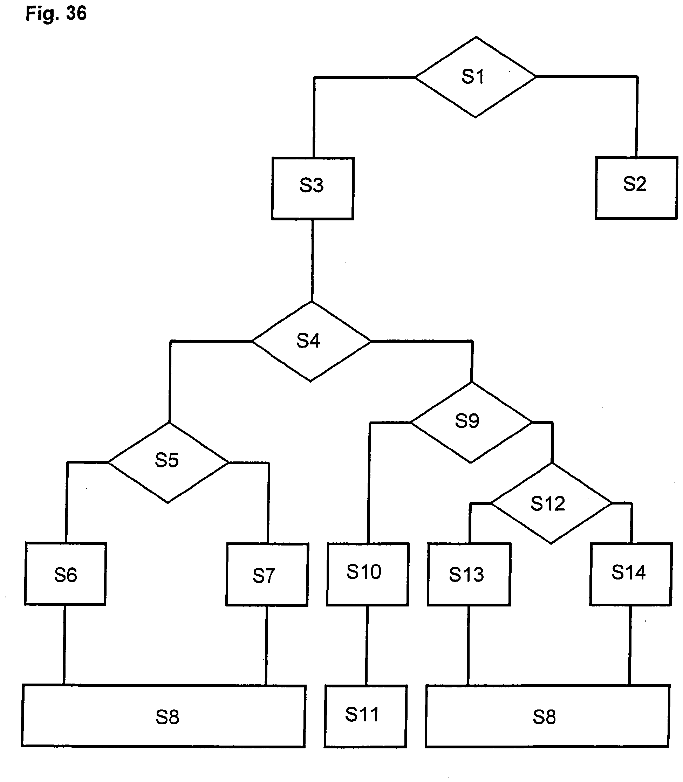

In Figur 36 sind schematisch die Verfahrensschritte S1 bis S14 eines erfindungsgemäßen Verfahrens zum Einstellen einer bestgeeigneten Beleuchtung für ein Lichtmikroskop dargestellt. Hiermit kann ein homogenes Bildfeld bei maximal möglichem Kontrast erreicht werden. Das erfindungsgemäße Verfahren kann insbesondere mit einer erfindungsgemäßen Vorrichtung zur Durchlichtbeleuchtung für ein Lichtmikroskop durchgeführt werden. Die Beleuchtung wird dabei durch Bewegen der Blendenkanten einer erfindungsgemäßen Vorrichtung an eine geeignete Position eingestellt.

Das erfindungsgemäße Verfahren wird anhand eines Ausführungsbeispiels mit vier Blenden, welche jeweils eine lineare Blendenkante aufweisen, erläutert. Diese vier Blenden werden als vordere, hintere und zwei seitliche Blenden bezeichnet. Erfindungsgemäß kann aber auch eine andere Anzahl an Blenden verwendet werden. Insbesondere kann auch eine Irisblende eingesetzt werden. Die im Folgenden beschriebenen Verfahrensschritte sind dann entsprechend anzupassen.

In Schritt S1 wird überprüft, ob eine Mikroskopeinstellung, nämlich eine Objektiv-Zoomkörper-Kombination, die momentan in dem Lichtmikroskop verwendet wird, und eine damit eingestellte Zoom-Vergrößerung, abrufbar ist. Dies kann beispielsweise über einen CAN-Bus erfolgen. Bei der Antwort "ja" folgt der Schritt S3, andernfalls der Schritt S2.

Bei Schritt S2 werden alle verfügbaren Blenden geöffnet, das heißt keine der verfügbaren Blendenkanten beschneidet das Beleuchtungsstrahlenbündel. Hierzu wird die hintere Blende geöffnet, indem beide zugehörigen Schlitten, die dem Bewegen der Blende dienen, in die Referenzposition der hinteren Blende gefahren werden. Die Referenzposition der hinteren Blende kann diejenige anfahrbare Position sein, welche den größten Y-Wert aufweist. Die vordere Blende wird in analoger Weise durch Bewegen ihrer beiden Schlitten in ihre Referenzposition gefahren. An dieser befindet sie sich an derjenigen anfahrbaren Position, welche den kleinsten Y-Wert aufweist. Zudem werden die beiden seitlichen Blenden geöffnet, indem ihre jeweiligen Referenzpositionen angefahren werden. Für die erste seitliche Blende ist dies die Position mit minimal einstellbarem X-Wert. Für die zweite seitliche Blende ist dies die Position mit maximal einstellbarem X-Wert.

In Schritt S3 wird mit der abgefragten Objektiv-Zoomkörper-Kombination und der eingestellten Zoom-Vergrößerung eine ideale Z-Position für eine Blendenkante bestimmt. Dies kann beispielsweise mit Hilfe von einer abgespeicherten Wertetabelle erfolgen, in welcher ideale Z-Positionen für verschiedene Objektiv-Zoomkörper-Kombinationen und verschiedene Zoom-Vergrößerungen hinterlegt sind. Die Wertetabelle kann durch vorhergehende Messungen bestimmt worden sein oder durch theoretische Berechnungen. Für Zoom-Vergrößerungen, zu denen in der Wertetabelle kein Wert hinterlegt ist, kann eine ideale Z-Position durch Interpolation der Werte aus der Wertetabelle ermittelt werden. Die ideale Z-Position der Blendenkante kann dadurch definiert sein, dass der Beleuchtungsstrahlengang des Lichtmikroskops an dieser Z-Position eine Taille aufweist. Auf diesen Schritt folgt der Schritt S4.

In Schritt S4 wird überprüft, ob die ideale Z-Position der Blendenkante innerhalb des verfügbaren Bauraums liegt. Trifft dies zu, so folgt Schritt S5, anderenfalls Schritt S9.

In Schritt S5 wird festgestellt, welche der verfügbaren Blendenkanten an die ideale Z-Position bewegbar ist. Je nach Ausführungsform der erfindungsgemäßen Vorrichtung kann nicht eine einzige Blende über den gesamten verfügbaren Bauraum bewegt werden. Stattdessen ist die vordere Blende in einen Bereich kleinerer Z-Werte bis maximal ZDmin + HBVmax beweglich, während die hintere Blende in einem Bereich größerer Z-Werte als ZDmin + HBVmax bewegt werden kann. Dabei bezeichnet HBVmax den maximalen Höhenabstand, den die vordere Blende von der Leuchtfläche einnehmen kann. Wird in Schritt S5 festgestellt, dass die ideale Z-Position der Blendenkante im Bewegungsraum der vorderen Blende liegt, so folgt Schritt S6. Liegt hingegen die ideale Z-Position im Bewegungsraum der hinteren Blende, folgt Schritt S7. Praktisch können sich die Bewegungsräume der vorderen und hinteren Blende auch überlappen. Dennoch wird in Schritt S5 eine Blende nach den oben genannten Kriterien ausgewählt.

In Schritt S6 wird die vordere Blende zu der idealen Z-Position bewegt und die hintere Blende wird geöffnet.

In Schritt S7 wird hingegen die hintere Blende an die ideale Z-Position bewegt und die vordere Blende wird geöffnet. Das Öffnen kann dabei so wie bei Schritt S2 erfolgen. Für Ausgestaltungen der erfindungsgemäßen Vorrichtung, bei denen genau eine höhenverstellbare Blende vorhanden ist, können die Schritte S5 bis S7 durch den Schritt ersetzt werden, dass diese höhenverstellbare Blendenkante an die ideale Z-Position bewegt wird.

Sowohl auf Schritt S6 als auch auf Schritt S7 folgt Schritt S8, in welchem die beiden seitlichen Blenden positioniert werden. Deren Position wird, analog zu Schritt S3, abhängig von der verwendeten Objektiv-Zoomkörper-Kombination und der damit eingestellten Zoom-Vergrößerung bestimmt. Die beiden seitlichen Blenden werden sodann an die geeigneten Positionen bewegt. Hiermit ist die Einstellung aller vorhandenen Blenden und damit auch das erfindungsgemäße Verfahren abgeschlossen.

Im Folgenden wird Schritt S9 beschrieben, welcher durchgeführt wird, wenn in Schritt S4 festgestellt wird, dass die ideale Z-Position der Blendenkante außerhalb des verfügbaren Bauraums liegt. In Schritt S9 wird ermittelt, ob die Verwendung eines Prismenfilms sinnvoll ist. Wird ein Prismenfilm in einem bestimmten Winkel in das Beleuchtungsstrahlenbündel eingeführt, so wird die Ausbreitung des Beleuchtungsstrahlenbündels in vorbekannter Weise beeinflusst. Wird in Schritt S9 festgestellt, dass sich durch Verwendung eines Prismenfilms die Beleuchtung für das Lichtmikroskop verbessern lässt, so folgt Schritt S10, anderenfalls Schritt S12.

In Schritt S10 wird zunächst der Prismenfilm in den Strahlengang eingebracht. Zudem wird die hintere Blende auf eine YZ-Position eingestellt, welche abhängig von der verwendeten Objektiv-Zoomkörper-Kombination und der eingestellten Zoom-Vergrößerung ermittelt wird. Die vordere Blende kann auf eine Y-Position bewegt werden, welche ebenfalls abhängig von der verwendeten Objektiv-Zoomkörper-Kombination und der eingestellten Zoom-Vergrößerung bestimmt wird. Die Z-Position der vorderen Blende kann auf eine Position ZDmin dicht oberhalb der Lichtquelle eingestellt werden.

Auf Schritt S10 folgt Schritt S11, in welchem die seitlichen Blenden auf X-Positionen bewegt werden, welche abhängig von der verwendeten Objektiv-Zoomkörper-Kombination und der eingestellten Zoom-Vergrößerung bestimmt werden, wobei berücksichtigt wird, dass sich der Prismenfilm im Strahlengang befindet.

Wird in Schritt S9 festgestellt, dass mit dem Prismenfilm keine verbesserte Beleuchtung erreichbar ist, so folgt Schritt S12, in welchem kein Prismenfilm verwendet wird. Stattdessen wird überprüft, welche der verfügbaren Blenden am nahesten zu der idealen Z-Position bewegt werden kann. Wird festgestellt, dass die ideale Z-Position unterhalb des verfügbaren Bauraums liegt, so folgt Schritt S13. Ist hingegen die ideale Z-Position zu hoch, folgt Schritt S14.

In Schritt S13 wird die vordere Blende an dem kleinstmöglichen Z-Wert positioniert. Zudem kann vorgesehen sein, dass die Y-Position der vorderen Blende abhängig von der verwendeten Objektiv-Zoomkörper-Kombination und der eingestellten Zoom-Vergrößerung so eingestellt wird, dass kein Beschneiden des Strahlengangs erfolgt. Die hintere Blende wird in diesem Fall geöffnet, was wie zu Schritt S2 beschrieben erfolgen kann. Hierauf folgt der bereits beschriebene Schritt S8 zur Einstellung der beiden seitlichen Blenden.

Wird hingegen im Schritt S12 festgestellt, dass die ideale Z-Position zu hoch für den verfügbaren Bauraum ist, so wird in Schritt S14 die hintere Blende auf die höchstmögliche Z-Position für eine beschnittfreie Einstellung analog zur Vorgehensweise in Schritt S13 eingestellt. Die vordere Blende wird in diesem Fall geöffnet. Hierauf folgt ebenfalls Schritt S8 zur Einstellung der seitlichen Blenden.

Damit sind alle verfügbaren Blenden bestmöglich eingestellt und das erfindungsgemäße Verfahren ist abgeschlossen.

Durch eine Anpassung der Beobachtungsapertur des abbildendem Systems, das heißt durch das leichte Verkleinern der abbildungsseitigen Apertur über die Einstellung der abbildungsseitigen vorzugsweise motorisierten Aperturblende über das entsprechende Bedienelement BMAB lässt sich in bestimmten Abbildungssituationen eine weitere Verbesserung des Kontrastes erzielen. Sofern die Aperturblende motorisiert und/oder mit dem Gesamtsystem vernetzt ist, lassen sich diese Einstellungen auch abspeichern und bei Bedarf wieder reproduzieren.

Anhand von Figur 22 wurde dargestellt, dass das Objektiv OBJ2 aus Figur 1 einen grundsätzlich anderen Kurvenverlauf aufweist, als die Objektive OBJ1 und OBJ3. Der Kurvenverlauf von Objektiv OBJ2 ist typisch für eine gewisse Anzahl weiterer Objektive OBJ.

Zur Verdeutlichung dieser Problematik sind in den Figuren P7 und P8 ausgehend von der Objektebene OE beziehungsweise von der Oberseite der transparenten Objektauflage TOA die Grenzlichtstrahlen eingezeichnet, die für die Beschreibung der Abbildung durch das dargestellte Objektiv OBJ2 besonders relevant sind.

Vom hinteren Objektfeldrand gehen die Lichtstrahlen H1, H2 und der mittlere Lichtstrahl HM aus, wobei die Lichtstrahlen H1 und H2 die theoretischen Aperturbegrenzungen des dargestellten Objektivs OBJ2 bei dem gerade wirksamen Zoomfaktor $\beta$ repräsentieren. Die Objektivapertur des Objektivs OBJ2 in den Figuren P7 und P8 ist NA2.

Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor $\beta$ kennzeichnen.

In den Figuren P7 und P8 ist erkennbar, dass die Leuchtfläche LFL der Lichtquelle LQ eine Ausdehnung LFLX in X-Richtung und LFLY in Y-Richtung hat. Für eine vignettierungsfreie homogene Abbildung über das dargestellte Objektiv OBJ2 bei dem gerade wirksamen Zoomfaktor $\beta$ werden aber nur die Leuchtflächenausdehnungen LX in X-Richtung und LY in Y-Richtung benötigt.

Die Darstellungen in den Figuren P7 und P8 beziehen sich auf einen motorisierten Zoomkörper MZK mit einem Objektiv OBJ2 gemäß Figur 1, wobei als aktueller Zoomfaktor $\beta$P2 gemäß Figur 22 wirksam ist.

In den Figuren P7 und P8 lässt sich gut erkennen, dass es im verfügbaren Bauraum keine zugängliche ideale Z-Blendenlage gibt, in die sich eine Blende BL mit einer Blendenkante BK gemäß Figur P7 sinnvoll anordnen ließe. Das Einschieben einer Blende in der X- oder der Y-Richtung würde wegen der hierdurch ausgeblendeten Lichtstrahlen zu einer Abdunkelung im entsprechenden Objektfeldbereich führen, das heißt die Beleuchtung würde aufgrund der einseitigen Ausleuchtung stark inhomogen werden. Beispielsweise würde das Einbringen einer Blende aus der positiven Y-Richtung zunächst die hinteren Lichtstrahlen H1, HM und H2 vollständig ausblenden, wodurch die hintere Begrenzung des Objektfeldes total abgedunkelt werden würde.

Das Problem der nichtzugänglichen Beleuchtungspupille wird durch die Verwendung eines Prismenfilmes für die Veränderung der Lichtverteilung umgangen.

Gekennzeichnet ist hier zusätzlich der Abstand ZHL von der Leuchtfläche LFL zur Objektebene OE beziehungsweise zur Oberseite der transparenten Objektauflage TOA.

Die Figur P10 zeigt die Ansicht aus Figur P8, wobei die zurückprojizierten Lichtstrahlen nicht dargestellt sind. Erfindungsgemäß sind Mittel zwischen der Lichtquelle LQ und der transparenten Objektauflage TOA vorgesehen, die das Beleuchtungslicht in eine andere Lichtverteilung überführen.

Im Abstand HPR von der Leuchtfläche LFL der Lichtquelle LQ befindet sich die Drehachse DAPR, um die ein Prismenfilm PR gedreht oder gekippt werden kann. Wegen des aktuellen Neigungswinkels $\varphi$ gegenüber der Objektebene OE lässt sich die wirksame Länge des Prismenfilms PRYL auch als Projektion auf die Objektebene OE bzw. auf die Y-Achse beschreiben. Der Anteil von PRYL auf die positive Y-Halbachse ist PRYP, der Anteil von PRYL auf die negative Y-Halbachse ist mit PRYN bezeichnet.

Figur P11 zeigt eine vergrößerte Detailansicht des Prismenfilms PR und verdeutlicht seine Wirkungsweise. Der in der optischen Achse OA eintretende Lichtstrahl STE trifft auf die Hauptflanke HF eines Mikroprismas PRM aus einer Mikroprismenstruktur PRS mit der Teilung TE sowie dem Prismenwinkel $\varepsilon$. Der Lichtstrahl verlässt den Prismenfilm PR als austretender Lichtstrahl STA unter einem Ablenkungswinkel $\delta$ gegenüber der optischen Achse OA, das heißt gegenüber seiner ursprünglichen Richtung als einfallender Strahl STE. Die Mikroprismen PRM haben jeweils auch eine Nebenflanke NF, die zusammen mit der Hauptflanke in der Praxis eine bestimmte Strahlumlenkung bewirkt. Mit der Neigung $\varphi$ des Prismenfilms PR verändern sich nicht nur der Ablenkungswinkel $\delta$ durch die über die Hauptflanke HF abgelenkten Strahlen STE, sondern auch die Lichtanteile zwischen der Hauptflanke HF und der Nebenflanke NF. Außerdem sind die Übergänge zwischen den Hauptflanken HF und den Nebenflanken NF jeweils durch sprunghafte Winkeländerungen gekennzeichnet, die ebenfalls vorteilhafte Kontrastierungseffekte bewirken.

Wegen der Vielzahl von benachbarten Mikroprismenstrukturen PRS gilt dieses Ablenkverhalten auch für parallel einfallende Lichtstrahlen.

Erfindungsgemäß lässt sich zum Beispiel ein Prismenfilm PR des Typs IDF II von der Firma 3M verwenden. Dieser besteht aus einem Trägermaterial TM, auf das eine Mikroprismenstruktur PRS aus Mikroprismen PRM aufgebracht ist, so dass sich eine Gesamtdicke von t ergibt. Mit dieser Anordnung beträgt bei einem Neigungswinkel $\varphi$ des Prismenfilms PR von 0° der Ablenkungswinkel $\delta$ von ca. 20°. Die Struktur des Prismenfilms setzt sich dabei in X-Richtung fort.

Zur Verdeutlichung der Funktion ist in Figur P12 die von der Firma 3M veröffentlichte gemessene Umlenkcharakteristik des IDF II-Prismenfilms PR dargestellt. Die vorab beschriebene Umlenkcharakteristik in Figur P11 gilt nur für die Haupt-Ausbreitungsrichtung STA des Beleuchtungslichtes unter der Voraussetzung eines senkrecht zur Leuchtfläche LFL orientierten einfallenden Lichtstrahls STE auf die allein wirkende Hauptflanke HF des Mikroprismas PRM aus der Mikroprismenstruktur PRS. Ausgehend von einer Lichtquelle LQ zeigt die Darstellung in Figur P12 über dem Winkel nach dem Prismenfilm zwei Intensitätskurven:

- die Lichtverteilung einer Lichtquelle LQ ohne Prismenfilm; Kurve: "Backlight",

- die Lichtverteilung derselben Lichtquelle LQ mit Orientierung der Ablenkung nach links; Kurve: "IDF II Left Directing"

Vorteilhafterweise wird der Prismenfilm PR so orientiert, dass die Ablenkung immer vom Benutzer weg geneigt ist, so dass eine Blendung ausgeschlossen werden kann. Dies entspricht gemäß Figur P10 einer Ablenkung in die YZ-Ebene mit positiven Halbachsen. In der Darstellung in Figur P12 wird deshalb auch nur eine Richtung betrachtet: die Orientierung der Ablenkung nach links; Kurve: "Left Directing".

Die Lichtverteilung für das umverteilte Beleuchtungslicht hat eine Haupt-Ausbreitungsrichtung STA, die von der ursprünglichen Haupt-Ausbreitungsrichtung des Beleuchtungslichts STE verschieden ist. Die Richtung der Mittenachse des Abbildungstrahlengangs OA weicht von der Richtung der Haupt-Ausbreitungsrichtung des umverteilten Beleuchtungslichts STA, das das Objekt durchscheint, um den Ablenkungswinkel $\delta$ ab. Dadurch wird eine einseitige Schräglichtbeleuchtung erreicht. Das heißt aus einer ursprünglich symmetrischen Lichtverteilung entsteht eine deutlich erkennbare asymmetrische Lichtverteilung. Die Lichtverteilung bewirkt keine grundsätzliche Einschränkung des Winkelspektrums gegenüber der ursprünglichen Haupt-Ausbreitungsrichtung des Beleuchtungslichts OA, sondern nur eine auf ein deutlich reduziertes Grundniveau GN abgesenkte Intensität in bestimmten Winkelbereichen und eine Lichtverstärkung im verbleibenden Winkelbereich zwischen der vorderen Begrenzung VOB und der hinteren Begrenzung HIB.

Die große maximale Differenz zwischen den verschiedenen Niveaus der Lichtintensität (MPR gegenüber GN) von dicht benachbarten Winkelbereichen (ab VOB bis etwa OA) führt in Kombination mit der Schräglichtbeleuchtung zu einer deutlich sichtbaren Kontrastverstärkung.

Außerdem bewirkt der Prismenfilm PR in einem relativ großen Winkelbereich durch die Umverteilung des Beleuchtungslichtes eine Lichtverstärkung LV gegenüber dem maximalen Niveau MLQ der Lichtintensität der Lichtquelle LQ ohne Prismenfilm PR. Das heißt, dass bestimmte Lichtanteile, die beim normalen Ausblenden vollständig verschwinden würden, durch die Umverteilung für eine Helligkeits- und Kontrastverstärkung genutzt werden. Das in allen relevanten Winkelbereichen mindestens vorhandene Grundniveau GN der Lichtintensität und die gute Durchmischung der Lichtstrahlen von verschiedenen Bereichen der Mikroprismenstruktur PRS sorgen für eine homogene Beleuchtung mit einer Durchlicht-Hellfeld-Charakteristik. Trotz der Umlenkung über den Prismenfilm PR durch Brechung führt die Durchmischung über verschiedene Bereiche der Mikroprismenstruktur PRS auch zu einer farblich homogenen Beleuchtung.

Angegeben ist in Figur P12 außerdem eine Plateaubreite PB der Lichtintensität des umverteilten Beleuchtungslichtes um die Haupt- Ausbreitungsrichtung STA zwischen den Plateaurändern PMI und PRA. Dabei bezeichnet PMI denjenigen Rand der Plateaubreite PB, der den kleineren Abstand zur ursprünglichen Haupt-ausbreitungsrichtung STE aufweist. Hingegen kennzeichnet PRA denjenigen Rand der Plateaubreite PB, der den größeren Abstand zur ursprünglichen Haupt-ausbreitungsrichtung STE aufweist. PB ist durch den Abfall bzw. Anstieg der Lichtintensität auf den Wert MLQ definiert.

Die zu Figur P12 beschriebenen Vorteile lassen sich in besonderer Weise erzielen, wenn der Prismenfilm PR so orientiert wird, dass die Mikroprismenstruktur PRS zur Lichtquelle LQ zeigt. Wenn die Mikroprismenstruktur PRS in Richtung der Objektebene OE orientiert ist, ergibt sich zwar auch eine mittlere Strahlablenkung, die etwa dem Winkel $\delta$ entspricht, allerdings gilt dann nicht mehr die Lichtverteilung gemäß Figur P12. Deshalb bezieht sich die erfindungsgemäße Anwendung des Prismenfilms PR vorteilhafterweise auf eine Orientierung der Mikroprismenstruktur PRS in Richtung der Lichtquelle LQ. In dieser Orientierung lässt sich mit dem Winkel $\varphi$ der Kontrast variieren, da sich hierdurch die Umlenkcharakteristik des Prismenfilms PR im nutzbaren Bereich ändert. Diese Änderung der Umlenkcharakteristik über den Winkel $\varphi$ ist sehr vorteilhaft, da sich erst hierdurch auch eine optimale Anpassung an verschiedene optische Abbildungssysteme, das heißt an verschiedene Kombinationen aus Objektiv OBJ und Zoomkörper MZK mit Zoomfaktor $\beta$, erreichen lässt. Praktische Versuche haben ergeben, dass die optimalen Einstellungen für den Winkel $\varphi$ für verschiedene optische Abbildungssysteme so unterschiedlich sind, dass eine einheitliche Einstellung mit einem festen Winkel $\varphi$ hierfür nachteilig wäre. Eine Kontrastverbesserung würde zwar erreicht, die Umlenkcharakteristik wäre aber noch nicht optimal.

In Figur P12 ist nur ein Winkelbereich von $\pm$ 60° dargestellt. Durch Versuche wurde festgestellt, dass mit einer Lichtquelle LQ, die im gesamten Winkelbereich von $\pm$ 90° Licht abstrahlt, bei erfindungsgemäßer Verwendung eines IDF II-Prismenfilms PR zusammen mit dieser Lichtquelle LQ auch in den beiden Randwinkelbereichen zwischen 60° und 90° jeweils noch eine gewisse Grundhelligkeit vorhanden ist.

Besonders gute Kontraste liefert eine intensitätsstarke Weißlicht-LED-Flächenleuchte mit einer gerichteten Beleuchtungscharakteristik, das heißt sie strahlt das Licht nicht gleichmäßig in alle Richtungen ab. Die Lichtintensität nimmt stattdessen mit zunehmender Abweichung von der senkrecht zur Leuchtfläche LFL orientierten Achse ab. Das gilt besonders für die Randbereiche. Dabei ergibt sich eine Lichtverteilung, die mit einem angegebenen Nennwert von $\pm$ 30° für den Winkelbereich der Lichtverteilung der Kurve "Backlight" in Figuren P7 und P8 (Lichtquelle ohne Prismenfilm PR) noch relativ ähnlich ist. Auch mit dieser Lichtquelle LQ ist bei erfindungsgemäßer Verwendung des Prismenfilms PR im gesamten Winkelbereich ± 90° mindestens eine gewisse Grundhelligkeit vorhanden. Dies wurde durch Versuche bestätigt.

Die Figuren P13 und P14 zeigen Möglichkeiten zur Beeinflussung der Ausgangsbeleuchtung zur weiteren Steigerung des Kontrasts. Hierzu sind jeweils nur die relevanten Seitenansichten von links dargestellt. Es gelten dieselben Bezugszeichen wie in den vorher beschriebenen Figuren.

In Figur P13 ist erkennbar, dass der in Y-Richtung wirksame Anteil LFLY der Leuchtfläche LFL durch eine hintere Blende BLQH und eine vordere Blende BLQV zusätzlich begrenzt wird. Die hintere Blende BLQH lässt sich in den Verschieberichtungen VBLH und VVH positionieren, so dass ihre Blendenkante BKH im Abstand HBH von der Leuchtfläche LFL und im Abstand VBYH von der optischen Achse OA angeordnet ist. Analog hierzu lässt sich die vordere Blende BLQV in den Verschieberichtungen VBLV und VVV positionieren, so dass ihre Blendenkante BKV im Abstand HBV von der Leuchtfläche LFL und im Abstand VBYV von der optischen Achse OA angeordnet ist. Dabei ist zu beachten, dass beide Blendenkanten BKH und BKV in Richtung der positiven Y-Halbachse liegen. Durch eine geeignete Positionierung der Blendenkanten BKH und BKV lässt sich die wirksame Beleuchtung so an die aktuelle optische Systemumgebung anpassen, dass eine deutlich sichtbare Kontrastverbesserung daraus resultiert.

Figur P14 zeigt eine abgewandelte Variante, in der auf eine der beiden verstellbaren Blenden verzichtet werden kann. In diesem Fall ist die hintere Blende BLQH entfallen. Stattdessen kann die Lichtquelle LQ in den Verschieberichtungen VHL und WL positioniert werden. Die hintere Kante der wirksamen Leuchtfläche LFL wirkt dabei als Blendenkante BLYP. LED-Flächenleuchten, die als Lichtquelle LQ verwendet werden können, haben üblicherweise ein Blechgehäuse, das mit der Leuchtfläche abschließt und somit als Blendenkante BLYP verwendbar ist. Zu beachten ist, dass sich mit einer Positionierung der Lichtquelle LQ in der Verschieberichtung WL auch der Abstand HBV von der Leuchtfläche LFL zur vorderen Blende BLQV ändert. Das heißt, dass dieser Abstand gegebenenfalls danach noch einmal korrigiert werden muss. Alle anderen Bezeichnungen und Funktionen entsprechen denen aus Figur P13.

Als dritte Ausführungsform ist aber auch ein Array von Lichtquellen in der Lichtquelle LQ denkbar, das selektiv an und ausgeschaltet wird, um die Blendeneffekte zu erzielen.

Figur P15 zeigt auf Basis von Figur P14 eine vereinfachte Möglichkeit zur Steigerung des Kontrasts mit Darstellung der entsprechenden Haupt-Ausbreitungsrichtungen des Beleuchtungslichts ausgehend von den wirksamen Blendenkanten BLYP (Beleuchtungs-Lichtstrahlen B1, B2, B3) und BKV (Beleuchtungs-Lichtstrahlen B4, B5, B6). Im Gegensatz zu Figur P14 wird auf eine Möglichkeit zur Positionierung der Lichtquelle LQ verzichtet, das heißt die Blendenkante BLYP ist ortsfest. Außerdem wird der Abstand HBV so klein wie konstruktiv vertretbar gewählt, so dass die vordere Blende BLQV beim Positionieren in der Verschieberichtung VBLV auf jeden Fall noch nicht an der Leuchtfläche LFL oder an benachbarten Gehäuseteilen der Lichtquelle LQ schleift. Dieser Abstand HBV kann konstruktiv fest voreingestellt werden, so dass eine Verschiebemöglichkeit der vorderen Blende BLQV senkrecht zur Leuchtfläche LFL entfallen kann. Somit wird die wirksame Leuchtfläche in Y-Richtung LFLY durch die vordere Blendenkante BKV und die Leuchtfeldbegrenzung BLYP in der Y-Richtung verkleinert.

Mit LLYN ist hier die Ausdehnung der Leuchtfläche LFL in negativer Y-Richtung angegeben und mit LLYP die Ausdehnung in positiver Y-Richtung.

Der Abstand von BLYP zur optischen Achse OA ist hier LLYP. Der Abstand von BKV zur optischen Achse OA ist VBYV. Zu beachten ist wieder, dass beide wirksamen Blendenkanten BLYP und BKV in Richtung der positiven Y-Halbachse liegen.

Aus den Beleuchtungslichtstrahlen B1 bis B6 werden die entsprechenden durch den Prismenfilm PR, der in der Richtung VPR verschiebbar ist, umgelenkten Beleuchtungslichtstrahlen BA1 bis BA6, wobei diese zur groben Orientierung nur die Hauptausbreitungsrichtung des Beleuchtungslichts nach dem Prismenfilm wiedergeben. In Figur P15 ist erkennbar, dass die zurückprojizierten Strahlen V1, VM, V2, M1, OA, M2, H1, HM, H2, die kennzeichnend sind für die Abbildung durch das Objektiv OBJ2 bei Benutzung des motorisierten Zoomkörpers MZK mit dem eingestellten Zoomfaktor β und der daraus resultierenden wirksamen Apertur NA2, innerhalb des Winkelbereichs liegen. Dieser Winkelbereich wird jeweils durch die beiden abgelenkten Beleuchtungslichtstrahlen aufgespannt, die aus den beiden Beleuchtungslichtstrahlen ausgehend von den beiden Blendenkanten BLYP und BKV resultieren.

Durch die zusätzlich wirksame Einengung der Leuchtfläche LFL lassen sich somit bestimmte Lichtanteile ausblenden, die überwiegend nicht nutzbares Streulicht verursachen oder darstellen. Dies wurde durch Versuche nachgewiesen. Dabei bleibt die durch die erfindungsgemäß zur Lichtquelle LQ zeigende Mikroprismenstruktur PRS kontraststeigernde Lichtverteilung mit einer minimalen Grundhelligkeit grundsätzlich erhalten. Das heißt auch die Ausblendung einzelner Lichtanteile führt nicht zu einer inhomogenen Beleuchtung und/oder zu Auflösungsverlusten.

Da sich die störenden Lichtanteile mit der optisch wirksamen Systemumgebung verändern können, ist es vorteilhaft, wenn sich zumindest die vordere Blende BLQV in der Verschieberichtung VBLV frei positionieren lässt.

Die Figuren P18 und P19 zeigen ein Ausführungsbeispiel für eine erfindungsgemäße Vorrichtung zur Durchlichtbeleuchtung DL in dem gemäß Figur 1 vom Benutzer aus gesehenen Rechtssystem also X-Achse nach rechts, Y-Achse nach hinten und Z-Achse nach oben, mit einer detaillierten Darstellung der Hebelmechanik. Es gelten weiterhin

dieselben Bezugzeichen.

Dieses Ausführungsbeispiel ist dadurch gekennzeichnet, dass die beiden Blenden/Schlitten-Systeme grundsätzlich erhalten bleiben, so dass das Kontrastverfahren mit der höhenverstellbaren Blende weiterhin benutzbar ist. Allerdings befindet sich in der Blende BLH nun das erfindungsgemäße Mittel zur Kontrastierung, also der erfindungsgemäße Prismenfilm PR. Die gesamte erfindungsgemäße Anordnung mit Prismenfilm PR entspricht der optischen Wirkungsweise, die vorab anhand der Figuren P10, P11, P12, P15 beschrieben wurde.

Mit der Änderung der Z-Koordinate ZBH der Blende BLH ändert sich auch der Winkel $\varphi$ zwischen dem Prismenfilm PR und der Objektebene OE, so dass der Prismenfilm PR erfindungsgemäß um eine Drehachse parallel zur Objektebene gekippt werden kann. Diese Drehachse heißt nun DAH. Sie ist aber hinsichtlich der Funktionsweise vergleichbar mit der vorab beschriebenen Drehachse DAPR, so dass der Schutzbereich dieser Anmeldung auch die Drehachse DAH umfasst.

In Figur P19 ist erkennbar, dass der Prismenfilm eine wirksame Länge PRYL hat. Zwischen dem Prismenfilm PRYL und der Blendenkante BH gibt es eine wirksame Blendenbreite WB. Diese ist vorzugsweise so dimensioniert, dass eine Abdeckung des Strahlquerschnitts noch möglich ist, ohne dass der Prismenfilm PRYL die Funktion eines Kontrastverfahrens, bei dem die Blendenkante in Abhängigkeit einer wirksamen Eintrittspupille in Richtung der optischen Achse positioniert wird, nennenswert stört.

Die beiden Blenden werden über je zwei Schlitten, nämlich SL3 und SL4 sowie SL5 und SL6, bewegt. Zur Erfassung der Position der Schlitten sind jeweils ein Positionssensor S3, S4, S5 und S6 sowie jeweils ein Positionshilfssensor S5H und S6H vorhanden. Durch Schaltfahnen SF3, SF4, SF5 und SF6 kann die Position der Schlitten zu den Positionssensoren S3, S4, S5 und S6 festgestellt werden.

In der in Figur P18 dargestellten Position der Schlitten werden die Positionssensor S3, S4, S5 und S6 nicht angesprochen und melden demgemäß "off".

Angegeben sind außerdem: mit D3 eine Drehachse für einen Hebel HEV, über den der Schlitten SL3 mit der Blende BLV verbunden ist, wobei sich die Drehachse D3 an der Verbindungsstelle zwischen dem Hebel HEV und dem Schlitten SL3 befindet, mit D4 eine Drehachse für den Hebel HEV an der Verbindung zur Blende BLV, mit D5 eine Drehachse für einen Hebel HEH, über den der Schlitten SL5 mit der Blende BLH verbunden ist, wobei sich die Drehachse D5 an der Verbindungsstelle zwischen dem Hebel HEH und dem Schlitten SL5 befindet, und mit D6 eine Drehachse für den Hebel HEH an der Verbindung zur Blende BLH.

LHH bezeichnet die Länge des hinteren Hebels HEH zwischen den Drehachsen D5 und D6. LHV kennzeichnet die Länge des vorderen Hebels HEV zwischen den Drehachsen D3 und D4.

Mit FS ist eine Führungsbahn einer Linearführung, z.B. über eine Führungsstange, gekennzeichnet. An der Führungsbahn FS sind die Schlitten SL3, SL4, SL5 und SL6 beweglich. Die Führungsbahn befindet sich an der Z-Koordinate ZF bezüglich der Objektauflage.

Die hintere Blende ist zur Variation des Kontrastes quer zur optischen Achse OA verschiebbar. Dies wird durch eine synchrone Bewegung der Schlitten SL5 und SL6 entlang der Verschieberichtung VBH beziehungsweise VBHH erreicht.

Entsprechendes gilt für die vordere Blende, wobei die Verschieberichtungen VBV und VBHV in Figur P18 angegeben sind.

Die Komponenten der Durchlichteinrichtung DL sind in einem Gehäuse G angeordnet.

Zudem sind in Figur P19 der Abstand AD3 zwischen der Führungsbahn FS und der Drehachse D3 sowie der Abstand AD5 zwischen der Führungsbahn FS und der Drehachse D5 angegeben. ADV kennzeichnet den Abstand zwischen der Führungsbahn FS und der Drehachse DAV, während mit ADH der Abstand zwischen der Führungsbahn FS und der Drehachse DAH gekennzeichnet ist. Weiterhin sind die Hebellänge AHH zwischen den Drehachsen DAH und D6 sowie die Hebellänge AHV zwischen den Drehachsen DAV und D4 angegeben.

YH und ZH (siehe auch die Figuren P16 und P17) kennzeichnen die momentane Y- und Z-Koordinate der hinteren Drehachse DAH, YBH benennt die momentane Y-Koordinate der hinteren Blendenkante BH, YBV bezeichnet die momentane Y-Koordinate der vorderen Blendenkante BV und YBV kennzeichnet die momentane Y-Koordinate der vorderen Blendenkante BV. YV und ZV benennen die momentane Y- und Z-Koordinate der vorderen Drehachse DAV.

Dargestellt ist zudem optional in eine Adapterplatte AP einlegbares Zubehör ZAP beziehungsweise die Schnittstelle hierfür. Bei dem Zubehör ZAP kann es sich beispielsweise um Polarisationsfilter, Einlegeblenden oder Farbfilter handeln.

Die Figuren P16 und P17 zeigen die Wirkungsweise der erfindungsgemäßen Einrichtung gemäß den Figuren P18 und P19, also bei Anwendung eines Kontrastverfahrens, bei dem eine Blendenkante in Richtung der optischen Achse zur Einstellung des Kontrasts positioniert wird, für die beiden verschiedenen Objektive OBJ1 und OBJ3. Dabei ist der in der Blende BLH integrierte Prismenfilm PR in dieser Anwendung optisch nicht wirksam. Es gelten weiterhin dieselben Bezugzeichen und Beschreibungen zu den vorab dargestellten Figuren.

In Figur P16 ist zudem der Höhenabstand HBH1 angegeben, welchen den Abstand von der Leuchtfläche LFL zur hinteren Blendenkante BH in der idealen Z-Blendenlage für das Objektiv OBJ1 am Zoomkörper MZK mit dem aktuellen Zoomfaktor β bezeichnet.

Entsprechend ist in Figur P17 mit HBV3 der Höhenabstand von der Leuchtfläche zur vorderen Blendenkante BV in der idealen Z-Blendenlage für das Objektiv OBJ3 am Zoomkörper MZK mit dem aktuellen Zoomfaktor β benannt.

In Figur P16 ist weiterhin mit LBH der Abstand zwischen der hinteren Blendenkante BH und dem Drehpunkt DAH der hinteren Blende BLH angegeben. Analog ist in Figur P17 mit LBV der Abstand zwischen der vorderen Blendenkante BV und dem Drehpunkt DAV der vorderen Blende BLV gekennzeichnet.

Die einstellbaren Z-Blendenkoordinaten der beiden Blenden/Schlitten-Systeme können auch unterschiedliche Bereiche der gesamten Einstellmöglichkeiten der Z-Blendenkantenkoordinaten abdecken, so dass der Bauraum zwischen ZDmin und ZDmax in zwei Bereiche aufgeteilt ist.

In einer anderen Variante können zumindest größere Teilbereiche oder der komplette Bauraum zwischen ZDmin und ZDmax von beiden Blenden benutzt werden, so dass in den gemeinsamen Bereichen wahlweise eine normale Blendenorientierung ohne Azimutwinkel oder eine gegenüber der normalen Azimutausrichtung invertierte, das heißt um 180° gedrehte, Blendenorientierung einstellbar ist.

Ein Bild, das durch den rechten Kanal R des Objektivs OBJ2 mit Anordnung gemäß den Figuren P7 und P8 aufgenommen wurde, bei dem sich kein erfindungsgemäßes Mittel zur Kontrastverstärkung zwischen der Lichtquelle LQ und der Objektebene OE befindet und bei dem als Objekt OB ein Zebrafisch-Präparat mit Trägerglas verwendet wird, ist relativ kontrastarm, es sind kaum Strukturen und/oder Phasenobjekte erkennbar.

Wenn man mit demselben Objekt OB und derselben optisch wirksamen Objektiv-Zoomkörper-Kombination aus Objektiv OBJ2, Zoomkörper MZK mit Zoomfaktor β weitere Bilder aufnimmt, lassen sich diese Bilder direkt miteinander vergleichen.

Ein Bild des Objekts, bei dem eine handelsübliche VisiLED-HCT-Basis, die mit einer nur in der Y-Richtung verschiebbaren Blende in einer festen Z-Koordinate arbeitet, zur Beleuchtung verwendet wurde, ist stark inhomogen. Nur in einer Übergangszone zwischen einem unteren dunklen und einem oberen hellen Bildbereich hat sich der Kontrast gegenüber dem Bild, welches ohne erfindungsgemäße Mittel zur Kontrastverstärkung aufgenommen wurde, verbessert.

Bei einem Bild, für welches die erfindungsgemäße Einrichtung mit einem Strahlengang wie in den Figuren P10, P11, P12, P18, P19 gezeigt, zur Beleuchtung verwendet wurde und wobei die in den Figuren P18 und P19 dargestellte Blende BLV vollständig aus dem Strahlengang gefahren wurde, so dass sie während der Kameraaufnahme nicht wirksam war, ist das Bild noch immer homogen. Gegenüber dem Bild, welches ohne erfindungsgemäße Mittel zur Kontrastverstärkung aufgenommen wurde, hat sich der Kontrast aber deutlich verbessert.

Erreicht wurde dies durch das folgende Einstellverfahren:
Die Blende BLH aus den Figuren P18 und P19 wird so positioniert, dass der Prismenfilm PR vorzugsweise ohne Beschnitt durchstrahlt wird. Anschließend wird die Z-Koordinate ZBH so variiert, dass der Kontrast einen Maximalwert annimmt.

Bei einem Bild des Objekts, bei dem die erfindungsgemäße Einrichtung mit einem Strahlengang wie in den Figuren P10, P11, P12, P15, P18, P19 zur Beleuchtung verwendet wird und wobei die in den Figuren P18 und P19 dargestellte Blende BLV nun während der Kameraaufnahme wirksam war, ist das Bild noch immer homogen. Gegenüber dem Bild, welches ohne erfindungsgemäße Mittel zur Kontrastverstärkung aufgenommen wurde, hat sich der Kontrast aber extrem verbessert.

Erreicht wurde dies durch das folgende Einstellverfahren:
Die Blende BLH aus den Figuren P18, P19 wird so positioniert, dass der Prismenfilm PR vorzugsweise ohne Beschnitt durchstrahlt wird. Anschließend wird die Z-Koordinate ZBH so variiert, dass der Kontrast einen Maximalwert annimmt.

Danach wird die Blendenkante BV mit konstanter Z-Koordinate ZBV = ZDmin aus der negativen Y-Richtung so in den Strahlengang gebracht, bis eine farbige Vignettierung am Bildrand sichtbar wird. Anschließend wird die Z-Koordinate ZBH erneut so variiert, dass der Kontrast einen Maximalwert annimmt und die Blende BV mit konstanter Z-Koordinate ZBV = ZDmin so weit wieder aus dem Strahlengang gefahren, bis die Vignettierung im Bild nicht mehr sichtbar ist.

Mit der Vorrichtung und dem Verfahren gemäß dem zweiten Aspekt der Erfindung wird ein Verfahren zur Durchlichtbeleuchtung bereitgestellt, das besonders zur Ausleuchtung von kontrastarmen Durchlichtobjekten an Stereomikroskopen und Makroskopen geeignet ist. Außerdem werden Anwendungen dieses Verfahrens in Durchlichteinrichtungen beschrieben. Durch die Erfindung wird ein kostengünstiges Durchlicht-Hellfeld-Beleuchtungsverfahren bereitgestellt, das besonders zur Ausleuchtung von kontrastarmen Durchlichtobjekten in den kleineren Übersichtsvergrößerungen an Stereomikroskopen und Makroskopen geeignet ist. Das Verfahren liefert eine sehr homogene Ausleuchtung, schränkt das Auflösungsvermögen nicht wesentlich ein und stellt ausreichende Beleuchtungsintensitäten zur Verfügung. Es ist außerdem auch bei geringerer Bauhöhe der Durchlichteinrichtung ohne sichtbare Störungen einsetzbar und eignet sich vorzugsweise für Objektive, deren ideale Z-Blendenlagen in einem größeren Abstand von der Objektauflage entfernt und/oder gegebenenfalls darüber liegen. Das erfindungsgemäße Beleuchtungsverfahren ist darüber hinaus mit anderen Beleuchtungsverfahren, die für zugängliche ideale Z-Blendenlagen geeignet sind, kombinierbar, so dass alle Beleuchtungsverfahren in einer einzigen Durchlichteinrichtung anwendbar sind. Schließlich sind die günstigsten Beleuchtungseinstellungen auch für ungeübte Benutzer leicht einstell- und reproduzierbar. Das Verfahren eignet sich außerdem auch für kostengünstige Objektiv-Zoomkörper-Kombinationen, die keine auskorrigierten und über den Zoombereich feststehenden Pupillenebenen besitzen und nicht zwingend für polarisationsoptische Verfahren nutzbar sein müssen.

Figur A6 zeigt eine tabellarische Übersicht über verschiedene Abbildungssysteme mit Strahlengängen, den Strahlpositionen in der Eintrittsebene des Objektivs sowie Strahlpositionen und Strahlabmessungen in einer Ebene der Leuchtfläche. Die Mikroskoptypen unterscheiden sich durch ihre Abbildungssysteme, welche bezüglich der Objektive unterschiedlich angeordnete Beobachtungskanäle haben.

Mit speziellen Objektivwechslern können bei den stereoskopischen Beobachtungssystemen die Objektive so eingestellt werden, dass zwischen 3D-Beobachtung und 2D-Beobachtung gewechselt werden kann.

In der ersten Zeile der Tabelle sind verschiedene Abbildungssysteme, nämlich Discovery 3D, Discovery 2D, Lumar 3D, Lumar 2D und AxioZoom 2D, angegeben.

Dabei bezeichnet Discovery 3D ein Stereomikroskop mit einem linken Kanal L und einem rechten Kanal R, wobei beide Kanäle L, R benutzt und ausgeleuchtet werden müssen.

Discovery 2D bezeichnet ein Stereomikroskop mit einem linken Kanal L und einem rechten Kanal R, wobei das Objektiv vor den rechten Kanal R gebracht wird, so dass nur der rechte Kanal R auszuleuchten ist.

Unter Lumar 3D soll ein Fluoreszenz-Stereomikroskop mit einem linken Kanal L und einem rechten Kanal R verstanden werden, wobei beide Kanäle L, R gegenüber der Objektmitte nach vorn versetzt sind, damit ein dritter, nicht dargestellter Kanal zur Fluoreszenzanregung ebenfalls das Objektiv durchstrahlen kann. Hier sind also beide Kanäle L und R auszuleuchten.

Mit Lumar 2D wird ein Fluoreszenz-Stereomikroskop mit einem linken Kanal L und einem rechten Kanal R bezeichnet, bei dem ebenfalls beide Kanäle gegenüber der Objektmitte nach vorn versetzt sind, so dass ein dritter, nicht dargestellter Kanal zur Fluoreszenzanregung das Objektiv durchstrahlen kann. Dabei wird allerdings nur der rechte Kanal zur Beobachtung benutzt. Das heißt, nur der rechte Kanal R ist auszuleuchten.

Schließlich bezeichnet AxioZoom 2D ein Makroskop mit einem Kanal, das heißt nur dieser eine Kanal ist auszuleuchten.

Die Spalten zwei bis sechs der Tabelle in Figur A6 geben die oben genannten Abbildungssysteme an. Die erste Spalte gibt Auskunft über den Tabelleninhalt zu den verschiedenen Abbildungssystemen.

In der zweiten Zeile sind die Vorderansichten mit dem prinzipiellen Strahlengang zu den Abbildungssystemen erkennbar, wobei nur die Hauptstrahlen eingetragen sind. Zur Orientierung dient ein XYZ-Koordinatensystem. Die Lichtstrahlen gehen von einer Leuchtfläche LFL aus und durchlaufen eine Blendenebene, eine Objektebene OE, an welcher sich eine zu untersuchende Probe befinden kann, und ein Objektiv OBJ. Dieses ist durch zwei symbolische Hauptebenen angedeutet.

In der dritten Zeile sind die Draufsichten, also von oben durch das Objektiv OBJ gesehen, mit den prinzipiellen Strahlengängen zu den Abbildungssystemen gezeigt. Dargestellt sind nur die abbildungsseitig genutzten Hauptstrahlen. Diese sind als fette Kreise abgebildet und stellen Beleuchtungsschwerpunkte dar. In dieser Zeile sind die Lagen der abbildungsseitigen Hauptstrahlen in der XY-Ebene verdeutlicht. Für die Abbildungssysteme Discovery 3D, Discovery 2D und AxioZoom 2D liegen die Beleuchtungsschwerpunkte auf der X-Achse. Hingegen sind für die Abbildungssysteme Lumar 3D und Lumar 2D die Beleuchtungsschwerpunkte nach vorne versetzt und liegen somit nicht auf der X-Achse. Zudem ist erkennbar, dass die Abbildungssysteme, bei denen zwei Kanäle auszuleuchten sind, also Discovery 3D und Lumar 3D, zwei Beleuchtungsschwerpunkte aufweisen, während die übrigen Abbildungssysteme mit bloß einem auszuleuchtenden Kanal nur einen Beleuchtungsschwerpunkt haben.

In der untersten Zeile sind die Draufsichten, das heißt von oben direkt auf die Leuchtfläche LFL gesehen, mit der prinzipiell erforderlichen Leuchtfläche LFL zur vollständigen Ausleuchtung für die entsprechenden Abbildungssysteme gezeigt. Die genutzten Hauptstrahlen als Beleuchtungsschwerpunkte sind durch fette Kreise dargestellt. Die Einkreisungen um diese Hauptstrahlen kennzeichnen die wirksamen Anteile der Leuchtfläche. Erfindungsgemäß soll die Leuchtfläche LFL außerhalb der Einkreisungen durch Blenden abgedeckt werden. Dadurch wird das Eintreten von Streulicht in das Objektiv OBJ reduziert und der Kontrast wird verbessert. Die Einkreisungen um die Hauptstrahlen können durch eine Rückprojektion der Abbildungsrandstrahlen analog zu den Figuren 3 bis 7 ermittelt werden.

In Figur A7 ist eine Tabelle mit verschiedenen Blendenformen gezeigt, die für die zuvor beschriebenen Abbildungssysteme geeignet sind.

Die dargestellten Blendenformen können erfindungsgemäß mit einer oder vorzugsweise mehreren Blenden realisiert werden. Zum Reduzieren von unerwünschtem Streulicht werden die Blenden in der Blendenebene, die in der zweiten Zeile von Figur A6 gezeigt ist, angeordnet.

In der zweiten Zeile der Tabelle von Figur A7 sind Draufsichten, also Ansichten von oben auf die Blendenebene, mit dem prinzipiellen Strahlengang zu den Abbildungssystemen gezeigt. Der Strahlengang wird durch die fetten Kreise verdeutlicht. Zudem ist die jeweils ideale Blendenform zur Streulichtreduzierung dargestellt. Diese idealen Blendenformen sind unter anderem von der idealen Größe der Leuchtfläche LFL aus Figur A6 abhängig.

In der dritten Zeile der Tabelle von Figur A7 sind die Draufsichten mit dem prinzipiellen Strahlengang zu den Abbildungssystemen dargestellt. Dabei ist jeweils eine angenäherte Blendenform zur Streulichtreduzierung gezeigt.

EP 2 758 823 B1

Diese Blendenformen lassen sich erfindungsgemäß durch eine Kombination einer Irisblende mit zwei Blenden, welche jeweils eine linear verlaufende Blendenkante aufweisen, realisieren. Die Irisblende und die beiden Blenden mit linearer Blendenkante können in der XY-Ebene unabhängig voneinander verschoben werden. Die beiden linearen Blendenkanten verlaufen bevorzugt parallel zu einer Verbindungsrichtung der beiden auszuleuchtenden Kanäle L und R. Hiermit kann die ideale Blendenform aus der zweiten Zeile sehr gut angenähert werden.

In der vierten Zeile der Tabelle von Figur A7 sind wiederum die Draufsichten mit dem prinzipiellen Strahlengang zu den Abbildungssystemen gezeigt. Hier ist eine weiter vereinfachte Blendenform zur Streulichtreduzierung dargestellt. Diese Blendenformen lassen sich erfindungsgemäß durch eine Kombination von vier Blenden mit jeweils einer linear verlaufenden Blendenkante realisieren. Diese vier Blenden sind wiederum in der XY-Ebene unabhängig voneinander verschiebbar.

In Figur A8 sind schematisch vier Blenden einer erfindungsgemäßen Vorrichtung gezeigt. Die Positionierung der Blenden ist an das Abbildungssystem Lumar 2D angepasst, das heißt, die vereinfachte Blendenform aus der untersten Zeile, fünfte Spalte aus Figur A7 ist eingestellt.

Die vier Blenden umfassen eine linke Blende BLL mit einer linearen Blendenkante BKL, eine rechte Blende BLR mit einer linearen Blendenkante BKR, eine vordere Blende BLV mit einer linearen Blendenkante BV und eine hintere Blende BLH mit einer linearen Blendenkante BH. Zwischen diesen wird ein Rechteck freigelassen, in welchem der Beleuchtungsschwerpunkt BS liegt. Dieser ist gegenüber der positiven Halbachse des XYZ-Koordinatensystems in einem Azimutwinkel AZ angeordnet.

Durch Verschieben der vier Blenden in der XY-Ebene können auch die übrigen Blendenformen aus der untersten Zeile der Tabelle von Figur A7 eingestellt werden.

Figur A9 zeigt eine schematische Perspektivdarstellung von vier Blenden BLL, BLR, BLV und BLH einer erfindungsgemäßen Vorrichtung. Unterhalb der Blenden ist eine Lichtquelle LQ mit einer Leuchtfläche LFL vorhanden. Oberhalb der Blenden befindet sich die transparente Objektauflage TOA, welche die Objektebene OE darstellt.

Die Blenden BLL, BLR, BLV und BLH weisen je eine lineare Blendenkante BKL, BKR, BV und BH auf, so dass die vereinfachten Blendenformen aus der vierten Zeile der Tabelle von Figur A7 eingestellt werden können. BKL bezeichnet dabei die linke Blendenkante und BKR entsprechend die rechte Blendenkante. In der abgebildeten Positionierung der vier Blenden ist die Blendenform an das Abbildungssystem Lumar 2D angepasst. Wie in der vierten Spalte in Figur 7 dargestellt ist, wird für das Abbildungssystem AxioZoom 2D ein Freiraum zwischen den vier Blenden eingestellt, welcher quadratisch ist und auf welchem der Beleuchtungsschwerpunkt BS liegt.

Um Größe und Position des Freiraums zwischen den vier Blenden für das jeweilige Abbildungssystem einstellen zu können, sind die Blenden in der XY-Ebene verschiebbar.

Erfindungsgemäß sind die Blenden bevorzugt nicht nur in der XY-Ebene zur Reduzierung des Streulichts einstellbar, sondern auch in der Z-Richtung verstellbar. Hierdurch können die vorstehend genannten Vorteile erreicht werden.

Bedeutsam sind in Figur A9 außerdem folgende Bezugsziffern: VBH: Verschieberichtung der hinteren Blende; VBL: Verschieberichtung der linken Blende; VBR: Verschieberichtung der rechten Blende sowie VBV, welches eine Verschieberichtung der vorderen Blende bezeichnet. ZH bezeichnet in Figur A9 die Z-Koordinate der hinteren Drehachse DAH. Mit ZL beziehungsweise ZR sind in Figur A9 die Z-Koordinaten der linken beziehungsweise der rechten Blendenkante gekennzeichnet. ZV schließlich bezeichnet die Z-Koordinate der vorderen Drehachse DAV.

Erfindungsgemäß kann vorgesehen sein, dass abhängig vom eingestellten Abbildungssystem automatisch eine vordefinierte Blendenform eingestellt wird. Bei einem Wechsel von 2D- zu 3D-Beobachtung ändert sich beispielsweise die Blendenform ohne weiteres Zutun eines Benutzers. Die vordefinierten Blendenformen sind dabei durch die jeweiligen Positionen der verfügbaren Blenden festgelegt.

Erfindungsgemäß kann ein Kontrastmodus "Azimut" auswählbar sein. In diesem ist die Form einer Öffnung zwischen den Blenden fest, aber die XY-Position der Öffnung kann verändert werden. Hiermit sind verschiedene Kontraste bei der Beobachtung möglich.

Die Blenden müssen erfindungsgemäß nicht in derselben Z-Ebene liegen. Im dargestellten Beispiel sind die vier Blenden in Z-Richtung zueinander versetzt. Die Blendenkante BV der untersten Blende BLV und die Blendenkante BH der obersten Blende BLH sind zudem höhenverstellbar. Hierzu können diese um eine vordere Drehachse DAV beziehungsweise eine hintere Drehachse DAH gedreht werden. Für die rechte und linke Blende ist keine Höhenverstellung vorgesehen.

Die kostengünstigste Idealform ist eine lineare Blendenkante BK, da sie sich ohne größeren Aufwand leicht herstellen lässt. Leicht gekrümmte Blendenkanten BK lassen sich prinzipiell auch einsetzen, allerdings verändern sich dann mit der Kippung der Blende BL bei feststehender XYZ-Koordinate eines einzelnen Punktes auf der Blendenkante BK mit zunehmender Entfernung von diesem Punkt entlang der Blendenkante BK auch die Y- und die Z-Werte, was praktisch schlecht beherrschbar ist. Krümmungen der Blendenkante BK, die im Bereich der üblichen Fertigungstoleranzen liegen und/oder die noch nicht zu sichtbaren Inhomogenitäten führen, spielen hierbei keine Rolle.

Weiterhin ist es möglich, ein pixelweise schaltbares Array wie zum Beispiel ein LCD-Array als höhenverstellbare Blende zu verwenden. Diese Ausführung hat den Vorteil, dass sich das Transmissionsmuster der Blende an die Pupillenform anpassen lässt. Darüber hinaus sind auch andere Muster vorteilhaft. Die Umkehr der Blendenkante, also ein Umschalten auf eine um 180° versetzte oder verdrehte Blendenkante, ist dann beispielsweise durch elektronische Ansteuerung zu realisieren. Auch eine Rotation der Blende ist möglich. Nicht zuletzt ist auch ein schneller Wechsel des Transmissionsmusters zu verschiedenen Formen hin möglich, die oberhalb der Flimmerfrequenz des Auges, ca. 50 Hz, einen gemischten Kontrasteffekt hervorrufen.

In den Figuren 31 bis 35 sind schematisch Zustände eines als Blende einzusetzenden Flüssigkristall-Arrays 20 dargestellt.

Figur 31 zeigt eine Situation, in welcher alle Pixel des Flüssigkristall-Arrays 20 auf undurchlässig gestellt sind. In Figur 32 ist ein zentraler Bereich 22 des Flüssigkristall-Arrays 20 transparent. Hiermit kann eine runde Blendenform angenähert werden. In Figur 33 ist eine Situation mit zwei transparenten Bereichen 24 dargestellt. Dies ist für einen Mikroskoptyp mit zwei deutlich voneinander getrennten Kanälen geeignet. Die Figuren 34 und 35 schließlich zeigen Fälle, in welchen jeweils eine Hälfte des Flüssigkristall-Arrays 20 auf undurchlässig und die andere Hälfte auf transparent gestellt ist. Dadurch werden Blendenkanten 26, 28 gebildet, die für die erfindungsgemäße Vorrichtung und das erfindungsgemäße Verfahren nutzbar sind. Mit dem Flüssigkristall-Array 20 können vorteilhafterweise sehr gute Annäherungen an die idealen Blendenformen, die in der Tabelle aus Fig. A7 dargestellt sind, erreicht werden.

Figur E9 zeigt beispielhaft die ermittelten Kurven Kh1, Kh2o mit Kh2u und Kh3 für die idealen Z-Blendenlagen Zh zu den drei Objektiven OBJ1, OBJ2 und OBJ3 aus Figur 1 abhängig vom Zoomfaktor β des verwendeten motorisierten Zoomkörpers MZK bezogen auf das XYZ-Koordinatensystem, dessen Ursprung in der Objektebene OE liegt. Die Kurven beginnen jeweils beim kleinsten Zoomfaktor βmin und enden beim größten Zoomfaktor βmax des verwendeten Zoomkörpers MZK aus Figur 1.

Mit f2(1), f2(2) bis f2(13) sind ideale Blendenposition in Z-Richtung für Vergrößerungen β1, β2 bis β13 angegeben, welche mit dem Objektiv OBJ2 am motorisierten Zoomkörper MZK bestimmt worden sind.

Ohne Probenauflagetisch liegen die idealen Z-Blendenlagen der beiden Kurven Kh1 und Kh3 der entsprechenden Objektive OBJ1 und OBJ3 bei typischer Kurvenform im XYZ-Koordinatensystem zwischen ZDmin und ZDmax, der dem Bereich entspricht, in dem eine höhenverstellbare Blende konstruktiv realisierbar ist. Diese Grenzen kennzeichnen also den innerhalb der erfindungsgemäßen Kontrasteinrichtung DL nutzbaren Bauraum für das erfindungsgemäße Kontrastverfahren. Die oberste Blendenposition ZDmax ergibt sich bei normaler Anwendung durch die transparente Objektauflage TOA in der Durchlichteinrichtung DL. Die Blende darf die transparente Objektauflage TOA von unten auf keinen Fall berühren. Die unterste Blendenposition ZDmin resultiert aus der begrenzten Bauhöhe HER der Durchlichteinrichtung DL in Figur 1, die aus Ergonomiegründen unterhalb einer bestimmten Höhe bleiben muss. Das Gehäuse der Durchlichteinrichtung DL aus Figur 1 hat eine Höhe HER von ca. 100mm. Höher sollte eine Durchlichteinrichtung DL ohne weiteres Zubehör nicht sein.

Die minimalen idealen Z-Blendenlagen der Kurven Kh1 und Kh3 heißen Zh1min und Zh3min. Entsprechend heißen die maximalen idealen Z-Blendenlagen dieser Kurven Zh1max und Zh3max. Die minimale ideale Z-Blendenlage des oberen Kurvenabschnitts Kh2o ist mit Kh2omin gekennzeichnet und die maximale ideale Z-Blendenlage des unteren Kurvenabschnitts Kh2u mit Kh2umax.

Das Objektiv OBJ2 aus Figur 1 hat einen grundsätzlich anderen Kurvenverlauf, der typisch ist für bestimmte Objektive OBJ. In Figur E9 ist erkennbar, dass die Kurve für das Objektiv OBJ2 aus zwei Kurvenabschnitten Kh2o und Kh2u besteht. Zwischen diesen Kurvenabschnitten gibt es beim Zoomfaktor βP2 eine Polstelle, das heißt hier springt der Kurvenverlauf vom oberen Kurvenabschnitt Kh2o von plus Unendlich zum unteren Kurvenabschnitt Kh2u nach minus Unendlich.

Die minimalen und maximalen idealen Z-Blendenlagen der Kurvenabschnitte Kh2u und Kh2o, das heißt Zh2min und Zh2max, befinden sich somit im Unendlichen oder liegen praktisch so weit weg, dass die entsprechende ideale Z-Blendenlage konstruktiv nicht mehr eingestellt werden kann. Im oberen Kurvenabschnitt Kh2o ist die ideale Z-Blendenlage sowieso nicht erreichbar, da die Blende BL mit der Blendenkante BK oberhalb der Objektebene OE angeordnet werden müsste. Im unteren Kurvenabschnitt Kh2u lässt sich die ideale Z-Blendenlage erst ab dem Zoomfaktor βG2 sicherstellen, dann befindet sie sich gerade in der Grenzstellung ZDmin. Somit lässt sich das beschriebene Kontrastierungsverfahren zwischen den Zoomfaktoren βmin und βG2 nicht mit allen Vorteilen anwenden, hierfür ist vorzugsweise ein anderes geeignetes Kontrastierungsverfahren zu ermitteln.

Zudem sind in Figur E9 optimale Blendenpositionen für ein Mikroskopsystem dargestellt, bei welchem auf die Vorrichtung zur Durchlichtbeleuchtung DL ein Probenauflagetisch KT aufgesetzt ist. Ein solches Mikroskopsystem wird zunächst mit Bezug auf Figur E10 beschrieben.

Figur E10 zeigt eine Perspektivansicht eines erfindungsgemäßen Mikroskopsystems mit einem Lichtmikroskop und einer erfindungsgemäßen Vorrichtung zur Durchlichtbeleuchtung. Die dargestellten Komponenten entsprechen denen aus Figur 1, wobei jedoch zusätzlich auf der Durchlichteinrichtung DL ein Probenauflagetisch KT oder kurz Tisch KT aufgesetzt ist. Es gelten hier die entsprechenden Bezugszeichen aus Figur 1.

Der Tisch KT stellt zusätzlichen Bauraum für Zubehör bereit. Beispielsweise kann innerhalb des Tischs KT eine Ringleuchte eingesetzt werden. Im Vergleich zur Lichtquelle LQ kann mit der Ringleuchte die Probe unter einem sehr großen Neigungswinkel beleuchtet werden, wodurch eine Dunkelfeld-Beobachtung besonders effektiv möglich ist.

Zum Montieren des Tischs KT an die Vorrichtung zur Durchlichtbeleuchtung weist diese Montagemittel auf, beispielsweise eine Form mit Ausnehmungen, in welche ein unterer Bereich des Tischs KT eingreift.

Durch den zusätzlichen Tisch KT verlagert sich die Objektebene OE von der Ebene E in die Ebene ET, das heißt um den Abstand HT nach oben. Da der Ursprung des XYZ-Koordinatensystems definitionsgemäß in der Objektebene OE liegt, verschiebt sich der Ursprung des XYZ-Koordinatensystems in Figur E10 gegenüber Figur 1 somit ebenfalls um den Abstand HT nach oben, das heißt in Richtung positiver Z-Werte.

In dem Diagramm aus Figur E9 zur idealen Blendenlage bedeutet dies, dass sich ohne weitere Maßnahmen der nutzbare Bauraum um denselben Betrag HT nach unten verlagert, das heißt in Richtung negativer Z-Werte. Bezogen auf das alte XYZ-Koordinatensystem gemäß Figur 1 bleiben die Grenzen ZDmin und ZDmax für den innerhalb der erfindungsgemäßen Vorrichtung zur Durchlichtbeleuchtung DL nutzbaren Bauraum erhalten. Die Koordinaten dieses nutzbaren Bauraums sind mit Tisch KT im neuen XYZ-Koordinatensystem gegenüber dem Koordinatensystem aus Figur 1 ohne Tisch um HT nach unten verschoben. Die mögliche unterste ideale Z-Blendenlage ist mit Tisch also ZDTmin statt ZDmin ohne Tisch und die mögliche oberste ideale Z-Blendenlage ist mit Tisch ZDTmax statt ZDmax ohne Tisch.

Dadurch verändert sich unter Umständen auch die Anwendbarkeit des erfindungsgemäßen Kontrastverfahrens. Für dieses sind nur diejenigen Kurvenbereiche der Kurven Kh1, Kh2o, Kh2u und Kh3 nutzbar, die im oben genannten nutzbaren Bauraum liegen, das heißt in einem Bereich, in dem sich die Einstellung der idealen Z-Blendenlage konstruktiv realisieren lässt.

Der Bauraum innerhalb des Tischs KT, also der Z-Wertebereich zwischen ZDTmax und ZDmax, soll möglichst auch für die Blende nutzbar sein. Eine zu diesem Zweck ausgestaltete erfindungsgemäße Vorrichtung zur Durchlichtbeleuchtung wird im Folgenden mit Bezug auf Figur E11 beschrieben.

Figur E11 zeigt ein Ausführungsbeispiel einer erfindungsgemäßen Vorrichtung zur Durchlichtbeleuchtung DL. Diese ist in dem gemäß Figur 1 vom Benutzer aus gesehenen Rechtssystem, also X-Achse nach rechts, Y-Achse nach hinten, Z-Achse nach oben dargestellt. Die Vorrichtung DL weist eine Blende BLH mit einer linear in der X-Richtung verlaufenden Blendenkante BH auf. Die Blende BLH ist zwischen einer Lichtquelle LQ, deren Leuchtfläche LFL parallel zur XY-Ebene im negativen Z-Halbraum angeordnet ist, und der Objektebene OE angeordnet. Die Objektebene OE, an welcher sich eine zu untersuchende Probe befinden kann, bildet den Koordinatenursprung.

Die Blende BLH ist um eine Drehachse DAH, die parallel zur Blendenkante BH orientiert ist, an einem ersten Schlitten drehbar angeordnet, so dass die Blende BLH mit Blendenkante BH mitsamt der Drehachse DAH entlang einer Führungsbahn des ersten Schlittens in der Y-Richtung verschoben werden kann. Das verwendete Objektiv OBJ1 weist prinzipiell den Strahlengang aus Figur 3 auf. Es gelten weiterhin die Zusammenhänge, die bereits zu den Figuren 3 bis 24 beschrieben worden sind. Allerdings ist die entlang der Führungsbahn bewegliche Blende BLH für eine übersichtlichere Darstellung so weit in die negative Y-Richtung verschoben, dass sie in den Strahlquerschnitt aller zurückprojizierten Randstrahlen eingreift. Selbstverständlich lässt sich mit dieser erfindungsgemäßen Anordnung die Blendenkante BH in Y-Richtung auch an jeden Strahlquerschnitt anpassen, so dass die Blendenkante BH erfindungsgemäß wirken kann.

Die Blendenkante BH kann zur Homogenisierung der Beleuchtung über eine Bewegung der beiden Schlitten in der Y-Richtung mit überlagerter Relativbewegung der beiden Schlitten auch ohne Änderung der X- und Y-Blendenkoordinaten in eine Z-Blendenkoordinate gebracht werden, in der sie optimal an das aktuell wirksame Abbildungssystem, das einen Zoomkörper MZK mit dem aktuellen Zoomfaktor $\beta$ und ein Objektiv OBJ1 umfasst, angepasst ist. Das ist durch eine hinreichend homogene Ausleuchtung erkennbar. Die Blendenkante lässt sich dabei durch die synchrone Bewegung der beiden Schlitten entlang der Y-Richtung, das heißt parallel zur Objektebene OE, ebenfalls in der Y-Richtung und ohne Änderung der X-und Z-Blendenkoordinaten bewegen. Dadurch kann die Kontraststärke der Beleuchtung einstellbar werden.

Die Vorrichtung zur Durchlichtbeleuchtung DL weist außerdem Montagemittel für einen optionalen Tisch KT auf. Im dargestellten Beispiel ist mit diesen ein Tisch KT auf dem Gehäuse G der Vorrichtung zur Durchlichtbeleuchtung montiert. Die obere Gehäusewand G, das heißt die der Lichtquelle LQ gegenüberliegende Gehäusewand, weist eine Vertiefung als Halteeinrichtung für eine Probe in Höhe der Ebene E auf. Mit montiertem Tisch wird eine Halteeinrichtung TOA durch den Tisch KT in Höhe der Ebene ET bereitgestellt. Durch die spezielle Ausführung der Schlittenmimik ist die Blende BLH über die Ebene E der ursprünglichen Objektauflage hinaus in den Bauraum unterhalb des Tisches KT bewegbar. Typische Kurvenverläufe des Endes der Blendenkante BH bei reiner Rotation um DAH sind als Linien d-c, q-n-a, l-m-h und e-p dargestellt. Kombiniert mit einer seitlichen Verschiebung VBH lassen sich verschiedene Abdeckungen der Pupille, diesmal aber im Innenraum des Tischs KT, erreichen.

Figur E12 zeigt in vergrößerter Darstellung die Konturen der Fahrkurven der Blendenkante BH der erfindungsgemäßen Vorrichtung aus Figur E11. Die äußere Kontur des optisch wirksamen Bereiches der Blendenkante BH ist dabei gekennzeichnet durch die Kurvenpunkte d-c-b-a-g-p-e-d. Liegt die wirksame Pupille des Beobachtungssystems dicht unterhalb der transparenten Objektauflage TOA, kann die Blendenkante mit der erfindungsgemäßen Vorrichtung an diesen Punkt herangefahren werden. Konstruktionsbedingt stellt ZDmax die Z-Koordinate der obersten Blendenposition dar. Der Z-Wert wird hierbei von der Objektebene OE ausgehend gemessen. Um den Kontakt der Blende mit der transparenten Objektauflage TOA zu vermeiden, ist der Betrag von ZDmax geringfügig größer als die Dicke von TOA. Entsprechend stellt ZDATmax die maximale Z-Koordinate bei Verwendung einer Adapterplatte AP dar, während ZThmin die minimale Z-Koordinate der Blendenkante BH ist. Die größtmögliche Z-Koordinate ohne optionalen Tisch der Höhe HT ist in Figur E12 durch ZDmax + HT gekennzeichnet.

Bevorzugt ist eine zweite Blende (nicht dargestellt) vorhanden, welche zumindest in einem Bereich unterhalb von ZThmin, also unterhalb der Positionen d und e, bis zur Lichtquelle LQ positioniert werden kann. Ist nur eine einzige Blende vorhanden, so ist diese bevorzugt so angeordnet und bewegbar, dass ihre Z-Position im gesamten Bereich zwischen der Lichtquelle und der transparenten Objektauflage des optionalen Probenauflagetischs liegen kann.

Die Blendenkante BH lässt sich innerhalb der Durchlicht-Beleuchtungseinrichtung DL in Z-Richtung im freien Bauraum zwischen der Objektebene OE und der Lichtquelle LQ frei positionieren, siehe Figur E11. Aufgrund eines toleranzbedingten Sicherheitsabstands liegt die unterste tatsächlich realisierbare Blendenposition ZDmin knapp oberhalb der Leuchtfläche LFL mit der Z-Koordinate ZHL. Nach oben wird die oberste tatsächlich realisierbare Blendenposition ZDmax nicht nur durch die Dicke der transparenten Objektauflage TOA bestimmt, sondern auch durch die Höhe der optional einsetzbaren Adapterplatten AP, zum Beispiel Polarisationsfilter, inklusive der Auflage hierfür. Hierdurch wird die oberste tatsächlich realisierbare Blendenposition ZDmax mit einem entsprechenden toleranzbedingten Sicherheitsabstand nach unten verlegt.

Erfindungsgemäß sind keine weiteren Mittel zur Homogenisierung der Beleuchtung vorgesehen oder erforderlich.

In den Figuren E13 bis E15 ist ein Ausschnitt des Gehäuses G der Vorrichtung zur Durchlichtbeleuchtung DL aus Figur E11 dargestellt. Dabei ist ein Bereich des Gehäuses G neben der Durchgriffsöffnung gezeigt. An dem Gehäuse G sind Mittel zur Erkennung verschiedener Aufsätze vorhanden. Diese umfassen zumindest Mittel HST zum Feststellen von Anwesenheit und insbesondere Identität eines Probenauflagetischs KT, Mittel HSA zum Feststellen von Anwesenheit und insbesondere Identität einer in die Durchgriffsöffnung eingesetzten Adapterplatte AP und Mittel HSR zum Feststellen von Anwesenheit und insbesondere Identität von in den Probenauflagetisch KT eingesetztem Zubehör wie einem Ringlicht RL. Diese Mittel HSA, HST, HSR sind im dargestellten Beispiel jeweils mit Hallsensoren HSA, HST, HSR gebildet.

Die Adapterplatte AP, der Tisch KT und das Ringlicht RL weisen Magnete MA, MT, MR auf, deren Anwesenheit durch die Hallsensoren HSA, HST, HSR festgestellt werden kann.

Wird beispielsweise eine Adapterplatte AP in die Durchlichthaube DL eingelegt, spricht über den darin enthalten Magneten MA der Hallsensor HSA an. Entsprechendes gilt, wenn der Tisch KT mit seinem Magneten MT dem Hallsensor HST gegenüberliegend eingebracht wird. Der Hallsensor HSR dient mit dem Magneten MR entsprechend der Detektion eines Ringlichtes RL.

Zur Befestigung des Magneten MR an der Ringleuchte RL ist ein Hilfsstift BZR an der Ringleuchte RL vorhanden. Entsprechend ist am Tisch KT ein Hilfsstift BZT zur Befestigung des Magneten MT am Tisch KT vorhanden.

Figur E13 zeigt ein Ausführungsbeispiel, bei dem eine Adapterplatte AP in die Durchgriffsöffnung eingesetzt ist. Ein Magnet MA der Adapterplatte AP ist dadurch über dem Sensor HSA positioniert, der somit die Anwesenheit und Identität der Adapterplatte AP erkennt. Weil in dieser Ausführung kein Ringlicht RL und auch kein Tisch KT vorhanden sind, werden die Sensoren HST und HSR nicht angesprochen.

In der in Figur E14 dargestellten Situation sind hingegen weder eine Adapterplatte AP, noch ein Tisch KT oder ein Ringlicht RL vorhanden. Folglich meldet keiner der Sensoren HSA, HST, HSR die Anwesenheit dieser Elemente.

In dem in Figur E15 gezeigten Beispiel sind sowohl ein Tisch KT als auch ein Ringlicht RL und eine Adapterplatte AP vorhanden. Über deren Magnete MT, MR und MA registrieren die Hallsensoren HST, HSR und HSA die Anwesenheit von Tisch KT, Ringlicht RL und Adapterplatte AP. Der Tisch KT weist eine Grundplatte KTF mit einem Durchgang auf. Bei eingesetztem Ringlicht RL ragt der Magnet MR des Ringlichts RL durch den Durchgang bis zu einem Erfassungsbereich des Hallsensors HSR durch. Dargestellt ist zudem ein Y-Schlitten KTY des Kreuztischs KT.

Aus der Erkennung dieser Komponenten bestimmt erfindungsgemäß eine Steuerungseinrichtung, wie groß die maximale Höhenverstellung der Blende BH ist. Damit wird eine Kollision mit der Unterseite der entsprechenden Komponente vermieden.

Weiterhin kann erfindungsgemäß ein Sicherungsmechanismus vorgesehen sein, der gewährleistet, dass sich die Blendenkante BH motorisch nicht bewegen lässt, wenn beispielsweise der Tisch KT abgenommen wurde und die Blende oberhalb der Oberfläche des Gehäuses G liegt. Alternativ kann in dieser Situation die Blendenkante auch unter die Z-Koordinate der Oberfläche des Gehäuses G gefahren werden. Damit soll vermieden werden, dass sich der Benutzer durch motorische Bewegung der Blende BH verletzen kann, wenn der Tisch KT nicht auf dem Gehäuse G aufgesetzt ist.

Das Einstellen der Blendenkante abhängig von den mit den Hallsensoren erkannten Aufsätzen wird mit Bezug auf Figur E16 beschrieben.

In Figur E16 sind schematisch die Verfahrensschritte S1 bis S15 eines erfindungsgemäßen Verfahrens zum Einstellen einer bestgeeigneten Beleuchtung für ein Lichtmikroskop dargestellt. Das erfindungsgemäße Verfahren kann insbesondere mit einer erfindungsgemäßen Vorrichtung zur Durchlichtbeleuchtung für ein Lichtmikroskop durchgeführt werden. Die Beleuchtung wird dabei durch Bewegen der Blendenkanten einer erfindungsgemäßen Vorrichtung an eine geeignete Position eingestellt.

Das erfindungsgemäße Verfahren wird anhand eines Ausführungsbeispiels mit vier Blenden, welche jeweils eine lineare Blendenkante aufweisen, erläutert. Diese vier Blenden werden als vordere, hintere und zwei seitliche Blenden bezeichnet. Erfindungsgemäß kann aber auch eine andere Anzahl an Blenden verwendet werden. Insbesondere kann auch eine Irisblende eingesetzt werden. Die im Folgenden beschriebenen Verfahrensschritte sind dann entsprechend anzupassen.

In Schritt S1 wird überprüft, ob eine Mikroskopeinstellung, nämlich eine Objektiv-Zoomkörper-Kombination, die momentan in dem Lichtmikroskop verwendet wird, und eine damit eingestellte Zoom-Vergrößerung, abrufbar ist. Dies kann beispielsweise über einen CAN-Bus erfolgen. Bei der Antwort "ja" folgt der Schritt S3, andernfalls der Schritt S2.

Bei Schritt S2 werden alle verfügbaren Blenden geöffnet, das heißt keine der verfügbaren Blendenkanten beschneidet das Beleuchtungsstrahlenbündel. Hierzu wird die hintere Blende geöffnet, indem beide zugehörigen Schlitten, die dem Bewegen der Blende dienen, in die Referenzposition der hinteren Blende gefahren werden. Die Referenzposition der hinteren Blende kann diejenige anfahrbare Position sein, welche den größten Y-Wert aufweist. Die vordere Blende wird in analoger Weise durch Bewegen ihrer beiden Schlitten in ihre Referenzposition gefahren. An dieser befindet sie sich an derjenigen anfahrbaren Position, welche den kleinsten Y-Wert aufweist. Zudem werden die beiden seitlichen Blenden geöffnet, indem ihre jeweiligen Referenzpositionen angefahren werden. Für die erste seitliche Blende ist dies die Position mit minimal einstellbarem X-Wert. Für die zweite seitliche Blende ist dies die Position mit maximal einstellbarem X-Wert.

In Schritt S3 wird mit der abgefragten Objektiv-Zoomkörper-Kombination und der eingestellten Zoom-Vergrößerung eine ideale Z-Position für eine Blendenkante bestimmt. Dies kann beispielsweise mit Hilfe von einer abgespeicherten Wertetabelle erfolgen, in welcher ideale Z-Positionen für verschiedene Objektiv-Zoomkörper-Kombinationen und verschiedene Zoom-Vergrößerungen hinterlegt sind. Die Wertetabelle kann durch vorhergehende Messungen bestimmt worden sein oder durch theoretische Berechnungen. Für Zoom-Vergrößerungen, zu denen in der Wertetabelle kein Wert hinterlegt ist, kann eine ideale Z-Position durch Interpolation der Werte aus der Wertetabelle ermittelt werden. Die ideale Z-Position der Blendenkante kann dadurch definiert sein, dass der Beleuchtungsstrahlengang des Lichtmikroskops an dieser Z-Position eine Taille aufweist. Auf diesen Schritt folgt der Schritt S4.

Im Schritt S4 wird der verfügbare Bauraum ermittelt. Dieser stellt einen freien Bewegungsraum dar, in dem die Z-Position der Blendenkanten bewegt werden können. Eine maximale Z-Position des verfügbaren Bauraums kann durch verwendete Zusatzeinrichtungen definiert sein. Die minimale Z-Position des verfügbaren Bauraums kann eine Position unmittelbar neben der Lichtquelle sein. Die folgenden Ausführungen beziehen sich auf die Variante der erfindungsgemäßen Vorrichtung, bei welcher als Zusatzeinrichtungen ein Probenauflagetisch KT, eine Adapterplatte AP und ein Ringlicht RL verwendet werden können. Die Ermittlung des verfügbaren Bauraums erfolgt mit Sensoren, beispielsweise Hallsensoren, zur Erkennung der genannten Zusatzeinrichtungen.

Stellen die Sensoren in Schritt S4 fest, dass keine Zusatzeinrichtung verwendet wird, so wird die maximale Z-Position Zmax auf eine Z-Position ZDmax unmittelbar unter der Halteeinrichtung TOA für die zu untersuchende Probe festgelegt.

Erkennen die Sensoren in Schritt S4, dass eine Adapterplatte AP eingesetzt ist, so wird der verfügbare Bauraum bis zu einer Z-Position beschränkt, welche unmittelbar unter der Adapterplatte AP liegt. Diese Z-Position kann als ZDAmax bezeichnet werden, wenn kein Probenauflagetisch verwendet wird, und als ZDATmax, wenn ein Probenauflagetisch verwendet wird. Ob ein Ringlicht RL vorhanden ist, ist in diesen Fällen für die Bestimmung des verfügbaren Bauraums nicht relevant, da sich die Aufnahmeposition für ein Ringlicht RL oberhalb der Adapterplatte AP befindet.

Für den Fall, dass im Schritt S4 ein Probenauflagetisch KT erkannt wird, aber weder eine Adapterplatte AP noch ein Ringlicht RL vorhanden sind, so wird die maximale Z-Position Zmax auf eine Z-Position ZDmax festgelegt, welche sich unmittelbar unter der Halteeinrichtung TOA des Probenauflagetischs KT befindet.

Wird hingegen in Schritt S4 durch die Sensoren festgestellt, dass außer dem Probenauflagetisch KT auch ein Ringlicht RL, aber keine Adapterplatte AP vorhanden ist, so wird die maximale Z-Position Zmax auf eine Z-Position ZTRmax festgelegt, welche sich unmittelbar unter dem Ringlicht RL befindet.

Hiermit ist Schritt S4 abgeschlossen und es folgt Schritt S5. In diesem wird überprüft, ob die ideale Z-Position der Blendenkante, welche in Schritt S3 bestimmt worden ist, innerhalb des in Schritt S4 bestimmten verfügbaren Bauraums liegt. Trifft dies zu, so folgt Schritt S6, anderenfalls Schritt S10.

In Schritt S6 wird festgestellt, welche der verfügbaren Blendenkanten an die ideale Z-Position bewegbar ist. Je nach Ausführungsform der erfindungsgemäßen Vorrichtung kann nicht eine einzige Blende über den gesamten verfügbaren Bauraum bewegt werden. Stattdessen ist die vordere Blende in einen Bereich kleinerer Z-Werte bis maximal Zmin + HBVmax beweglich, während die hintere Blende in einem Bereich größerer Z-Werte als Zmin + HBVmax bewegt werden kann. Dabei bezeichnet HBVmax den maximalen Höhenabstand, den die vordere Blende von der Leuchtfläche einnehmen kann. Wird in Schritt S6 festgestellt, dass die ideale Z-Position der Blendenkante im Bewegungsraum der vorderen Blende liegt, so folgt Schritt S7. Liegt hingegen die ideale Z-Position im Bewegungsraum der hinteren Blende, folgt Schritt S8. Praktisch können sich die Bewegungsräume der vorderen und hinteren Blende überlappen. Dennoch wird in Schritt S6 eine Blende nach den oben genannten Kriterien ausgewählt.

In Schritt S7 wird die vordere Blende zu der idealen Z-Position bewegt und die hintere Blende wird geöffnet.

In Schritt S8 wird hingegen die hintere Blende an die ideale Z-Position bewegt und die vordere Blende wird geöffnet. Das Öffnen kann dabei wie zu Schritt S2 beschrieben erfolgen.

Für Ausgestaltungen der erfindungsgemäßen Vorrichtung, bei denen genau eine höhenverstellbare Blendenkante vorhanden ist, können die Schritte S6 bis S8 durch den Schritt ersetzt werden, dass diese höhenverstellbare Blendenkante an die ideale Z-Position bewegt wird.

Sowohl auf Schritt S7 als auch auf Schritt S8 folgt Schritt S9, in welchem die beiden seitlichen Blenden positioniert werden. Deren Position wird, analog zu Schritt S3, abhängig von der verwendeten Objektiv-Zoomkörper-Kombination und der damit eingestellten Zoom-Vergrößerung bestimmt. Die beiden seitlichen Blenden werden sodann an die geeigneten Positionen bewegt. Hiermit ist die Einstellung aller vorhandenen Blenden und damit auch das erfindungsgemäße Verfahren abgeschlossen.

Im Folgenden wird Schritt S10 beschrieben, welcher durchgeführt wird, wenn in Schritt S5 festgestellt wird, dass die ideale Z-Position der Blendenkante außerhalb des verfügbaren Bauraums liegt. In Schritt S10 wird ermittelt, ob die Verwendung eines Prismenfilms sinnvoll ist. Wird ein Prismenfilm in einem bestimmten Winkel in das Beleuchtungsstrahlenbündel eingeführt, so wird die Ausbreitung des Beleuchtungsstrahlenbündels in vorbekannter Weise beeinflusst. Wird in Schritt S10 festgestellt, dass sich durch Verwendung eines Prismenfilms die Beleuchtung für das Lichtmikroskop verbessern lässt, so folgt Schritt S11, anderenfalls Schritt S13.

In Schritt S11 wird zunächst der Prismenfilm in den Strahlengang eingebracht. Zudem wird die hintere Blende auf eine YZ-Position eingestellt, welche abhängig von der verwendeten Objektiv-Zoomkörper-Kombination und der eingestellten Zoom-Vergrößerung ermittelt wird. Die vordere Blende kann auf eine Y-Position bewegt werden, welche ebenfalls abhängig von der verwendeten Objektiv-Zoomkörper-Kombination und der eingestellten Zoom-Vergrößerung bestimmt wird. Die Z-Position der vorderen Blende kann auf eine Position Zmin dicht oberhalb der Lichtquelle eingestellt werden.

Auf Schritt S11 folgt Schritt S12, in welchem die seitlichen Blenden auf X-Positionen bewegt werden, welche abhängig von der verwendeten Objektiv-Zoomkörper-Kombination und der eingestellten Zoom-Vergrößerung bestimmt werden, wobei berücksichtigt wird, dass sich der Prismenfilm im Strahlengang befindet.

Wird in Schritt S10 festgestellt, dass mit Prismenfilm keine verbesserte Beleuchtung erreichbar ist, so folgt Schritt S13, in welchem kein Prismenfilm verwendet wird. Stattdessen wird überprüft, welche der verfügbaren Blenden am nahesten zu der idealen Z-Position bewegt werden kann. Wird festgestellt, dass die ideale Z-Position unterhalb des verfügbaren Bauraums liegt, so folgt Schritt S14. Ist hingegen die ideale Z-Position zu hoch, folgt Schritt S15.

In Schritt S14 wird die vordere Blende an dem kleinstmöglichen Z-Wert positioniert. Zudem kann vorgesehen sein, dass die Y-Position der vorderen Blende abhängig von der verwendeten Objektiv-Zoomkörper-Kombination und der eingestellten Zoom-Vergrößerung so eingestellt wird, dass kein Beschneiden des Strahlengangs erfolgt. Die hintere Blende wird in diesem Fall geöffnet, was wie zu Schritt S2 beschrieben erfolgen kann. Hierauf folgt der bereits beschriebene Schritt S9 zur Einstellung der beiden seitlichen Blenden.

Wird hingegen im Schritt S13 festgestellt, dass die ideale Z-Position zu hoch für den verfügbaren Bauraum ist, so wird in Schritt S15 die hintere Blende auf die höchstmögliche Z-Position für eine beschnittfreie Einstellung analog zur Vorgehensweise in Schritt S14 eingestellt. Die vordere Blende wird in diesem Fall geöffnet. Hierauf folgt ebenfalls Schritt S9 zur Einstellung der seitlichen Blenden.

Damit sind alle verfügbaren Blenden bestmöglich eingestellt und das erfindungsgemäße Verfahren ist abgeschlossen.

Eine erfindungsgemäße Vorrichtung mit vier Blenden, welche zur Durchführung des beschriebenen Verfahrens zum Einstellen einer bestgeeigneten Beleuchtung geeignet ist, wird im Folgenden mit Bezug auf Figur A9 beschrieben.

Figur A9 zeigt eine schematische Perspektivdarstellung von vier Blenden BLL, BLR, BLV und BLH einer erfindungsgemäßen Vorrichtung. Unterhalb der Blenden ist eine Lichtquelle LQ mit einer Leuchtfläche LFL vorhanden. Oberhalb der Blenden befindet sich die transparente Objektauflage TOA, welche die Objektebene OE darstellt.

Die Blenden BLL, BLR, BLV und BLH weisen je eine lineare Blendenkante BKL, BKR, BV und BH auf und bilden so einen rechteckigen Freiraum. Um Größe und Position des Freiraums einstellen zu können, sind die Blenden in der XY-Ebene verschiebbar. Erfindungsgemäß sind die Blenden nicht nur in der XY-Ebene zur Reduzierung des Streulichts einstellbar, sondern auch in der Z-Richtung verstellbar. Bedeutsam sind in Figur A9 außerdem folgende Bezugsziffern: VBH: Verschieberichtung der hinteren Blende; VBL: Verschieberichtung der linken Blende; VBR: Verschieberichtung der rechten Blende sowie VBV, welches eine Verschieberichtung der vorderen Blende bezeichnet. ZH bezeichnet in Figur A9 die Z-Koordinate der hinteren Drehachse DAH. Mit ZL beziehungsweise ZR sind in Figur A9 die Z-Koordinaten der der linken beziehungsweise der rechten Blendenkante gekennzeichnet. ZV schließlich bezeichnet die Z-Koordinate der vorderen Drehachse DAV.

Erfindungsgemäß kann vorgesehen sein, dass abhängig von der verwendeten Objektiv-Zoomkörper-Kombination automatisch eine vordefinierte Blendenform eingestellt wird. Die vordefinierten Blendenformen sind dabei durch die jeweiligen Positionen der verfügbaren Blenden festgelegt.

Erfindungsgemäß kann ein Kontrastmodus "Azimut" auswählbar sein. In diesem ist die Form des Freiraums zwischen den Blenden fest, aber die XY-Position des Freiraums kann verändert werden. Hiermit sind verschiedene Kontraste bei der Beobachtung möglich.

Die Blenden müssen erfindungsgemäß nicht in derselben Z-Ebene liegen. Im dar-gestellten Beispiel sind die vier Blenden in Z-Richtung zueinander versetzt und ihre Bewegungsräume überlappen einander in Z-Richtung. Die Blendenkante BV der untersten Blende BLV und die Blendenkante BH der obersten Blende BLH sind zudem höhenverstellbar, das heißt in Z-Richtung beweglich. Hierzu können diese jeweils um eine Drehachse DAV, DAH gedreht werden. Für die rechte und linke Blende ist keine Höhenverstellung vorgesehen.

Die kostengünstigste Idealform ist eine lineare Blendenkante BK, da sie sich ohne größeren Aufwand leicht herstellen lässt. Leicht gekrümmte Blendenkanten BK lassen sich prinzipiell auch einsetzen, allerdings verändern sich dann mit der Kippung der Blende BL bei feststehender XYZ-Koordinate eines einzelnen Punktes auf der Blendenkante BK mit zunehmender Entfernung von diesem Punkt entlang der Blendenkante BK auch die Y- und die Z-Werte, was praktisch schlecht beherrschbar ist. Krümmungen der Blendenkante BK, die im Bereich der üblichen Fertigungstoleranzen liegen und/oder die noch nicht zu sichtbaren Inhomogenitäten führen, spielen hierbei keine Rolle.

Zum Positionieren der höhenverstellbaren Blendenkanten BV und BH sind diese bevorzugt mit zwei Schlitten verbunden, die mit Schrittmotoren angetrieben werden. Für die beiden seitlichen Blendenkanten BKL und BKR ist ein Schrittmotor zum Bewegen in die X-Richtung ausreichend. Die Schlitten der höhenverstellbaren Blendenkanten BV und BH können wie in Zusammenhang mit Figur E11 beschrieben gebildet sein.

Um aus der Einstellung der Schlitten die YZ-Koordinate der Blendenkanten BV und BH berechnen zu können, müssen zusätzlich die absoluten Schlittenpositionen bekannt sein. Vorzugsweise werden als Antrieb kostengünstige Schrittmotoren, die über eine Ritzel-Zahnstangen-Verzahnung eine Linearbewegung ermöglichen, eingesetzt. Allerdings muss die Absolutposition eines Linearantriebs mit einfachen Schrittmotoren in einer bekannten Position gesetzt werden. Das erfolgt vorzugsweise beim Einschalten durch einen festgelegten Initialisierungsablauf.

Würden bei der Initialisierung der Schrittmotoren beide in Figur E11 dargestellten Schlitten synchron in die Endlagenposition fahren bis Schaltfahnen der Schlitten entsprechende Positionssensoren für die Endlagenposition erreichen, bliebe die Z-Koordinate der Blendenkante konstant. Wenn die Blende in den Tischbauraum ausgefahren ist, etwa weil die Durchlichtvorrichtung mit der Blende in dieser Position ausgeschaltet worden ist, so würde eine solche Initialisierung zu einer Kollision mit dem Gehäuse führen.

Um dies zu vermeiden, wird die im Folgenden beschriebene erfindungsgemäße Initialisierung durchgeführt, deren Ablauf schematisch in den Figuren E18 bis E22 gezeigt ist. Hier wird die Blende BLH durch zwei Schlitten SL5 und SL6 aus einer unbekannten Position in eine unterste Position gefahren. Indem der Schlitten SL5 über einen hinteren Hebel HEH mit der Blende BLH verbunden ist, kann die Blende BLH gedreht werden. Die Objektebene OE an der transparenten Objektauflage TOA ist hier oberhalb des Gehäuses G durch einen nicht dargestellten Probenauflagetisch gegeben.

Die Schlitten SL5 und SL6 besitzen Schaltfahnen SF5 und SF6, die mit Positions-und Positionshilfssensoren S5, S6 sowie S5H und S6H zusammenwirken. Ist S5H off, das heißt die Schaltfahne SF5 nicht im Bereich dieses Sensors, so befindet sich nach der erfindungsgemäßen Anordnung die Blendenkante BH innerhalb der Fläche h-o-m-i-l-e-j-f-p-g-h, siehe Figur E18. Nun werden beide Schlitten SL5 und SL6 synchron nach vorne gefahren, bis der Sensor SH5 auf On schaltet. Jetzt befindet sich die Blendenkante auf der Kurve h-o-m-i-l, siehe Figur E19. Darauf wird der untere Schlitten SL6 gefahren bis SH6 gerade auf Off schaltet. Die Blendenkante befindet sich jetzt im Punkt i, siehe Figur E20. Nun können beide Schlitten synchron zurückgefahren werden, bis der Sensor S5 auf On schaltet, siehe Figur E21. Die Blendenvorrichtung ist damit im Ausgangszustand angekommen, ohne dass die Blende BLH gegen einen Teil des Gehäuses stößt. Fährt nun der Schlitten SL6 weiter, bis auch Sensor S6 auf On schaltet, ist die Blende in der untersten Ebene angekommen, siehe Figur E22.

Durch die erfindungsgemäße Anordnung der Sensoren S5, S6, SH5 und SH6 sowie durch die Dimensionierung der Schaltfahnen SF5 und SF6 wird ein störungsfreier Betrieb der Blendenanordnung in einfacher Weise gewährleistet.

Nach diesem Initialisierungsvorgang ist die Absolutposition der Schlitten bekannt. Über die Hebelgeometrie lassen sich auch die entsprechenden YZ-Koordinaten der Blendenkante BH ermitteln, sofern die Lage der Blendenkante BH relativ zur Schaltposition bekannt ist. Dies lässt sich über feststehende Maße nur sehr ungenau ermitteln, deshalb wird ein geeigneter Justierprozess über eine elektronische Offsetkorrektur vorgesehen. Hierzu wird die Blendenkante in eine bekannte optisch sichtbare Lage gebracht, mit der Offsetkorrektur werden die Abweichungen zur realen beziehungsweise toleranzbehafteten Schaltpunktlage der Schaltfahnen SF5 und SF6 ausgeglichen.

Vorteilhafterweise kann der Nutzungsbereich bei der erfindungsgemäßen Vorrichtung durch einen Probeauflagetisch erweitert werden, ohne dass teure absolut messende Systeme zur Positionsdetektion und zur Positionseinstellung der Blenden erforderlich sind.

Mit Bezug auf Figur E11 kann nun durch die Bewegung der beiden Schlitten in den Richtungen VBHH beziehungsweise VBH entlang einer Führungsbahn um eine bestimmte Schrittanzahl des antreibenden Schrittmotors die zugehörige Blendenkante um einen bestimmten YZ-Wert bewegt werden. Weil die Absolutposition der Schlitten durch den Initialisierungsprozess bekannt ist, lässt sich die entsprechende YZ-Koordinate der Blendenkante BH berechnen. Die Berechnung lässt sich auch invers durchführen, das heißt aus einem vorgegebenen Verfahrweg der Blendenkante BH in der Y- und/oder der Z-Richtung lassen sich auch die hierfür erforderlichen Schlittenwege beziehungsweise die Anzahl der Schrittmotor-Schritte berechnen.

Mit der vorliegenden Erfindung werden ein kostengünstiges Durchlicht- Beleuchtungsverfahren sowie eine Vorrichtung zur Durchlichtbeleuchtung bereitgestellt, die besonders zur Ausleuchtung von kontrastarmen Durchlichtobjekten in den kleineren Übersichtsvergrößerungen im Hellfeld an Stereomikroskopen und Makroskopen geeignet sind.

Das Verfahren liefert in einem sehr großen Sehfeldbereich eine homogene Ausleuchtung. Weiterhin wird das Auflösungsvermögen nicht unnötig eingeschränkt und es werden ausreichende Beleuchtungsintensitäten zur Verfügung gestellt. Ein wesentlicher Vorteil ist außerdem, dass die erfindungsgemäße Vorrichtung in einer üblichen Bauhöhe HER, siehe Fig. 1, von Durchlichteinrichtungen ohne sichtbare Störungen einsetzbar ist. Insbesondere ist das erfindungsgemäße Verfahren auch mit anderen Beleuchtungsverfahren kombinierbar, so dass prinzipiell alle Beleuchtungsverfahren in einer einzigen Durchlichteinrichtung anwendbar sind.

Sodann sind günstigste oder optimale Beleuchtungseinstellungen auch für ungeübte Benutzer leicht einstell- und reproduzierbar.

Schließlich eignet sich das Verfahren insbesondere für kostenoptimierte Objektiv-Zoomkörper-Kombinationen, die keine auskorrigierten und über den Zoombereich feststehenden Pupillenebenen besitzen und nicht zwingend für polarisationsoptische Verfahren nutzbar sein müssen.

Bezugszeichenliste

| | |
|---|---|
| a | Spezielle YZ-Position der hinteren Blendenkante |
| A | Halbwinkel des Beleuchtungslichts mit wirksamem Lamellenfilm |
| A0 | Halbwinkel des Beleuchtungslichts ohne Lamellenfilm |
| AB | Abstand zwischen der Objektebene OE und der obersten Kante LO des Lamellenfilms LAF |
| ABmin | Minimalabstand von AB, bei dem die Lamellenstrukturen gerade noch nicht im Bild störend sichtbar sind |
| AD3 | Abstand zwischen der Führungsbahn FS und der Drehachse D3 |
| AD5 | Abstand zwischen der Führungsbahn FS und der Drehachse D5 |
| ADH | Abstand zwischen der Führungsbahn FS und der Drehachse DAH |
| ADV | Abstand zwischen der Führungsbahn FS und der Drehachse DAV |
| AHH | Hebellänge zwischen den Drehachsen DAH und D6 |
| AHV | Hebellänge zwischen den Drehachsen DAV und D4 |
| AP | Adapterplatte mit eingeklebtem Magnet MA |
| AZ | Azimutwinkel der Beleuchtung |
| $\alpha$ | Einstellwinkel des Umlenkspiegels SP |
| ASPH | Asphärische Beleuchtungsoptik |
| $\beta$ | aktuell wirksamer Zoomfaktor des Zoomkörpers |
| $\beta 1$ | Stützstelle Nr. 1 zwischen $\beta$min und $\beta$max zur Beschreibung der Zoomfaktor-Kurven über Näherungsfunktionen |
| $\beta 2$ | Stützstelle Nr. 2 zwischen $\beta$min und $\beta$max zur Beschreibung der Zoomfaktor-Kurven über Näherungsfunktionen |
| $\beta 3$ | Stützstelle Nr. 3 zwischen $\beta$min und $\beta$max zur Beschreibung der Zoomfaktor-Kurven über Näherungsfunktionen |
| $\beta 4$ | Stützstelle Nr. 4 zwischen $\beta$min und $\beta$max zur Beschreibung der Zoomfaktor-Kurven über Näherungsfunktionen |
| $\beta 5$ | Stützstelle Nr. 5 zwischen $\beta$min und $\beta$max zur Beschreibung der Zoomfaktor-Kurven über Näherungsfunktionen |
| $\beta 6$ | Stützstelle Nr. 6 zwischen $\beta$min und $\beta$max zur Beschreibung der Zoomfaktor-Kurven über Näherungsfunktionen |
| $\beta 7$ | Stützstelle Nr. 7 zwischen $\beta$min und $\beta$max zur Beschreibung der Zoomfaktor-Kurven über Näherungsfunktionen |
| $\beta 8$ | Stützstelle Nr. 8 zwischen $\beta$min und $\beta$max zur Beschreibung der Zoomfaktor-Kurven über Näherungsfunktionen |
| $\beta 9$ | Stützstelle Nr. 9 zwischen $\beta$min und $\beta$max zur Beschreibung der Zoomfaktor-Kurven über Näherungsfun- |

| | | |
|---|---|---|
| | | tionen |
| | β10 | Stützstelle Nr. 10 zwischen βmin und βmax zur Beschreibung der Zoomfaktor-Kurven über Näherungsfunktionen |
| | β11 | Stützstelle Nr. 11 zwischen βmin und βmax zur Beschreibung der Zoomfaktor-Kurven über Näherungsfunktionen |
| | β12 | Stützstelle Nr. 12 zwischen βmin und βmax zur Beschreibung der Zoomfaktor-Kurven über Näherungsfunktionen |
| | β13 | Stützstelle Nr. 13 zwischen βmin und βmax zur Beschreibung der Zoomfaktor-Kurven über Näherungsfunktionen |
| | βA1 | Grenz-Zoomfaktor ohne Tisch und mit Adapter für das Objektiv Nr. 1 |
| | βAT3 | Grenz-Zoomfaktor mit Tisch und mit Adapter für das Objektiv Nr. 3 |
| | βG2 | Grenz-Zoomfaktor ohne Tisch für das Objektiv Nr. 2 |
| | βGT2 | Grenz-Zoomfaktor mit Tisch für das Objektiv Nr. 2 |
| | βmax | maximal einstellbarer Zoomfaktor |
| | βmin | minimal einstellbarer Zoomfaktor |
| | βP2 | Zoomfaktor, an der die Kurve für das Objektiv Nr. 2 eine Polstelle hat |
| | b | Spezielle YZ-Position der hinteren Blendenkante |
| | B1 | Beleuchtungslicht-Grenzstrahl 1 |
| | B2 | Beleuchtungslicht-Grenzstrahl 2 |
| | B3 | Beleuchtungslicht-Grenzstrahl 3 |
| | B4 | Beleuchtungslicht-Grenzstrahl 4 |
| | B5 | Beleuchtungslicht-Grenzstrahl 5 |
| | B6 | Beleuchtungslicht-Grenzstrahl 6 |
| | BA1 | Beleuchtungslicht-Grenzstrahl 1 nach dem Durchgang durch den Prismenfilm PR |
| | BA2 | Beleuchtungslicht-Grenzstrahl 2 nach dem Durchgang durch den Prismenfilm PR |
| | BA3 | Beleuchtungslicht-Grenzstrahl 3 nach dem Durchgang durch den Prismenfilm PR |
| | BA4 | Beleuchtungslicht-Grenzstrahl 4 nach dem Durchgang durch den Prismenfilm PR |
| | BA5 | Beleuchtungslicht-Grenzstrahl 5 nach dem Durchgang durch den Prismenfilm PR |
| | BA6 | Beleuchtungslicht-Grenzstrahl 6 nach dem Durchgang durch den Prismenfilm PR |
| | BB | Wirksame Breite der Blende BL |
| | BE | Bedieneinheit für das Gesamtsystem |
| | BH | Blendenkante hinten |
| | BK | Blendenkante |
| | BKL | Blendenkante links |
| | BKR | Blendenkante rechts |
| | BL | Blende |
| | BLH | Hintere Blende |
| | BLL | Blende links |
| | BLQH | Hintere Blende |
| | BLQV | Vordere Blende |
| | BLR | Blende rechts |
| | BLV | Vordere Blende |
| | BLYP | Begrenzungskante Leuchtfläche in positiver Y-Richtung |
| | BMAB | Bedienelement für motorisierte Aperturblende MAB |
| | BMFT | Bedieneinheit für die motorisierte Fokussiereinrichtung |
| | BMPR | Strukturbreite der Mikroprismen des Prismenfilms PR |
| | BMZK | Bedieneinheit für den motorisierten Zoomkörper |
| | BS | Beleuchtungsschwerpunkt |
| | BT | Bedienteil der Durchlichteinrichtung DL |
| | BV | Blendenkante vorne |
| | BWI | Winkel zwischen den Randstrahlen STL und STR der Beleuchtung |
| | BZR | Hilfsstift zur Befestigung des Magneten MR an der Ringleuchte RL |
| | BZT | Hilfsstift zur Befestigung des Magneten MT am Tisch KT |
| | c | Spezielle YZ-Position der hinteren Blendenkante |
| | COW | Codierter Objektivwechsler |
| | δ | Ablenkungswinkel durch den geneigten Prismenfilm PR |
| | øOF | Durchmesser des auszuleuchtenden Objektfeldes |
| | øOF1 | Durchmesser des auszuleuchtenden Objektfeldes für Objektiv OBJ1 an Zoomkörper MZK mit dem aktu- |

EP 2 758 823 B1

| | | |
|---|---|---|
| | | ellen Zoomfaktor $\beta$ |
| | øOF2 | Durchmesser des auszuleuchtenden Objektfeldes für Objektiv OBJ2 an Zoomkörper MZK mit dem aktuellen Zoomfaktor $\beta$ |
| | øOF3 | Durchmesser des auszuleuchtenden Objektfeldes für Objektiv OBJ3 an Zoomkörper MZK mit dem aktuellen Zoomfaktor $\beta$ |
| | d | Spezielle YZ-Position der hinteren Blendenkante |
| | D3 | Drehachse für Hebel HEV an Schlitten SL3 |
| | D4 | Drehachse für Hebel HEV an Blende BLV |
| | D5 | Drehachse für Hebel HEH an Schlitten SL5 |
| | D6 | Drehachse für Hebel HEH an Blende BLH |
| | DA | Drehachse |
| | DAPR | Drehachse des Prismenfilms PR |
| | DAH | Drehachse hintere Blende |
| | DAV | Drehachse vordere Blende |
| | DG | Dicke der transparenten Objektauflage TOA bzw. der Glasplatte |
| | dI | Übergangs-Lichtintensitätsdifferenz zur Kennzeichnung des Gefälles |
| | DL | Durchlichteinrichtung |
| | dW | Übergangs-Winkelbereich zur Kennzeichnung des Gefälles |
| | $\varepsilon$ | Prismenwinkel der Mikroprismen des Prismenfilms PR |
| | e | Spezielle YZ-Position der hinteren Blendenkante |
| | E | Ebene in Höhe der Objektauflage auf der Durchlichteinrichtung; diese Ebene wird i.d.R. durch die Oberseite der Durchlichteinrichtung gebildet |
| | EM | Elektronikmodul zur Steuerung des Gesamtsystems (Signalverarbeitung etc.) |
| | EP | Eintrittspupille des Objektivs |
| | ET | Ebene in Höhe der Objektauflage auf dem Tisch; diese Ebene wird i.d.R. durch die Oberseite des Tischs gebildet |
| | f | Spezielle YZ-Position der hinteren Blendenkante |
| | f2(1) | Ideale Blendenposition in Z-Richtung für das Objektiv OBJ2 am motorisierten Zoomkörper MZK an der Stützstelle Nr. 1, d.h. bei $\beta1$ |
| | f2(2) | Ideale Blendenposition in Z-Richtung für das Objektiv OBJ2 am motorisierten Zoomkörper MZK an der Stützstelle Nr. 2, d.h. bei $\beta2$ |
| | f2(3) | Ideale Blendenposition in Z-Richtung für das Objektiv OBJ2 am motorisierten Zoomkörper MZK an der Stützstelle Nr. 3, d.h. bei $\beta3$ |
| | f2(4) | Ideale Blendenposition in Z-Richtung für das Objektiv OBJ2 am motorisierten Zoomkörper MZK an der Stützstelle Nr. 4, d.h. bei $\beta4$ |
| | f2(5) | Ideale Blendenposition in Z-Richtung für das Objektiv OBJ2 am motorisierten Zoomkörper MZK an der Stützstelle Nr. 5, d.h. bei $\beta5$ |
| | f2(6) | Ideale Blendenposition in Z-Richtung für das Objektiv OBJ2 am motorisierten Zoomkörper MZK an der Stützstelle Nr. 6, d.h. bei $\beta6$ |
| | f2(7) | Ideale Blendenposition in Z-Richtung für das Objektiv OBJ2 am motorisierten Zoomkörper MZK an der Stützstelle Nr. 7, d.h. bei $\beta7$ |
| | f2(8) | Ideale Blendenposition in Z-Richtung für das Objektiv OBJ2 am motorisierten Zoomkörper MZK an der Stützstelle Nr. 8, d.h. bei $\beta8$ |
| | f2(9) | Ideale Blendenposition in Z-Richtung für das Objektiv OBJ2 am motorisierten Zoomkörper MZK an der Stützstelle Nr. 9, d.h. bei $\beta9$ |
| | f2(10) | Ideale Blendenposition in Z-Richtung für das Objektiv OBJ2 am motorisierten Zoomkörper MZK an der Stützstelle Nr. 10, d.h. bei $\beta10$ |
| | f2(11) | Ideale Blendenposition in Z-Richtung für das Objektiv OBJ2 am motorisierten Zoomkörper MZK an der Stützstelle Nr. 11, d.h. bei $\beta11$ |
| | f2(12) | Ideale Blendenposition in Z-Richtung für das Objektiv OBJ2 am motorisierten Zoomkörper MZK an der Stützstelle Nr. 12, d.h. bei $\beta12$ |
| | f2(13) | Ideale Blendenposition in Z-Richtung für das Objektiv OBJ2 am motorisierten Zoomkörper MZK an der Stützstelle Nr. 13, d.h. bei $\beta13$ |
| | FE | Führungselemente |
| | FF | Frontfläche des Lichtleiters LL |
| | FLi | Flag zur Kennzeichnung der Eignung der aktuellen Objektiv-Zoomkörper-Kombination i bei der eingestellten Vergrößerung für das Verfahren "BF plus" |
| | fBPXLi($\beta$) | Näherungsfunktion zur Beschreibung der X-Blendenlage der linken Blende für die Funktion "BF plus" |

| | | |
|---|---|---|
| fBPXRi($\beta$) | Näherungsfunktion zur Beschreibung der X-Blendenlage der rechten Blende für die Funktion "BF plus" | |
| fBnYi($\beta$) | Näherungsfunktion zur Beschreibung der Y-Blendenlage der vorderen Blende für die Funktion "BF mit bestmöglicher Z-Blendenlage" in der untersten Z-Position | |
| fBxYi($\beta$) | Näherungsfunktion zur Beschreibung der Y-Blendenlage der hinteren Blende für die Funktion "BF mit bestmöglicher Z-Blendenlage" in der obersten Z-Position | |
| fBXLi($\beta$) | Näherungsfunktion zur Beschreibung der X-Blendenlage der linken Blende für die Funktion "BF mit bestmöglicher Z-Blendenlage" | |
| fBXRi($\beta$) | Näherungsfunktion zur Beschreibung der X-Blendenlage der rechten Blende für die Funktion "BF mit bestmöglicher Z-Blendenlage" | |
| fFLi($\beta$) | Flag-Funktion zur Beschreibung der aktuellen Systemumgebung für die Funktion "BF plus" | |
| fPVYi($\beta$) | Näherungsfunktion zur Beschreibung der Y-Blendenlage der vorderen Blende für die Funktion "BF plus" | |
| fPYi($\beta$) | Näherungsfunktion zur Beschreibung der Y-Blendenlage der hinteren Blende für die Funktion "BF plus" | |
| fPZi($\beta$) | Näherungsfunktion zur Beschreibung der Z-Blendenlage der hinteren Blende für die Funktion "BF plus" | |
| fRYi($\beta$) | Näherungsfunktion zur Beschreibung der Y-Blendenlage als Kontrastvorgabe für die Funktion "RC" | |
| fRZi($\beta$) | Näherungsfunktion zur Beschreibung der idealen Z-Blendenlage für die Funktion "RC" | |
| FS | Führungsbahn einer Linearführung, z.B. über eine Führungsstange | |
| $\gamma$ | Neigungswinkel des Lamellenfilms LAF gegenüber der Objektebene OE | |
| g | Spezielle YZ-Position der hinteren Blendenkante | |
| G | Gehäuse | |
| GN | Grundniveau der Beleuchtung über den Prismenfilm PR | |
| GV | Vereinfacht dargestelltes Gehäuse | |
| h | Spezielle YZ-Position der hinteren Blendenkante | |
| H1 | Hinterer Lichtstrahl 1 | |
| H1' | Hinterer Lichtstrahl 1 mit Strahlversatz durch transparente Objektauflage TOA bzw. Glasplatte | |
| H2 | Hinterer Lichtstrahl 2 | |
| H2' | Hinterer Lichtstrahl 2 mit Strahlversatz durch transparente Objektauflage TOA bzw. Glasplatte | |
| HB1 | Höhenabstand von der Leuchtfläche LFL zur Blende BL in der idealen Z-Blendenlage für das Objektiv OBJ1 am Zoomkörper MZK mit dem aktuellen Zoomfaktor $\beta$ | |
| HBH | Höhenabstand von der Leuchtfläche LFL zur hinteren Blende BLQH in der idealen Z-Blendenlage für das aktuelle Objektiv OBJ am Zoomkörper MZK mit dem aktuellen Zoomfaktor $\beta$ | |
| HBH1 | Höhenabstand von der Leuchtfläche LFL zur hinteren Blende BLQH in der idealen Z-Blendenlage für das Objektiv OBJ1 am Zoomkörper MZK mit dem aktuellen Zoomfaktor $\beta$ | |
| HBHw3 | Höhenabstand von der Leuchtfläche LFL zur hinteren Blende BLQH in waagerechter Position | |
| HBV | Höhenabstand von der Leuchtfläche LFL zur vorderen Blende BLQV in der idealen Z-Blendenlage für das aktuelle Objektiv OBJ am Zoomkörper MZK mit dem aktuellen Zoomfaktor $\beta$ | |
| HBVmax | max. Höhenabstand von der Leuchtfläche LFL zur vorderen Blende BLQV | |
| HBVw3 | Höhenabstand von der Leuchtfläche LFL zur vorderen Blende BLQV in waagerechter Position | |
| HEH | Hebel hinten | |
| HER | Ergonomisch vertretbare Bauhöhe der Durchlichteinrichtung DL | |
| HEV | Hebel vorne | |
| HF | Hauptflanke des Mikroprismas PRM | |
| HIB | Hintere Begrenzung der Lichtintensitätserhöhung | |
| HL | Abstand von der Leuchtfläche LFL zur Objektebene OE bzw. zur Oberseite der transparenten Objektauflage TOA | |
| HM | Hinterer Mittenlichtstrahl | |
| HM' | Hinterer Mittenlichtstrahl mit Strahlversatz durch transparente Objektauflage TOA bzw. Glasplatte | |
| HPR | Abstand von der Leuchtfläche LFL zum Prismenfilm PR bzw. zur Drehachse DAPR | |
| HSA | Hall-Sensor zur Adapterplattenerkennung | |
| HSR | Hall-Sensor zur Ringleuchtenerkennung | |
| HST | Hall-Sensor zur Tischerkennung | |
| HT | Z-Verschiebung der Objektebene durch den Tisch KT; entspricht i.d.R. der Tischhöhe | |
| HV | Höhenabstand der vorderen Blende von der Leuchtfläche gemäß Ausführungsbeispiel | |
| hVB | Verschieberichtung zur Anpassung der Blendenkante an die ideale Z-Blendenlage | |
| i | Spezielle YZ-Position der hinteren Blendenkante | |
| $\varphi$ | Neigungswinkel des Prismenfilms PR gegenüber der Objektebene OE und ggf. Neigung der Blende, in der der Prismenfilm PR angebracht ist oder angebracht werden könnte | |
| j | Spezielle YZ-Position der hinteren Blendenkante | |
| k | Spezielle YZ-Position der hinteren Blendenkante | |

| | |
|---|---|
| K | Kamera zur Dokumentation |
| Kh1 | Kurve, die die ideale Blendenlage für OBJ1 an MZK abhängig von β darstellt |
| Kh2o | oberer Kurvenabschnitt, der die ideale Blendenlage für OBJ2 an MZK abhängig von β darstellt (zwischen βmin und βP2) |
| Kh2omin | Kleinster Wert des oberen Kurvenabschnitts Kh2o |
| Kh2u | unterer Kurvenabschnitt, der die ideale Blendenlage für OBJ2 an MZK abhängig von β darstellt (zwischen βP2 und βmax) |
| Kh2umax | Größter Wert des unteren Kurvenabschnitts Kh2u |
| Kh3 | Kurve, die die ideale Blendenlage für OBJ3 an MZK abhängig von β darstellt |
| KLD | Kaltlichtquelle zur Lichtversorgung der Durchlichteinrichtung DL |
| KT | Kreuztisch, motorisch |
| KTF | Feste Grundplatte von Kreuztisch KT |
| KTX | X-Schlitten von Kreuztisch KT |
| KTY | Y-Schlitten von Kreuztisch KT |
| I | Spezielle YZ-Position der hinteren Blendenkante |
| L | Linker Abbildungskanal |
| L1 | Linker Lichtstrahl 1 |
| L1' | Linker Lichtstrahl 1 mit Strahlversatz durch transparente Objektauflage TOA bzw. Glasplatte |
| L2 | Linker Lichtstrahl 2 |
| L2' | Linker Lichtstrahl 2 mit Strahlversatz durch transparente Objektauflage TOA bzw. Glasplatte |
| L3 | Linker Lichtstrahl 3 |
| L3' | Linker Lichtstrahl 3 mit Strahlversatz durch transparente Objektauflage TOA bzw. Glasplatte |
| L4 | Linker Lichtstrahl 4 |
| L4' | Linker Lichtstrahl 4 mit Strahlversatz durch transparente Objektauflage TOA bzw. Glasplatte |
| L5 | Linker Lichtstrahl 5 |
| L5' | Linker Lichtstrahl 5 mit Strahlversatz durch transparente Objektauflage TOA bzw. Glasplatte |
| L6 | Linker Lichtstrahl 6 |
| L6' | Linker Lichtstrahl 6 mit Strahlversatz durch transparente Objektauflage TOA bzw. Glasplatte |
| LAF | Lamellenfilm |
| LB | Wirksame Länge der Blende BL |
| LBH | Abstand zwischen der hinteren Blendenkante BH und dem Drehpunkt DAH der hinteren Blende BLH |
| LBV | Abstand zwischen der vorderen Blendenkante BV und dem Drehpunkt DAV der vorderen Blende BLV |
| LED | Anzeige-LED |
| LFL | Leuchtfläche der Lichtquelle LQ |
| LFLX | Ausdehnung der Leuchtfläche LFL in X-Richtung |
| LFLY | Ausdehnung der Leuchtfläche LFL in Y-Richtung |
| LHH | Länge des hinteren Hebels HEH zwischen den Drehachsen D5 und D6 |
| LHV | Länge des vorderen Hebels HEV zwischen den Drehachsen D3 und D4 |
| LL | Lichtleiter |
| LLYN | Ausdehnung der Leuchtfläche LFL in negativer Y-Richtung |
| LLYP | Ausdehnung der Leuchtfläche LFL in positiver Y-Richtung |
| LM | Linker Mittenlichtstrahl |
| LM' | Linker Mittenlichtstrahl mit Strahlversatz durch transparente Objektauflage TOA bzw. Glasplatte |
| LO | Oberste Kante des Lamellenfilms |
| LQ | Lichtquelle |
| LV | Lichtverstärkung durch den Prismenfilm PR |
| LX | Leuchtflächenausdehnung in der X-Richtung für Berücksichtigung der Objektivrandstrahlen |
| LY | Leuchtflächenausdehnung in der Y-Richtung für Berücksichtigung der Objektivrandstrahlen |
| LYN | wirksame Ausdehnung der Lichtquelle in negativer Y-Richtung |
| m | Spezielle YZ-Position der hinteren Blendenkante |
| M1 | Mittlerer Lichtstrahl 1 |
| M1' | Mittlerer Lichtstrahl 1 mit Strahlversatz durch transparente Objektauflage TOA bzw. Glasplatte |
| M2 | Mittlerer Lichtstrahl 2 |
| M2' | Mittlerer Lichtstrahl 2 mit Strahlversatz durch transparente Objektauflage TOA bzw. Glasplatte |
| MA | Magnet in Adapterplatte AP zur Adapterplattenerkennung |
| MAB | Motorisierte Aperturblende |
| MFT | Motorisierte Fokussiereinrichtung |
| MLQ | Helligkeitsmaximum mit Lichtquelle LQ, d.h. ohne Prismenfilm PR |

| MPR | Helligkeitsmaximum mit Prismenfilm PR |
|---|---|
| MR | Magnet zur Ringleuchtenerkennung |
| MT | Magnet zur Tischerkennung |
| MZK | Motorisierter Zoomkörper |
| n | Spezielle YZ-Position der hinteren Blendenkante |
| nG | Brechzahl der transparenten Objektauflage TOA |
| nO | Brechzahl des Objektes OB |
| NA | Numerische Apertur |
| NA1 | Numerische Apertur von Objektiv Nr. 1 |
| NA2 | Numerische Apertur von Objektiv Nr. 2 |
| NF | Nebenflanke des Mikroprismas PRM |
| o | Spezielle YZ-Position der hinteren Blendenkante |
| OA | Optische Achse des Objektivs |
| OB | Objekt |
| OBJ | Objektiv |
| OBJ1 | Objektiv Nr. 1 |
| OBJ2 | Objektiv Nr. 2 mit weit von OE entfernter EP |
| OBJ3 | Objektiv Nr. 3 |
| OE | Objektebene (ohne Objekt identisch mit der Objektauflage) |
| OH | Höhe des Objektes OB incl. des Umgebungsmediums (z.B. Petrischale mit Nährlösung) von der Objektauflage, bzw. von der Oberseite der transparenten Objektauflage TOA, bis zur Objektebene OE |
| OK | Okular |
| OOE | Verschiebeweg der Blende BL aus der idealen Blendenposition in Richtung zur Objektebene OE hinzeigend |
| Ö | Öffnungsabstand zwischen dem Strahlquerschnitt-Radius in der idealen Z-Blendenlage Zh1 und der optischen Achse OA |
| ÖR | Reduzierter Öffnungsabstand zwischen der Blendenkante BK und der optischen Achse OA zur Kontrasterhöhung |
| ÖDF | Negativer Öffnungsabstand, wobei die Blende BL den vollen Strahlquerschnitt der zurückprojizierten Abbildungsstrahlen abdeckt, so dass die Hellfeldbeleuchtung in eine Dunkelfeldbeleuchtung übergeht |
| ÖN | Negativer Öffnungsabständ, d.h. die Blende deckt bereits die optische Achse ab |
| p | Spezielle YZ-Position der hinteren Blendenkante |
| PB | Plateaubreite der Lichtintensität des umverteilten Beleuchtungslichtes um die Haupt-Ausbreitungsrichtung STA zwischen PMI und PRA |
| PMI | Rand der Plateaubreite PB, der den kleineren Abstand zur ursprünglichen Haupt-Ausbreitungsrichtung STE aufweist; PB ist durch den Abfall bzw. Anstieg der Lichtintensität auf den Wert MLQ definiert |
| PR | Prismenfilm |
| PRA | Rand der Plateaubreite PB, der den größeren Abstand zur ursprünglichen Haupt-Ausbreitungsrichtung STE aufweist; PB ist durch den Abfall bzw. Anstieg der Lichtintensität auf den Wert MLQ definiert |
| PRM | Mikroprisma |
| PRS | Mikroprismenstruktur |
| PRYL | Wirksame Länge des Prismenfilms PR |
| PRYP | Wirksame Länge des Prismenfilms PR in positiver Y-Richtung |
| PRYN | Wirksame Länge des Prismenfilms PR in negativer Y-Richtung |
| q | Spezielle YZ-Position der vorderen Blendenkante |
| r | Spezielle YZ-Position der vorderen Blendenkante |
| R | Rechter Abbildungskanal |
| R1 | Rechter Lichtstrahl 1 |
| R1' | Rechter Lichtstrahl 1 mit Strahlversatz durch transparente Objektauflage TOA bzw. Glasplatte |
| R2 | Rechter Lichtstrahl 2 |
| R2' | Rechter Lichtstrahl 2 mit Strahlversatz durch transparente Objektauflage TOA bzw. Glasplatte |
| R3 | Rechter Lichtstrahl 3 |
| R3' | Rechter Lichtstrahl 3 mit Strahlversatz durch transparente Objektauflage TOA bzw. Glasplatte |
| R4 | Rechter Lichtstrahl 4 |
| R4' | Rechter Lichtstrahl 4 mit Strahlversatz durch transparente Objektauflage TOA bzw. Glasplatte |
| R5 | Rechter Lichtstrahl 5 |
| R5' | Rechter Lichtstrahl 5 mit Strahlversatz durch transparente Objektauflage TOA bzw. Glasplatte |
| R6 | Rechter Lichtstrahl 6 |
| R6' | Rechter Lichtstrahl 6 mit Strahlversatz durch transparente Objektauflage TOA bzw. Glasplatte |

| | | |
|---|---|---|
| RH | Hinterer Randstrahl zwischen Leuchtfläche und Objektiv |
| RL | Ringleuchte RL, die im Tisch optional montierbar ist |
| RM | Rechter Mittenlichtstrahl |
| RM' | Rechter Mittenlichtstrahl mit Strahlversatz durch transparente Objektauflage TOA bzw. Glasplatte |
| RV | Vorderer Randstrahl zwischen Leuchtfläche und Objektiv |
| s | Spezielle YZ-Position der vorderen Blendenkante |
| S3 | Positions-Sensor für den Schlitten 3 |
| S3 (off) | Nicht aktivierter Positions-Sensor S3 für den Schlitten 3 |
| S3 (on) | Aktivierter Positions-Sensor S3 für den Schlitten 3 |
| S4 | Positions-Sensor für den Schlitten 4 |
| S4 (off) | Nicht aktivierter Positions-Sensor S4 für den Schlitten 4 |
| S4 (on) | Aktivierter Positions-Sensor S4 für den Schlitten 4 |
| S5 | Positions-Sensor für den Schlitten 5 |
| S5 (off) | Nicht aktivierter Positions-Sensor S5 für den Schlitten 5 |
| S5 (on) | Aktivierter Positions-Sensor für den Schlitten 5 |
| S5H | Positions-Hilfssensor für den Schlitten 5 |
| S5H (off) | Nicht aktivierter Positions-Hilfssensor S5H für den Schlitten 5 |
| S5H (on) | Aktivierter Positions-Hilfssensor S5H für den Schlitten 5 |
| S6 | Positions-Sensor für den Schlitten 6 |
| S6 (off) | Nicht aktivierter Positions-Sensor S6 für den Schlitten 6 |
| S6 (on) | Aktivierter Positions-Sensor S6 für den Schlitten 6 |
| S6H | Positions-Hilfssensor für den Schlitten 6 |
| S6H (off) | Nicht aktivierter Positions-Hilfssensor S6H für den Schlitten 6 |
| S6H (on) | Aktivierter Positions-Hilfssensor S6H für den Schlitten 6 |
| SADJ | Adjust-Scrollrad |
| SBRI | Brightness-Scrollrad |
| SCHH | Geführter Schlitten hinten |
| SCHV | Geführter Schlitten vorne |
| SF3 | Schaltfahne 3 zur Aktivierung von Positions-Sensor S3 |
| SF4 | Schaltfahne 4 zur Aktivierung von Positions-Sensor S4 |
| SF5 | Schaltfahne 5 zur Aktivierung von Positions-Sensor S5 und ggf. Positions-Hilfssensor S5H |
| SF6 | Schaltfahne 6 zur Aktivierung von Positions-Sensor S6 und ggf. Positions-Hilfssensor S6H |
| SI | Sicherheitsabstand |
| SL3 | Schlitten 3 |
| SL4 | Schlitten 4 |
| SL5 | Schlitten 5 |
| SL6 | Schlitten 6 |
| SO | Öffnungsabstand vom blendenseitigen Randstrahl der zurückprojizierten Abbildungsstrahlen zur optischen Achse OA, der durch die um den Verschiebeweg OOE zur Objektebene OE hinzeigend verschobenen Blende BL abgedeckt wird |
| SP | Umlenkspiegel |
| SQ | Strahlquerschnitt in idealen z-Blendenlage Zh1 |
| SR1 | Bedienelement 1 in der Durchlichteinrichtung DL |
| SR2 | Bedienelement 2 in der Durchlichteinrichtung DL |
| SR3 | Bedienelement 3 in der Durchlichteinrichtung DL |
| ST1 | Lichtstrahl 1 |
| ST2 | Lichtstrahl 2 |
| ST3 | Lichtstrahl 3 |
| ST4 | Lichtstrahl 4 |
| ST5 | Lichtstrahl 5 |
| STA | Austretender Lichtstrahl |
| STE | Eintretender Lichtstrahl |
| STG | Durch den Lamellenfilm LAF gesperrter Lichtstrahl vom Rand der Leuchtfläche LFL |
| STL | Lichtstrahl links |
| STR | Lichtstrahl rechts |
| SU | Öffnungsabstand vom blendenseitigen Randstrahl der zurückprojizierten Abbildungsstrahlen zur optischen Achse OA, der durch die um den Verschiebeweg UOE von der Objektebene OE wegzeigend verschobenen Blende BL abgedeckt wird |

| | | |
|---|---|---|
| SV | Strahlversatz | |
| t | Dicke des Prismenfilms PR | |
| T | Tubus | |
| TBF | Taster zur Hellfeld-Einstellung mit integrierter Anzeige-LED | |
| TBFP | Taster zur "BF plus"-Einstellung mit integrierter Anzeige-LED | |
| TBM | Taster zur "Best Mode"-Einstellung mit integrierter Anzeige-LED | |
| TDF | Taster zur Dunkelfeld-Einstellung mit integrierter Anzeige-LED | |
| TE | Teilung der Mikroprismenstruktur PRS | |
| TM | Trägermaterial für Mikroprismen des Prismenfilms PR | |
| TMEM1 | Memory-Taste 1 mit integrierter Anzeige-LED | |
| TMEM2 | Memory-Taste 2 mit integrierter Anzeige-LED | |
| TMEM3 | Memory-Taste 3 mit integrierter Anzeige-LED | |
| TMEM4 | Memory-Taste 4 mit integrierter Anzeige-LED | |
| TOA | Transparente Objektauflage | |
| TR | Träger | |
| TRC | Taster zur "RC"-Einstellung mit integrierter Anzeige-LED | |
| TSH | Shutter-Taster mit integrierter Anzeige-LED | |
| u | Spezielle YZ-Position der vorderen Blendenkante | |
| Ü | Überlappung von zwei gegenüber liegenden Blenden | |
| UOE | Verschiebeweg der Blende BL aus der idealen Blendenposition in Richtung von der Objektebene OE wegzeigend | |
| v | Spezielle YZ-Position der vorderen Blendenkante | |
| V1 | Vorderer Lichtstrahl 1 | |
| V1' | Vorderer Lichtstrahl 1 mit Strahlversatz durch transparente Objektauflage TOA bzw. Glasplatte | |
| V2 | Vorderer Lichtstrahl 2 | |
| V2' | Vorderer Lichtstrahl 2 mit Strahlversatz durch transparente Objektauflage TOA bzw. Glasplatte | |
| VB | Verschieberichtung der Blende BL | |
| VBH | Verschieberichtung der hinteren Blende | |
| VBHH | Verschieberichtung der Hebelverstellung für die hintere Blende | |
| VBL | Verschieberichtung der linken Blende | |
| VBLH | Verschieberichtung der hinteren Blende parallel zur Leuchtfläche LFL | |
| VBLV | Verschieberichtung der vorderen Blende parallel zur Leuchtfläche LFL | |
| VBR | Verschieberichtung der rechten Blende | |
| VBV | Verschieberichtung der vorderen Blende | |
| VBVH | Verschieberichtung der Hebelverstellung für die vordere Blende | |
| VBYH | Verschiebung Begrenzungskante der hinteren Blende | |
| VBYV | Verschiebung Begrenzungskante der vorderen Blende | |
| VHL | Verschieberichtung der Lichtquelle LQ parallel zur Leuchtfläche LFL | |
| VM | Vorderer Mittenlichtstrahl | |
| VM' | Vorderer Mittenlichtstrahl mit Strahlversatz durch transparente Objektauflage TOA bzw. Glasplatte | |
| VOB | Vordere Begrenzung der Lichtintensitätserhöhung | |
| VPR | Verschieberichtung des Prismenfilms PR | |
| VR | Verschieberichtung | |
| VSH | Versatz zwischen der Ebene, die durch die Drehpunktachsen DAH, D6 aufgespannt wird und der hinteren Blendenkante BH | |
| VSV | Versatz zwischen der Ebene, die durch die Drehpunktachsen DAV, D4 aufgespannt wird und der vorderen Blendenkante BV | |
| WH | Verschieberichtung der hinteren Blende senkrecht zur Leuchtfläche LFL | |
| WL | Verschieberichtung der Lichtquelle LQ senkrecht zur Leuchtfläche LFL | |
| VW | Verschieberichtung der vorderen Blende senkrecht zur Leuchtfläche LFL | |
| VYH | Verschiebung Begrenzungskante der hinteren Blende gemäß Ausführungsbeispiel | |
| YV | Verschiebung Begrenzungskante der vorderen Blende gemäß Ausführungsbeispiel | |
| ω | Neigungswinkel der vorderen Blende BLV gegenüber der Objektebene OE | |
| WB | Wirksame Blendenbreite | |
| X | X-Koordinatenachse des XYZ-Koordinatensystems | |
| Xmin | kleinstmögliche X-Koordinate der linken Blendenkante | |
| Xmax | größtmögliche X-Koordinate der rechten Blendenkante | |
| XML | motorisch eingestellte X-Koordinate der linken Blendenkante | |

| | | |
|---|---|---|
| XMR | motorisch eingestellte X-Koordinate der rechten Blendenkante | |
| Y | Y-Koordinatenachse des XYZ-Koordinatensystems | |
| YH | Y-Koordinate der hinteren Drehachse DAH | |
| YBH | Y-Koordinate der hinteren Blendenkante BH | |
| YBV | Y-Koordinate der vorderen Blendenkante BV | |
| YLH | Y-Koordinate der hinteren Leuchtflächenbegrenzung | |
| YLV | Y-Koordinate der vorderen Leuchtflächenbegrenzung | |
| Ymin | kleinstmögliche Y-Koordinate der vorderen Blendenkante | |
| Ymax | größtmögliche Y-Koordinate der hinteren Blendenkante | |
| YMH | motorisch eingestellte Y-Koordinate der hinteren Blendenkante | |
| YMV | motorisch eingestellte Y-Koordinate der vorderen Blendenkante | |
| YV | Y-Koordinate der vorderen Drehachse DAV | |
| Z | Z-Koordinatenachse des XYZ-Koordinatensystems | |
| ZAP | Optional einlegbares Zubehör in Adapterplatte AP bzw. die Schnittstelle hierfür (z.B. Polarisationsfilter, Einlegeblenden, Farbfilter, etc.) | |
| ZBH | Z-Koordinate der hinteren Blendenkante BH | |
| ZBV | Z-Koordinate der vorderen Blendenkante BV | |
| ZDAmax | größtmögliche Z-Koordinate der Blendenkante mit Adapter ohne Tisch | |
| ZDATmax | größtmögliche Z-Koordinate der Blendenkante mit Adapter und Tisch | |
| ZDmax | Z-Koordinate der obersten Blendenposition, die konstruktiv realisierbar ist | |
| ZDmin | Z-Koordinate der untersten Blendenposition ohne Tisch, die konstruktiv realisierbar ist | |
| ZDTmax | größtmögliche Z-Koordinate der Blendenkante mit Tisch, die ohne weitere erfindungsgemäße Maßnahmen erreichbar ist | |
| ZDTmin | kleinstmögliche Z-Koordinate der Blendenkante mit Tisch | |
| ZEP | Z-Koordinate der Eintrittspupille des betrachteten Objektivs in der aktuellen Zoomvergrößerung | |
| ZEP1 | Z-Koordinate der Eintrittspupille für das Objektiv Nr. 1 in der aktuellen Zoomvergrößerung | |
| ZEP2 | Z-Koordinate der Eintrittspupille für das Objektiv Nr. 2 in der aktuellen Zoomvergrößerung | |
| ZEP3 | Z-Koordinate der Eintrittspupille für das Objektiv Nr. 3 in der aktuellen Zoomvergrößerung | |
| ZF | Z-Koordinate der Führungsbahn-Bezugsachse | |
| Zh | Z-Koordinate der Blendenkante BK in der idealen Z-Blendenposition für das aktuelle Objektiv in der aktuellen Zoomvergrößerung | |
| Zh1 | Z-Koordinate der Blendenkante BK in der idealen Z-Blendenposition für das Objektiv Nr. 1 in der aktuellen Zoomvergrößerung | |
| Zh1max | maximaler Wert von Zh für das Objektiv Nr. 1 | |
| Zh1min | minimaler Wert von Zh für das Objektiv Nr. 1 | |
| Zh2 | Z-Koordinate der Blendenkante BK in der idealen Z-Blendenposition für das Objektiv Nr. 2 in der aktuellen Zoomvergrößerung | |
| Zh2max | maximaler Wert von Zh für das Objektiv Nr. 2 | |
| Zh2min | minimaler Wert von Zh für das Objektiv Nr. 2 | |
| Zh3 | Z-Koordinate der Blendenkante BK in der idealen Z-Blendenposition für das Objektiv Nr. 3 in der aktuellen Zoomvergrößerung | |
| Zh3max | maximaler Wert von Zh für das Objektiv Nr. 3 | |
| Zh3min | minimaler Wert von Zh für das Objektiv Nr. 3 | |
| Zhmin | Kleinstmögliche Z-Koordinate der hinteren Blendenkante ohne Tisch | |
| ZhZ | Z-Koordinate der hinteren Blendenkante in einer speziellen Zwischenposition ohne Tisch, in der sich die hintere Blende kollisionsfrei nach hinten bewegen lässt | |
| ZH | Z-Koordinate der hinteren Drehachse DAH | |
| ZHL | Z-Koordinate der Leuchtfläche LFL | |
| ZL | Z-Koordinate der linken Blendenkante | |
| Zmin | in der aktuellen Systemumgebung kleinstmöglich einstellbare Z-Koordinate | |
| Zmax | in der aktuellen Systemumgebung größtmöglich einstellbare Z-Koordinate | |
| ZMH | motorisch eingestellte Z-Koordinate der hinteren Blendenkante | |
| ZMV | motorisch eingestellte Z-Koordinate der vorderen Blendenkante | |
| ZR | Z-Koordinate der rechten Blendenkante | |
| ZThmin | Kleinstmögliche Z-Koordinate der hinteren Blendenkante mit Tisch | |
| ZThZ | Z-Koordinate der hinteren Blendenkante in einer speziellen Zwischenposition mit Tisch, in der sich die hintere Blende kollisionsfrei nach hinten bewegen lässt | |
| ZTRmax | Größtmögliche Z-Koordinate der hinteren Blendenkante mit Tisch und Ringleuchte RL | |

ZTvmax      Größtmögliche Z-Koordinate der vorderen Blendenkante mit Tisch

Zvmax      Größtmögliche Z-Koordinate der vorderen Blendenkante ohne Tisch

ZV      Z-Koordinate der vorderen Drehachse DAV

ZYmin      Z-Koordinate der vorderen Blendenkante zu Ymin

ZYmax      Z-Koordinate der hinteren Blendenkante zu Ymax

**Patentansprüche**

1. Vorrichtung zur Durchlichtbeleuchtung für Lichtmikroskope, insbesondere Stereomikroskope oder Makroskope, mit veränderlicher wirksamer Eintrittspupille eines Objektivs, mit einer Lichtquelle (LQ) zum Aussenden eines Beleuchtungslichtbündels, mit einer Halteeinrichtung (TOA) zum Halten einer zu untersuchenden Probe und mit mindestens einer Blendenkante (BK) zum Beschneiden des Beleuchtungslichtbündels, wobei die Blendenkante (BK) zwischen der Halteeinrichtung (TOA) und der Lichtquelle (LQ) angeordnet ist, wobei die Blendenkante (BK) sich quer zu einer optischen Achse (OA) eines Lichtmikroskops erstreckt, welches in einem Betriebszustand an der Vorrichtung zur Durchlichtbeleuchtung positionierbar ist, und wobei ein Strahlengang des Beleuchtungslichts zwischen der Blendenkante (BK) und einer von der Halteeinrichtung (TOA) gehaltenen Probe frei ist von verstellbaren strahlfokussierenden Komponenten, wobei eine Position der Blendenkante (BK) in Richtung (Z) der optischen Achse (OA) unabhängig von einer Position der Blendenkante (BK) quer zur optischen Achse (OA) variierbar ist, **dadurch gekennzeichnet, dass** zum Anpassen des Strahlengangs des Beleuchtungslichts an die wirksame Eintrittspupille des Objektivs (OBJ1, OBJ2, OBJ3) Mittel zum variablen Positionieren der Blendenkante (BK) in Richtung (Z) der optischen Achse (OA) vorhanden sind, wobei die Position der Blendenkante (BK) in Richtung (Z) der optischen Achse (OA) in Abhängigkeit eines Objektivtyps, einer Zoomstellung und eines Mikroskoptyps automatisch eingestellt wird.

2. Vorrichtung nach Anspruch 1, **dadurch gekennzeichnet, dass** zum Verändern des Kontrasts Mittel zum variablen Positionieren der Blendenkante (BK) in einer Richtung (VB) quer zur optischen Achse (OA) vorhanden sind.

3. Vorrichtung nach Anspruch 1 oder 2 **dadurch gekennzeichnet, dass** die Blendenkante (BK) eine lineare Blendenkante ist.

4. Vorrichtung nach einem der Ansprüche 1 bis 3, **dadurch gekennzeichnet, dass** die Blendenkante (BK) eine Kante (BH) einer mechanischen Blende ist.

5. Vorrichtung nach einem der Ansprüche 1 bis 3, **dadurch gekennzeichnet, dass** die Blendenkante (BK) durch ein LCD-Array gebildet ist.

6. Vorrichtung nach einem der Ansprüche 1 bis 5, **dadurch gekennzeichnet, dass** zum Variieren einer wirksamen Leuchtfläche (LFL) der Lichtquelle (LQ) mindestens eine weitere Blende vorhanden ist, die unmittelbar vor der Lichtquelle (LQ) positioniert ist.

7. Vorrichtung nach einem der Ansprüche 1 bis 6, **dadurch gekennzeichnet, dass** zum Beschneiden des Beleuchtungslichtbündels zwischen der Halteeinrichtung (TOA) und der Lichtquelle (LQ) mindestens eine weitere variabel positionierbare Blende vorhanden ist.

8. Vorrichtung nach einem der Ansprüche 1 bis 7, **dadurch gekennzeichnet, dass** zum Verschieben der Blendenkante (BK) in Richtung der optischen Achse (OA) und in Richtung quer zur optischen Achse (OA) eine Schlittenmechanik mit einem ersten Schlitten (SL6) und einem zweiten Schlitten (SL5) vorhanden ist.

9. Vorrichtung nach einem der Ansprüche 1 bis 8,
**dadurch gekennzeichnet,**
**dass** eine erste mechanische Blende (BLH) und eine zweite mechanische Blende (BLV) vorhanden sind,
**dass** die Blendenkante durch eine Kante (BH) der ersten mechanischen Blende (BLH) oder durch eine Kante (BV) der zweiten mechanischen Blende (BLV) gebildet ist, und
**dass** zum Verschieben der Blendenkante (BH, BV) in Richtung (Z) der optischen Achse (OA) und in Richtung (VB) quer zur optischen Achse (OA) eine erste Schlittenmechanik mit einem ersten Schlitten (SL6) und einem zweiten Schlitten (SL5) für die erste mechanische Blende (BLH) und eine zweite Schlittenmechanik mit einem dritten Schlitten (SL3) und einem vierten Schlitten (SL4) für die zweite mechanische Blende (BLV) vorhanden ist.

10. Vorrichtung nach einem der Ansprüche 1 bis 9,
**dadurch gekennzeichnet,**
**dass** die Blendenkante (BK, BH, BV) das Beleuchtungslichtbündel asymmetrisch beschneidet.

11. Vorrichtung nach einem der Ansprüche 1 bis 10,
**dadurch gekennzeichnet,**
**dass** die Lichtquelle (LQ) eine flächige Lichtquelle (LQ), insbesondere ein Mehrzahl von LEDs, bevorzugt eine Weißlicht-LED, ist.

12. Vorrichtung nach einem der Ansprüche 1 bis 11,
**dadurch gekennzeichnet,**
**dass** Mittel zum Drehen der Blendenkante (BK) um die optische Achse vorhanden sind.

13. Verfahren zur Durchlichtbeleuchtung für ein Lichtmikroskop mit veränderlicher wirksamer Eintrittspupille eines Objektivs,
bei dem eine von einer Halteeinrichtung (TOA) gehaltene Probe (OB) mit Beleuchtungslicht von einer Lichtquelle (LQ) beaufschlagt wird und
bei dem ein von der Lichtquelle (LQ) ausgehendes Beleuchtungslichtbündel von einer zwischen der Halteeinrichtung (TOA) und der Lichtquelle (LQ) angeordneten Blendenkante (BK) beschnitten wird, wobei ein Strahlengang des Beleuchtungslichts zwischen der Blendenkante (BK) und der von der Halteeinrichtung (TOA) gehaltenen Probe (OB) frei ist von verstellbaren strahlfokussierenden Komponenten,
**dadurch gekennzeichnet,**
**dass** die Blendenkante (BK) sich quer zu einer optischen Achse (OA) erstreckt und abhängig von der Lage der wirksamen Eintrittspupille des Objektivs (OBJ1, OBJ2, OBJ3) in Richtung (Z) der optischen Achse (OA) positioniert wird, wobei die Position der Blendenkante (BK) in Richtung (Z) der optischen Achse (OA) in Abhängigkeit eines Objektivtyps, einer Zoomstellung und eines Mikroskoptyps automatisch eingestellt wird.

14. Verfahren nach Anspruch 13,
**dadurch gekennzeichnet,**
**dass** vor dem Start einer Blendenpositionierung eine Absolutposition der Blendenkante (BK, BH, BV) optisch und/oder mechanisch bestimmt wird.

15. Verfahren nach Anspruch 13 oder 14,
**dadurch gekennzeichnet,**
**dass** die Blendenkante (BK, BH, BV) zum Einstellen des Kontrasts in einer Richtung (VB) quer zur optischen Achse (OA) positioniert wird.

16. Verfahren nach einem der Ansprüche 13 bis 15,
**dadurch gekennzeichnet,**
**dass** die Blendenkante (BK) in einer Ebene der wirksamen Eintrittspupille des Objektivs (OBJ1, OBJ2, OBJ3) positioniert wird.

17. Verfahren nach einem der Ansprüche 13 bis 16,
**dadurch gekennzeichnet,**
**dass** eine Position der Blendenkante (BK) in der Ebene der wirksamen Eintrittspupille bestimmt wird, indem

a) die Position der Blendenkante (BK) in Richtung (Z) der optischen Achse (OA) des Objektivs (OBJ1, OBJ2, OBJ3) variiert wird,

b) für jede Position der Blendenkante (BK) in Richtung (Z) der optischen Achse (OA) mindestens teilweise ein Mikroskopbild aufgenommen wird,

c) für jedes Mikroskopbild ein Beleuchtungsparameter bestimmt wird,

d) als eine Position der Blendenkante (BK) in der Ebene der wirksamen Eintrittspupille diejenige Position der Blendenkante (BK) in Richtung der optischen Achse (OA) festgelegt wird, bei der ein Verlauf des Beleuchtungsparameter aufgetragen gegen die Position Blendenkante (BK) in Richtung (Z) der optischen Achse (OA) eine vorbestimmte Charakteristik aufweist und

e) die festgelegte Position abgespeichert wird.

**18.** Verfahren nach Anspruch 17,
**dadurch gekennzeichnet,**
**dass** der Beleuchtungsparameter ein Maß ist für einen Intensitätsgradienten in einer Richtung (X, Y) quer zur Blendenkante (BK), einen Bildkontrast, einen Kontrastumfang des Bilds, eine Bildhomogenität und/oder einen Schattenwurf im Mikroskopbild.

**19.** Verfahren nach einem der Ansprüche 17 oder 18,
**dadurch gekennzeichnet,**
**dass** für jedes Mikroskopbild als Beleuchtungsparameter ein Intensitätsgradient bestimmt wird und
**dass** die Blendenkante (BK) auf diejenige Position in Richtung (Z) der optischen Achse (OA) eingestellt wird, bei der ein Verlauf des Intensitätsgradienten aufgetragen gegen die Position Blendenkante (BK) in Richtung (Z) der optischen Achse (OA) einen Nulldurchgang aufweist.

**20.** Verfahren nach einem der Ansprüche 17 bis 19,
**dadurch gekennzeichnet,**
**dass** die Mikroskopbilder mit einer Digitalkamera (K) aufgenommen werden und der Beleuchtungsparameter Intensitätsgradient durch Auswertung der von der Digitalkamera (K) gelieferten Daten bestimmt wird.

**21.** Verfahren nach einem der Ansprüche 17 bis 20,
**dadurch gekennzeichnet,**
**dass** auf Grundlage eines Beleuchtungsparameters, der für eine zurückliegende Position der Blendenkante (BK) in Richtung (Z) der optischen Achse (OA) bestimmt wurde, eine nächstfolgende Position der Blendenkante (BK) in Richtung (Z) der optischen Achse (OA) festgelegt wird, wobei die nächstfolgende Position von der zurückliegenden Position umso weiter beabstandet ist, je größer der Betrag eines für die zurückliegende Position bestimmten Beleuchtungsparameters ist, und
**dass** eine Richtung, in welcher die nächstfolgende Position von der zurückliegenden Position beabstandet ist, aus einem Vorzeichen des für die zurückliegende Position bestimmten Beleuchtungsparameters ermittelt wird.

**22.** Verfahren nach einem der Ansprüche 13 bis 21,
**dadurch gekennzeichnet,**
**dass** eine Leuchtfläche (LFL) der Lichtquelle (LQ) einer tatsächlich wirksamen Rückprojektion des Beleuchtungslichts angepasst wird.

**23.** Verfahren nach einem der Ansprüche 13 bis 22,
**dadurch gekennzeichnet,**
**dass** Einstellungen der mindestens einen Blendenkante (BK) und/oder weiterer Blenden, insbesondere nach Benutzereingabe, automatisiert vorgenommen werden.

**24.** Verfahren nach einem der Ansprüche 13 bis 23,
**dadurch gekennzeichnet,**
**dass** Einstellungen der mindestens einen Blendenkante (BK) und/oder weiterer Blenden und/oder weiterer optischer Komponenten abhängig von einer festgestellten Konfiguration von vorhandenen, insbesondere optischen, Komponenten automatisiert vorgenommen werden.

**25.** Mikroskopsystem mit einem Lichtmikroskop und einer Vorrichtung zur Durchlichtbeleuchtung nach einem der Ansprüche 1 bis 12.

**26.** Mikroskopsystem nach Anspruch 25,
**dadurch gekennzeichnet,**

**dass** eine Steuereinrichtung vorhanden ist, die mit Bestandteilen des Lichtmikroskops und der Vorrichtung zur Durchlichtbeleuchtung verbunden ist und zum Ansteuern des Lichtmikroskops und der Vorrichtung zur Durchlichtbeleuchtung zur Durchführung eines Verfahrens nach einem der Ansprüche 13 bis 24 eingerichtet ist.

27. Mikroskopsystem nach Anspruch 25 oder 26,
**dadurch gekennzeichnet,**
**dass** eine Speichereinrichtung vorhanden ist, in welcher Einstellungen der Durchlichteinrichtung und des Lichtmikroskops, insbesondere der mindestens einen Blendenkante (BK), abgespeichert werden.

**Claims**

1. Apparatus for transmitted-light illumination for light microscopes, in particular stereo microscopes or macroscopes, with a variable effective entrance pupil of an objective,
having a light source (LQ) for emitting an illumination beam,
having a holding device (TOA) for holding a sample that is to be examined and having a stop edge (BK) for cropping the illumination beam,
wherein the stop edge (BK) is arranged between the holding device (TOA) and the light source (LQ),
wherein the stop edge (BK) extends transversely to an optical axis (OA) of a light microscope that is positionable in one operating state at the apparatus for transmitted-light illumination, and
wherein a beam path of the illumination light between the stop edge (BK) and a sample that is held by the holding device (TOA) is free from adjustable beam-focusing components,
wherein a position of the stop edge (BK) is variable in the direction (Z) of the optical axis (OA) independently of a position of the stop edge (BK) transversely to the optical axis (OA),
**characterized**
**in that** means for variably positioning the stop edge (BK) in the direction (Z) of the optical axis (OA) are present for adapting the beam path of the illumination light to the effective entrance pupil of the objective (OBJ1, OBJ2, OBJ3), wherein the position of the stop edge (BK) in the direction (Z) of the optical axis (OA) is set automatically in dependence on an objective type, a zoom setting and a microscope type.

2. Apparatus according to Claim 1,
**characterized**
**in that** means for variably positioning the stop edge (BK) in a direction (VB) transversely to the optical axis (OA) are present for changing the contrast.

3. Apparatus according to Claim 1 or 2,
**characterized**
**in that** the stop edge (BK) is a linear stop edge.

4. Apparatus according to one of Claims 1 to 3,
**characterized**
**in that** the stop edge (BK) is an edge (BH) of a mechanical stop.

5. Apparatus according to one of Claims 1 to 3,
**characterized**
**in that** the stop edge (BK) is formed by an LCD array.

6. Apparatus according to one of Claims 1 to 5,
**characterized**
**in that** at least one further stop, which is positioned directly in front of the light source (LQ), is present for varying an effective light-emitting surface (LFL) of the light source (LQ).

7. Apparatus according to one of Claims 1 to 6,
**characterized**
**in that** at least one further variably positionable stop is present between the holding device (TOA) and the light source (LQ) for cropping the illumination beam.

8. Apparatus according to one of Claims 1 to 7,

**characterized**
**in that** a carriage mechanism having a first carriage (SL6) and a second carriage (SL5) is present for displacing the stop edge (BK) in the direction of the optical axis (OA) and in the direction transversely to the optical axis (OA).

9. Apparatus according to one of Claims 1 to 8,
**characterized**
**in that** a first mechanical stop (BLH) and a second mechanical stop (BLV) are present,
**in that** the stop edge is formed by an edge (BH) of the first mechanical stop (BLH) or by an edge (BV) of the second mechanical stop (BLV), and
**in that** a first carriage mechanism having a first carriage (SL6) and a second carriage (SL5) for the first mechanical stop (BLH) and a second carriage mechanism having a third carriage (SL3) and a fourth carriage (SL4) for the second mechanical stop (BLV) are present for displacing the stop edge (BH, BV) in the direction (Z) of the optical axis (OA) and in the direction (VB) transversely to the optical axis (OA).

10. Apparatus according to one of Claims 1 to 9,
**characterized**
**in that** the stop edge (BK, BH, BV) asymmetrically crops the illumination beam.

11. Apparatus according to one of Claims 1 to 10,
**characterized**
**in that** the light source (LQ) is a surface-type light source (LQ), in particular a plurality of LEDs, preferably a white-light LED.

12. Apparatus according to one of Claims 1 to 11,
**characterized**
**in that** means for rotating the stop edge (BK) about the optical axis are present.

13. Method for transmitted-light illumination for a light microscope having a variable effective entrance pupil of an objective,
in which illumination light from a light source (LQ) impinges on a sample (OB) which is held by a holding device (TOA), and
in which an illumination beam, coming from the light source (LQ), is cropped by a stop edge (BK) that is arranged between the holding device (TOA) and the light source (LQ), wherein a beam path of the illumination light between the stop edge (BK) and the sample (OB) that is held by the holding device (TOA) is free from adjustable beam-focusing components, **characterized**
**in that** the stop edge (BK) extends transversely to an optical axis (OA) and is positioned in the direction (Z) of the optical axis (OA) in dependence on the location of the effective entrance pupil of the objective (OBJ1, OBJ2, OBJ3), wherein the position of the stop edge (BK) in the direction (Z) of the optical axis (OA) is set automatically in dependence on an objective type, a zoom setting and a microscope type.

14. Method according to Claim 13,
**characterized**
**in that** an absolute position of the stop edge (BK, BH, BV) is optically and/or mechanically determined before the start of the stop positioning.

15. Method according to Claim 13 or 14,
**characterized**
**in that** the stop edge (BK, BH, BV) is positioned in a direction (VB) transversely to the optical axis (OA) for setting the contrast.

16. Method according to one of Claims 13 to 15,
**characterized**
**in that** the stop edge (BK) is positioned in a plane of the effective entrance pupil of the objective (OBJ1, OBJ2, OBJ3).

17. Method according to one of Claims 13 to 16,
**characterized**
**in that** a position of the stop edge (BK) in the plane of the effective entrance pupil is determined by

a) varying the position of the stop edge (BK) in the direction (Z) of the optical axis (OA) of the objective (OBJ1, OBJ2, OBJ3),

b) recording at least partially a microscope image for each position of the stop edge (BK) in the direction (Z) of the optical axis (OA),

c) determining an illumination parameter for each microscope image,

d) defining, as a position of the stop edge (BK) in the plane of the effective entrance pupil, the position of the stop edge (BK) in the direction of the optical axis (OA) at which a profile of the illumination parameter, plotted over the position of the stop edge (BK) in the direction (Z) of the optical axis (OA), has a predetermined characteristic, and

e) storing the defined position.

18. Method according to Claim 17,
**characterized**
**in that** the illumination parameter is a measure of an intensity gradient in a direction (X, Y) transversely to the stop edge (BK), an image contrast, a contrast range of the image, an image homogeneity and/or shadowing in the microscope image.

19. Method according to either of Claims 17 and 18,
**characterized**
**in that** an intensity gradient is determined for each microscope image as an illumination parameter and
**in that** the stop edge (BK) is set to the position in the direction (Z) of the optical axis (OA) at which a profile of the intensity gradient, plotted over the position of the stop edge (BK) in the direction (Z) of the optical axis (OA), has a zero crossing.

20. Method according to one of Claims 17 to 19,
**characterized**
**in that** the microscope images are recorded with a digital camera (K) and the illumination parameter intensity gradient is determined by evaluating data provided by the digital camera (K).

21. Method according to one of Claims 17 to 20,
**characterized**
**in that**, based on an illumination parameter that was determined for a past position of the stop edge (BK) in the direction (Z) of the optical axis (OA), a next position of the stop edge (BK) in the direction (Z) of the optical axis (OA) is determined, wherein the next position is spaced apart from the past position at a distance that is larger the greater the absolute value of an illumination parameter that is determined for the past position is, and
**in that** a direction in which the next position is spaced apart from the past position is ascertained from a sign of the illumination parameter that is determined for the past position.

22. Method according to one of Claims 13 to 21,
**characterized**
**in that** a light-emitting surface (LFL) of the light source (LQ) is adapted to an actually effective back-projection of the illumination light.

23. Method according to one of Claims 13 to 22,
**characterized**
**in that** settings of the at least one stop edge (BK) and/or of further stops are performed in automated fashion, in particular after a user input.

24. Method according to one of Claims 13 to 23, **characterized**
**in that** settings of the at least one stop edge (BK) and/or further stops and/or further optical components are performed in automated fashion in dependence on an ascertained configuration of components, in particular optical components, which are present.

25. Microscope system having a light microscope and an apparatus for transmitted-light illumination according to one of Claims 1 to 12.

26. Microscope system according to Claim 25,
**characterized**

**in that** a control device is present which is connected to constituent parts of the light microscope and to the apparatus for transmitted-light illumination and is set up for controlling the light microscope and the apparatus for transmitted-light illumination to perform a method according to one of Claims 13 to 24.

27. Microscope system according to Claim 25 or 26,
**characterized**
**in that** a storage device is present in which settings of the transmitted-light device and of the light microscope, in particular of the at least one stop edge (BK), are stored.

**Revendications**

1. Dispositif d'éclairage par transmission pour des microscopes optiques, en particulier des stéréomicroscopes ou des macroscopes, avec une pupille d'entrée effective variable d'un objectif, comprenant
une source lumineuse (LQ) servant à émettre un faisceau lumineux d'éclairage,
un dispositif de maintien (TOA) servant à maintenir un échantillon à examiner et
au moins une arête de diaphragme (BK) servant à couper le faisceau lumineux d'éclairage,
dans lequel l'arête de diaphragme (BK) est agencée entre le dispositif de maintien (TOA) et la source lumineuse (LQ),
dans lequel l'arête de diaphragme (BK) s'étend transversalement à un axe optique (OA) d'un microscope optique qui peut être positionné dans un état de fonctionnement sur le dispositif d'éclairage par transmission, et
dans lequel un chemin de faisceau de la lumière d'éclairage entre l'arête de diaphragme (BK) et un échantillon maintenu par le dispositif de maintien (TOA) est dépourvu de composants réglables focalisant le faisceau,
dans lequel une position de l'arête de diaphragme (BK) dans la direction (Z) de l'axe optique (OA) peut être amenée à varier indépendamment d'une position de l'arête de diaphragme (BK) transversalement à l'axe optique (OA),
**caractérisé en ce que**,
pour adapter le chemin de faisceau de la lumière d'éclairage à la pupille d'entrée effective de l'objectif (OBJ1, OBJ2, OBJ3), il est prévu des moyens servant à positionner de manière variable l'arête de diaphragme (BK) dans la direction (Z) de l'axe optique (OA), dans lequel la position de l'arête de diaphragme (BK) dans la direction (Z) de l'axe optique (OA) est réglée automatiquement en fonction d'un type d'objectif, d'une position de zoom et d'un type de microscope.

2. Dispositif selon la revendication 1,
**caractérisé en ce que**, pour modifier le contraste, il est prévu des moyens servant à positionner de manière variable l'arête de diaphragme (BK) dans une direction (VB) transversale à l'axe optique (OA).

3. Dispositif selon la revendication 1 ou 2,
**caractérisé en ce que** l'arête de diaphragme (BK) est une arête de diaphragme linéaire.

4. Dispositif selon l'une des revendications 1 à 3,
**caractérisé en ce que** l'arête de diaphragme (BK) est une arête (BH) d'un diaphragme mécanique.

5. Dispositif selon l'une des revendications 1 à 3,
**caractérisé en ce que** l'arête de diaphragme (BK) est formée par un réseau LCD.

6. Dispositif selon l'une des revendications 1 à 5,
**caractérisé en ce que**, pour faire varier une surface lumineuse effective (LFL) de la source lumineuse (LQ), il est prévu au moins un autre diaphragme qui est positionné directement en face de la source lumineuse (LQ).

7. Dispositif selon l'une des revendications 1 à 6,
**caractérisé en ce qu'**il est prévu entre le dispositif de maintien (TOA) et la source lumineuse (LQ) au moins un autre diaphragme pouvant être positionné de manière variable pour couper le faisceau lumineux d'éclairage.

8. Dispositif selon l'une des revendications 1 à 7,
**caractérisé en ce qu'**il est prévu un mécanisme à chariots comprenant un premier chariot (SL6) et un deuxième chariot (SL5) servant à déplacer l'arête de diaphragme (BK) dans la direction de l'axe optique (OA) et dans une direction transversale à l'axe optique (OA).

9. Dispositif selon l'une des revendications 1 à 8,

**caractérisé en ce qu'**il est prévu un premier diaphragme mécanique (BLH) et un deuxième diaphragme mécanique (BLV),

**en ce que** l'arête de diaphragme est formée par une arête (BH) du premier diaphragme mécanique (BLH) ou par une arête (BV) du deuxième diaphragme mécanique (BLV), et

**en ce qu'**il est prévu, pour déplacer l'arête de diaphragme (BH, BV) dans la direction (Z) de l'axe optique (OA) et dans une direction (VB) transversale à l'axe optique (OA), un premier mécanisme à chariots comprenant un premier chariot (SL6) et un deuxième chariot (SL5) pour le premier diaphragme mécanique (BLH) et un deuxième mécanisme à chariots comprenant un troisième chariot (SL3) et un quatrième chariot (SL4) pour le deuxième diaphragme mécanique (BLV).

10. Dispositif selon l'une des revendications 1 à 9,
    **caractérisé en ce que** l'arête de diaphragme (BK, BH, BV) coupe le faisceau lumineux d'éclairage de manière asymétrique.

11. Dispositif selon l'une des revendications 1 à 10,
    **caractérisé en ce que** la source lumineuse (LQ) est une source lumineuse plane (LQ), en particulier une pluralité de LED, de préférence une LED de lumière blanche.

12. Dispositif selon l'une des revendications 1 à 11,
    **caractérisé en ce qu'**il est prévu des moyens servant à faire tourner l'arête de diaphragme (BK) autour de l'axe optique.

13. Procédé d'éclairage par transmission pour des microscopes optiques avec une pupille d'entrée effective variable d'un objectif,
    dans lequel un échantillon (OB) maintenu par un dispositif de maintien (TOA) est exposé à de la lumière d'éclairage émanant d'une source lumineuse (LQ) et
    dans lequel un faisceau lumineux d'éclairage émanant de la source lumineuse (LQ) est coupé par une arête de diaphragme (BK) agencée entre le dispositif de maintien (TOA) et la source lumineuse (LQ), dans lequel un chemin de faisceau de la lumière d'éclairage entre l'arête de diaphragme (BK) et l'échantillon (OB) maintenu par le dispositif de maintien (TOA) est dépourvu de composants réglables focalisant le faisceau,
    **caractérisé en ce que**
    l'arête de diaphragme (BK) s'étend transversalement à un axe optique (OA) et est positionnée dans la direction (Z) de l'axe optique (OA) en fonction de la position de la pupille d'entrée effective de l'objectif (OBJ1, OBJ2, OBJ3), dans lequel la position de l'arête de diaphragme (BK) dans la direction (Z) de l'axe optique (OA) est réglée automatiquement en fonction d'un type d'objectif, d'une position de zoom et d'un type de microscope.

14. Procédé selon la revendication 13,
    **caractérisé en ce qu'**une position absolue de l'arête de diaphragme (BK, BH, BV) est déterminée optiquement et/ou mécaniquement avant le début du positionnement du diaphragme.

15. Procédé selon la revendication 13 ou 14,
    **caractérisé en ce que** l'arête de diaphragme (BK, BH, BV) est positionnée dans une direction (VB) transversale à l'axe optique (OA) pour le réglage du contraste.

16. Procédé selon l'une des revendications 13 à 15,
    **caractérisé en ce que** l'arête de diaphragme (BK) est positionnée dans un plan de la pupille d'entrée effective de l'objectif (OBJ1, OBJ2, OBJ3).

17. Procédé selon l'une des revendications 13 à 16,
    **caractérisé en ce qu'**une position de l'arête de diaphragme (BK) dans le plan de la pupille d'entrée effective est déterminée

    a) en faisant varier la position de l'arête de diaphragme (BK) dans la direction (Z) de l'axe optique (OA) de l'objectif (OBJ1, OBJ2, OBJ3),
    b) en acquérant au moins partiellement acquise une image de microscopie pour chaque position de l'arête de diaphragme (BK) dans la direction (Z) de l'axe optique (OA),
    c) en déterminant un paramètre d'éclairage pour chaque image de microscopie,
    d) en établissant, en tant que position de l'arête de diaphragme (BK) dans le plan de la pupille d'entrée effective, la position de l'arête de diaphragme (BK) dans la direction de l'axe optique (OA) pour laquelle une évolution du paramètre d'éclairage, représentée par rapport à la position de l'arête de diaphragme (BK) dans la direction (Z) de l'axe optique (OA), présente une caractéristique prédéterminée, et

e) en stockant la position établie.

18. Procédé selon la revendication 17,
caractérisé en ce que le paramètre d'éclairage est une mesure d'un gradient d'intensité dans une direction (X, Y) transversale à l'arête de diaphragme (BK), un contraste d'image, une plage de contraste de l'image, une homogénéité de l'image et/ou une ombre projetée dans l'image de microscopie.

19. Procédé selon l'une des revendications 17 ou 18,
caractérisé en ce qu'un gradient d'intensité est déterminé en tant que paramètre d'éclairage pour chaque image de microscopie, et
en ce que l'arête de diaphragme (BK) est réglée à la position, dans la direction (Z) de l'axe optique (OA), à laquelle une évolution du gradient d'intensité, représentée par rapport à la position de l'arête de diaphragme (BK) dans la direction (Z) de l'axe optique (OA), présente un passage à zéro.

20. Procédé selon l'une des revendications 17 à 19,
caractérisé en ce que les images de microscopie sont acquises au moyen d'un appareil photo numérique (K) et
en ce que le gradient d'intensité du paramètre d'éclairage est déterminé en évaluant les données fournies par l'appareil photo numérique (K).

21. Procédé selon l'une des revendications 17 à 20,
caractérisé en ce que, sur la base d'un paramètre d'éclairage déterminé pour une position précédente de l'arête de diaphragme (BK) dans la direction (Z) de l'axe optique (OA), une position suivante de l'arête de diaphragme (BK) dans la direction (Z) de l'axe optique (OA) est déterminée, dans lequel la position suivante est espacée de la position précédente de manière d'autant plus importante que la valeur d'un paramètre d'éclairage déterminé pour la position précédente est élevée, et
en ce qu'une direction dans laquelle la position suivante est espacée de la position précédente est déterminée à partir d'un signe du paramètre d'éclairage déterminé pour la position précédente.

22. Procédé selon l'une des revendications 13 à 21,
caractérisé en ce qu'une surface lumineuse (LFL) de la source lumineuse (LQ) est adaptée à une rétroprojection réelle effective de la lumière d'éclairage.

23. Procédé selon l'une des revendications 13 à 22,
caractérisé en ce que des réglages de ladite au moins une arête de diaphragme (BK) et/ou d'autres diaphragmes, en particulier après une saisie effectuée par l'utilisateur, sont effectués de manière automatisée.

24. Procédé selon l'une des revendications 13 à 23,
caractérisé en ce que des réglages de ladite au moins une arête de diaphragme (BK) et/ou d'autres diaphragmes et/ou d'autres composants optiques sont effectués de manière automatisée en fonction d'une configuration déterminée des composants présents, en particulier optiques.

25. Système de microscope comprenant un microscope optique et un dispositif d'éclairage par transmission selon l'une des revendications 1 à 12.

26. Système de microscope selon la revendication 25,
caractérisé en ce qu'il est prévu un dispositif de commande qui est relié à des éléments du microscope optique et du dispositif d'éclairage par transmission et qui est conçu pour commander le microscope optique et le dispositif d'éclairage par transmission afin de mettre en oeuvre un procédé selon l'une des revendications 13 à 24.

27. Système de microscope selon la revendication 25 ou 26,
caractérisé en ce qu'il est prévu un dispositif de mémoire dans lequel sont stockés des réglages du dispositif d'éclairage par transmission et du microscope optique, en particulier de ladite au moins une arête de diaphragme (BK).

**Fig. 1: STAND DER TECHNIK**

## Fig. 2: STAND DER TECHNIK

EP 2 758 823 B1

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

Fig. 15

**Fig. 16**

**Fig. 17**

**Fig. 18**

**Fig. 19**

**Fig. 20**

**Fig. 21**

# Fig. 22

ideale Blendenposition Zh in
Z-Richtung

**Fig. 23**

**Fig. 24**

Fig. 25

**Fig. 26**

Fig. 27

**Fig. 28**

**Fig. 29**

EP 2 758 823 B1

**Fig. 30**

93

**Fig. 31**

**Fig. 32**

22

20

**Fig. 33**

**Fig. 34**

24

24

26

20

**Fig. 35**

20

28

**Fig. 36**

**Fig. P7**

## Fig. P8

**Fig. P10**

**Fig. P11**

# Fig. P12

## Fig. P13

**Fig. P14**

**Fig. P15**

**Fig. P16**

**Fig. P17**

Fig. P18

Fig. P19

VBHH
SL5
FS
D5
HEH
LHH
HEH D6
D5
SL6
DAH
AHH
VBH
PRYL
BLH
PR
LBH
WB
BLV
BV
ASV
BH
VSH
LHV
D4
AHV
LBV
D3
SL3
HEV
DAV
SL4
VBVH
VBV
ADV AD3
ADH AD5

# Fig. A6

| Abbildungs-System | Discovery 3D | Discovery 2D | Lumar 3D | Lumar 2D | AxioZoom 2D |
|---|---|---|---|---|---|
| Objektiv OBJ | | | | | |
| Objektebene OE | | | | | |
| Blendenebene | | | | | |
| Leuchtfläche LFL | | | | | |
| Strahlpositionen in XY-Ebene im Objektiv OBJ | | | | | |
| ideale Größe der Leuchtfläche LFL für Hellfeld-Beleuchtung | | | | | |

## Fig. A7

| Abbildungs-System | Discovery 3D | Discovery 2D | Lumar 3D | Lumar 2D | AxioZoom 2D |
|---|---|---|---|---|---|
| ideale Blendenform zur Streulicht-reduzierung | | | | | |
| angenäherte Blendenform zur Streulicht-reduzierung | | | | | |
| vereinfachte Blendenform zur Streulicht-reduzierung | | | | | |

**Fig. A8**

**Fig. A9**

## Fig. E9

## Fig. E10

**Fig. E11**

**Fig. E12**

Fig. E13

MA

AP

HSA

HST

HSR

G

Fig. E14

HSA

HST

HSR

G

**Fig. E15**

**Fig. E16**

## Fig. E18

## Fig. E19

## Fig. E20

**Fig. E21**

**Fig. E22**

**IN DER BESCHREIBUNG AUFGEFÜHRTE DOKUMENTE**

**In der Beschreibung aufgeführte Patentdokumente**

- DE 102004056685 A1
- DE 102004017694 B3
- US 20020191281 A1
- EP 1008884 B1
- JP 2008026924 A
- US 2001005280 A
- JP 2002189174 A
- US 2005259320 A1